(19) Europäisches Patentamt
European Patent Office
Office européen des brevets

(11) EP 3 715 092 A1

(12) EUROPEAN PATENT APPLICATION
published in accordance with Art. 153(4) EPC

(43) Date of publication:
30.09.2020 Bulletin 2020/40

(21) Application number: 18878309.6

(22) Date of filing: 19.11.2018

(51) Int Cl.:
*B29C 51/12* (2006.01) *B32B 27/00* (2006.01)
*B32B 27/18* (2006.01) *B32B 27/32* (2006.01)

(86) International application number:
PCT/JP2018/042734

(87) International publication number:
WO 2019/098379 (23.05.2019 Gazette 2019/21)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 20.11.2017 JP 2017222516
25.12.2017 JP 2017247629
26.12.2017 JP 2017249129
06.02.2018 JP 2018019640
08.02.2018 JP 2018021093
27.02.2018 JP 2018033633

(71) Applicant: Japan Polypropylene Corporation
Tokyo 100-8251 (JP)

(72) Inventors:
- NIIBE Morikazu
Yokkaichi-shi
Mie 510-0848 (JP)
- KATSUNO Satoshi
Yokkaichi-shi
Mie 510-0848 (JP)
- ASUKA Kazuo
Yokkaichi-shi
Mie 510-0848 (JP)
- KITAURA Hayato
Yokkaichi-shi
Mie 510-0848 (JP)
- TAKAHASHI Kuninori
Yokkaichi-shi
Mie 510-0848 (JP)

(74) Representative: Hoffmann Eitle
Patent- und Rechtsanwälte PartmbB
Arabellastraße 30
81925 München (DE)

# (54) DECORATIVE FILM AND METHOD FOR MANUFACTURING DECORATIVE MOLDED ARTICLE USING SAME

(57) The present invention provides a decorative film including a layer containing at least one type of additive selected from a nucleating agent, a hindered-amine-based photostabilizer, and a UV-absorbing agent, satisfying the condition below, the decorative film being for affixing, by thermoforming, onto a resin molded article having a three-dimensional shape. Condition: The amount of variation in the haze value measured by a method conforming to JIS-K7136 in a glass plate that has been subjected to the fogging test below, which conforms to ISO 6452, is 40 or less. <Fogging test>: 1 g (±0.01 g) of the additive was placed in a sample bottle made of glass, the sample bottle was closed using a glass plate, and clouding (fogging) was produced on the glass plate by heating the sample bottle for 1 hour at 150°C.

EP 3 715 092 A1

## Description

### TECHNICAL FIELD

The present invention relates to a decorative film to be stuck onto a resin molded article by thermoforming and a method for producing a decorative molded article using the decorative film. More particularly, the present invention relates to a decorative film to be stuck onto a resin molded article by thermoforming, wherein the decorative film is advantageous not only in that the decorative film has excellent transparency, excellent scratch resistance and excellent design, but also in that it has excellent surface gloss and/or weathering resistance before and after subjected to decorative forming and has suppressed a change of the appearance of the surface, and a method for producing a decorative molded article using the decorative film.

### BACKGROUND ART

Recently, a reduction of the use of VOC (volatile organic compound) is required and thus there are increasing demands for a decoration technique as a substitute for coating, and a number of proposals have been made on the decoration technique.

A technique has been proposed in which, especially, instead of a coating film, a decorative film is applied to a molded article by vacuum pressure forming or vacuum forming to form a decorative molded article having the decorative film and the molded article unified together (see, for example, patent literature 1), and recently, such a technique has particularly drawn attention.

The decorative forming by vacuum pressure forming or vacuum forming has a large degree of freedom for the shape, as compared to other decorative forming, such as insert molding, and has an advantage in that a decorative film covers an object to be decorated so that the edge face of the decorative film reaches the back side of the object, causing no seam and achieving excellent appearance, and further has an advantage in that thermoforming can be made at a relatively low temperature under a relatively low pressure, achieving excellent reproducibility of a texture formed in the surface of the decorative film, such as a grain.

Meanwhile, it has been reported that a gloss-finished decorative film has a problem, for example, in that the surface of the film becomes foggy after subjected to decorative forming. Further, a hindered amine light stabilizer or an ultraviolet light absorber is often added for imparting weathering resistance to a decorative film, but such a decorative film containing the hindered amine light stabilizer or ultraviolet light absorber has a problem in that weathering resistance of the film considerably deteriorates after subjected to decorative forming.

Further, a method has been proposed in which a decorative film comprising a bonding layer containing a polypropylene resin is applied to a substrate (molded article) comprising a polypropylene resin so that the decorative film and the molded article are melt-bonded by heat together (see, for example, patent literatures 2 and 3).

### CITATION LIST

#### Patent Literature

Patent Literature 1: Japanese Patent Application Kokai Publication No. 2002-67137
Patent Literature 2: Japanese Patent Application Kokai Publication No. 2013-14027
Patent Literature 3: Japanese Patent Application Kokai Publication No. 2014-124940

### SUMMARY OF INVENTION

#### Technical Problem

Conventional techniques have not yet achieved a decorative film which has suppressed a reduction of the gloss and/or a reduction of the weathering resistance and a change of the appearance of the surface even after subjected to decorative forming by vacuum pressure forming or vacuum forming. A problem of the present invention is to provide a decorative film usable in three-dimensional decorative thermoforming, which has suppressed a reduction of the gloss and/or a reduction of the weathering resistance and a change of the appearance of the surface after subjected to decorative forming, and a method for producing a decorative molded article using the decorative film.

Solution to Problem

The present inventors have conducted extensive and intensive studies with a view toward solving the above-mentioned problem. As a result, it has been found that an additive added for imparting gloss and/or weathering resistance to a resin, such as a nucleating agent, a hindered amine light stabilizer, or an ultraviolet light absorber, considerably volatilizes in the step of heating the decorative film under the conditions for decorative forming, namely, in a vacuum. Meanwhile, it has been found that a decorative film containing a specific additive is advantageous in that even when the decorative film is heated in a vacuum, the additive is unlikely to volatilize, so that a reduction of the gloss and/or a reduction of the weathering resistance and a change of the appearance of the surface after subjected to decorative forming can be suppressed.

Specifically, the present invention encompasses the followings.

[1] A decorative film to be stuck onto a resin molded article having a three-dimensional shape by thermoforming, the decorative film comprising a layer containing at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452,

<fogging test> in which 1 g (±0.01 g) of the additive is placed in a sample bottle made of glass, and the sample bottle is covered with a glass plate and heated at 150°C for one hour to cause clouding (fogging) on the glass plate.

[2] The decorative film according to item [1] above, which comprises a seal layer (I) containing a polypropylene resin (A) and a layer (II) containing a polypropylene resin (B),
wherein the polypropylene resin (A) satisfies the following requirement (a1), and the polypropylene resin (B) satisfies the following requirement (b1):

(a1) having a melt flow rate (at 230°C under a load of 2.16 kg) (MFR (A)) of more than 0.5 g/10 minutes,
(b1) that a melt flow rate (at 230°C under a load of 2.16 kg) (MFR (B)) and the MFR (A) satisfy the relationship of the formula (b-1):

$$\text{MFR (B)} < \text{MFR (A)} \qquad \text{Formula (b-1).}$$

[3] The decorative film according to item [1] above, which comprises a seal layer (I) containing a polypropylene resin (A) and a layer (II) containing a resin composition (B') comprising a polypropylene resin (B),
wherein the polypropylene resin (A) satisfies the following requirement (a'1), and the resin composition (B') satisfies the following requirements (b'1) and (b'2), preferably the following requirements (b'1') and (b'2'), more preferably the following requirements (b'1") and (b'2"):

(a'1) having a melt flow rate (at 230°C under a load of 2.16 kg) (MFR (A)) of more than 2.0 g/10 minutes,
(b'1) having a melt flow rate (at 230°C under a load of 2.16 kg) (MFR (B')) of 40 g/10 minutes or less,
(b'2) having a strain hardening index λ of 1.1 or more,
(b'1') having a melt flow rate (at 230°C under a load of 2.16 kg) (MFR (B')) of 20 g/10 minutes or less,
(b'2') having a strain hardening index λ of 1.8 or more,
(b'1") having a melt flow rate (at 230°C under a load of 2.16 kg) (MFR (B')) of 12 g/10 minutes or less,
(b'2") having a strain hardening index λ of 2.3 or more.

[4] The decorative film according to item [1] above, which comprises a seal layer (I) containing a polyolefin bonding resin (G) and a layer (II) containing a resin composition (B') comprising a polypropylene resin (B),
wherein the polyolefin bonding resin (G) satisfies the following requirements (g'1) and (g'2), and the resin composition (B') satisfies the following requirements (b'1) and (b'2), preferably the following requirements (b' 1') and (b'2'), more preferably the following requirements (b'1") and (b'2"):

(g'1) being a polyolefin resin having a polar functional group containing at least one heteroatom,
(g'2) having a melt flow rate (at 230°C under a load of 2.16 kg) (MFR (G)) of 100 g/10 minutes or less,
(b'1) having a melt flow rate (at 230°C under a load of 2.16 kg) (MFR (B')) of 40 g/10 minutes or less,

(b'2) having a strain hardening index λ of 1.1 or more,
(b'1') having a melt flow rate (at 230°C under a load of 2.16 kg) (MFR (B')) of 20 g/10 minutes or less,
(b'2') having a strain hardening index λ of 1.8 or more,
(b'1") having a melt flow rate (at 230°C under a load of 2.16 kg) (MFR (B')) of 12 g/10 minutes or less,
(b'2") having a strain hardening index λ of 2.3 or more.

[5] The decorative film according to any one of items [1] to [4] above, wherein the layer containing the additive comprises a polyolefin resin composition, preferably a polypropylene resin composition.
[6] The decorative film according to any one of items [1] to [5] above, wherein the additive is a nucleating agent, wherein the nucleating agent is an organometallic compound, preferably a compound represented by the following general formula (1):

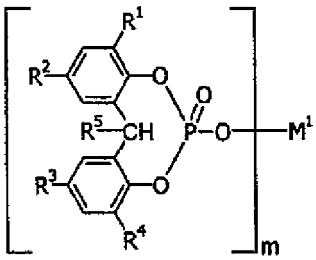
(1)

wherein each of $R^1$ to $R^4$ independently represents a hydrogen atom or an alkyl group having 1 to 9 carbon atoms and optionally having a branch, $R^5$ represents a hydrogen atom or a methyl group, m represents 1 or 2, and, when m is 1, $M^1$ represents a hydrogen atom or an alkali metal atom, and, when m is 2, $M^1$ represents an element of the Group 2, Al(OH), or Zn.
[7] The decorative film according to any one of items [1] to [5] above, wherein the additive is a nucleating agent, wherein the nucleating agent is an amide compound.
[8] The decorative film according to any one of items [1] to [5] above, wherein the additive is a hindered amine light stabilizer and/or an ultraviolet light absorber, wherein the additive has a molecular weight of 490 g/mol or more.
[9] The decorative film according to any one of items [3] to [8] above, wherein the polypropylene resin (B) is a polypropylene resin (B-L) having a long-chain branched structure.
[10] The decorative film according to item [9] above, wherein the polypropylene resin (B-L) is a polypropylene resin which has a gel in a reduced amount, and which is produced by a method other than a crosslinking method.
[11] The decorative film according to any one of items [1] to [10] above, which is a multilayer film, wherein the outermost surface layer on the side opposite to the stuck surface to the resin molded article with respect to the decorative film contains the additive.
[12] The decorative film according to any one of items [2] to [11] above, which has a surface decorative layer (III) comprising a surface decorative layer resin containing the additive on the side opposite to the stuck surface side to the resin molded article with respect to the layer (II).
[13] The decorative film according to item [12] above, wherein the surface decorative layer (III) comprises a polypropylene resin (H) which satisfies the following requirement (h1):
(h1) that a melt flow rate (at 230°C under a load of 2.16 kg) (MFR (H)) and the MFR (B) satisfy the relationship of the formula (h-1):

$$\text{MFR (H)} > \text{MFR (B)} \qquad \text{Formula (h-1).}$$

[14] The decorative film according to item [12] above, wherein the surface decorative layer resin comprises a polypropylene resin (H), wherein the polypropylene resin (H) has a strain hardening index λ of less than 1.1.
[15] A method for producing a decorative molded article, the method comprising the steps of: providing the decorative film according to any one of items [1] to [14] above; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.
[16] The method for producing a decorative molded article according to item [15] above, wherein the resin molded

article comprises a polypropylene resin composition.

[17] The method for producing a decorative molded article according to item [15] above, wherein the decorative film is the decorative film according to any one of items [4] to [14] above, and wherein the resin molded article comprises a polar resin material comprising at least one member selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and a composite material thereof.

[18] A polypropylene resin composition for a decorative film to be stuck onto a resin molded article having a three-dimensional shape by thermoforming, the polypropylene resin composition containing, relative to 100 parts by weight of a polypropylene resin, 0.001 to 1.00 part by weight of at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452,

<fogging test> in which 1 g (±0.01 g) of the additive is placed in a sample bottle made of glass, and the sample bottle is covered with a glass plate and heated at 150°C for one hour to cause clouding (fogging) on the glass plate.

[19] Use of a polypropylene resin composition in a decorative film to be stuck onto a resin molded article having a three-dimensional shape by thermoforming, the polypropylene resin composition containing, relative to 100 parts by weight of a polypropylene resin, 0.001 to 1.00 part by weight of at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452,

<fogging test> in which 1 g (±0.01 g) of the additive is placed in a sample bottle made of glass, and the sample bottle is covered with a glass plate and heated at 150°C for one hour to cause clouding (fogging) on the glass plate.

[20] A decorative molded article having stuck thereon the decorative film according to any one of items [1] to [14] above.

Further, the invention according to the first aspect of the present invention encompasses the followings.

[1] A decorative film to be stuck onto a resin molded article having a three-dimensional shape by thermoforming, the decorative film comprising a layer containing a nucleating agent, wherein the nucleating agent satisfies the following requirement:

requirement that: a change of the haze value be 40 or less, as measured by the method in accordance with JIS-K7136 with respect to a glass plate which has been subjected to the fogging test as shown below by the method in accordance with ISO 6452,

<fogging test> in which 1 g (±0.01 g) of the nucleating agent is placed in a sample bottle made of glass, and the sample bottle is covered with a glass plate and heated at 150°C for one hour to cause clouding (fogging) on the glass plate.

[2] The decorative film according to item [1] above, wherein the nucleating agent is an organometallic compound.

[3] The decorative film according to item [1] or [2] above, wherein the nucleating agent is a compound represented by the following general formula (1):

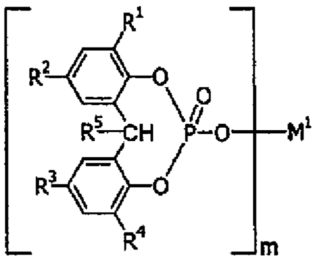

(1)

wherein each of $R^1$ to $R^4$ independently represents a hydrogen atom or an alkyl group having 1 to 9 carbon atoms and optionally having a branch, $R^5$ represents a hydrogen atom or a methyl group, m represents 1 or 2, and, when m is 1, $M^1$ represents a hydrogen atom or an alkali metal atom, and, when m is 2, $M^1$ represents an element of the Group 2, Al(OH), or Zn.

[4] The decorative film according to item [1] above, wherein the nucleating agent is an amide compound.

[5] The decorative film according to any one of items [1] to [4] above, wherein the layer containing the nucleating agent comprises a polyolefin resin composition.

[6] The decorative film according to any one of items [1] to [5] above, wherein the polyolefin resin composition is a polypropylene resin composition.

[7] A method for producing a decorative molded article, the method comprising the steps of: providing the decorative film according to any one of items [1] to [6] above; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.

[8] The method for producing a decorative molded article according to item [7] above, wherein the resin molded article comprises a polypropylene resin composition.

The invention according to the second aspect of the present invention encompasses the followings.

[1] A decorative film to be stuck onto a resin molded article having a three-dimensional shape by thermoforming, the decorative film containing a hindered amine light stabilizer and/or an ultraviolet light absorber, wherein the hindered amine light stabilizer and/or ultraviolet light absorber satisfies the following requirement:

requirement that: a change of the haze value be 40 or less, as measured by the method in accordance with JIS-K7136 with respect to a glass plate which has been subjected to the fogging test as shown below by the method in accordance with ISO 6452,
<fogging test> in which 1 g (±0.01 g) of the hindered amine light stabilizer or ultraviolet light absorber is placed in a sample bottle made of glass, and the sample bottle is covered with a glass plate and heated at 150°C for one hour to cause clouding (fogging) on the glass plate.

[2] The decorative film according to item [1] above, wherein the hindered amine light stabilizer and/or ultraviolet light absorber has a molecular weight of 490 g/mol or more.

[3] The decorative film according to item [1] or [2] above, which comprises at least one layer containing the hindered amine light stabilizer and/or ultraviolet light absorber, wherein the layer contains a polyolefin resin in an amount of 50% by weight or more.

[4] The decorative film according to any one of items [1] to [3] above, wherein the polyolefin resin is a polypropylene resin.

[5] The decorative film according to any one of items [1] to [4] above, wherein the outermost surface layer on the side opposite to the stuck surface to the resin molded article with respect to the decorative film contains the hindered amine light stabilizer and/or ultraviolet light absorber.

[6] A method for producing a decorative molded article, the method comprising the steps of: providing the decorative film according to any one of items [1] to [5] above; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.

[7] The method for producing a decorative molded article according to item [6] above, wherein the resin molded

article comprises a polypropylene resin composition.

The invention according to the third aspect of the present invention encompasses the followings.

[1] A decorative film to be stuck onto a resin molded article by thermoforming, the decorative film containing a nucleating agent, wherein the decorative film comprises a seal layer (I) containing a polypropylene resin (A) and a layer (II) containing a polypropylene resin (B), wherein the polypropylene resin (A) satisfies the following requirement (a1), and the polypropylene resin (B) satisfies the following requirement (b1):

(a1) having a melt flow rate (at 230°C under a load of 2.16 kg) (MFR (A)) of more than 0.5 g/10 minutes,
(b1) that a melt flow rate (at 230°C under a load of 2.16 kg) (MFR (B)) and the MFR (A) satisfy the relationship of the formula (b-1):

$$\text{MFR (B)} < \text{MFR (A)} \qquad \text{Formula (b-1).}$$

[2] The decorative film according to item [1] above, wherein the nucleating agent is selected from an aromatic carboxylic acid metal salt, an aromatic phosphoric acid metal salt, a sorbitol derivative, a nonitol derivative, an amide compound, and a rosin metal salt.
[3] The decorative film according to item [1] or [2] above, wherein the polypropylene resin (A) further satisfies the following requirements (a2) to (a4), and the polypropylene resin (B) further satisfies the following requirement (b2):

(a2) being a metallocene catalyst propylene polymer,
(a3) having a melting peak temperature (Tm (A)) of lower than 150°C,
(a4) having a molecular weight distribution (Mw/Mn (A)) of 1.5 to 3.5, as determined by GPC measurement,
(b2) that a melting peak temperature (Tm (B)) and the Tm (A) satisfy the relationship of the formula (b-2):

$$\text{Tm (B)} > \text{Tm (A)} \qquad \text{Formula (b-2).}$$

[4] The decorative film according to item [1] or [2] above, wherein the polypropylene resin (A) further satisfies the following requirement (a5), and the polypropylene resin (B) further satisfies the following requirement (b3):

(a5) having a crystallization temperature (Tc (A)) of lower than 100°C,
(b3) that a crystallization temperature (Tc (B)) and the Tc (A) satisfy the relationship of the formula (b-3):

$$\text{Tc (B)} > \text{Tc (A)} \qquad \text{Formula (b-3).}$$

[5] The decorative film according to item [1] or [2] above, wherein the seal layer (I) comprises a resin composition (XX3) in which the weight ratio of the polypropylene resin (A) and an ethylene-$\alpha$-olefin random copolymer (C) is 97:3 to 5:95, wherein the ethylene-$\alpha$-olefin random copolymer (C) satisfies the following requirements (c1) to (c3):

(c1) having an ethylene content [E (C)] of 65% by weight or more,
(c2) having a density of 0.850 to 0.950 g/cm$^3$,
(c3) having a melt flow rate (at 230°C under a load of 2.16 kg) (MFR (C)) of 0.1 to 100 g/10 minutes.

[6] The decorative film according to item [1] or [2] above, wherein the seal layer (I) comprises a resin composition (XX4) in which the weight ratio of the polypropylene resin (A) and a thermoplastic elastomer (D) is 97:3 to 5:95, wherein the thermoplastic elastomer (D) satisfies the following requirements (d1) to (d4):

(d1) being a thermoplastic elastomer comprising at least one of propylene and butene as a main component,
(d2) having a density of 0.850 to 0.950 g/cm$^3$,
(d3) having a melt flow rate (at 230°C under a load of 2.16 kg) (MFR (D)) of 0.1 to 100 g/10 minutes,
(d4) having a tensile modulus smaller than that of the polypropylene resin (A).

[7] The decorative film according to item [1] or [2] above, wherein the seal layer (I) comprises a resin composition

(XX5) in which the weight ratio of the polypropylene resin (A) and a thermoplastic resin (E) is 97:3 to 5:95, wherein the thermoplastic resin (E) satisfies the following requirement (e1), and the resin composition (XX5) satisfies the following requirement (xx1):

(e1) containing at least one of an alicyclic hydrocarbon group and an aromatic hydrocarbon group,
(xx1) that an isothermal crystallization time (t(XX5)) (second) of the resin composition (XX5), as determined by a differential scanning calorimeter (DSC), satisfies the following formula (x-1):

$$t(XX5) \geq 1.5 \times t(A) \qquad \text{Formula (x-1)}$$

wherein t(A) represents an isothermal crystallization time (second) of the polypropylene resin (A) measured at a temperature 10°C higher than the crystallization start temperature of the polypropylene resin (A), and t(XX5) represents an isothermal crystallization time (second) of the resin composition (XX5) measured at a temperature 10°C higher than the crystallization start temperature of the polypropylene resin (A).

[8] The decorative film according to item [1] or [2] above, wherein the polypropylene resin (A) is a propylene-ethylene block copolymer (F) which satisfies the following requirements (f1) and (f2):

(f1) having a melting peak temperature (Tm (F)) of 110 to 170°C,
(f2) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1).

[9] The decorative film according to item [3] or [4] above, wherein the polypropylene resin (A) is a propylene-α-olefin copolymer.
[10] The decorative film according to item [3] above, wherein the Tm (A) is 140°C or lower.
[11] The decorative film according to item [5] above, wherein the ethylene-α-olefin random copolymer (C) further satisfies at least one requirement of the following requirements (c4) and (c5):

(c4) having a melting peak temperature (Tm (C)) of 30 to 130°C,
(c5) being a random copolymer of ethylene and an α-olefin having 3 to 20 carbon atoms.

[12] The decorative film according to item [6] above, wherein the thermoplastic elastomer (D) is at least one copolymer selected from the group consisting of a propylene-ethylene copolymer having an ethylene content of less than 50 wt%, a butene-ethylene copolymer having an ethylene content of less than 50 wt%, a propylene-ethylene-butene copolymer having an ethylene content of less than 50 wt%, a propylene-butene copolymer, and a butene homopolymer.
[13] The decorative film according to item [6] or [12] above, wherein the thermoplastic elastomer (D) further satisfies the following requirement (d5):
(d5) having a melting peak temperature (Tm (D)) of 30 to 170°C.
[14] The decorative film according to item [7] above, wherein the thermoplastic resin (E) is a styrene elastomer.
[15] The decorative film according to item [7] above, wherein the thermoplastic resin (E) is an alicyclic hydrocarbon resin.
[16] The decorative film according to item [8] above, wherein the propylene-ethylene block copolymer (F) further satisfies at least one requirement of the following requirements (f3) to (f5):

(f3) that the ethylene content of the propylene-ethylene block copolymer (F) be 0.15 to 85% by weight,
(f4) that the ethylene content of the component (F1) be in the range of from 0 to 6% by weight,
(f5) that the ethylene content of the component (F2) be in the range of from 5 to 90% by weight.

[17] The decorative film according to any one of items [1] to [16] above, which has a surface decorative layer (III) comprising a surface decorative layer resin containing the nucleating agent on the side opposite to the stuck surface side to the resin molded article with respect to the layer (II).
[18] The decorative film according to item [17] above, wherein the surface decorative layer (III) comprises a polypropylene resin (H) which satisfies the following requirement (h1):
(h1) that a melt flow rate (at 230°C under a load of 2.16 kg) (MFR (H)) and the MFR (B) satisfy the relationship of

the formula (h-1):

$$MFR (H) > MFR (B) \qquad \text{Formula (h-1).}$$

[19] A method for producing a decorative molded article, the method comprising the steps of: providing the decorative film according to any one of items [1] to [18] above; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.
[20] The method for producing a decorative molded article according to item [19] above, wherein the resin molded article comprises a propylene resin composition.

The invention according to the fourth aspect of the present invention encompasses the followings.

[1] A decorative film to be stuck onto a resin molded article by thermofoof rming, the decorative film containing a hindered amine light stabilizer and/or an ultraviolet light absorber, wherein the decorative film comprises a seal layer (I) containing a polypropylene resin (A) and a layer (II) containing a polypropylene resin (B), wherein the polypropylene resin (A) satisfies the following requirement (a1), and the polypropylene resin (B) satisfies the following requirement (b1):

(a1) having a melt flow rate (at 230°C under a load of 2.16 kg) (MFR (A)) of more than 0.5 g/10 minutes,
(b1) that a melt flow rate (at 230°C under a load of 2.16 kg) (MFR (B)) and the MFR (A) satisfy the relationship of the formula (b-1):

$$MFR (B) < MFR (A) \qquad \text{Formula (b-1).}$$

[2] The decorative film according to item [1] above, wherein the polypropylene resin (A) further satisfies the following requirements (a2) to (a4), and the polypropylene resin (B) further satisfies the following requirement (b2):

(a2) being a metallocene catalyst propylene polymer,
(a3) having a melting peak temperature (Tm (A)) of lower than 150°C,
(a4) having a molecular weight distribution (Mw/Mn (A)) of 1.5 to 3.5, as determined by GPC measurement,
(b2) that a melting peak temperature (Tm (B)) and the Tm (A) satisfy the relationship of the formula (b-2):

$$Tm (B) > Tm (A) \qquad \text{Formula (b-2).}$$

[3] The decorative film according to item [1] above, wherein the polypropylene resin (A) further satisfies the following requirement (a5), and the polypropylene resin (B) further satisfies the following requirement (b3):

(a5) having a crystallization temperature (Tc (A)) of lower than 100°C,
(b3) that a crystallization temperature (Tc (B)) and the Tc (A) satisfy the relationship of the formula (b-3):

$$Tc (B) > Tc (A) \qquad \text{Formula (b-3).}$$

[4] The decorative film according to item [1] above, wherein the seal layer (I) comprises a resin composition (XX3) in which the weight ratio of the polypropylene resin (A) and an ethylene-$\alpha$-olefin random copolymer (C) is 97:3 to 5:95, wherein the ethylene-$\alpha$-olefin random copolymer (C) satisfies the following requirements (c1) to (c3):

(c1) having an ethylene content [E (C)] of 65% by weight or more,
(c2) having a density of 0.850 to 0.950 g/cm$^3$,
(c3) having a melt flow rate (at 230°C under a load of 2.16 kg) (MFR (C)) of 0.1 to 100 g/10 minutes.

[5] The decorative film according to item [1] above, wherein the seal layer (I) comprises a resin composition (XX4) in which the weight ratio of the polypropylene resin (A) and a thermoplastic elastomer (D) is 97:3 to 5:95, wherein the thermoplastic elastomer (D) satisfies the following requirements (d1) to (d4):

(d1) being a thermoplastic elastomer comprising at least one of propylene and butene as a main component,
(d2) having a density of 0.850 to 0.950 g/$cm^3$,
(d3) having a melt flow rate (at 230°C under a load of 2.16 kg) (MFR (D)) of 0.1 to 100 g/10 minutes,
(d4) having a tensile modulus smaller than that of the polypropylene resin (A).

[6] The decorative film according to item [1] above, wherein the seal layer (I) comprises a resin composition (XX5) in which the weight ratio of the polypropylene resin (A) and a thermoplastic resin (E) is 97:3 to 5:95, wherein the thermoplastic resin (E) satisfies the following requirement (e1), and the resin composition (XX5) satisfies the following requirement (xx1):

(e1) containing at least one of an alicyclic hydrocarbon group and an aromatic hydrocarbon group,
(xx1) that an isothermal crystallization time (t(XX5)) (second) of the resin composition (XX5), as determined by a differential scanning calorimeter (DSC), satisfies the following formula (x-1):

$$t(XX5) \geq 1.5 \times t(A) \qquad \text{Formula (x-1)}$$

wherein t(A) represents an isothermal crystallization time (second) of the polypropylene resin (A) measured at a temperature 10°C higher than the crystallization start temperature of the polypropylene resin (A), and t(XX5) represents an isothermal crystallization time (second) of the resin composition (XX5) measured at a temperature 10°C higher than the crystallization start temperature of the polypropylene resin (A).
[7] The decorative film according to item [1] above, wherein the polypropylene resin (A) is a propylene-ethylene block copolymer (F) which satisfies the following requirements (f1) and (f2):

(f1) having a melting peak temperature (Tm (F)) of 110 to 170°C,
(f2) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1).

[8] The decorative film according to item [2] or [3] above, wherein the polypropylene resin (A) is a propylene-$\alpha$-olefin copolymer.
[9] The decorative film according to item [2] above, wherein the Tm (A) is 140°C or lower.
[10] The decorative film according to item [4] above, wherein the ethylene-$\alpha$-olefin random copolymer (C) further satisfies at least one requirement of the following requirements (c4) and (c5):

(c4) having a melting peak temperature (Tm (C)) of 30 to 130°C,
(c5) being a random copolymer of ethylene and an $\alpha$-olefin having 3 to 20 carbon atoms.

[11] The decorative film according to item [5] above, wherein the thermoplastic elastomer (D) is at least one copolymer selected from the group consisting of a propylene-ethylene copolymer having an ethylene content of less than 50 wt%, a butene-ethylene copolymer having an ethylene content of less than 50 wt%, a propylene-ethylene-butene copolymer having an ethylene content of less than 50 wt%, a propylene-butene copolymer, and a butene homopolymer.
[12] The decorative film according to item [5] or [11] above, wherein the thermoplastic elastomer (D) further satisfies the following requirement (d5):
(d5) having a melting peak temperature (Tm (D)) of 30 to 170°C.
[13] The decorative film according to item [6] above, wherein the thermoplastic resin (E) is a styrene elastomer.
[14] The decorative film according to item [6] above, wherein the thermoplastic resin (E) is an alicyclic hydrocarbon resin.
[15] The decorative film according to item [7] above, wherein the propylene-ethylene block copolymer (F) further satisfies at least one requirement of the following requirements (f3) to (f5):

(f3) that the ethylene content of the propylene-ethylene block copolymer (F) be 0.15 to 85% by weight,

(f4) that the ethylene content of the component (F1) be in the range of from 0 to 6% by weight,
(f5) that the ethylene content of the component (F2) be in the range of from 5 to 90% by weight.

[16] A method for producing a decorative molded article, the method comprising the steps of: providing the decorative film according to any one of items [1] to [15] above; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.
[17] The method for producing a decorative molded article according to item [16] above, wherein the resin molded article comprises a propylene resin composition.

The invention according to the fifth aspect of the present invention encompasses the followings.

[1] A decorative film to be stuck onto a resin molded article by thermoforming, the decorative film containing a nucleating agent, wherein the decorative film comprises a seal layer (I) containing a polypropylene resin (A) and a layer (II) containing a resin composition (B') comprising a polypropylene resin (B),
wherein the polypropylene resin (A) satisfies the following requirement (a'1), and the resin composition (B') satisfies the following requirements (b'1) and (b'2):

(a'1) having a melt flow rate (at 230°C under a load of 2.16 kg) (MFR (A)) of more than 2.0 g/10 minutes,
(b'1) having a melt flow rate (at 230°C under a load of 2.16 kg) (MFR (B')) of 40 g/10 minutes or less,
(b'2) having a strain hardening index $\lambda$ of 1.1 or more.

[2] The decorative film according to item [1] above, wherein the nucleating agent is selected from an aromatic carboxylic acid metal salt, an aromatic phosphoric acid metal salt, a sorbitol derivative, a nonitol derivative, an amide compound, and a rosin metal salt.
[3] The decorative film according to item [1] or [2] above, wherein the polypropylene resin (A) further satisfies the following requirements (a'2) to (a'4), and the resin composition (B') further satisfies the following requirement (b'3):

(a'2) being a metallocene catalyst propylene polymer,
(a'3) having a melting peak temperature (Tm (A)) of lower than 150°C,
(a'4) having a molecular weight distribution (Mw/Mn (A)) of 1.5 to 3.5, as determined by GPC measurement,
(b'3) that a melting peak temperature (Tm (B')) and the Tm (A) satisfy the relationship of the formula (b-3):

$$Tm(B') > Tm(A) \quad \text{Formula (b-3).}$$

[4] The decorative film according to item [1] or [2] above, wherein the seal layer (I) comprises a resin composition (XX'3) in which the weight ratio of the polypropylene resin (A) and an ethylene-$\alpha$-olefin random copolymer (C) is 97:3 to 5:95,
wherein the ethylene-$\alpha$-olefin random copolymer (C) satisfies the following requirements (c'1) to (c'3):

(c'1) having an ethylene content [E (C)] of 65% by weight or more,
(c'2) having a density of 0.850 to 0.950 g/cm$^3$,
(c'3) having a melt flow rate (at 230°C under a load of 2.16 kg) (MFR (C)) of 0.1 to 100 g/10 minutes.

[5] The decorative film according to item [1] or [2] above, wherein the seal layer (I) comprises a resin composition (XX'4) in which the weight ratio of the polypropylene resin (A) and a thermoplastic elastomer (D) is 97:3 to 5:95, wherein the thermoplastic elastomer (D) satisfies the following requirements (d'1) to (d'4):

(d'1) being a thermoplastic elastomer comprising at least one of propylene and butene as a main component,
(d'2) having a density of 0.850 to 0.950 g/cm$^3$,
(d'3) having a melt flow rate (at 230°C under a load of 2.16 kg) (MFR (D)) of 0.1 to 100 g/10 minutes,
(d'4) having a tensile modulus smaller than the tensile modulus of the polypropylene resin (A).

[6] The decorative film according to item [1] or [2] above, wherein the seal layer (I) comprises a resin composition

(XX'5) in which the weight ratio of the polypropylene resin (A) and a thermoplastic resin (E) is 97:3 to 5:95, wherein the thermoplastic resin (E) satisfies the following requirement (e' 1), and the resin composition (XX'5) satisfies the following requirement (xx'1):

(e'1) containing at least one of an alicyclic hydrocarbon group and an aromatic hydrocarbon group,
(xx'1) that an isothermal crystallization time (t(XX'5)) (second), as determined by a differential scanning calorimeter (DSC), satisfy the following formula (x'-1):

$$t(XX'5) \geq 1.5 \times t(A) \qquad \text{Formula (x'-1)}$$

wherein t(A) represents an isothermal crystallization time (second) of the polypropylene resin (A) measured at a temperature 10°C higher than the crystallization start temperature of the polypropylene resin (A), and t(XX'5) represents an isothermal crystallization time (second) of the resin composition (XX'5) measured at a temperature 10°C higher than the crystallization start temperature of the polypropylene resin (A).

[7] The decorative film according to item [1] or [2] above, wherein the polypropylene resin (A) is a propylene-ethylene block copolymer (F) which satisfies the following requirements (f'1) and (f'2):

(f'1) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1),
(f'2) having a melting peak temperature (Tm (F)) of 110 to 170°C.

[8] A decorative film to be stuck onto a resin molded article by thermoforming, the decorative film containing a nucleating agent, wherein the decorative film comprises a seal layer (I) containing a polyolefin bonding resin (G) and a layer (II) containing a resin composition (B') comprising a polypropylene resin (B),
wherein the polyolefin bonding resin (G) satisfies the following requirements (g'1) and (g'2), and the resin composition (B') satisfies the following requirements (b'1) and (b'2):

(g'1) being a polyolefin resin having a polar functional group containing at least one heteroatom,
(g'2) having a melt flow rate (at 230°C under a load of 2.16 kg) (MFR (G)) of 100 g/10 minutes or less,
(b'1) having a melt flow rate (at 230°C under a load of 2.16 kg) (MFR (B')) of 40 g/10 minutes or less,
(b'2) having a strain hardening index λ of 1.1 or more.

[9] The decorative film according to any one of items [1] to [8] above, wherein the resin composition (B') satisfies the following requirements (b'1') and (b'2'):

(b'1') having a melt flow rate (at 230°C under a load of 2.16 kg) (MFR (B')) of 20 g/10 minutes or less,
(b'2') having a strain hardening index λ of 1.8 or more.

[10] The decorative film according to any one of items [1] to [8] above, wherein the resin composition (B') satisfies the following requirements (b'1") and (b'2"):

(b'1") having a melt flow rate (at 230°C under a load of 2.16 kg) (MFR (B')) of 12 g/10 minutes or less,
(b'2") having a strain hardening index λ of 2.3 or more.

[11] The decorative film according to any one of items [1] to [10] above, wherein the polypropylene resin (B) is a polypropylene resin (B-L) having a long-chain branched structure.
[12] The decorative film according to item [11] above, wherein the polypropylene resin (B-L) is a polypropylene resin which has a gel in a reduced amount, and which is produced by a method other than a crosslinking method.
[13] The decorative film according to any one of items [1] to [12] above, which has a surface decorative layer (III) comprising a surface decorative layer resin on the side opposite to the stuck surface side to the resin molded article with respect to the layer (II).
[14] The decorative film according to item [13] above, wherein the surface decorative layer resin comprises a polypropylene resin (H), wherein the polypropylene resin (H) has a strain hardening index λ of less than 1.1.
[15] The decorative film according to item [3] above, wherein the polypropylene resin (A) is a propylene-α-olefin

copolymer.

[16] The decorative film according to item [3] or [15] above, wherein the Tm (A) is 140°C or lower.

[17] The decorative film according to item [4] above, wherein the ethylene-α-olefin random copolymer (C) further satisfies the following requirement (c'4):

(c'4) having a melting peak temperature (Tm (C)) of 30 to 130°C.

[18] The decorative film according to item [4] or [17] above, wherein the ethylene-α-olefin random copolymer (C) further satisfies the following requirement (c'5):

(c'5) being a random copolymer of ethylene and an α-olefin having 3 to 20 carbon atoms.

[19] The decorative film according to item [5] above, wherein the thermoplastic elastomer (D) is a propylene-ethylene copolymer having an ethylene content of less than 50% by weight, a butene-ethylene copolymer having an ethylene content of less than 50% by weight, a propylene-ethylene-butene copolymer having an ethylene content of less than 50% by weight, a propylene-butene copolymer, or a butene homopolymer.

[20] The decorative film according to item [5] or [19] above, wherein the thermoplastic elastomer (D) further satisfies the following requirement (d'5):

(d'5) having a melting peak temperature (Tm (D)) of 30 to 170°C.

[21] The decorative film according to item [6] above, wherein the thermoplastic resin (E) is a styrene elastomer.

[22] The decorative film according to item [6] above, wherein the thermoplastic resin (E) is an alicyclic hydrocarbon resin.

[23] The decorative film according to item [7] above, wherein the propylene-ethylene block copolymer (F) further satisfies the following requirement (f'3):

(f3) that the ethylene content of the propylene-ethylene block copolymer (F) be 0.15 to 85% by weight.

[24] The decorative film according to item [7] or [23] above, wherein the propylene-ethylene block copolymer (F) further satisfies the following requirement (f4):

(f'4) that the ethylene content of the component (F1) be in the range of from 0 to 6% by weight.

[25] The decorative film according to item [7], [23], or [24] above, wherein the propylene-ethylene block copolymer (F) further satisfies the following requirement (f5):

(f'5) that the ethylene content of the component (F2) be in the range of from 5 to 90% by weight.

[26] A method for producing a decorative molded article, the method comprising the steps of: providing the decorative film according to any one of items [1] to [25] above; providing a resin molded article; setting the resin molded article and the decorative film in a chamber box capable of being evacuated; evacuating the inside of the chamber box; heat-softening the decorative film; pressing the heat-softened decorative film against the resin molded article; and increasing the evacuated pressure of the inside of the chamber box to atmospheric pressure or applying a pressure to the inside of the chamber box.

[27] The method for producing a decorative molded article according to item [26] above, wherein the resin molded article comprises a propylene resin composition.

[28] The method for producing a decorative molded article according to item [26] above, wherein the decorative film is the decorative film according to any one of items [8] to [14] above, and wherein the resin molded article comprises a polar resin material comprising at least one member selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and a composite material thereof.

The invention according to the sixth aspect of the present invention encompasses the followings.

[1] A decorative film to be stuck onto a resin molded article by thermoforming, the decorative film containing a hindered amine light stabilizer and/or an ultraviolet light absorber, wherein the decorative film comprises a seal layer (I) containing a polypropylene resin (A) and a layer (II) containing a resin composition (B') comprising a polypropylene resin (B),

wherein the polypropylene resin (A) satisfies the following requirement (a'1), and the resin composition (B') satisfies the following requirements (b'1) and (b'2):

(a'1) having a melt flow rate (at 230°C under a load of 2.16 kg) (MFR (A)) of more than 2.0 g/10 minutes,

(b'1) having a melt flow rate (at 230°C under a load of 2.16 kg) (MFR (B')) of 40 g/10 minutes or less,

(b'2) having a strain hardening index λ of 1.1 or more.

[2] The decorative film according to item [1] above, wherein the polypropylene resin (A) further satisfies the following requirements (a'2) to (a'4), and the resin composition (B') further satisfies the following requirement (b'3):

(a'2) being a metallocene catalyst propylene polymer,

(a'3) having a melting peak temperature (Tm (A)) of lower than 150°C,
(a'4) having a molecular weight distribution (Mw/Mn (A)) of 1.5 to 3.5, as determined by GPC measurement,
(b'3) that a melting peak temperature (Tm (B')) and the Tm (A) satisfy the relationship of the formula (b-3):

$$\text{Tm (B')} > \text{Tm (A)} \qquad \text{Formula (b-3).}$$

[3] The decorative film according to item [1] above, wherein the seal layer (I) comprises a resin composition (XX'3) in which the weight ratio of the polypropylene resin (A) and an ethylene-$\alpha$-olefin random copolymer (C) is 97:3 to 5:95, wherein the ethylene-$\alpha$-olefin random copolymer (C) satisfies the following requirements (c'1) to (c'3):

(c'1) having an ethylene content [E (C)] of 65% by weight or more,
(c'2) having a density of 0.850 to 0.950 g/cm$^3$,
(c'3) having a melt flow rate (at 230°C under a load of 2.16 kg) (MFR (C)) of 0.1 to 100 g/10 minutes.

[4] The decorative film according to item [1] above, wherein the seal layer (I) comprises a resin composition (XX'4) in which the weight ratio of the polypropylene resin (A) and a thermoplastic elastomer (D) is 97:3 to 5:95, wherein the thermoplastic elastomer (D) satisfies the following requirements (d'1) to (d'4):

(d'1) being a thermoplastic elastomer comprising at least one of propylene and butene as a main component,
(d'2) having a density of 0.850 to 0.950 g/cm$^3$,
(d'3) having a melt flow rate (at 230°C under a load of 2.16 kg) (MFR (D)) of 0.1 to 100 g/10 minutes,
(d'4) having a tensile modulus smaller than the tensile modulus of the polypropylene resin (A).

[5] The decorative film according to item [1] above, wherein the seal layer (I) comprises a resin composition (XX'5) in which the weight ratio of the polypropylene resin (A) and a thermoplastic resin (E) is 97:3 to 5:95, wherein the thermoplastic resin (E) satisfies the following requirement (e'1), and the resin composition (XX'5) satisfies the following requirement (xx'1):

(e'1) containing at least one of an alicyclic hydrocarbon group and an aromatic hydrocarbon group,
(xx'1) that an isothermal crystallization time (t(XX'5)) (second), as determined by a differential scanning calorimeter (DSC), satisfy the following formula (x'-1):

$$t(XX'5) \geq 1.5 \times t(A) \qquad \text{Formula (x'-1)}$$

wherein t(A) represents an isothermal crystallization time (second) of the polypropylene resin (A) measured at a temperature 10°C higher than the crystallization start temperature of the polypropylene resin (A), and t(XX'5) represents an isothermal crystallization time (second) of the resin composition (XX'5) measured at a temperature 10°C higher than the crystallization start temperature of the polypropylene resin (A).

[6] The decorative film according to item [1] above, wherein the polypropylene resin (A) is a propylene-ethylene block copolymer (F) which satisfies the following requirements (f'1) and (f'2):

(f'1) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1),
(f'2) having a melting peak temperature (Tm (F)) of 110 to 170°C.

[7] A decorative film to be stuck onto a resin molded article by thermoforming, the decorative film containing a hindered amine light stabilizer and/or an ultraviolet light absorber, wherein the decorative film comprises a seal layer (I) containing a polyolefin bonding resin (G) and a layer (II) containing a resin composition (B') comprising a polypropylene resin (B),
wherein the polyolefin bonding resin (G) satisfies the following requirements (g'1) and (g'2), and the resin composition (B') satisfies the following requirements (b'1) and (b'2):

(g'1) being a polyolefin resin having a polar functional group containing at least one heteroatom,

(g'2) having a melt flow rate (at 230°C under a load of 2.16 kg) (MFR (G)) of 100 g/10 minutes or less,
(b'1) having a melt flow rate (at 230°C under a load of 2.16 kg) (MFR (B')) of 40 g/10 minutes or less,
(b'2) having a strain hardening index λ of 1.1 or more.

[8] The decorative film according to any one of items [1] to [7] above, wherein the resin composition (B') satisfies the following requirements (b'1') and (b'2'):

(b'1') having a melt flow rate (at 230°C under a load of 2.16 kg) (MFR (B')) of 20 g/10 minutes or less,
(b'2') having a strain hardening index λ of 1.8 or more.

[9] The decorative film according to any one of items [1] to [7] above, wherein the resin composition (B') satisfies the following requirements (b'1") and (b'2"):

(b'1") having a melt flow rate (at 230°C under a load of 2.16 kg) (MFR (B')) of 12 g/10 minutes or less,
(b'2") having a strain hardening index λ of 2.3 or more.

[10] The decorative film according to any one of items [1] to [9] above, wherein the polypropylene resin (B) is a polypropylene resin (B-L) having a long-chain branched structure.
[11] The decorative film according to item [10] above, wherein the polypropylene resin (B-L) is a polypropylene resin which has a gel in a reduced amount, and which is produced by a method other than a crosslinking method.
[12] The decorative film according to item [2] above, wherein the polypropylene resin (A) is a propylene-α-olefin copolymer.
[13] The decorative film according to item [2] or [12] above, wherein the Tm (A) is 140°C or lower.
[14] The decorative film according to item [3] above, wherein the ethylene-α-olefin random copolymer (C) further satisfies the following requirement (c'4):
(c'4) having a melting peak temperature (Tm (C)) of 30 to 130°C.
[15] The decorative film according to item [3] or [14] above, wherein the ethylene-α-olefin random copolymer (C) further satisfies the following requirement (c'5):
(c'5) being a random copolymer of ethylene and an α-olefin having 3 to 20 carbon atoms.
[16] The decorative film according to item [4] above, wherein the thermoplastic elastomer (D) is a propylene-ethylene copolymer having an ethylene content of less than 50% by weight, a butene-ethylene copolymer having an ethylene content of less than 50% by weight, a propylene-ethylene-butene copolymer having an ethylene content of less than 50% by weight, a propylene-butene copolymer, or a butene homopolymer.
[17] The decorative film according to item [4] or [16] above, wherein the thermoplastic elastomer (D) further satisfies the following requirement (d'5):
(d'5) having a melting peak temperature (Tm (D)) of 30 to 170°C.
[18] The decorative film according to item [5] above, wherein the thermoplastic resin (E) is a styrene elastomer.
[19] The decorative film according to item [5] above, wherein the thermoplastic resin (E) is an alicyclic hydrocarbon resin.
[20] The decorative film according to item [6] above; wherein the propylene-ethylene block copolymer (F) further satisfies the following requirement (f'3):
(f'3) that the ethylene content of the propylene-ethylene block copolymer (F) be 0.15 to 85% by weight.
[21] The decorative film according to item [6] or [20] above, wherein the propylene-ethylene block copolymer (F) further satisfies the following requirement (f'4):
(f'4) that the ethylene content of the component (F1) be in the range of from 0 to 6% by weight.
[22] The decorative film according to item [6], [20], or [21] above, wherein the propylene-ethylene block copolymer (F) further satisfies the following requirement (f'5):
(f'5) that the ethylene content of the component (F2) be in the range of from 5 to 90% by weight.
[23] A method for producing a decorative molded article, the method comprising the steps of: providing the decorative film according to any one of items [1] to [22] above; providing a resin molded article; setting the resin molded article and the decorative film in a chamber box capable of being evacuated; evacuating the inside of the chamber box; heat-softening the decorative film; pressing the heat-softened decorative film against the resin molded article; and increasing the evacuated pressure of the inside of the chamber box to atmospheric pressure or applying a pressure to the inside of the chamber box.
[24] The method for producing a decorative molded article according to item [23] above, wherein the resin molded article comprises a propylene resin composition.
[25] The method for producing a decorative molded article according to item [23] above, wherein the decorative film is the decorative film according to any one of items [7] to [11] above, and wherein the resin molded article comprises

a polar resin material comprising at least one member selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and a composite material thereof.

Advantageous Effects of Invention

By the decorative film of the present invention, there can be provided a decorative film usable in three-dimensional decorative thermoforming, which has suppressed a reduction of the gloss and/or a reduction of the weathering resistance and a change of the appearance of the surface after subjected to decorative forming, and a method for producing a decorative molded article using the decorative film. Further, there can be obtained a decorative molded article having excellent appearance, which is formed using the decorative film.
By the method for producing a decorative molded article of the present invention, there can be obtained an excellent decorative molded article which is free of air contained between the decorative film and the resin molded article, and which exhibits excellent reproducibility of a texture, such as a grain.

BRIEF DESCRIPTION OF DRAWINGS

[Fig. 1] Diagrammatic views showing examples of the layer construction of the decorative film of the present invention.
[Fig. 2] A schematic cross-sectional view explaining the apparatus used in the method for producing a decorative molded article of the present invention.
[Fig. 3] A schematic cross-sectional view explaining the state in which a resin molded article and a decorative film are set in the apparatus of Fig. 2.
[Fig. 4] A schematic cross-sectional view explaining the state in which the inside of the apparatus of Fig. 2 is heated and evacuated.
[Fig. 5] A schematic cross-sectional view explaining the state in which the decorative film is pressed against the resin molded article in the apparatus of Fig. 2.
[Fig. 6] A schematic cross-sectional view explaining the state in which the pressure in the apparatus of Fig. 2 is increased back to atmospheric pressure or a pressure is applied to the apparatus.
[Fig. 7] A schematic cross-sectional view explaining the state of the obtained decorative molded article in which the unnecessary edge of the decorative film is trimmed.
[Fig. 8] Diagrammatic views showing examples of the layer construction of the obtained decorative molded article.

DESCRIPTION OF EMBODIMENTS

Hereinbelow, the present invention will be described in detail. The whole of the contents of Japanese Patent Application Nos. 2017-222516, 2017-247629, 2017-249129, 2018-19640, 2018-21093, and 2018-33633, from which the present application claims priorities, are incorporated into the present specification as a reference.
In the present specification, the term "decorative film" means a film for decorating a molded article. The term "decorative forming" means forming for sticking together a decorative film and a molded article. The term "three-dimensional decorative thermoforming" means forming for sticking together a decorative film and a molded article, wherein the forming has the step of subjecting the decorative film to thermoforming along the stuck surface of the molded article simultaneously with sticking the decorative film to the molded article, wherein the step is a step in which thermoforming is conducted under a reduced pressure (vacuum) for preventing air from being contained between the decorative film and the molded article, and the heated decorative film is stuck to the molded article and the pressure is released (applied) to cause the decorative film to closely adhere to the molded article. Further, the range of values indicated using the preposition "to" means a range of values including the respective values shown before and after the preposition "to" as the lower limit value and the upper limit value.
In the present specification, an MFR of each of a polypropylene resin and a polypropylene resin composition was measured under conditions at 230°C under a load of 2.16 kg in accordance with ISO 1133:1997 Conditions M. The unit is g/10 minutes.
Further, a Mn and a Mw of the polypropylene resin are values calculated from a molecular weight distribution curve obtained by GPC as described in, for example, "Koubunshi Kagaku no Kiso (Basics of Polymer Chemistry)" (edited by The Society of Polymer Science, Japan, Tokyo Kagaku Dojin, 1978).
Furthermore, in the present specification, the unit "wt%" means % by weight.
Hereinbelow, a mode for carrying out the present invention will be described in detail.

{First and second aspects of the present invention}

The decorative film of the present invention is a decorative film to be stuck onto a resin molded article having a three-dimensional shape by thermoforming, wherein the decorative film comprises a layer containing at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452. The change of the haze value after the fogging test is determined from the following formula.

Change of the haze value after the fogging test = Haze value of the glass plate after the fogging test - Haze value of the glass plate before the fogging test

<Fogging test> in which 1 g ($\pm$0.01 g) of the additive is placed in a sample bottle made of glass, and the sample bottle is covered with a glass plate and heated at 150°C for one hour to cause clouding (fogging) on the glass plate.

The decorative film of the present invention comprises a layer containing at least one additive selected from a nucleating agent, a hindered amine light stabilizer, and an ultraviolet light absorber.

With respect to the additive in the present invention, it is necessary that a change of the haze value be 40 or less, as measured by the method in accordance with JIS-K7136 with respect to a glass plate which has been subjected to the fogging test as shown below by the method in accordance with ISO 6452, and the change of the haze value is preferably 35 or less, more preferably 25 or less, further preferably 10 or less.

<Fogging test> in which 1 g ($\pm$0.01 g) of the additive is placed in a sample bottle made of glass, and the sample bottle is covered with a glass plate and heated at 150°C for one hour to cause clouding (fogging) on the glass plate.

In a general fogging test, a sample of a resin composition containing an additive to be tested is used, but, in such a test, the volatility of an additive contained in the decorative film of the present invention cannot be grasped. That means that the volatility of an additive contained in the decorative film of the present invention is different from a general bleeding phenomenon of an additive. By the fogging test in which an additive is directly heated, the volatility of the additive contained in the decorative film of the present invention can be grasped.

When the haze value of the glass plate which has been subjected to the fogging test is in the above-mentioned range, the additive is unlikely to volatilize even during the decorative forming, and therefore there can be obtained a decorative molded article which has excellent transparency and excellent surface smoothness as well as excellent gloss and/or weathering resistance, and whose change of the appearance of the surface is suppressed. Further, it is possible to prevent the additive from moving toward the surface (bonded surface) of the decorative film to lower the adhesive force of the film with an object to be decorated. Furthermore, it is possible to prevent the inside of a chamber box of a thermoforming machine from being stained with the additive.

[Nucleating agent]

In the present specification, the nucleating agent means an additive to be incorporated into, for example, a polyolefin resin, and the incorporation of the nucleating agent into, for example, a polyolefin resin can accelerate crystallization of the resin. Therefore, it is possible to increase the crystallization rate of the polyolefin resin, or increase the crystallization temperature or melting temperature of the polyolefin resin. Further, the addition of the nucleating agent to a resin rapidly forms very small crystals, making it possible to improve the film of the resin in, for example, surface smoothness, gloss, or transparency.

With respect to the nucleating agent in the present invention, there is no particular limitation as long as the above-mentioned requirements are satisfied, but examples of nucleating agents include organometallic compounds, such as an aromatic carboxylic acid metal salt and an aromatic phosphoric acid metal salt, a sorbitol derivative, a nonitol derivative, an amide compound, and a rosin metal salt. Among these, the nucleating agent is preferably an organometallic compound or an amide compound.

[Organometallic compound]

When the nucleating agent is an organometallic compound, more preferred is a compound represented by the following general formula (1):

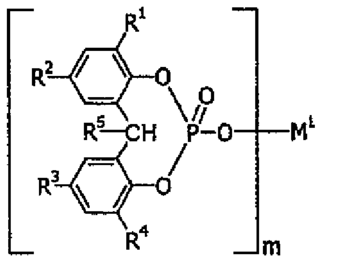 (1)

wherein each of $R^1$ to $R^4$ independently represents a hydrogen atom or an alkyl group having 1 to 9 carbon atoms and optionally having a branch, $R^5$ represents a hydrogen atom or a methyl group, m represents 1 or 2, and, when m is 1, $M^1$ represents a hydrogen atom or an alkali metal atom, and, when m is 2, $M^1$ represents an element of the Group 2, Al(OH), or Zn.

Examples of alkyl groups having 1 to 9 carbon atoms represented by $R^1$, $R^2$, $R^3$, and $R^4$ in the general formula (1) above include a methyl group, an ethyl group, a propyl group, an isopropyl group, a butyl group, a secondary-butyl group, a tertiary-butyl group, an isobutyl group, an amyl group, an isoamyl group, a tertiary-amyl group, a hexyl group, a cyclohexyl group, a heptyl group, an isoheptyl group, and a tertiary-heptyl group, and, of these, especially preferred are a methyl group, a tertiary-butyl group, and a tertiary-heptyl group.

Examples of elements of the Group 2 represented by $M^1$ in the general formula (1) above include beryllium, magnesium, calcium, strontium, barium, and radium, and, of these, magnesium or calcium is preferred because the resultnat nucleating agent component exhibits a remarkable nucleating effect.

The above-mentioned organometallic compounds can be used individually or in combination.

Examples of commercially available organometallic compounds include "ADK STAB NA-11", "ADK STAB NA-21" and "ADK STAB NA-25", manufactured by ADEKA Corporation.

[Amide compound]

When the nucleating agent is an amide compound, the amide compound is not particularly limited as long as it is a compound containing at least one amide group, but the amide compound is preferably a compound represented by the general formula (2) or (3) below, and further, with respect to the compound of the general formula (2), more preferred are compounds represented by the general formulae (4) to (7) below.
General formula (2)

$$R^6\text{-}(CONHR^7)_a \qquad (2)$$

Wherein a represents an integer of 2 to 6; $R^6$ represents an a-valent residue obtained by removing the all carboxyl groups from a linear or branched, saturated or unsaturated aliphatic polycarboxylic acid having 6 to 18 carbon atoms, an a-valent residue obtained by removing the all carboxyl groups from an alicyclic polycarboxylic acid having 9 to 18 carbon atoms, or an a-valent residue obtained by removing the all carboxyl groups from an aromatic polycarboxylic acid having 9 to 18 carbon atoms; and two to six $R^7$'s are the same or different, and each represents a residue obtained by removing an amino group from a linear or branched, saturated or unsaturated aliphatic monoamine having 6 to 30 carbon atoms, a residue obtained by removing an amino group from an alicyclic monoamine having 6 to 30 carbon atoms, or a residue obtained by removing an amino group from an aromatic monoamine having 6 to 30 carbon atoms.
General formula (3)

$$R^8\text{-}(NHCOR^9)_b \qquad (3)$$

Wherein b represents an integer of 2 to 6; $R^8$ represents a b-valent residue obtained by removing the all amino groups from a linear or branched, saturated or unsaturated aliphatic polyamine having 2 to 30 carbon atoms, a b-valent residue obtained by removing an amino group from an alicyclic polyamine having 6 to 30 carbon atoms, or a b-valent residue obtained by removing an amino group from an aromatic polyamine having 6 to 30 carbon atoms; and two to six $R^9$'s are the same or different, and each represents a residue obtained by removing a carboxyl group from a linear or branched,

saturated or unsaturated aliphatic monocarboxylic acid having 3 to 18 carbon atoms, a residue obtained by removing a carboxyl group from an alicyclic monocarboxylic acid having 9 to 18 carbon atoms, or a residue obtained by removing a carboxyl group from an aromatic monocarboxylic acid having 9 to 18 carbon atoms.

General formula (4)

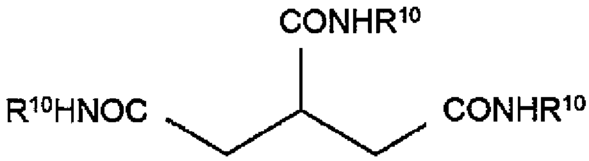

(4)

Wherein three $R^{10}$'s are the same or different, and each represents a residue obtained by removing an amino group from an aliphatic monoamine having 6 to 18 carbon atoms, a residue obtained by removing an amino group from an alicyclic monoamine having 6 to 18 carbon atoms, or a residue obtained by removing an amino group from an aromatic monoamine having 6 to 18 carbon atoms.

General formula (5)

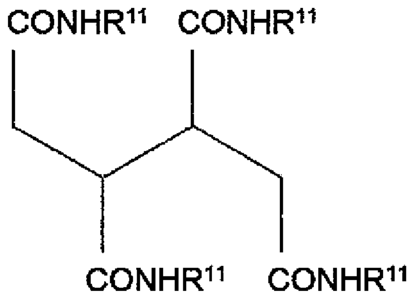

(5)

Wherein four $R^{11}$'s are the same or different, and each represents a residue obtained by removing an amino group from an aliphatic monoamine having 6 to 18 carbon atoms, a residue obtained by removing an amino group from an alicyclic monoamine having 6 to 18 carbon atoms, or a residue obtained by removing an amino group from an aromatic monoamine having 6 to 18 carbon atoms.

General formula (6)

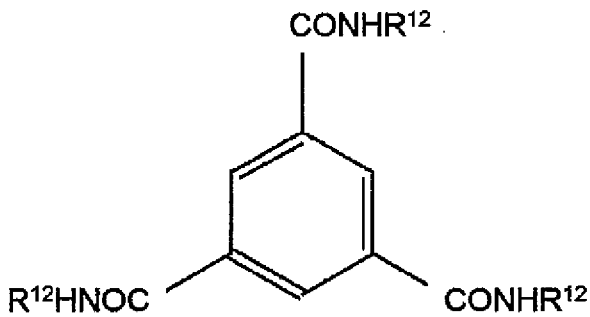

(6)

Wherein three $R^{12}$'s are the same or different, and each represents a residue obtained by removing an amino group from an aliphatic monoamine having 6 to 18 carbon atoms, a residue obtained by removing an amino group from an alicyclic monoamine having 6 to 18 carbon atoms, or a residue obtained by removing an amino group from an aromatic monoamine having 6 to 18 carbon atoms.

General formula (7)

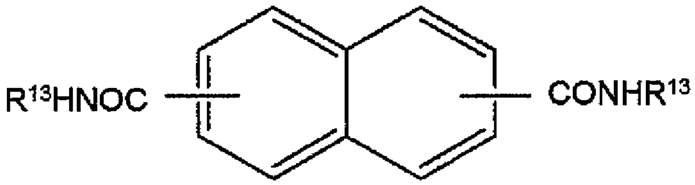 (7)

Wherein two $R^{13}$'s are the same or different, and each represents a residue obtained by removing an amino group from an aliphatic monoamine having 6 to 18 carbon atoms, a residue obtained by removing an amino group from an alicyclic monoamine having 6 to 30 carbon atoms, or a residue obtained by removing an amino group from an aromatic monoamine having 6 to 30 carbon atoms.

Specific examples of the amide compounds represented by the general formula (4) above include 1,2,3-propanetricarboxylic acid trianilide, 1,2,3-propanetricarboxylic acid tris(4-butylanilide), 1,2,3-propanetricarboxylic acid tricyclohexylamide, 1,2,3-propanetricarboxylic acid tris(2-methylcyclohexylamide), 1,2,3-propanetricarboxylic acid tris(3-methylcyclohexylamide), 1,2,3-propanetricarboxylic acid tris(4-methylcyclohexylamide), 1,2,3-propanetricarboxylic acid tris(2-ethylcyclohexylamide), 1,2,3-propanetricarboxylic acid tris(3-ethylcyclohexylamide), 1,2,3-propanetricarboxylic acid tris(4-ethylcyclohexylamide), 1,2,3-propanetricarboxylic acid tris(2-n-propylcyclohexylamide), 1,2,3-propanetricarboxylic acid tris(3-n-propylcyclohexylamide), 1,2,3-propanetricarboxylic acid tris(4-n-propylcyclohexylamide), 1,2,3-propanetricarboxylic acid tris(2-iso-propylcyclohexylamide), 1,2,3-propanetricarboxylic acid tris(3-iso-propylcyclohexylamide), 1,2,3-propanetricarboxylic acid tris(4-iso-propylcyclohexylamide), 1,2,3-propanetricarboxylic acid tris(2-n-butylcyclohexylamide), 1,2,3-propanetricarboxylic acid tris(3-n-butylcyclohexylamide), 1,2,3-propanetricarboxylic acid tris(4-n-butylcyclohexylamide), 1,2,3-propanetricarboxylic acid tris(2-iso-butylcyclohexylamide), 1,2,3-propanetricarboxylic acid tris(3-iso-butylcyclohexylamide), 1,2,3-propanetricarboxylic acid tris(4-iso-butylcyclohexylamide), 1,2,3-propanetricarboxylic acid tris(2-sec-butylcyclohexylamide), 1,2,3-propanetricarboxylic acid tris(3-sec-butylcyclohexylamide), 1,2,3-propanetricarboxylic acid tris(4-sec-butylcyclohexylamide), 1,2,3-propanetricarboxylic acid tris(2-tert-butylcyclohexylamide), 1,2,3-propanetricarboxylic acid tris(3-tert-butylcyclohexylamide), 1,2,3-propanetricarboxylic acid tris(4-tert-butylcyclohexylamide), 1,2,3-propanetricarboxylic acid tris(4-n-pentylcyclohexylamide), 1,2,3-propanetricarboxylic acid tris(4-n-hexylcyclohexylamide), 1,2,3-propanetricarboxylic acid tris(4-n-heptylcyclohexylamide), 1,2,3-propanetricarboxylic acid tris(4-n-octylcyclohexylamide), 1,2,3-propanetricarboxylic acid tri[4-(2-ethylhexyl)cyclohexylamide], 1,2,3-propanetricarboxylic acid tris(4-n-nonylcyclohexylamide), 1,2,3-propanetricarboxylic acid tris(4-n-decylcyclohexylamide), 1,2,3-propanetricarboxylic acid [(cyclohexylamide)di(2-methylcyclohexylamide)], and 1,2,3-propanetricarboxylic acid [di(cyclohexylamide) (2-methylcyclohexylamide)], and, of these, preferred is 1,2,3-propanetricarboxylic acid tricyclohexylamide or 1,2,3-propanetricarboxylic acid tris(2-methylcyclohexylamide), and especially preferred is 1,2,3-propanetricarboxylic acid tris(2-methylcyclohexylamide).

Specific examples of the amide compounds represented by the general formula (5) above include 1,2,3,4-butanetetracarboxylic acid tetraanilide, 1,2,3,4-butanetetracarboxylic acid tetrakis(4-butylanilide), 1,2,3,4-butanetetracarboxylic acid tetracyclohexylamide, 1,2,3,4-butanetettacarboxylic acid tetrakis(2-methylcyclohexylamide), 1,2,3,4-butanetetracarboxylic acid tetrakis(3-methylcyclohexylamide), 1,2,3,4-butanetetracarboxylic acid tetrakis(4-methylcyclohexylamide), 1,2,3,4-butanetetracarboxylic acid tetrakis(2-ethylcyclohexylamide), 1,2,3,4-butanetetracarboxylic acid tetrakis(3-ethylcyclohexylamide), 1,2,3,4-butanetetracarboxylic acid tetrakis(4-ethylcyclohexylamide), 1,2,3,4-butanetetracarboxylic acid tetrakis(2-n-propylcyclohexylamide), 1,2,3,4-butanetetracarboxylic acid tetrakis(3-n-propylcyclohexylamide), 1,2,3,4-butanetetracarboxylic acid tetrakis(4-n-propylcyclohexylamide), 1,2,3,4-butanetetracarboxylic acid tetrakis(2-iso-propylcyclohexylamide), 1,2,3,4-butanetetracarboxylic acid tetrakis(3-iso-propylcyclohexylamide), 1,2,3,4-butanetetracarboxylic acid tetrakis(4-iso-propylcyclohexylamide), 1,2,3,4-butanetetracarboxylic acid tetrakis(2-n-butylcyclohexylamide), 1,2,3,4-butanetetracarboxylic acid tetrakis(3-n-butylcyclohexylamide), 1,2,3,4-butanetetracarboxylic acid tetrakis(4-n-butylcyclohexylamide), 1,2,3,4-butanetetracarboxylic acid tetrakis(2-iso-butylcyclohexylamide), 1,2,3,4-butanetetracarboxylic acid tetrakis(3-iso-butylcyclohexylamide), 1,2,3,4-butanetetracarboxylic acid tetrakis(4-iso-butylcyclohexylamide), 1,2,3,4-butanetetracarboxylic acid tetrakis(2-sec-butylcyclohexylamide), 1,2,3,4-butanetetracarboxylic acid tetrakis(3-sec-butylcyclohexylamide), 1,2,3,4-butanetetracarboxylic acid tetrakis(4-sec-butylcyclohexylamide), 1,2,3,4-butanetetracarboxylic acid tetrakis(2-tert-butylcyclohexylamide), 1,2,3,4-butanetetracarboxylic acid tetrakis(3-tert-butylcyclohexylamide), 1,2,3,4-butanetetracarboxylic acid tetrakis(4-tert-butylcyclohexylamide), 1,2,3,4-butanetetracarboxylic acid tetrakis(4-n-pentylcyclohexylamide), 1,2,3,4-butanetetracarboxylic acid tetrakis(4-n-hexylcyclohexylamide), 1,2,3,4-butanetetracarboxylic acid tetrakis(4-n-heptylcyclohexylamide), 1,2,3,4-butanetetracarboxylic acid tetrakis(4-n-octylcyclohexylamide), 1,2,3,4-butanetetracarboxylic acid tetra[4-(2-ethylhexyl)cyclohexylamide], 1,2,3,4-butanetetracarboxylic acid tetrakis(4-n-nonylcyclohexylamide), 1,2,3,4-butanetetracarboxylic acid tetrakis(4-n-decylcyclohexylamide), and 1,2,3,4-butanetetracarboxylic acid [di(cyclohexylamide)di(2-metliylcyclohexylamide)], and, of these, preferred is 1,2,3,4-butanetetracarboxylic acid tetracyclohexylamide or 1,2,3,4-butanetetracarboxylic acid tetrakis(2-methylcyclohexylamide), and especially preferred is 1,2,3,4-butanetetracarboxylic acid tetracyclohexylamide.

Specific examples of the amide compounds represented by the general formula (6) above include 1,3,5-benzenetricarboxylic acid trianilide, 1,3,5-benzenetricarboxylic acid tris(4-butylanilide), 1,3,5-benzenetricarboxylic acid tricyclohexylamide, 1,3,5-benzenetricarboxylic acid tris(2-methylcyclohexylamide), 1,3,5-benzenetricarboxylic acid tris(3-methylcyclohexylamide), 1,3,5-benzenetricarboxylic acid tris(4-methylcyclohexylamide), 1,3,5-benzenetricarboxylic acid tris(2-ethylcyclohexylamide), 1,3,5-benzenetricarboxylic acid tris(3-ethylcyclohexylamide), 1,3,5-benzenetricarboxylic acid tris(4-ethylcyclohexylamide), 1,3,5-benzenetricarboxylic acid tris(2-n-propylcyclohexylamide), 1,3,5-benzenetricarboxylic acid tris(3-n-propylcyclohexylamide), 1,3,5-benzenetricarboxylic acid tris(4-n-propylcyclohexylamide), 1,3,5-benzenetricarboxylic acid tris(2-iso-propylcyclohexylamide), 1,3,5-benzenetricarboxylic acid tris(3-iso-propylcyclohexylamide), 1,3,5-benzenetricarboxylic acid tris(4-iso-propylcyclohexylamide), 1,3,5-benzenetricarboxylic acid tris(2-n-butylcyclohexylamide), 1,3,5-benzenetricarboxylic acid tris(3-n-butylcyclohexylamide), 1,3,5-benzenetricarboxylic acid tris(4-n-butylcyclohexylamide), 1,3,5-benzenetricarboxylic acid tris(2-iso-butylcyclohexylamide), 1,3,5-benzenetricarboxylic acid tris(3-iso-butylcyclohexylamide), 1,3,5-benzenetricarboxylic acid tris(4-iso-butylcyclohexylamide), 1,3,5-benzenetricarboxylic acid tris(2-sec-butylcyclohexylamide), 1,3,5-benzenetricarboxylic acid tris(3-sec-butylcyclohexylamide), 1,3,5-benzenetricarboxylic acid tris(4-sec-butylcyclohexylamide), 1,3,5-benzenetricarboxylic acid tris(2-tert-butylcyclohexylamide), 1,3,5-benzenetricarboxylic acid tris(3-tert-butylcyclohexylamide), 1,3,5-benzenetricarboxylic acid tris(4-tert-butylcyclohexylamide), 1,3,5-benzenetricarboxylic acid tris(4-n-pentylcyclohexylamide), 1,3,5-benzenetricarboxylic acid tris(4-n-hexylcyclohexylamide), 1,3,5-benzenetricarboxylic acid tris(4-n-heptylcyclohexylamide), 1,3,5-benzenetricarboxylic acid tris(4-n-octylcyclohexylamide), 1,3,5-benzenetricarboxylic acid tris[4-(2-ethylhexyl)cyclohexylamide], 1,3,5-benzenetricarboxylic acid tris(4-n-nonylcyclohexylamide), 1,3,5-benzenetricarboxylic acid tris(4-n-decylcyclohexylamide), 1,3,5-benzenetricarboxylic acid [(cyclohexylamide)di(2-methylcyclohexylamide)], and 1,3,5-benzenetricarboxylic acid [di(cyclohexylamide) (2-methylcyclohexylamide)], and, of these, especially preferred is 1,3,5-benzenetricarboxylic acid tricyclohexylamide or 1,3,5-benzenetricarboxylic acid tris(2-methylcyclohexylamide).

Specific examples of the amide compounds represented by the general formula (7) above include 2,6-naphthalenedicarboxylic acid dianilide, 2,6-naphthalenedicarboxylic acid dicyclohexylamide, and 2,6-naphthalenedicarboxylic acid di(2-methylcyclohexylamide), and especially preferred is 2,6-naphthalenedicarboxylic acid dicyclohexylamide.

Specific examples of the amide compounds represented by the general formula (3) above include 1,3,5-tris(2,2-dimethylpropionylamino)benzene, 1,3,5-tris(cyclohexylcarbonylamino)benzene, 1,3,5-tris(2,2-dimethylpropionylamino)benzene, 1,3,5-tris(4-methylbenzoylamino)benzene, 1,3,5-tris(3,4-dimethylbenzoylamino)benzene, 1,3,5-tris(3,5-dimethylbenzoylammo)benzene, 1,3,5-tris(cyclopentanecarbonylamino)benzene, 1,3,5-tris(1-adamantanecarbonylamino)benzene, 1,3,5-tris(2-methylpropionylamino)benzene, 1,3,5-tris(3,3-dimethylbutyrylamino)benzene, 1,3,5-tris(2-ethylbutyrylamino)benzene, 1,3,5-tris(2,2-dimethylbutyrylamino)benzene, 1,3,5-tris(2-cyclohexyl-acetylamino)benzene, 1,3,5-tris(3-cyclohexyl-propionylamino)benzene, 1,3,5-tris(4-cyclohexyl-butyrylamino)benzene, 1,3,5-tris(5-cyclohexyl-valeroylamino)benzene, 1-isobutyrylamino-3,5-bis(pivaloylamino)benzene, 2,2-dimethylbutyrylamino-3,5-bis(pivaloylamino)benzene, 3,3-dimethylbutyrylamino-3,5-bis(pivaloylamino) benzene, 1,3-bis(isobutyrylamino)-5-pivaloylaminobenzene, 1,3-bis(isobutyrylamino)-5-(2,2-dimethyl-butyryl)aminobenzene, 1,3-bis(isobutyrylamino)-5-(3,3-dimethyl-butyryl)aminobenzene, 1,3-bis(2,2-dimethylbutyrylamino)-5-pivaloylaminobenzene, l,3-bis(2,2-dimethylbutyrylamino)-5-isobutyrylaminobenzene, 1,3-bis(2,2-dimethylbutyrylamino)-5-(3,3 -dimethylbutyryl)-aminobenzene, 1,3-bis(3,3-dimethylbutyrylamino)-5-pivaloylamino-benzene, 1,3-bis(3,3-dimethylbutyrylamino)-5-isobutyryl-aminobenzene, 1,3-bis(3,3-dimethylbutyrylamino)-5-(2,2-dimethyl-butyrylamino)aminobenzene, 1,3,5-tris(3-(trimethylsilyl)propionylamino)benzene, N-t-butyl-3,5-bis-(3-methylbutyrylamino)-benzamide, N-t-butyl-3,5-bis-(pivaloylamino)-benzamide, N-t-octyl-3,5-bis-(pivaloylamino)-benzamide, N-(1,1-dimethyl-propyl)-3,5-bis-(pivaloylamino)-benzamide, N-(t-octyl)-3,5-bis-(isobutyrylamino)-benzamide, N-(t-butyl)-3,5-bis-(pivaloylamino)-benzamide, N-(2,3-dimethyl-cyclohexyl)-3,5-bis-(pivaloylamino)-benzamide, N-t-butyl-3,5-bis-(cyclopentanecarbonylamino)-benzamide, N-(3-methylbutyl)-3,5-bis-(3-methylbutyrylamino)-benzamide, N-(3-methylbutyl)-3,5-bis-(pivaloylamino)-benzamide, N-(3-methylbutyl)-3,5-bis-(4-methylpentanoylamino)-benzamide, N-(3-methylbutyl)-3,5-bis-(cyclopentanecarbonylamino)-benzamide, N-(3-methylbutyl)-3,5-bis-(cyclohexanecarbonylamino)-benzamide, N-cyclopentyl-3,5-bis-(3-methylbutyrylamino)-benzamide, N-cyclopentyl-3,5-bis-(pivaloylamino)-benzamide, N-cyclopentyl-3,5-bis-(4-methylpentanoylamino)-benzamide, N-cyclopentyl-3,5-bis-(cyclopentanecarbonylamino)-benzamide, N-cyclopentyl-3,5-bis-(cyclohexanecarbonylamino)-benzamide, N-cyclohexyl-3,5-bis-(3-methylbutyrylamino)-benzamide, N-cyclohexyl-3,5-bis-(pivaloylamino)-benzamide, N-cyclohexyl-3,5-bis-(4-methylpentanoylamino)-benzamide, N-cyclohexyl-3,5-bis-(cyclopentanecarbonylamino)-benzamide, N-cyclohexyl-3,5-bis-(cyclohexanecarbonylamino)-benzamide, N-isopropyl-3,5-bis-(pivaloylamino)-benzamide, N-isopropyl-3,5-bis-(isobutyrylamino)-benzamide, N-t-butyl-3,5-bis-(2,2-dimethylbutyrylamino)-benzamide, N-t-octyl-3,5-bis-(2,2-dimethylbutyrylamino)-benzamide, 1,6-bis(4-methylcyclohexylamide)hexane, 1,6-bis(4-butylcyclohexylamide)hexane, 1,6,11-tris(4-methylcyclohexylamide)undecane, and 1,6,11-tris(4-butylcyclohexylamide)undecane.

The above-mentioned amide compounds can be used individually or in combination. Further, with respect to the crystal form of the amide compound in the present invention, there is no particular limitation as long as the effects

of the present invention can be obtained, and the amide compound of an arbitrary crystal form, such as a hexagonal, monoclinic, or cubic crystal, can be used.

Examples of commercially available amide compounds include NJSTAR TF-1 (registered trademark) and PC-1 (registered trademark) of New Japan Chemical Co., Ltd., and IRGACLEAR XT 386 (registered trademark) of BASF Japan Ltd.

The nucleating agents can be used individually or in combination.

With respect to the amount of the nucleating agent component added, there is no particular limitation, but the amount is, relative to 100 parts by weight of the resin constituting the layer containing the nucleating agent, preferably in the range of from 0.001 to 1.00 part by weight, more preferably 0.005 to 0.50 part by weight. When the amount of the nucleating agent component added is in the above-mentioned range, a decorative film and a decorative molded article having excellent transparency and surface smoothness can be obtained.

[Hindered amine light stabilizer and ultraviolet light absorber]

With respect to the hindered amine light stabilizer or ultraviolet light absorber in the present invention (for differentiating these additives from the other additives, hereinafter, these additives are frequently particularly referred to as "weathering agent"), there is no particular limitation as long as the above-mentioned requirements are satisfied, but the hindered amine light stabilizer or ultraviolet light absorber preferably has a molecular weight of 490 g/mol or more, more preferably 510 g/mol or more, further preferably 550 g/mol or more. When the molecular weight is in the above-mentioned range, the hindered amine light stabilizer and/or ultraviolet light absorber is unlikely to volatilize even under the conditions for decorative forming. The upper limit of the molecular weight is not particularly limited, but is preferably 10,000 g/mol or less from a practical point of view.

Specific examples of the hindered amine compounds used in the present invention include poly{[6-[(1,1,3,3-tetramethylbutyl)amino]-1,3,5-triazin-2,4-diyl][(2,2,6,6-tetramethyl-4 -piperidyl)imino]hexamethylene[(2,2,6,6-tetramethyl-4-piperidyl)imino]}, bis(1,2,2,6,6-pentamethyl-4-piperidyl) sebacate, bis(1,2,2,6,6-pentamethyl-4-piperidyl)-2-butyl-2-(3,5-di-tertiary-butyl-4-hydroxybenzyl )malonate, bis(2,2,6,6-tetramethyl-4-piperidyl)•di(tridecyl) butanetetracarboxylate, bis(1,2,2,6,6-pentamethyl-4-piperidyl)•di(tridecyl) butanetetracarboxylate, 3,9-bis[1,1-dimethyl-2-{tris(2,2,6,6-tetramethyl-4-piperidyloxycarbonyloxy)butylcarbo nyloxy}ethyl]-2,4,8,10-tetraoxaspiro[5,5]undecane, 3,9-bis[1,1-dimethyl-2-{tris(1,2,2,6,6-pentamethyl-4-piperidyloxycarbonyloxy)butylcar bonyloxy}ethyl]-2,4,8,10-tetraoxaspiro[5,5]undecane, 1,5,8,12-tetrakis[4,6-bis{N-(2,2,6,6-tetramethyl-4-piperidyl)butylamino}-1,3,5-triazin-2 -yl]-1,5,8,12-tetraazadodecane, a 1-(2-hydroxyethyl)-2,2,6,6-tetramethyl-4-piperidinol/dimethyl succinate condensation product, a 2-tertiary-octylamino-4,6-dichloro-s-triazine/N,N'-bis(2,2,6,6-tetramethyl-4-piperidyl)h examethylenediamine condensation product, a N,N'-bis(2,2,6,6-tetramethyl-4-piperidyl)hexamethylenediamine/dibromoethane condensation product, bis(2,2,6,6-tetramethyl-4-oxylpiperidine) sebacate, tetrakis(2,2,6,6-tetramethyl-4-oxylpiperidyl) butane-1,2,3,4-tetracarboxylate, tetrakis(2,2,6,6-tetramethyl-4-piperidyl)1,2,3,4-butanetetracarboxylate, tetrakis(1,2,2,6,6-pentamethyl-4-piperidyl)1,2,3,4-butanetetracarboxylate, and 3,9-bis(1,1-dimethyl-2-(tris(2,2,6,6-tetramethyl-N-oxylpiperidyl-4-oxycarbonyl)butylca rbonyloxy)ethyl)-2,4,8,10-tetraoxaspiro[5,5]undecane. Of these, especially preferred are poly{[6-[(1,1,3,3-tetramethylbutyl)amino]-1,3,5-triazin-2,4-diyl][(2,2,6,6-tetramethyl-4 -piperidyl)imino]hexamethylene[(2,2,6,6-tetramethyl-4-piperidyl)imino]}, 3,9-bis[1,1-dimethyl-2-{tris(2,2,6,6-tetramethyl-4-piperidyloxycarbonyloxy)butylcarbo nyloxy}ethyl]-2,4,8,10-tetraoxaspiro[5,5]undecane, and tetrakis(2,2,6,6-tetramethyl-4-piperidyl) 1,2,3,4-butanetetracarboxylate.

Examples of commercially available hindered amine light stabilizers include LA-68 (registered trademark) and LA-57 (registered trademark), manufactured by ADEKA Corporation, and Chimassorb 944 (registered trademark) and Tinuvin 622 (registered trademark), manufactured by BASF SE.

The amount of the hindered amine light stabilizer added is, relative to 100 parts by weight of the resin constituting the layer containing the light stabilizer, preferably in the range of from 0.001 to 1.00 part by weight, more preferably 0.005 to 0.50 part by weight. When the amount of the hindered amine light stabilizer added is in the above-mentioned range, a decorative film and a decorative molded article having excellent weathering resistance can be obtained.

Specific examples of the ultraviolet light absorbers used in the present invention include 2,2'-methylenebis(4-t-octyl-6-benzotriazolyl)phenol, 2-(4,6-diphenyl-1,3,5-triazin-2-yl)-5-[2-(2-ethylhexanoyloxy)ethoxy]phenol, and 2,4,6-tris(2-hydroxy-4-hexyloxy-3-methylphenyl)-1,3,5-triazine.

Examples of commercially available ultraviolet light absorbers include LA-31G (registered trademark), LA-46 (registered trademark), and LA-F70 (registered trademark), manufactured by ADEKA Corporation.

The amount of the ultraviolet light absorber added is, relative to 100 parts by weight of the resin constituting the layer containing the ultraviolet light absorber, preferably in the range of from 0.001 to 1.00 part by weight, more preferably 0.005 to 0.50 part by weight. When the amount of the ultraviolet light absorber added is in the above-mentioned range, a decorative film and a decorative molded article having excellent weathering resistance can be obtained.

Both the hindered amine light stabilizer and the ultraviolet light absorber may be contained, and, in such a case,

the total amount of these weathering agents is preferably in the range of from 0.002 to 2.00 parts by weight, more preferably 0.01 to 1.00 part by weight, relative to 100 parts by weight of the resin constituting the layer containing the weathering agents.

When the ratio of the hindered amine light stabilizer and the ultraviolet light absorber contained is in a specific range, a higher effect can be exhibited. The blend ratio of these weathering agents, i.e., the hindered amine light stabilizer/the ultraviolet light absorber ratio is preferably 1/5 to 5/1, more preferably 1/4 to 4/1. When both of the weathering agents are contained, the synagies gained from the weathering agents make it possible to obtain a decorative film and a decorative molded article each having more excellent weathering resistance.

[Layer containing the additive]

The decorative film of the present invention comprises a layer comprising a resin containing the at least one additive selected from a nucleating agent, a hindered amine light stabilizer, and an ultraviolet light absorber. The decorative film may comprise only the layer containing the additive, or may be of a multilayer structure comprising the layer containing the additive and the other layers. By virtue of having the layer containing the additive, a decorative film and a decorative molded article each having a reduced change of excellent gloss and/or excellent weathering resistance can be obtained.

Further, in the case where the additive is a nucleating agent, when the layer containing the nucleating agent is present on the surface of the decorative film, the obtained decorative film has excellent surface smoothness and high gloss. Further, deterioration by light proceeds from the surface of the molded article, and therefore, when the additive is a weathering agent, it is more preferred that the weathering agent is contained in the outermost surface layer on the side opposite to the stuck surface to the resin molded article with respect to the decorative film.

The nucleating agent may be contained in the all layers of the decorative film, but may be contained only in the surface layer of the decorative film which constitutes the surface of the resultant decorative molded article. For example, when the decorative film is a two-layer film comprising a seal layer (I) and a layer (II), it is preferred that the layer (II) contains the nucleating agent. Further, when a surface decorative layer (III) which is an optional layer is stacked on a layer (II), it is preferred that the surface decorative layer (III) contains the nucleating agent.

The hindered amine light stabilizer and/or ultraviolet light absorber may be contained in the all layers of the decorative film, but may be contained only in the surface layer of the decorative film which constitutes the surface of the resultant decorative molded article. Particularly, deterioration by light proceeds from the surface of the molded article, and therefore it is more preferred that the weathering agent is contained in the surface layer of the decorative film. For example, when the decorative film is a two-layer film comprising a seal layer (I) and a layer (II), it is preferred that the layer (II) contains the hindered amine light stabilizer and/or ultraviolet light absorber. Further, when a surface decorative layer (III) which is an optional layer is stacked on a layer (II), it is preferred that the surface decorative layer (III) contains the hindered amine light stabilizer and/or ultraviolet light absorber.

[Polyolefin resin]

The resin constituting the layer containing the additive in the present invention preferably contains a polyolefin resin in an amount of 50% by weight or more from the viewpoint of, for example, the formability, recycling properties, and solvent resistance. The layer more preferably contains a polyolefin resin in an amount of 60% by weight or more, especially preferably 70% by weight or more. In the present invention, the term "polyolefin resin" means a resin containing polymerization units derived from an olefin monomer in an amount of 50 mol% or more. Further, in the present invention, the term "modified polyolefin" has the meaning including a polyolefin resin, and indicates a resin comprising polymerization units derived from an olefin monomer and polymerization units derived from the other monomers in an arbitrary ratio.

The polyolefin resin is preferably a homopolymer of an $\alpha$-olefin, such as ethylene, propylene, or butene, or a copolymer of ethylene, propylene or the like and the other $\alpha$-olefin. Specific examples include high density polyethylene, low density polyethylene, an ethylene-$\alpha$-olefin copolymer, a propylene homopolymer (homopolypropylene), a propylene-$\alpha$-olefin copolymer (random polypropylene), and a propylene block copolymer (block polypropylene). Examples of monomer components constituting the polyolefin resin, other than the olefin monomer, include aromatic monomers, such as styrene; and polar group-containing monomers, such as maleic anhydride and acrylic acid, but it is preferred that the polyolefin resin does not contain polymerization units derived from a polar group-containing monomer.

Of these, especially preferred are polypropylene resins, such as a propylene homopolymer (homopolypropylene), a propylene-$\alpha$-olefin copolymer (random polypropylene), and a propylene block copolymer (block polypropylene), and a combination thereof can also be selected. It is preferred that the polypropylene resin contains polymerization units derived from a propylene monomer in an amount of 50 mol% or more. The polypropylene resin is preferably homopolypropylene from the viewpoint of, for example, oil resistance, solvent resistance, scratch resistance, and heat resistance. Further, from the viewpoint of the gloss and transparency (color development), a propylene-$\alpha$-olefin copolymer is pre-

ferred.

The polypropylene resin in the present invention can be a resin obtained by polymerization using, for example, a Ziegler catalyst or a metallocene catalyst. That is, the polypropylene resin can be a Ziegler catalyst propylene polymer or a metallocene catalyst propylene polymer.

The resin constituting the layer containing the additive may contain, for example, an additional additive other than the above-mentioned nucleating agent and weathering agent, a filler, the other resin component and the like, as long as the effects of the present invention are not sacrificed. The total amount of the additional additive, the filler, the other resin component and the like is preferably 50% by weight or less, based on the weight of the resin composition.

As the additional additive, a known additive, such as an antioxidant, a neutralizing agent, an anti-blocking agent, a lubricant, an antistatic agent, or a metal deactivator, can be incorporated. Further, with respect to the additional additive, a nucleating agent or a weathering agent other than the nucleating agent and weathering agent in the present invention can be incorporated, but it is preferred that such a nucleating agent or a weathering agent is not incorporated.

Examples of antioxidants include a phenolic antioxidant, a phosphite antioxidant, and a thio antioxidant. Examples of neutralizing agents include higher fatty acid salts, such as calcium stearate and zinc stearate.

Examples of lubricants include higher fatty acid amides, such as stearic acid amide. Examples of antistatic agents include fatty acid partial esters, such as glycerin fatty acid monoester. Examples of metal deactivators include triazines, phosphones, epoxy compounds, triazoles, hydrazides, and oxamides.

As the filler, various types of fillers, such as an inorganic filler and an organic filler, can be incorporated. Examples of inorganic fillers include calcium carbonate, silica, hydrotalcite, zeolite, aluminum silicate, magnesium silicate, a glass fiber, and a carbon fiber. Examples of organic fillers include crosslinked rubber fine particles, thermosetting resin fine particles, and thermosetting resin hollow fine particles.

Examples of the other resin components include a styrene elastomer, a modified polyolefin resin having polymerization units derived from an olefin monomer in an amount of less than 50 mol%, a petroleum resin, and other thermoplastic resins.

For imparting design properties, the decorative film can be colored, and various colorants, such as an inorganic pigment, an organic pigment, and a dye, can be used in coloring. Further, a lustering material, such as an aluminum flake, a titanium oxide flake, or (synthetic) mica, can be used.

When the decorative molded article of the present invention is formed in the form of a colored molded article, there is only a need to use a colorant in the decorative film, and therefore the use of an expensive colorant can be suppressed, as compared to that in the case of coloring the whole of the resin molded article. Further, a change of the physical properties caused due to the incorporation of a colorant can be suppressed.

In the present invention, the resin composition containing the additive can be produced by, for example, a method in which a resin, the additive, an additional additive, a filler, the other resin component and the like are melt-kneaded; a method in which a resin, an additional additive, a filler, the other resin component and the like are melt-kneaded and the additive is dry-blended with the resultant kneaded mixture; or a method in which a resin is dry-blended with a master batch having the additive, an additional additive, a filler, the other resin component and the like dispersed in a carrier resin at a high concentration.

[Decorative film]

The decorative film of the present invention comptises at least one layer containing the above-mentioned additive. Specifically, the decorative film may be a single-layer film comprising a layer containing the additive, or a multilayer film comprising a layer containing the additive and the other layers. The decorative film of the present invention may have the surface, for example, grained, embossed, printed, sandblasted, or scratched.

The three-dimensional decorative thermoforming has a high degree of freedom for the shape of an object to be decorated, and is advantageous in that a decorative film covers an object to be decorated so that the edge face of the decorative film reaches the back side of the object, causing no seam and achieving excellent appearance, and is further advantageous in that it can express various textures by subjecting the surface of the decorative film to, for example, a grain. For example, a resin molded article having applied thereto a texture, such as emboss, can be obtained by three-dimensional decorative thermoforming using an embossed decorative film. Therefore, problems caused when a molded article is embossed using a mold for embossing can be solved, that is, problems can be solved in that a mold for molded article is needed per emboss pattern, and in that it is very difficult to form a complicated emboss pattern in a mold having a curved surface and such a mold is expensive, and thus a decorative molded article having easily applied thereto emboss of various patterns can be obtained by three-dimensional decorative thermoforming using an embossed decorative film.

Further, when the additive is a nucleating agent, by subjecting the decorative film to planishing by surface transfer of a cooling patented roll, a decorative film having higher gloss can be obtained. Furthermore, the decorative film containing the nucleating agent in the present invention maintains the gloss and texture of the surface even after

subjected to decorative forming, so that a decorative molded article having high surface gloss and excellent appearance can be obtained.

When the decorative film is a single-layer film as a preferred mode, it is preferred that the decorative film comprises a resin having excellent thermoformability. For example, when the resin constituting the film is a polypropylene resin, it is prferred to use: (i) a resin composition (X) comprising a polypropylene resin having a long-chain branched structure, wherein the resin composition (X) has a melt flow rate (MFR) (temperature: 230°C; load: 2.16 kg) of 0.1 to 40 g/10 minutes, and has a strain hardening index λ of 1.1 or more; and/or (ii) a resin composition (Y) comprising a linear polypropylene resin, wherein the resin composition (Y) has an MFR of 0.1 to 2.0 g/10 minutes. By using the resin composition (X) and/or (Y), a decorative molded article having excellent appearance can be obtained.

Resin composition (X) comprising a polypropylene resin having a long-chain branched structure

The resin composition (X) comprising a polypropylene resin having a long-chain branched structure, which is preferred as a resin having excellent thermoformability, is descried.

(X1) Melt flow rate (MFR (X))

When a resin composition (X) has too low a viscosity, satisfactory forming stability cannot be obtained, and therefore the resin composition (X) needs to have a predetermined viscosity. In the present invention, as an index for the viscosity, an MFR (at 230°C under a load of 2.16 kg) is specified.

In the present specification, the MFR (at 230°C under a load of 2.16 kg) of resin composition (X) is referred to as MFR (X). MFR (X) preferably satisfies the following requirement (x1), more preferably satisfies the requirement (x1'), further preferably satisfies the requirement (x1"). When MFR (X) of resin composition (X) is the below-mentioned value or less, a decorative molded article having excellent appearance can be obtained.

(x1) Having an MFR (X) of 40 g/10 minutes or less.
(x1') Having an MFR (X) of 20 g/10 minutes or less.
(x1") Having an MFR (X) of 12 g/10 minutes or less.

The lower limit of MFR (X) of resin composition (X) is not particularly limited, but is preferably 0.1 g/10 minutes or more, more preferably 0.3 g/10 minutes or more. When MFR (X) is the above-mentioned value or more, the formability of the decorative film being produced is improved, making it possible to prevent the surface of the film from having poor appearance called sharkskin or rough interface.

In the present invention, an MFR of the polypropylene resin and polypropylene resin composition was measured under conditions at 230°C under a load of 2.16 kg in accordance with ISO 1133:1997 Conditions M. The unit is g/10 minutes.

(X2) Strain hardening index λ

A strain hardening index λ of resin composition (X) preferably satisfies the following requirement (x2), more preferably satisfies the requirement (x2'), further preferably satisfies the requirement (x2"). When the strain hardening index λ of resin composition (X) is in the below-mentioned range, excellent formability can be achieved in the decorative thermoforming, so that a decorative molded article having excellent appearance can be obtained.

(x2) Having a strain hardening index λ of 1.1 or more.
(x2') Having a strain hardening index λ of 1.8 or more.
(x2") Having a strain hardening index λ of 2.3 or more.

The upper limit of the strain hardening index λ of resin composition (X) is not particularly limited, but is preferably 50 or less, more preferably 20 or less. When the strain hardening index λ is in the above-mentioned range, a decorative film having excellent appearance can be obtained.

The strain hardening index λ of the polypropylene resin and resin composition (X) is determined based on the measurement of strain hardening property in an elongational viscosity measurement. The strain hardening property (nonlinearity) of elongational viscosity is described in "Kouza, Reoroji (Lecture: Rheology)", edited by the Society of Rheology, Japan, Koubunshi Kankoukai, 1992, pp. 221-222, and, in the present specification, the strain hardening index λ is determined by the method according to the determination shown in Fig. 7-20 of the above document, and η* (0.01) is employed as a shear viscosity value and ηe (3.5) is employed as an elongational viscosity value, and the strain hardening index λ is defined by the following formula (k-1).

$$\lambda = \eta e\ (3.5) / \{3 \times \eta^*\ (0.01)\} \qquad \text{Formula (k-1)}$$

In the formula (k-1) above, $\eta^*$ (0.01) is a complex viscosity [unit: Pa·s] at a measurement temperature of 180°C and a circular frequency $\omega$ = 0.01 rad/s, as measured by a dynamic frequency sweep test, and the complex viscosity $\eta^*$ is calculated from a complex modulus G* [unit: Pa] and a circular frequency $\omega$ using $\eta^* = G^*/\omega$. Further, $\eta$e (3.5) is an elongational viscosity at a measurement temperature of 180°C, a strain rate of 1.0 $s^{-1}$, and a strain amount of 3.5, as measured by an elongational viscosity measurement.

Generally, data obtained by the above viscoelasticity measurement are a set of values of, for example, modulus or viscosity measured at discrete frequencies or time intervals for measurement. Therefore, there is a possibility that when the measurement is conducted using an apparatus or conditions different from those used in the present invention, data are not always present in the complex viscosity $\eta^*$ (0.01) at a circular frequency $\omega$ of 0.01 rad/s or in the elongational viscosity $\eta$e (3.5) at a strain amount of 3.5. In such a case, it is acceptable to estimate a missing value by making interpolation, such as linear interpolation or spline interpolation, using data around the missing value. When interpolation is made, it is a common method to employ a logarithmic scale in the stress or time scale.

In this case, a specimen having no strain hardening property (nonlinearity) in the elongational viscosity exhibits a value of strain hardening index $\lambda$ which is about 1 (for example, 0.9 to less than 1.1) or smaller than 1, and the stronger the strain hardening property (nonlinearity), the larger the value of strain hardening index $\lambda$.

General crystalline polypropylene is a linear polymer, and generally has no strain hardening property. In contrast, the polypropylene resin advantageously used in the present invention is preferably a polypropylene resin (B-L) having a long-chain branched structure, and, by virtue of such a resin, the resin composition (X) can exhibit excellent strain hardening property.

The long-chain branched structure in the present invention means a branched structure of a molecular chain, in which the carbon skeleton constituting the branching (principal chain of the branching) has several tens or more carbon atoms, and which has a molecular weight of several hundred or more. This long-chain branched structure is differentiated from short-chain branching formed by copolymerization with an $\alpha$-olefin, such as 1-butene.

As examples of the method for introducing a long-chain branched structure into a polypropylene resin, there can be mentioned a method in which polypropylene having no long-chain branched structure is irradiated with high-energy ionized radiation (Japanese Patent Application Kokai Publication No. Sho 62-121704), a method in which polypropylene having no long-chain branched structure is reacted with an organic peroxide (Japanese Patent Application Kohyo Publication No. 2001-524565), and a method in which a macromonomer having an end unsaturated bond is produced and copolymerized with propylene (Japanese Patent Application Kohyo Publication No. 2001-525460), and the polypropylene resin produced by any of these methods can be increased in the strain hardening index $\lambda$.

With respect to a polypropylene resin (B-L) having a long-chain branched structure, there is no particular limitation as long as the polypropylene resin has a long-chain branched structure, but preferred is a polypropylene resin which is produced by a method other than a crosslinking method, and preferred is a polypropylene resin having a comb-like chain structure, which is obtained by a method using a macromer copolymerization method in which a long-chain branched structure is formed during the polymerization. Examples of such methods include those disclosed in Japanese Patent Application Kohyo Publication No. 2001-525460, Japanese Patent Application Kokai Publication No. Hei 10-338717, Japanese Patent Application Kohyo Publication No. 2002-523575, Japanese Patent Application Kokai Publication No. 2009-57542, Japanese Patent No. 5027353, and Japanese Patent Application Kokai Publication No. Hei 10-338717. Particularly, the macromer copolymerization method of Japanese Patent Application Kokai Publication No. 2009-57542 is advantageous in that a long-chain branching-containing polypropylene resin (B-L) can be obtained without generating a gel, and thus can be advantageously used in the present invention.

The long-chain branched structure contained in polypropylene is defined by, for example, a method using rheology properties of a resin, a method of determining a branching index g' using the relationship between the molecular weight and the viscosity, or a method using $^{13}C$-NMR. In the present invention, as described below, the long-chain branched structure is defined by a branching index g' and/or $^{13}C$-NMR.

{Branching index g'}

A branching index g' is known as a direct index in respect of a long-chain branched structure. Detailed description is found in "Developments in Polymer Characterization-4" (J.V. Dawkins ed. Applied Science Publishers, 1983), and the branching index g' is defined as follows.

$$\text{Branching index } g' = [\eta]br / [\eta]lin$$

[η]br: Intrinsic viscosity of a polymer (br) having a long-chain branched structure

[η]lin: Intrinsic viscosity of a linear polymer having the same molecular weight as that of the polymer (br)

As apparent from the above definition, a branching index g' of smaller than 1 shows that a long-chain branched structure is present, and, as the long-chain branched structure increases, the branching index g' becomes smaller.

The branching index g' can be obtained as a function of an absolute molecular weight Mabs by using GPC having a light scatterometer and a viscometer as detectors. The method for measuring branching index g' in the present invention is described in detail in Japanese Patent Application Kokai Publication No. 2015-40213, and is shown below.

{Method for measurement}

GPC: Alliance GPCV2000 (manufactured by Waters Corporation)
Detectors: Shown below in the order of connection.
Multi-angle laser light scattering detector (MALLS): DAWN-E (manufactured by Wyatt Technology Corporation)
Differential refractometer (RI): Attached to GPC
Viscosity detector (Viscometer): Attached to GPC
Solvent for mobile phase: 1,2,4-Trichlorobenzene (having added Irganox 1076 at a concentration of 0.5 mg/mL)
Flow rate for mobile phase: 1 mL/minute
Column: Two columns of GMHHR-H(S) HT, manufactured by Tosoh Corporation, which are connected to each other.
Temperature of the sample injection part: 140°C
Column temperature: 140°C
Temperatures of detectors: All at 140°C
Sample concentration: 1 mg/mL
Amount of the sample per injection (sample loop volume): 0.2175 mL

{Analysis method}

In the determination of an absolute molecular weight (Mabs) obtained from a multi-angle laser light scattering detector (MALLS), a mean-square radius of gyration (Rg), and an intrinsic viscosity ([η]) obtained from Viscometer, using data processing software ASTRA (version 4.73.04) attached to the MALLS, a calculation is conducted with reference to the following documents.

Reference documents:

1. "Developments in Polymer Characterization-4" (J. V. Dawkins ed. Applied Science Publishers, 1983. Chapter 1.)
2. Polymer, 45, 6495-6505 (2004)
3. Macromolecules, 33, 2424-2436 (2000)
4. Macromolecules, 33, 6945-6952 (2000)

In the decorative film of the present invention, when the polypropylene resin having a long-chain branched structure or resin composition (X) contains a gel, the film appearance becomes poor, and therefore the polypropylene resin or resin composition (X) containing no gel is preferably used. Especially, preferred is the above-mentioned polypropylene resin (B-L) having a long-chain branched structure produced using a method in which a macromonomer having an end unsaturated bond is produced using a metallocene catalyst having a specific structure, and copolymerized with propylene to form a long-chain branched structure. Particularly, the polypropylene resin (B-L) preferably has a branching index g', as described below, at an absolute molecular weight Mabs of 1,000,000, of 0.3 to less than 1.0, more preferably 0.55 to 0.98, further preferably 0.75 to 0.96, most preferably 0.78 to 0.95. In the present invention, the expression "a gel in a reduced amount" indicates that the branching index g' of the polypropylene resin at an absolute molecular weight Mabs of 1,000,000 is in the above-mentioned range. When the branching index g' is in the above-mentioned range, a highly crosslinked component is not formed, and no gel or a very slight amount of a gel is generated, and therefore, especially when the layer containing the polypropylene resin (B-L) constitutes the surface of a product, the product does not become poor in the appearance.

{$^{13}$C-NMR}

$^{13}$C-NMR can differentiate between a short-chain branched structure and a long-chain branched structure. Detailed description of this is found in Macromol. Chem. Phys. 2003, vol. 204, 1738, and an outline of the description

is as stated below.

A polypropylene resin having a long-chain branched structure has a specific branched structure represented by the structural formula (1) below. In the structural formula (1), each of $C_a$, $C_b$, and $C_c$ represents a methylene carbon adjacent to a branching carbon, $C_{br}$ represents a methine carbon at the root of the branched chain, and each of $P^1$, $P^2$, and $P^3$ represents a propylene polymer residue.

Propylene polymer residues $P^1$, $P^2$, and $P^3$ can individually contain therein another branching carbon ($C_{br}$) different from $C_{br}$ shown in the structural formula (1).

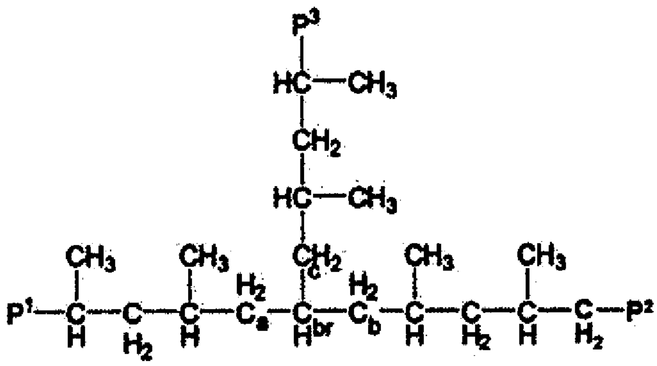

Structural formula (1)

Such a branched structure is identified by a $^{13}$C-NMR analysis. The individual peaks can be assigned with reference to the description of Macromolecules, Vol. 35, No. 10., 2002, pages 3839-3842. Specifically, three methylene carbons in total ($C_a$, $C_b$, and $C_c$) are observed respectively at 43.9 to 44.1 ppm, 44.5 to 44.7 ppm, and 44.7 to 44.9 ppm, and a methine carbon ($C_{br}$) is observed at 31.5 to 31.7 ppm. The methine carbon observed at 31.5 to 31.7 ppm is, hereinafter, frequently referred to simply as "branching methine carbon ($C_{br}$)".

A $^{13}$C-NMR spectrum of the polypropylene resin having a long-chain branched structure has a characteristic feature such that three methylene carbons in the vicinity of the branching methine carbon $C_{br}$ are observed as three diastereotopically unequally peaks.

The branched chain assigned by $^{13}$C-NMR as mentioned above shows a propylene polymer residue having 5 carbon atoms or more and branching from the principal chain of the polypropylene resin, and has a peak position of the branching carbon different from that of the branching having 4 carbon atoms or less, and hence can be differentiated from the branching having 4 carbon atoms or less. Therefore, in the present invention, by examining the peak of the above branching methine carbon, it is possible to check whether a long-chain branched structure is present or not.

The method for $^{13}$C-NMR measurement in the present invention is as described below.

{Method for $^{13}$C-NMR measurement}

200 mg of a sample was placed in an NMR sample tube having an inner diameter of 10 mmϕ, together with 2.4 ml of o-dichlorobenzene/deuterated bromobenzene ($C_6D_5Br$) = 4/1 (volume ratio) and hexamethyldisiloxane as a chemical shift standard substance, and dissolved, and subjected to $^{13}$C-NMR measurement.

The $^{13}$C-NMR measurement was conducted using NMR apparatus Model AV400M, manufactured by Bruker BioSpin, having 10 mmϕ CryoProbe attached.

The measurement was conducted by a complete proton decoupling method at a sample temperature of 120°C. Other conditions are as shown below.

Pulse angle: 90°
Pulse interval: 4 seconds
Accumulation number: 20,000

With respect to the chemical shift, a peak of the methyl carbon of hexamethyldisiloxane was set to 1.98 ppm, and, using this peak as a base, chemical shifts of peaks ascribed to other carbons were determined.

A long-chain branching amount can be determined using a peak appearing around 44 ppm.

In the $^{13}$C-NMR spectrum of the polypropylene resin (B-L) having a long-chain branched structure, the long-chain branching amount quantitatively determined from a peak appearing around 44 ppm is preferably 0.01/1,000 total propylene or more, more preferably 0.03/1,000 total propylene or more, further preferably 0.0511,000 total propylene or more. When this value is too large, poor appearance, such as a gel or a fish eye, is caused, and therefore the long-chain branching amount is preferably 1.00/1,000 total propylene or less, more preferably 0.50/1,000 total propylene or less, further preferably 0.30/1,000 total propylene or less.

The polypropylene resin (B-L) having a long-chain branched structure may be contained in a resin composition (X) in an amount sufficient to impart a strain hardening property. The polypropylene resin (B-L) having a long-chain branched structure is preferably contained in an amount of 1 to 100% by weight, more preferably 5% by weight or more, based on the weight of the resin composition (X) (100% by weight).

The polypropylene resin (B-L) having a long-chain branched structure in the present invention can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that the polypropylene resin contains polymerization units derived from a propylene monomer in an amount of 50 mol% or more.

Resin composition (Y) comprising a linear polypropylene resin

The resin composition (Y) comprising a linear polypropylene resin, which is preferred as a resin having excellent thermoformability, is descried.

The resin composition (Y) comprising a linear polypropylene resin preferred in the present invention preferably has an MFR (at 230°C under a load of 2.16 kg) of 2.0 g/10 minutes or less, more preferably 1.5 g/10 minutes or less, further preferably 1.0 g/10 minutes or less. When the MFR of resin composition (Y) is the above-mentioned value or less, a decorative molded article having excellent appearance can be obtained.

The lower limit of the MFR of resin composition (Y) is not particularly limited, but is preferably 0.1 g/10 minutes or more, more preferably 0.3 g/10 minutes or more. When the MFR is the above-mentioned value or more, the formability of the decorative film being produced is improved, making it possible to prevent the surface of the film from having poor appearance called sharkskin or rough interface.

When the decorative film is a multilayer film as another preferred modet, the decorative film can comprise, for example, a surface layer, a surface decorative layer, a printed layer, a light shielding layer, a colored layer, a base layer, a seal layer, a barrier layer, or a tie layer which can be formed between these layers. The layer containing the additive in the present invention may be any of the layers constituting the multilayer film. Further, a plurality of the layers may contain the additive, and all the layers may contain the additive. Deterioration by light proceeds from the surface of the molded article and therefore, especially, when the additive is a weathering agent, it is more preferred that the weathering agent is contained in the outermost surface layer on the side opposite to the stuck surface to the resin molded article with respect to the decorative film.

In the multilayer film, the layer(s) other than the layer containing the additive is or are preferably a layer comprising a thermoplastic resin, more preferably a layer comprising a polypropylene resin. When the thermoplastic resin is a polypropylene resin, the polypropylene resin can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that each layer does not contain a thermosetting resin. By using the thermoplastic resin, the recycling properties are improved. Further, by using the polypropylene resin, it is possible to prevent the layer construction from being complicated, so that the co-extrusion properties and recycling properties are further improved.

For example, when the decorative film is a multilayer film of a two-layer construction, the film can comprise two layers, i.e., a surface layer constituting the surface of a decorative molded article and a base layer stuck to the molded article, or a base layer constituting the surface of a decorative molded article and a seal layer stuck to the molded article. Further, when the decorative film is a multilayer film of a three-layer construction, the film can comprise three layers, i.e., a surface layer constituting the surface of a decorative molded article, a seal layer stuck to the molded article, and a base layer disposed between the surface layer and the seal layer. The decorative film may be a multilayer film of a further complicated layer construction, and at least one layer constituting the multilayer film contains the above-mentioned additive.

It is preferred that the outermost surface layer on the side opposite to the stuck surface to the resin molded article with respect to the decorative film contains at least one additive selected from a nucleating agent, a hindered amine light stabilizer, and an ultraviolet light absorber. For example, when the decorative film comprises two layers, i.e., a surface layer and a base layer, it is preferred that the surface layer contains the above-mentioned additive. When the decorative film comprises two layers, i.e., a base layer and a seal layer, it is preferred that the base layer contains the above-mentioned additive. When the decorative film comprises three layers, i.e., a surface layer, a base layer, and a seal layer, it is preferred that the surface layer contains the above-mentioned additive. Further, when the decorative film comprises three layers, i.e., a surface decorative layer, a base layer, and a seal layer, it is preferred that the surface decorative layer contains the above-mentioned additive.

[Base layer]

In the present invention, the base layer indicates a layer having the largest thickness in the decorative film. When the decorative film is a single-layer film, the single layer is a base layer. When a resin constituting the base layer in the decorative film of the present invention is a polypropylene resin, like the decorative film which is a single-layer film, it is preferred that the base layer comprises the resin composition (X) and/or (Y). By virtue of this, excellent thermoformability is achieved, so that a decorative molded article having excellent appearance can be obtained.

[Surface layer and surface decorative layer]

In the present invention, the surface layer and surface decorative layer indicate a layer which constitutes the outermost surface layer on the side opposite to the stuck surface to a resin molded article, and which is different from the base layer. The surface layer and surface decorative layer may be formed directly on the base layer, or formed above the base layer through one or more additional layers. The surface decorative layer means a surface layer having, for example, a nucleating agent or a colorant added thereto for improving the decorative film in, for example, transparency, surface gloss, or design properties.

When the resin constituting the surface layer or surface decorative layer in the decorative film of the present invention is a polypropylene resin, the polypropylene resin preferably has an MFR (at 230°C under a load of 2.16 kg) of more than 2.0 g/10 minutes, more preferably 5.0 g/10 minutes or more, further preferably 9.0 g/10 minutes or more. When the MFR of the polypropylene resin is in the above-mentioned range, an effect can be obtained such that, for example, the decorative film is improved in surface smoothness or gloss, or the grain transfer property is improved, so that a decorative molded article having excellent appearance in respect of the required surface form of the molded article (such as gloss, non-gloss, or a grain) can be obtained. Further, the decorative film is improved in the transfer property of the surface upon producing the decorative film and upon thermoforming, and the use of a patented roll in thermoforming can make the decorative film have higher gloss. The upper limit of the MFR is not particularly limited, but is preferably 100 g/10 minutes or less, more preferably 50 g/10 minutes or less. When the MFR is in the above-mentioned range, excellent oil resistance, solvent resistance, scratch resistance and the like can be exhibited.

[Seal layer]

In the present invention, the seal layer indicate a layer for improving the adhesion to a resin molded article, which constitutes the outermost surface layer on the stuck surface side of the decorative film, and which is different from the base layer. A resin constituting the seal layer in the decorative film of the present invention can be selected from geleral thermoplastic resins, and, for example, a polyolefin, such as a polyethylene resin, a polypropylene resin, or an ethylene elastomer, a modified polyolefin, a styrene elastomer, or a petroleum resin can be used, or a combination thereof can be used. Examples of modified polyolefins include resins comprising polymerization units derived from a polar group-containing monomer, such as maleic anhydride, and polymerization units derived from an olefin monomer in an arbitrary ratio. For example, when the seal layer in the present invention comprises a polypropylene resin, the MFR (at 230°C under a load of 2.16 kg) of the resin is, in view of the adhesion, preferably 0.1 g/10 minutes or more, more preferably 0.4 g/10 minutes or more, further preferably 2.0 g/10 minutes or more. The upper limit of the MFR is not particularly limited, but is preferably 100 g/10 minutes or less, more preferably 50 g/10 minutes or less. When the MFR is in the above-mentioned range, excellent adhesion can be achieved.

Figs. 8(a) to 8(c) are schematic explanatory views of the cross-section of embodiments of a decorative film stuck to a resin molded article. In Figs. 8(a) to 8(c), for an easy understanding, an explanation is made on a seal layer (I) and a base layer (II), the arrangement of which is specified, but these examples should not be construed as limiting the layer construction of the decorative film. In the present specification, in the drawings, reference numeral 1 denotes a decorative film, reference numeral 2 denotes base a layer (II), reference numeral 3 denotes a seal layer (I), reference numeral 4 denotes a surface decorative layer (III), and reference numeral 5 denotes a resin molded article. Fig. 8(a) shows an example in which a decorative film 1 comprises a two-layer film, and a seal layer (I) 3 is stuck to a resin molded article 5, and a base layer (II) 2 is stacked on the seal layer (I) 3. A decorative film 1 of Fig. 8(b) comprises a seal layer (I) 3, a base layer (II) 2, and a surface layer, and the seal layer (I) 3 is stuck to the surface of a resin molded article 5, and the base layer (II) 2 and the surface layer are stacked in this order on the seal layer (I) 3. A decorative film 1 of Fig. 8(c) comprises a seal layer (I) 3, a base layer (II) 2, and a surface decorative layer (III) 4, and the seal layer (I) 3 is stuck to the surface of a resin molded article 5, and the base layer (II) 2 and the surface decorative layer (III) 4 are stacked in this order on the seal layer (I) 3.

Each layer may contain, for example, an additional additive other than the above-mentioned additives, a filler, a colorant, and the other resin component. The total amount of the additional additive, the filler, the colorant, the other resin component and the like is preferably 50% by weight or less, based on the weight of the resin composition. With

respect to the additional additive, for example, the above-mentioned additional additive can be used.

The resin composition constituting each layer can be produced by, for example, a method in which a resin, the additive, an additional additive, a filler, a colorant, the other resin component and the like are melt-kneaded, a method in which a resin, the additive, an additional additive, a filler, a colorant and the like are melt-kneaded and the other resin component is dry-blended with the resultant kneaded mixture, or a method in which a resin is added to the other resin component, and dry-blended with a master batch having the additive, an additional additive, a filler, a colorant and the like dispersed in a carrier resin at a high concentration.

{Third through sixth aspects of the present invention}

In the three-dimensional decorative thermoforming, for sticking a decorative film in a solid state to a resin molded article in a solid state, it is necessary that the surface of the molded article and the film be satisfactorily softened or melted. Therefore, it is important that heat in an amount required for softening or melting the surface of the molded article and the film is applied to the molded article and the film, or that a material which is easily softened or melted is used in the molded article and the film. On the other hand, when the film is heated to too large an extent, the film is lowered in the viscosity, and, in the three-dimensional decorative thermoforming step, the film is broken or uncontrollably moved when raising the molded article or permitting air to flow into the vacuum chamber to increase the pressure in the chamber back to atmospheric pressure, so that the appearance becomes poor. The present inventors have focused attention on the mechanism in which the above-mentioned poor appearance is caused and have made studies. As a result, it has been found that a decorative film comprising a layer comprising a specific polypropylene resin can solve the above-mentioned problems.

The decorative film according to the third through sixth aspects of the present invention is the above-mentioned decorative film comprising a layer containing at least one additive selected from a nucleating agent, a hindered amine light stabilizer, and an ultraviolet light absorber, wherein the decorative film further comprises a seal layer having excellent adhesion, and, by virtue of having such a seal layer, decorative forming can be made at a low temperature for a short time, and the decorative forming is completed before the above-mentioned additive volatilizes, making it possible to further suppress a reduction of the surface gloss and/or weathering resistance.

In the third through sixth aspects of the present invention, there can be provided a decorative film usable in three-dimensional decorative thermoforming, which has no contact unevenness and exhibits excellent thermoformability, and has excellent surface gloss and/or weathering resistance and excellent adhesive force, and has suppressed a reduction of the surface gloss and/or weathering resistance after the thermoforming and has excellent recycling properties, and a method for producing a decorative molded article using the decorative film.

By the method for producing a decorative molded article according to the third through sixth aspects of the present invention, there can be obtained an excellent decorative molded article which is free of air contained between the decorative film and the resin molded article and exhibits excellent reproducibility of a texture, such as a grain. In the obtained decorative molded article, the material constituting the decorative film is a polypropylene resin, and the decorative molded article contains no thermosetting resin layer or need not contain a thermosetting resin layer, and therefore has so excellent recycling properties that a lowering of the appearance or performance due to recycling is small.

The third and fourth aspects and the fifth and sixth aspects are individually described below.

{{Third and fourth aspects of the present invention}}

The decorative film according to the third and fourth aspects of the present invention is a decorative film comprising a layer containing at least one additive selected from a nucleating agent, a hindered amine light stabilizer, and an ultraviolet light absorber, wherein the decorative film comprises a seal layer (I) containing a polypropylene resin (A) and a layer (II) containing a polypropylene resin (B), wherein the polypropylene resin (A) satisfies the following requirement (a1), and the polypropylene resin (B) satisfies the following requirement (b1):

(a1) having a melt flow rate (at 230°C under a load of 2.16 kg) (MFR (A)) of more than 0.5 g/10 minutes,

(b1) that a melt flow rate (at 230°C under a load of 2.16 kg) (MFR (B)) and the MFR (A) satisfy the relationship of the formula (b-1):

$$\text{MFR (B)} < \text{MFR (A)} \qquad \text{Formula (b-1).}$$

In the first embodiment, it is preferred that the polypropylene resin (A) further satisfies the following requirements (a2) to (a4), and the polypropylene resin (B) further satisfies the following requirement (b2):

(a2) being a metallocene catalyst propylene polymer,
(a3) having a melting peak temperature (Tm (A)) of lower than 150°C,
(a4) having a molecular weight distribution (Mw/Mn (A)) of 1.5 to 3.5, as determined by GPC measurement,
(b2) that a melting peak temperature (Tm (B)) and the Tm (A) satisfy the relationship of the formula (b-2):

$$\mathrm{Tm}\ (B) > \mathrm{Tm}\ (A) \qquad \text{Formula (b-2).}$$

In the second embodiment, it is preferred that the polypropylene resin (A) further satisfies the following requirement (a5), and the polypropylene resin (B) further satisfies the following requirement (b3):

(a5) having a crystallization temperature (Tc (A)) of lower than 100°C,
(b3) that a crystallization temperature (Tc (B)) and the Tc (A) satisfy the relationship of the formula (b-3):

$$\mathrm{Tc}\ (B) > \mathrm{Tc}\ (A) \qquad \text{Formula (b-3).}$$

In the third embodiment, it is preferred that the seal layer (I) comprises a resin composition (XX3) in which the weight ratio of the polypropylene resin (A) and an ethylene-$\alpha$-olefin random copolymer (C) is 97:3 to 5:95, wherein the ethylene-$\alpha$-olefin random copolymer (C) satisfies the following requirements (c1) to (c3):

(c1) having an ethylene content [E (C)] of 65% by weight or more,
(c2) having a density of 0.850 to 0.950 g/cm$^3$,
(c3) having a melt flow rate (at 230°C under a load of 2.16 kg) (MFR (C)) of 0.1 to 100 g/10 minutes.

In the fourth embodiment, it is preferred that the seal layer (I) comprises a resin composition (XX4) in which the weight ratio of the polypropylene resin (A) and a thermoplastic elastomer (D) is 97:3 to 5:95, wherein the thermoplastic elastomer (D) satisfies the following requirements (d1) to (d4):

(d1) being a thermoplastic elastomer comprising at least one of propylene and butene as a main component,
(d2) having a density of 0.850 to 0.950 g/cm$^3$,
(d3) having a melt flow rate (at 230°C under a load of 2.16 kg) (MFR (D)) of 0.1 to 100 g/10 minutes,
(d4) having a tensile modulus smaller than that of the polypropylene resin (A).

In the fifth embodiment, it is preferred that the seal layer (I) comprises a resin composition (XX5) in which the weight ratio of the polypropylene resin (A) and a thermoplastic resin (E) is 97:3 to 5:95, wherein the thermoplastic resin (E) satisfies the following requirement (e1), and the resin composition (XX5) satisfies the following requirement (xx1):

(e1) containing at least one of an alicyclic hydrocarbon group and an aromatic hydrocarbon group,
(xx1) that an isothermal crystallization time (t(XX5)) (second) of the resin composition (XX5), as determined by a differential scanning calorimeter (DSC), satisfies the following formula (x-1):

$$t(XX5) \geq 1.5 \times t(A) \qquad \text{Formula (x-1)}$$

wherein t(A) represents an isothermal crystallization time (second) of the polypropylene resin (A) measured at a temperature 10°C higher than the crystallization start temperature of the polypropylene resin (A), and t(XX5) represents an isothermal crystallization time (second) of the resin composition (XX5) measured at a temperature 10°C higher than the crystallization start temperature of the polypropylene resin (A).

In the sixth embodiment, it is preferred that the polypropylene resin (A) is a propylene-ethylene block copolymer (F) which satisfies the following requirements (f1) and (f2):

(f1) having a melting peak temperature (Tm (F)) of 110 to 170°C,
(f2) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1).

The decorative film of the third and fourth aspects of the present invention comprises a seal layer (I) comprising a resin composition (XX) containing a polypropylene resin (A). The seal layer (I) is a layer which is in contact with a resin molded article (substrate) when subjected to three-dimensional decorative thermoforming. By forming the seal layer (I), excellent adhesion is exhibited even when the time for three-dimensional decorative thermoforming is reduced, and therefore the forming is completed before the nucleating agent and/or weathering agent volatilizes, making it possible to suppress a reduction of the surface gloss and/or weathering agent.

Hereinbelow, the construction of the seal layer (I) will be described in detail, taking the above-mentioned basic embodiment and the first through sixth embodiments as examples.

<Basic embodiment of seal layer (I)>

In the basic embodiment in the third and fourth aspects of the present invention, a seal layer (I) contains a polypropylene resin (A). In the basic embodiment, it is preferred that the polypropylene resin (A) is a resin which easily relaxes. By forming the seal layer (I) containing such a polypropylene resin (A), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

<<Polypropylene resin (A)>>

1. Melt flow rate (MFR (A)): (a1)

In the basic embodiment, the polypropylene resin (A) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Composition of the resin

The polypropylene resin (A) in the basic embodiment can be a resin obtained by polymerization using, for example, a Ziegler catalyst or a metallocene catalyst. That is, the polypropylene resin (A) can be a Ziegler catalyst propylene polymer or a metallocene catalyst propylene polymer.

The polypropylene resin (A) in the basic embodiment can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

<First embodiment>

In the first embodiment, a seal layer (I) comprises a resin composition (XX1) containing a polypropylene resin (A). In the first embodiment, it is preferred that the polypropylene resin (A) is a resin which easily melts or relaxes. By forming the seal layer (I) comprising the resin composition (XX1) containing such a polypropylene resin (A), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

<<Polypropylene resin (A)>>

1. Melt flow rate (MFR (A)): (a1)

In the first embodiment, polypropylene resin (A) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Molecular weight distribution (Mw/Mn (A)): (a4)

The Mw/Mn of polypropylene resin (A) is preferably 1.5 to 3.5, more preferably 2.0 to 3.0. When the Mw/Mn of polypropylene resin (A) is in the above-mentioned range, the amount of the component having a relatively long relaxation time is so small that the resin readily relaxes satisfactorily, and thus a roughened surface is unlikely to be caused during the film forming, so that excellent surface appearance is advantageously obtained.

The Mn and Mw are values calculated from a molecular weight distribution curve obtained by GPC as described in, for example, "Koubunshi Kagaku no Kiso (Basics of Polymer Chemistry)" (edited by The Society of Polymer Science, Japan, Tokyo Kagaku Dojin, 1978).

3. Melting peak temperature (Tm (A)): (a3)

The polypropylene resin (A) preferably has a melting peak temperature (DSC melting peak temperature, which is frequently referred to as "melting point" in the present specification) (Tm (A)) of lower than 150°C, more preferably 145°C or lower, further preferably 140°C or lower, especially preferably 130°C or lower. When Tm (A) is in the above-mentioned range, a satisfactory adhesive strength can be exhibited. When Tm (A) is too low, it is likely that the heat resistance is so poor that a problem is caused in the use of the resultant molded article, and therefore Tm (A) is preferably 100°C or higher, more preferably 110°C or higher.

4. Composition of the resin: (a2)

The polypropylene resin (A) in the first embodiment is preferably a so-called metallocene catalyst propylene polymer obtained by polymerization using a metallocene catalyst. The metallocene catalyst has a single active site, and therefore a propylene polymer obtained by polymerization using the metallocene catalyst has a narrow molecular weight distribution and crystalline property distribution, and easily melts or relaxes, and thus can be melt-bonded to a substrate without applying a large quantity of heat.

The polypropylene resin (A) in the first embodiment can be selected from various types of propylene polymers, such as a propylene homopolymer (homopolypropylene), a propylene-α-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

The polypropylene resin (A) is preferably a propylene-α-olefin copolymer from the viewpoint of the adhesion. The propylene-α-olefin copolymer is generally lowered in the crystallization temperature as the melting point is lowered, as compared to a propylene homopolymer, and hence excellent adhesion is readily exhibited even when the time for three-dimensional decorative thermoforming is reduced, and therefore the forming is completed before the nucleating agent and/or weathering agent volatilizes, making it possible to suppress a reduction of the surface gloss and/or weathering resistance.

With respect to the α-olefin, for example, there can be used one member or a combination of two or more members selected from ethylene and α-olefins having 3 to 8 carbon atoms.

<Second embodiment >

In the second embodiment, a seal layer (I) comprises a resin composition (XX2) containing a polypropylene resin (A). In the second embodiment, it is preferred that the polypropylene resin (A) is a resin whose crystallization is unlikely to start. By forming the seal layer (I) comprising the resin composition (XX2) containing such a polypropylene resin (A), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

<<Polypropylene resin (A)>>

1. Melt flow rate (MFR (A)): (a1)

In the second embodiment, the polypropylene resin (A) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Molecular weight distribution (Mw/Mn (A))

The Mw/Mn of polypropylene resin (A) is preferably 3.5 to 10, more preferably 3.7 to 7. When the Mw/Mn of polypropylene resin (A) is in the above-mentioned range, a roughened surface is unlikely to be caused during the film forming, so that excellent surface appearance is advantageously obtained.

3. Crystallization temperature (Tc (A)): (a5)

The polypropylene resin (A) preferably has a crystallization temperature Tc (A) of lower than 100°C, more preferably 97°C or lower, further preferably 93°C or lower. When Tc (A) is in the above-mentioned range, a satisfactory adhesive strength can be exhibited. When Tc (A) is too low, it is likely that the heat resistance is so poor that a problem is caused in the use of the resultant molded article, and therefore Tc (A) is preferably 65°C or higher, more preferably 75°C or higher.

4. Composition of the resin

The polypropylene resin (A) in the second embodiment can be a resin obtained by polymerization using, for example, a Ziegler catalyst or a metallocene catalyst. That is, the polypropylene resin (A) can be a Ziegler catalyst propylene polymer or a metallocene catalyst propylene polymer.

The polypropylene resin (A) in the second embodiment can be selected from various types of propylene polymers, such as a propylene homopolymer (homopolypropylene), a propylene-α-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

The polypropylene resin (A) is preferably a propylene-α-olefin copolymer from the viewpoint of the adhesion. The propylene-α-olefin copolymer is generally lowered in the crystallization temperature, as compared to a propylene homopolymer, and excellent adhesion is readily exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

With respect to the α-olefin, for example, there can be used one member or a combination of two or more members selected from ethylene and α-olefins having 3 to 8 carbon atoms.

<Third embodiment>

In the third embodiment, a seal layer (I) comprises a resin composition (XX3) containing a polypropylene resin (A) and an ethylene-α-olefin random copolymer (C). By forming the seal layer (I) comprising such a resin composition (XX3), a satisfactory adhesive strength can be readily exhibited even when the heating time for the film during the three-dimensional decorative thermoforming is reduced.

<<Polypropylene resin (A)>>

The polypropylene resin (A) in the third embodiment can be selected from various types of propylene polymers, such as a propylene homopolymer (homopolypropylene), a propylene-α-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

1. Melt flow rate (MFR (A)): (a1)

The polypropylene resin (A) contained in the seal layer (I) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength

can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Melting peak temperature (Tm (A))

The polypropylene resin (A) preferably has a melting peak temperature (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak temperature is not limited, but is preferably 170°C or lower, and, when Tm (A) is in the above-mentioned range, a satisfactory adhesive strength can be exhibited.

3. Composition of the resin

The polypropylene resin (A) in the third embodiment can be a resin obtained by polymerization using, for example, a Ziegler catalyst or a metallocene catalyst. That is, the polypropylene resin (A) can be a Ziegler catalyst propylene polymer or a metallocene catalyst propylene polymer.

<<Ethylene-α-olefin random copolymer (C)>>

The ethylene-α-olefin random copolymer (C) used in the seal layer (I) in the third embodiment satisfies the requirements (c1) to (c3) shown below, preferably further has the requirements (c4) and (c5).

1. Ethylene content [E (C)]: (c1)

The ethylene-α-olefin random copolymer (C) in the third embodiment preferably has an ethylene content [E (C)] of 65% by weight or more, more preferably 68% by weight or more, further preferably 70% by weight or more, based on the weight of ethylene-α-olefin random copolymer (C). When the ethylene content [E (C)] is in the above-mentioned range, a satisfactory adhesive strength can be exhibited during the three-dimensional decorative thermoforming, making it possible to reduce the heating time for the film. The upper limit of the ethylene content [E (C)] is not particularly limited, but is preferably 95% by weight or less.

(Calculation method for ethylene content [E (C)])

An ethylene content [E (C)] of ethylene-α-olefin random copolymer (C) can be determined from integrated intensities obtained by the $^{13}$C-NMR measurement.

(Calculation method 1 (Binary))

An explanation is first on the calculation method for an ethylene content [E (C)] of a binary copolymer (bipolymer) comprising two types of repeating units. In this case, an ethylene content of an ethylene-α-olefin bipolymer can be determined using the following (Formula c1-1) and (Formula c1-2).

$$\text{Ethylene content (mol\%)} = IE \times 100 / (IE + IX) \qquad \text{(Formula c1-1)}$$

$$\text{Ethylene content [E (C)] (\% by weight)} = [\text{Ethylene content (mol\%)} \times \text{Molecular weight of ethylene}] \times 100 / [\text{Ethylene content (mol\%)} \times \text{Molecular weight of ethylene} + \alpha\text{-olefin content (mol\%)} \times \text{Molecular weight of } \alpha\text{-olefin}] \qquad \text{(Formula c1-2)}$$

In the above formulae, IE and IX are the respective integrated intensities of ethylene and an α-olefin, and can be respectively determined from the following (Formula c-2) and (Formula c-3).

$$IE = (I_{\beta\beta} + I_{\gamma\gamma} + I_{\beta\delta} + I_{\gamma\delta} + I_{\delta\delta}) / 2 + (I_{\alpha\gamma} + I_{\alpha\delta}) / 4 \qquad \text{(Formula c-2)}$$

$$IX = I_{\alpha\alpha} + (I_{\alpha\gamma} + I_{\alpha\delta}) / 2 \qquad \text{(Formula c-3)}$$

In the above formulae, the subscripts for I shown on the right side indicate carbons shown in the following structural formulae (a) to (d). For example, $\alpha\alpha$ indicates a methylene carbon based on an $\alpha$-olefin chain, and $I_{\alpha\alpha}$ indicates an integrated intensity of the signal of the methylene carbon based on the $\alpha$-olefin chain.

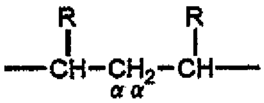

Structural formula (a)

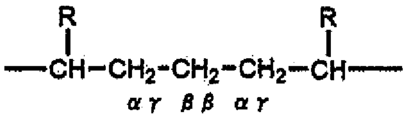

Structural formula (b)

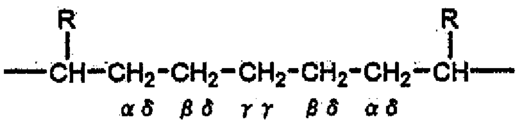

Structural formula (c)

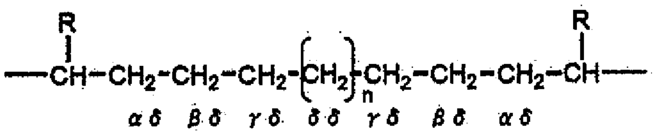

Structural formula (d)

In the structural formula (d), n represents an odd number of 1 or more.
With respect to the ethylene-$\alpha$-olefin bipolymer, the integrated intensities used in the (Formula c-2) and (Formula c-3) for each $\alpha$-olefin constituting the bipolymer are described below.

<In the case of an ethylene-propylene copolymer>

When the $\alpha$-olefin is propylene, an ethylene content [E (C)] is determined by applying the below-shown values of integrated intensities to the (Formula c-2) and (Formula c-3).
$I_{\beta\beta} = I_{25.0\text{-}24.2}$
$I_{\gamma\gamma} = I_{30.8\text{-}30.6}$
$I_{\beta\delta} = I_{27.8\text{-}26.8}$
$I_{\gamma\delta} = I_{30.6\text{-}30.2}$
$I_{\delta\delta} = I_{30.2\text{-}28.0}$
$I_{\alpha\alpha} = I_{48.0\text{-}43.9}$

$$I_{\alpha\gamma} + I_{\alpha\delta} = I_{39.0\text{-}36.2}$$

In the above formulae, I indicates an integrated intensity, and the subscripts for I shown on the right side indicate a range of chemical shift. For example, $I_{39.0\text{-}36.2}$ indicates an integrated intensity of a $^{13}C$ signal detected between 39.0 ppm and 36.2 ppm.
With respect to the chemical shift, the $^{13}C$ signal of hexamethyldisiloxane is set to 1.98 ppm, which is used as a base for chemical shifts of other $^{13}C$ signals. Like the ethylene-propylene copolymer, an ethylene-1-butene copolymer, an ethylene-1-hexene copolymer, and an ethylene-1-octene copolymer are described below.

<In the case of an ethylene-1-butene copolymer>

When the $\alpha$-olefin is 1-butene, an ethylene content [E (C)] is determined by applying the below-shown values of integrated intensities to the (Formula c-2) and (Formula c-3).

$I_{\beta\beta} = I_{24.6\text{-}24.4}$
$I_{\gamma\gamma} = I_{30.9\text{-}30.7}$
$I_{\beta\delta} = I_{27.8\text{-}26.8}$
$I_{\gamma\delta} = I_{30.5\text{-}30.2}$
$I_{\delta\delta} = I_{30.2\text{-}28.0}$
$I_{\alpha\alpha} = I_{39.3\text{-}38.1}$

$$I_{\alpha\gamma} + I_{\alpha\delta} = I_{34.5\text{-}33.8}$$

<In the case of an ethylene-1-hexene copolymer>

When the $\alpha$-olefin is 1-hexene, an ethylene content [E (C)] is determined by applying the below-shown values of integrated intensities to the (Formula c-2) and (Formula c-3).

$I_{\beta\beta} = I_{24.5\text{-}24.4}$
$I_{\gamma\gamma} = I_{31.0\text{-}30.8}$
$I_{\beta\delta} = I_{27.5\text{-}27.0}$
$I_{\gamma\delta} = I_{30.6\text{-}30.2}$
$I_{\delta\delta} = I_{30.2\text{-}28.0}$
$I_{\alpha\alpha} = I_{40.0\text{-}39.0}$

$$I_{\alpha\gamma} + I_{\alpha\delta} = I_{35.0\text{-}34.0}$$

<In the case of an ethylene-1-octene copolymer>

When the $\alpha$-olefin is 1-octene, the methylene carbons in hexyl branching based on 1-octene (5B6 and 6B6 in the structural formula shown below) overlap a $\beta\delta$ signal and an $\alpha\gamma$+$\alpha\delta$ signal.

$$I_{\beta\delta} + I_{5B6} = I_{27.6\text{-}26.7}$$

$$I_{\alpha\gamma} + I_{\alpha\delta} + I_{6B6} = I_{35.0\text{-}34.0}$$

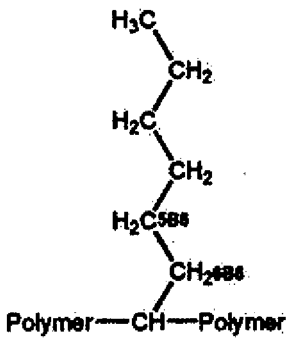

Hexyl branching

An ethylene content [E (C)] is determined by using $I_{\beta\delta}$ and $I_{\alpha\gamma}$ + $I_{\alpha\delta}$ corrected in respect of overlapping of 5B6 and 6B6, and applying the below-shown values of integrated intensities to the (Formula c-2) and (Formula c-3).

$I_{\beta\beta} = I_{24.7\text{-}24.2}$

$$I_{\gamma\gamma} + I_{\gamma\delta} + I_{\delta\delta} = I_{32.0\text{-}28.0}$$

$$I_{\beta\delta} = 2/3 \times I_{27.6\text{-}26.7}$$

$I_{\alpha\alpha} = I_{40.8\text{-}39.6}$

$$I_{\alpha\gamma} + I_{\alpha\delta} = I_{\beta\delta} + 2 \times I_{\beta\beta}$$

(Calculation method 2 (Ternary))

Next, an explanation is made on the calculation method for an ethylene content [E (C)] of a ternary copolymer (terpolymer) comprising three types of repeating units. For example, an ethylene content of an ethylene-propylene-butene terpolymer can be determined using the following (Formula c4-1) and (Formula c4-2).

$$\text{Ethylene content (mol\%)} = IE \times 100 / (IE + IP + IB) \quad \text{(Formula c4-1)}$$

Ethylene content [E (C)] (% by weight)
= [Ethylene content (mol%) × Molecular weight of ethylene] × 100 / [Ethylene content (mol%) × Molecular weight of ethylene + Propylene content (mol%) × Molecular weight of propylene + Butene content (mol%) × Molecular weight of butene]
(Formula c4-2)

In the above formulae, IE, IP, and IB are the respective integrated intensities of ethylene, propylene, and butene, and can be respectively determined from the following (Formula c-5), (Formula c-6), and (Formula c-7).

$$IE = (I_{\beta\beta} + I_{\gamma\gamma} + I_{\beta\delta} + I_{\gamma\delta} + I_{\delta\delta}) / 2 + (I_{\alpha\gamma(P)} + I_{\alpha\delta(P)} + I_{\alpha\gamma(B)} + I_{\alpha\delta(B)}) / 4 \quad \text{(Formula c-5)}$$

$$IP = 1/3 \times [I_{CH3(P)} + I_{CH(P)} + I_{\alpha\alpha(PP)} + 1/2 \times (I_{\alpha\alpha(PB)} + I_{\alpha\gamma(P)} + I_{\alpha\delta(P)})] \quad \text{(Formula c-6)}$$

$$IB = 1/4 \times [(I_{CH3(B)} + I_{CH(B)} + I_{2B2} + I_{\alpha\alpha(BB)}) + 1/2 \times (I_{\alpha\alpha(PB)} + I_{\alpha\gamma(B)} + I_{\alpha\delta(B)})] \quad \text{(Formula c-7)}$$

In the above formulae, the subscript (P) means a signal based on the methyl group branching derived from propylene, and the subscript (B) similarly means a signal based on the ethyl group branching derived from butene.

Further, $\alpha\alpha$(PP) means a signal of a methylene carbon based on the propylene chain, $\alpha\alpha$(BB) similarly means a signal of a methylene carbon based on the butene chain, and $\alpha\alpha$(PB) means a signal of a methylene carbon based on the propylene-butene chain.

The $\gamma\gamma$ signal overlaps the bottom edge of a signal of the methine carbon CH (PPE) of propylene arranged at the center of propylene-propylene-ethylene, and therefore it is difficult to separate the $\gamma\gamma$ signal.

The $\gamma\gamma$ signal appears for the structural formula (c) having two ethylene chains, and the integrated intensity of $\gamma\gamma$ derived from ethylene and the integrated intensity of $\beta\delta$ of the structural formula (c) satisfy the following (Formula c-8).

$$I_{\beta\delta}\ (\text{Structural formula (c)}) = 2 \times I_{\gamma\gamma} \qquad \text{(Formula c-8)}$$

Further, βδ appears for the structural formula (d) having three or more ethylene chains, and the integrated intensity of βδ of the structural formula (d) is equal to the integrated intensity of γδ, and the following (Formula c-9) is satisfied.

$$I_{\beta\delta}\ (\text{Structural formula (d)}) = I_{\gamma\delta} \qquad \text{(Formula c-9)}$$

Therefore, βδ based on the structural formula (c) and structural formula (d) is determined from the following (Formula c-10).

$$\begin{aligned} I_{\beta\delta} &= I_{\beta\delta}\ (\text{Structural formula (c)}) + I_{\beta\delta}\ (\text{Structural formula (d)}) \\ &= 2 \times I_{\gamma\gamma} + I_{\gamma\delta} \qquad \text{(Formula c-10)} \end{aligned}$$

That is, the following formula is satisfied.

$$I_{\gamma\gamma} = (I_{\beta\delta} - I_{\gamma\delta}) / 2 \qquad \text{(Formula c-10')}$$

The (Formula c-10') is applied to the (Formula c-5), so that IE can be replaced by the (Formula c-11).

$$IE = (I_{\beta\beta} + I_{\delta\delta}) / 2 + (I_{\alpha\gamma(P)} + I_{\alpha\delta(P)} + I_{\alpha\gamma(B)} + I_{\alpha\delta(B)} + 3 \times I_{\beta\delta} + I_{\gamma\delta}) / 4 \qquad \text{(Formula c-11)}$$

The βδ signal is corrected with respect to the overlapping of the ethyl branching based on 1-butene, forming the following (Formula c-12).

$$I_{\beta\delta} = I_{\alpha\gamma(P)} + I_{\alpha\delta(P)} + I_{\alpha\gamma(B)} + I_{\alpha\delta(B)} - 2 \times I_{\beta\beta} \qquad \text{(Formula c-12)}$$

From the (Formula c-11) and (Formula c-12), IE is represented by the following (Formula c-13).

$$IE = I_{\delta\delta} / 2 + I_{\gamma\delta} / 4 - I_{\beta\beta} + I_{\alpha\gamma(P)} + I_{\alpha\delta(P)} + I_{\alpha\gamma(B)} + I_{\alpha\delta(B)} \qquad \text{(Formula c-13)}$$

An ethylene content is determined by applying the below-shown values to the (Formula c-13), (Formula c-6), and (Formula c-7).

$$I_{\beta\beta} = I_{25.2\text{-}23.8}$$

$$I_{\gamma\delta} = I_{30.4\text{-}30.2}$$

$$I_{\delta\delta} = I_{30.2\text{-}29.8}$$

$$I_{\alpha\gamma(P)} + I_{\alpha\delta(P)} = I_{39.5\text{-}37.3}$$

$$I_{\alpha\gamma(B)} + I_{\alpha\delta(B)} = I_{34.6\text{-}33.9}$$

$$I_{CH3(P)} = I_{22.6\text{-}19.0}$$

$$I_{CH(P)} = I_{29.5\text{-}27.6} + I_{31.2\text{-}30.4} + I_{33.4\text{-}32.8}$$

$$I_{\alpha\alpha(PP)} = I_{48.0\text{-}45.0}$$

$$I_{CH3(B)} = I_{11.4\text{-}10.0}$$

$$I_{CH(B)} = I_{35.5\text{-}34.7} + I_{37.4\text{-}36.8} + I_{39.7\text{-}39.6}$$

$$I_{\alpha\alpha(BB)} = I_{40.3\text{-}40.0}$$

$$I_{\alpha\alpha(PB)} = I_{44.2\text{-}42.0}$$

$$I_{2B2} = I_{26.7\text{-}26.4}$$

The assignment of the individual signals was made with reference to the following five documents:

Macromolecules, Vol. 10, NO. 4, 1977,
Macromolecules, Vol. 36, No. 11, 2003,
Analytical Chemistry, Vol. 76, No. 19, 2004,
Macromolecules, 2001, 34, 4757-4767, and
Macromolecules, Vol. 25, No. 1, 1992.

Even when the α-olefin constituting the ethylene-α-olefin random copolymer is other than those mentioned above, an ethylene content [E (C)] can be determined in the same manner as mentioned above by assigning the individual signals.

2. Density: (c2)

The ethylene-α-olefin random copolymer (C) preferably has a density of 0.850 to 0.950 g/cm$^3$, more preferably 0.855 to 0.900 g/cm$^3$, further preferably 0.860 to 0.890 g/cm$^3$. When the density of ethylene-α-olefin random copolymer (C) is in the above-mentioned range, a satisfactory adhesive strength can be exhibited during the three-dimensional decorative thermoforming, and further excellent film formability can be achieved.

3. Melt flow rate (MFR (C)): (c3)

The ethylene-α-olefin random copolymer (C) preferably has a melt flow rate (at 230°C under a load of 2.16 kg) (MFR (C)) of 0.1 to 100 g/10 minutes, more preferably 0.5 to 50 g/10 minutes, further preferably 1 to 30 g/10 minutes. When MFR (C) is in the above-mentioned range, excellent adhesion is exhibited even when the time for three-dimensional decorative thermoforming is reduced.

4. Melting peak temperature (Tm (C)): (c4)

The ethylene-α-olefin random copolymer (C) preferably has a melting temperature peak (DSC melting peak temperature) (Tm (C)) of 30 to 130°C, more preferably 35 to 120°C, further preferably 40 to 110°C. When Tm (C) is in the above-mentioned range, a satisfactory adhesive strength can be exhibited during the three-dimensional decorative thermoforming.

5. Type of ethylene-α-olefin random copolymer (C): (c5)

It is preferred that the ethylene-α-olefin random copolymer (C) is a copolymer of ethylene and an α-olefin having 3 to 20 carbon atoms. Specific examples of the α -olefins having 3 to 20 carbon atoms include propylene, 1-butene, 1-pentene, 1-hexene, 4-methyl-l-pentene, 1-heptene, 1-octene, 1-decene, 1-dodecene, 1-tetradecene, 1-hexadecene, and 1-eicosene. Of these, propylene, 1-butene, 1-hexene, or 1-octene is especially preferably used.

The ethylene-α-olefin random copolymer (C) is produced by copolymerizing monomers in the presence of a catalyst. Specifically, the ethylene-α-olefin random copolymer (C) can be produced by copolymerizing ethylene and an α-olefin, such as propylene, 1-butene, 1-hexene, 4-methyl-l-pentene, or 1-octene, using a catalyst, such as a Ziegler catalyst, a Phillips catalyst, or a metallocene catalyst, as a polymerization catalyst for olefin by a process, such as a vapor phase method, a solution method, a high pressure method, or a slurry method.

Further, with respect to the ethylene-α-olefin random copolymer (C) used in the seal layer (I) in the third embodiment, one member or a combination of two or more members can be used as long as the effects of the present invention are not sacrificed.

Examples of commercially available ethylene-α-olefin random copolymers include Kernel series, manufactured by Japan Polyethylene Corporation, TAFMER P series and TAFMER A series, manufactured by Mitsui Chemicals, Inc., and ENGAGE EG series, manufactured by Dow DuPont Inc.

<<Resin composition (XX3)>>

In the third embodiment, the resin composition (XX3) constituting a seal layer (I) comprises a polypropylene resin (A) and an ethylene-α-olefin random copolymer (C) as a main component, and may be a mixture or melt-kneaded mixture of a polypropylene resin (A) and an ethylene-α-olefin random copolymer (C), or may be a successive polymerization product of a polypropylene resin (A) and an ethylene-α-olefin random copolymer (C).

1. Weight ratio of polypropylene resin (A) and ethylene-α-olefin random copolymer (C)

In the resin composition (XX3), the weight ratio of the polypropylene resin (A) and the ethylene-α-olefin random copolymer (C) ((A):(C)) is preferably selected in the range of from 97:3 to 5:95, more preferably 95:5 to 10:90, further preferably 93:7 to 20:80. When the weight ratio is in the above-mentioned range, a satisfactory adhesive strength can be exhibited during the three-dimensional decorative thermoforming, so that not only can the heating time for the film be reduced, but also excellent adhesion between the seal layer (I) and the layer (II) can be obtained.

<Fourth embodiment>

In the fourth embodiment, a seal layer (I) comprises a resin composition (XX4) comprising a polypropylene resin (A) and a thermoplastic elastomer (D) as a main component. By forming the seal layer (I) comprising such a resin composition (XX4), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

<<Polypropylene resin (A)>>

1. Melt flow rate (MFR (A)): (a1)

The polypropylene resin (A) contained in the seal layer (I) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Melting peak temperature (Tm (A))

The polypropylene resin (A) preferably has a melting peak temperature (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak

temperature is not limited, but is preferably 170°C or lower, and, when the melting peak temperature is in the above-mentioned range, a satisfactory adhesive strength can be exhibited.

3. Composition of the resin

The polypropylene resin (A) in the fourth embodiment can be a resin obtained by polymerization using, for example, a Ziegler catalyst or a metallocene catalyst. That is, the polypropylene resin (A) can be a Ziegler catalyst propylene polymer or a metallocene catalyst propylene polymer.

The polypropylene resin (A) in the fourth embodiment can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

<<Thermoplastic elastomer (D)>>

The thermoplastic elastomer (D) used in the seal layer (I) in the fourth embodiment satisfies the requirements (d1) to (d4) shown below, preferably further has the requirement (d5).

1. Composition: (d1)

The thermoplastic elastomer (D) in the present invention is a thermoplastic elastomer comprising at least one of propylene and butene as a main component. The "thermoplastic elastomer comprising at least one of propylene and butene as a main component" includes (i) a thermoplastic elastomer comprising propylene as a main component, (ii) a thermoplastic elastomer comprising butene as a main component, and (iii) a thermoplastic elastomer having a component comprising both propylene and butene as a main component.

With respect to the propylene or butene content of the thermoplastic elastomer (D), there is no particular limitation, but the propylene or butene content is preferably 30 wt% or more, more preferably 40 wt% or more, further preferably 50 wt% or more. For example, the thermoplastic elastomer (D) can have a propylene or butene content of more than 35 wt%.

The thermoplastic elastomer (D) may contain both propylene and butene, and, in this case, the component comprising both propylene and butene is a main component of the thermoplastic elastomer (D), and the total of the contents of propylene and butene is preferably 30 wt% or more, more preferably 40 wt% or more, further preferably 50 wt% or more. When both propylene and butene are contained, for example, the thermoplastic elastomer (D) can contain propylene and butene in an amount of more than 35 wt% in total. When the total amount of propylene and butene is in the above-mentioned range, a satisfactory adhesive strength can be exhibited during the three-dimensional decorative thermoforming, making it possible to reduce the heating time for the film.

2. Density: (d2)

The thermoplastic elastomer (D) preferably has a density of 0.850 to 0.950 g/cm$^3$, more preferably 0.855 to 0.940 g/cm$^3$, further preferably 0.860 to 0.930 g/cm$^3$. When the density of thermoplastic elastomer (D) is in the above-mentioned range, a satisfactory adhesive strength can be exhibited during the three-dimensional decorative thermoforming, and further excellent film formability can be achieved.

3. Melt flow rate (MFR (D)): (d3)

The thermoplastic elastomer (D) preferably has a melt flow rate (at 230°C under a load of 2.16 kg) MFR (D) of 0.1 to 100 g/10 minutes, more preferably 0.5 to 50 g/10 minutes, further preferably 1.0 to 30 g/10 minutes. When MFR (D) is in the above-mentioned range, excellent adhesion is exhibited even when the time for three-dimensional decorative thermoforming is reduced.

4. Tensile modulus: (d4)

The thermoplastic elastomer (D) preferably has a tensile modulus smaller than that of the polypropylene resin (A). The thermoplastic elastomer (D) more preferably has a tensile modulus of 500 MPa or less, further preferably 450 MPa or less. When the tensile modulus of thermoplastic elastomer (D) is in the above-mentioned range, a satisfactory adhesive strength can be exhibited during the three-dimensional decorative thermoforming.

5. Melting peak temperature (Tm (D)): (d5)

The thermoplastic elastomer (D) preferably has a melting peak temperature (Tm (D)) of 30 to 170°C, more preferably 35 to 168°C, further preferably 40 to 165°C or more. When Tm (D) is in the above-mentioned range, a satisfactory adhesive strength can be exhibited during the three-dimensional decorative thermoforming.

The thermoplastic elastomer (D) in the present invention can be appropriately selected and used as long as it satisfies the above-mentioned requirements (d1) to (d4), and the thermoplastic elastomer (D) is preferably a propylene-ethylene copolymer having an ethylene content of less than 50 wt%, a butene-ethylene copolymer having an ethylene content of less than 50 wt%, a propylene-ethylene-butene copolymer having an ethylene content of less than 50 wt%, a propylene-butene copolymer, or a butene homopolymer.

6. Ethylene content [E(D)]

The ethylene content [E(D)] of the above-mentioned propylene-ethylene copolymer, butene-ethylene copolymer, or propylene-ethylene-butene copolymer is more preferably 45 wt% or less, further preferably 40 wt% or less, and, when E(D) is in the above-mentioned range, a satisfactory adhesive strength can be exhibited during the three-dimensional decorative thermoforming.

(Calculation method for ethylene content [E(D)])

When the thermoplastic elastomer (D) is an elastomer containing ethylene, an ethylene content [E(D)] of thermoplastic elastomer (D) can be determined from integrated intensities obtained by the $^{13}C$-NMR measurement.

The calculation method is similar to "Calculation method 1 (Binary)" and "Calculation method 2 (Ternary)" described above in connection with the calculation method for the ethylene content [E (C)] of ethylene-$\alpha$-olefin random copolymer (C) in the third embodiment.

Further, the thermoplastic elastomer (D) may be a copolymer of propylene and/or butene and an $\alpha$-olefin other than propylene and butene as long as the effects of the present invention are not sacrificed. Specific examples of the $\alpha$-olefins include ethylene, 1-pentene, 1-hexene, 4-methyl-l-pentene, 1-heptene, 1-octene, 1-decene, 1-dodecene, 1-tetradecene, 1-hexadecene, and 1-eicosene. These $\alpha$-olefins can be used individually or in combination. Of these, 1-hexene or 1-octene is especially preferably used.

The thermoplastic elastomer (D) is produced by copolymerizing monomers in the presence of a catalyst. Specifically, thermoplastic elastomer (D) can be produced by copolymerizing propylene, 1-butene, and optionally an $\alpha$-olefin, such as ethylene, 1-hexene, 4-methyl-1-pentene, or 1-octene, using a catalyst, such as a Ziegler catalyst, a Phillips catalyst, or a metallocene catalyst, as a polymerization catalyst for olefin by a process, such as a vapor phase method, a solution method, a high pressure method, or a slurry method.

Further, with respect to thermoplastic elastomer (D) selectively used in the seal layer (I) in the fourth embodiment, one member or a combination of two or more members can be used as long as the effects of the present invention are not sacrificed.

Examples of commercially available thermoplastic elastomers include TAFMER XM series, TAFMER BL series and TAFMER PN series, manufactured by Mitsui Chemicals, Inc., and VISTAMAXX series, manufactured by ExxonMobil Chemical.

<<Resin composition (XX4)>>

In the fourth embodiment, the resin composition (XX4) constituting a seal layer (I) comprises a polypropylene resin (A) and a thermoplastic elastomer (D). The resin composition (XX4) may be a mixture or melt-kneaded mixture of a polypropylene resin (A) and a thermoplastic elastomer (D), or may be a successive polymerization product of a polypropylene resin (A) and a thermoplastic elastomer (D).

1. Weight ratio of polypropylene resin (A) and thermoplastic elastomer (D)

In the resin composition (XX4), the weight ratio of the polypropylene resin (A) and the thermoplastic elastomer (D) ((A):(D)) is preferably 97:3 to 5:95, more preferably 95:5 to 10:90, further preferably 93:7 to 20:80. When the weight ratio is in the above-mentioned range, a satisfactory adhesive strength can be exhibited during the three-dimensional decorative thermoforming, so that not only can the heating time for the film be reduced, but also excellent adhesion between the seal layer (I) and the layer (II) can be obtained.

<Fifth embodiment>

In the fifth embodiment, a seal layer (I) comprises a resin composition (XX5) containing a polypropylene resin (A) and a thermoplastic resin (E). By forming the seal layer (I) comprising such a resin composition (XX5), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

«Polypropylene resin (A)»

The polypropylene resin (A) in the fifth embodiment can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer.

1. Melt flow rate (MFR (A)): (a1)

The polypropylene resin (A) contained in the seal layer (I) preferably has a melt flow rate (at 230°C under a load of 2.16 kg) MFR (A) of more than 0.5 g/10 minutes, more preferably 1 g/10 minutes or more, especially preferably 2 g/10 minutes or more. When MFR (A) is in the above-mentioned range, relaxation of the polypropylene resin (A) satisfactorily proceeds during the three-dimensional decorative thermoforming, so that a satisfactory adhesive strength can be readily exhibited. The upper limit of MFR (A) is not limited, but is preferably 100 g/10 minutes or less. When MFR (A) is in the above-mentioned range, the adhesive strength does not become poor due to a lowering of the physical properties.

2. Melting peak temperature (Tm (A))

The polypropylene resin (A) preferably has a melting peak temperature (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak temperature is not limited, but is preferably 170°C or lower, and, when the melting peak temperature is in the above-mentioned range, a satisfactory adhesive strength can be exhibited.

3. Composition of the resin

The polypropylene resin (A) in the fifth embodiment can be a resin obtained by polymerization using, for example, a Ziegler catalyst or a metallocene catalyst. That is, the polypropylene resin (A) can be a Ziegler catalyst propylene polymer or a metallocene catalyst propylene polymer.

<<Thermoplastic resin (E)>>

The thermoplastic resin (E) used in the seal layer (I) in the fifth embodiment is a component which has, when being combined with the polypropylene resin (A), a function of delaying crystallization of the polypropylene resin (A). By delaying the crystallization rate of the polypropylene resin (A), a disadvantage can be prevented in that when being subjected to decorative forming, the seal layer resin suffers crystallization (setting) before the seal layer (I) and the surface of the substrate are melt-bonded by heat to lower the adhesive force. Consequently, a high adhesive force can be readily exhibited even when the heating time for the decorative film is reduced. The effect of delaying crystallization of the polypropylene resin (A) was evaluated in terms of the below-mentioned isothermal crystallization time of the resin composition (XX5).

1. Composition of the resin: (e1)

The thermoplastic resin (E) in the present invention preferably contains at least one of an alicyclic hydrocarbon group and an aromatic hydrocarbon group. By virtue of having the above-mentioned characteristic feature, the thermoplastic resin (E) is mixed with the polypropylene resin (A) to exhibit an effect of delaying crystallization of the polypropylene resin (A), so that the adhesive force to the substrate is likely to be improved and a flaw in the surface of the substrate is unlikely to be seen. Specifically, examples of alicyclic hydrocarbon groups include a cyclopropyl group, a cyclobutyl

group, a cyclopentyl group, a cyclohexyl group, a cyclooctyl group, and a substituent derivative, a cyclocondensation product, and a crosslinked structure thereof, and the thermoplastic resin (E) especially preferably contains a cyclopentyl group or a cyclohexyl group. Examples of aromatic hydrocarbon groups include a phenyl group, a methylphenyl group, a biphenyl group, an indenyl group, a fluorenyl group, and a substituent derivative and a cyclocondensation product thereof, and the thermoplastic resin (E) especially preferably contains a phenyl group, a biphenyl group, or an indenyl group. The alicyclic hydrocarbon group may be one which is obtained by hydrogenating the aromatic hydrocarbon group contained in the resin.

The thermoplastic resin (E) can be appropriately selected and used as long as the above-mentioned requirement (e1) is satisfied, and a styrene elastomer or an alicyclic hydrocarbon resin can be especially preferably used, and the thermoplastic resin (E) may comprise both of them.

Examples of styrene elastomers include a styrene-butadiene-styrene triblock copolymer elastomer (SBS), a styrene-isoprene-styrene triblock copolymer elastomer (SIS), a styrene-ethylene-butylene copolymer elastomer (SEB), a styrene-ethylene-propylene copolymer elastomer (SEP), a styrene-ethylene-butylene-styrene copolymer elastomer (SEBS), a styrene-ethylene-butylene-ethylene copolymer elastomer (SEBC), a hydrogenated styrene-butadiene elastomer (HSBR), a styrene-ethylene-propylene-styrene copolymer elastomer (SEPS), a styrene-ethylene-ethylene-propylene-styrene copolymer elastomer (SEEPS), and a styrene-butadiene-butylene-styrene copolymer elastomer (SBBS), and those which are hydrogenated can be especially preferably used.

Examples of commercially available styrene elastomers include DYNARON series, manufactured by JSR Corporation, KRATON G series, manufactured by Kraton Polymer Japan Co., Ltd., and Tuftec series, manufactured by Asahi Kasei Corporation.

Examples of alicyclic hydrocarbon resins include a hydrocarbon resin which is obtained by polymerizing, as a main raw material, one member of or a mixture of two or more members of dicyclopentadiene derivatives, such as dicyclopentadiene, methyldicyclopentadiene, and dimethyldicyclopentadiene; a hydrogenated coumarone-indene resin, a hydrogenated C9 petroleum resin, a hydrogenated C5 petroleum resin, a C5/C9 copolymer petroleum resin, a hydrogenated terpene resin, and a hydrogenated rosin resin, and a commercially available product can be used, specifically, for example, there can be mentioned ARKON series, manufactured by Arakawa Chemical Industries, Ltd.

<<Resin composition (XX5)>>

In the fifth embodiment, the resin composition (XX5) constituting a seal layer (I) comprises a polypropylene resin (A) and a thermoplastic resin (E) as a main component, and may be a mixture or melt-kneaded mixture of a polypropylene resin (A) and a thermoplastic resin (E).

1. Weight ratio of polypropylene resin (A) and thermoplastic resin (E)

In the resin composition (XX5), the weight ratio of the polypropylene resin (A) and the thermoplastic resin (E) ((A):(E)) is preferably selected in the range of from 97:3 to 5:95, more preferably 95:5 to 10:90, further preferably 93:7 to 20:80. A plurality of polypropylene resins (A) or thermoplastic resins (E) may be contained, and, for example, when a thermoplastic resin (E1) and a thermoplastic resin (E2) are contained, the total weight of the thermoplastic resin (E1) and the thermoplastic resin (E2) is considered as the weight of the thermoplastic resin (E). When the weight ratio is in the above-mentioned range, a satisfactory adhesive strength can be exhibited during the three-dimensional decorative thermoforming, making it possible to reduce the heating time for the film. Further, excellent adhesion between the seal layer (I) and the layer (II) can be obtained.

2. Isothermal crystallization time (t(XX5)): (xx1)

With respect to the resin composition (XX5), an isothermal crystallization time (t(XX5)) (second) of the resin composition (XX5), as determined by a differential scanning calorimeter (DSC), preferably satisfies the following formula (x-1), more preferably satisfies the formula (x-2), further preferably satisfies the formula (x-3):

$$t(XX5) \geq 1.5 \times t(A) \qquad \text{Formula (x-1)}$$

$$t(XX5) \geq 2.0 \times t(A) \qquad \text{Formula (x-2)}$$

$$t(XX5) \geq 2.5 \times t(A) \qquad \text{Formula (x-3)}$$

wherein t(A) represents an isothermal crystallization time (second) of the polypropylene resin (A) measured at a temperature 10°C higher than the crystallization start temperature of the polypropylene resin (A), and t(XX5) represents an isothermal crystallization time (second) of the resin composition (XX5) measured at a temperature 10°C higher than the crystallization start temperature of the polypropylene resin (A).

When the isothermal crystallization time (t(XX5)) of the resin composition (XX5) is in the above-mentioned range, a time required until the seal layer (I) in the decorative film and the surface of the substrate are melt-bonded by heat in the decorative forming can be secured, so that high adhesive force is exhibited.

With respect to the upper limit of the isothermal crystallization time (t(XX5)), there is no particular limitation, but, when the relationship: 30 t(A) ≥ t(XX5) is satisfied, excellent film formability can be achieved.

(Measurement of an isothermal crystallization time by a differential scanning calorimeter (DSC))

The isothermal crystallization time in the present invention is a value measured using a differential scanning calorimeter (DSC) in accordance with JIS-K7121 (2012) "Method for measuring transition temperature of plastic".

Specifically, 5 mg of a sample of polypropylene resin (A) is placed in a holder made of aluminum, and the temperature of the sample in a nitrogen gas atmosphere is increased from 40°C to 200°C at a rate of 10°C/min. The sample is maintained at 200°C for 10 minutes, and then cooled to 40°C at a cooling rate of 10°C/minute so that the sample undergoes crystallization, and, from the DSC curve obtained in this instance, a crystallization start temperature is determined and calculated.

Then, 5 mg of a sample of polypropylene resin (A) or resin composition (XX5) is placed in a holder made of aluminum, and the temperature of the sample in a nitrogen gas atmosphere is increased from 40°C to 200°C at a rate of 10°C/mm, and maintained for 10 minutes to melt the sample. Subsequently, the sample is cooled to a temperature 10°C higher than the crystallization start temperature of the polypropylene resin (A) determined by the above-described method (hereinafter, this temperature is frequently referred to as "measurement temperature") at a rate of 40°C/min, and then maintained at the measurement temperature to measure a behavior in which the sample undergoes crystallization to generate heat. A period of time from a point of time when the temperature of the sample has reached the measurement temperature to a point of time when the exothermic peak emerges, is taken as an isothermal crystallization time. It is considered that the adhesive force is considerably lowered even when the seal layer (I) in the decorative film slightly undergoes crystallization during the decorative forming, and therefore, when there are two or more exothermic peaks in the isothermal crystallization measurement, a period of time required until a point of time when the first exothermic peak emerges is taken as an isothermal crystallization time.

Further, depending on the type of polypropylene resin (A), there is a possibility that, even in the measurement conducted at a temperature 10°C higher than the crystallization start temperature, the isothermal crystallization time of polypropylene resin (A) is extremely short (for example, 120 seconds or shorter) or long (for example, 3,000 seconds or longer). In such a case, an isothermal crystallization time can be measured at a temperature 10±2°C higher than the crystallization start temperature. When such a measurement is conducted, an isothermal crystallization time of resin composition (XX5) must be measured at a temperature changed in conformity with the measurement temperature of the polypropylene resin (A).

<Sixth embodiment>

In the sixth embodiment, as a polypropylene resin (A) for seal layer (I), a resin composition (XX6) containing a propylene-ethylene block copolymer (F) is used. By forming such a seal layer (I), excellent adhesion is exhibited even when the time for three-dimensional decorative thermoforming is reduced, and therefore the forming is completed before the nucleating agent and/or weathering agent volatilizes, making it easy to suppress a reduction of the surface gloss and/or weathering resistance.

<<Propylene-ethylene block copolymer (F)>>

The propylene-ethylene block copolymer (F) used in the sixth embodiment contains a component (F1) comprising a propylene homopolymer or a propylene-ethylene random copolymer, and a component (F2) comprising a propylene-ethylene random copolymer containing ethylene in a larger amount than that of the component (F1). By virtue of the component (F2) which is a rubber component of the propylene-ethylene block copolymer (F), the adhesive force to a resin molded article (substrate) is improved. The propylene-ethylene block copolymer (F) is obtained by producing

the component (F1) comprising a propylene homopolymer or a propylene-ethylene random copolymer by (co)polymerization in the first polymerization step, and producing the component (F2) comprising a propylene-ethylene random copolymer containing ethylene in a larger amount than that of the component (F1) by successive copolymerization in the second polymerization step.

1. Ratio of component (F1) and component (F2): (f2)

With respect to the blend ratio of component (F1) and component (F2) constituting the propylene-ethylene block copolymer (F) in the sixth embodiment, it is preferred that the amount of component (F1) is 5 to 97% by weight and the amount of component (F2) is 3 to 95% by weight. It is more preferred that the amount of component (F1) is 30 to 95% by weight and the amount of component (F2) is 5 to 70% by weight, and it is further preferred that the amount of component (F1) is 52 to 92% by weight and the amount of component (F2) is 8 to 48% by weight. When the ratio of component (F1) and component (F2) is in the above-mentioned range, a satisfactory adhesive strength can be exhibited. Further, when the ratio is in the above-mentioned range, the film has no tackiness and excellent film formability can be achieved.

2. Melt flow rate (MFR (F)): (a1)

The propylene-ethylene block copolymer (F) preferably has a melt flow rate (at 230°C under a load of 2.16 kg) MFR (F) of more than 0.5 g/10 minutes, more preferably 1 g/10 minutes or more, especially preferably 2 g/10 minutes or more. When MFR (F) is in the above-mentioned range, relaxation of the propylene-ethylene block copolymer (F) satisfactorily proceeds during the three-dimensional decorative thermoforming, so that a satisfactory adhesive strength can be readily exhibited. The upper limit of MFR (F) is not limited, but is preferably 100 g/10 minutes or less. When MFR (F) is in the above-mentioned range, the adhesive strength does not become poor due to a lowering of the physical properties.

3. Melting peak temperature (Tm (F)): (f1)

The propylene-ethylene block copolymer (F) preferably has a melting point (melting peak temperature) Tm (F) of 110 to 170°C, more preferably 113 to 169°C, further preferably 115 to 168°C. When Tm (F) is in the above-mentioned range, excellent formability can be achieved in the three-dimensional decorative thermoforming. The melting peak temperature is derived mainly from component (F1) having a small ethylene content, i.e., highly crystalline component (F1), and the melting peak temperature can be controlled by changing the amount of the ethylene to be copolymerized.

4. Ethylene content (E(F)) of propylene-ethylene block copolymer (F): (f3)

The ethylene content of propylene-ethylene block copolymer (F) (hereinafter, referred to as "E(F)") is preferably 0.15 to 85% by weight, more preferably 0.5 to 75% by weight, further preferably 2 to 50% by weight. When E(F) is in the above-mentioned range, a satisfactory adhesive strength can be exhibited, and further excellent adhesion to the layer (II) of the decorative film can be obtained, achieving excellent film formability.

5. Ethylene content (E(F1)) of component (F1): (f4)

The component (F1) is a propylene homopolymer or a propylene-ethylene random copolymer having a relatively high melting point and preferably having an ethylene content (hereinafter, referred to as "E(F1)") in the range of from 0 to 6% by weight, more preferably 0 to 5% by weight. When E(F1) is in the above-mentioned range, not only can excellent formability be achieved during the three-dimensional decorative thermoforming, but also the film has less tackiness and exhibits excellent film formability.

6. Ethylene content (E(F2)) of component (F2): (f5)

The component (F2) has an ethylene content (hereinafter, referred to as "E(F2)") which is larger than the ethylene content E(F1) of component (F1). Further, the component (F2) is preferably a propylene-ethylene random copolymer having E(F2) in the range of from 5 to 90% by weight. E(F2) is more preferably 7 to 80% by weight, further preferably 9 to 50% by weight. When E(F2) is in the above-mentioned range, a satisfactory adhesive strength can be exhibited.

(Method for producing propylene-ethylene block copolymer (F))

The propylene-ethylene block copolymer (F) used in the present invention, and component (F1) comprising a propylene homopolymer or a propylene-ethylene random copolymer and component (F2) comprising a propylene-ethylene random copolymer, which components constitute the propylene-ethylene block copolymer (F), can be preferably produced using the raw materials and polymerization method shown below. The method for producing propylene-ethylene block copolymer (F) used in the present invention is described below.

• Raw materials used

With respect to the catalyst used in producing propylene-ethylene block copolymer (F) used in the present invention, a magnesium supported catalyst having magnesium, a halogen, titanium, and an electron donor as a catalyst component; a catalyst comprising a solid catalyst component having titanium trichloride as a catalyst and organoaluminum; or a metallocene catalyst can be used. The specific method for producing a catalyst is not particularly limited, but, as examples, there can be mentioned the Ziegler catalyst disclosed in Japanese Patent Application Kokai Publication No. 2007-254671, and the metallocene catalyst disclosed in Japanese Patent Application Kokai Publication No. 2010-105197.

The raw material olefins to be polymerized are propylene and ethylene, and, if necessary, the other olefin, for example, 1-butene, 1-hexene, 1-octene, or 4-methyl-1-pentene can be used in such an amount that the effects aimed at by the present invention are not sacrificed.

• Polymerization step

The polymerization step conducted in the presence of the above-mentioned catalyst comprises multiple stages of the first polymerization step for producing component (F1) and the second polymerization step for producing component (F2).

First polymerization step

The first polymerization step is a step in which propylene alone or a propylene/ethylene mixture is fed to the polymerization system having the above-mentioned catalyst added thereto to produce a propylene homopolymer or a propylene-ethylene random copolymer, forming the component (F1) in an amount corresponding to 5 to 97% by weight of the whole of the polymer.

The MFR of component (F1) (hereinafter, referred to as "MFR (F1)") can be controlled by using hydrogen as a chain transfer agent. Specifically, MFR (F1) of component (F1) is increased as the concentration of hydrogen which is a chain transfer agent is increased, and vice versa. The hydrogen concentration in a polymerization vessel can be increased by increasing the feed rate of hydrogen to the polymerization vessel, and control of the hydrogen concentration is very easy for those skilled in the art. Further, when the component (F1) is a propylene-ethylene random copolymer, the use of a method of controlling the feed rate of ethylene fed to the polymerization vessel is easy as a means for controlling the ethylene content of component (F1). Specifically, the ethylene content of component (F1) is increased as the feed rate ratio of ethylene to propylene fed to the polymerization vessel (ethylene feed rate ÷ propylene feed rate) is increased, and vice versa. The relationship between the feed rate ratio of propylene and ethylene fed to the polymerization vessel and the ethylene content of component (F1) varies depending on the type of the catalyst used, but it is very easy for those skilled in the art to obtain the component (F1) having an intended ethylene content by appropriately controlling the feed rate ratio.

Second polymerization step

The second polymerization step is a step in which, subsequent to the first polymerization step, a propylene/ethylene mixture is further introduced to produce a propylene-ethylene random copolymer, forming the component (F2) in an amount corresponding to 3 to 95% by weight of the whole of the polymer.

The MFR of component (F2) (hereinafter, referred to as "MFR (F2)") can be controlled by using hydrogen as a chain transfer agent. A specific method of controlling the MFR is similar to the method for controlling the MFR of component (F1). As a means for controlling the ethylene content of component (F2), the use of a method of controlling the feed rate of ethylene fed to the polymerization vessel is easy. A specific method of controlling the feed rate is similar to the method used in the case where the component (F1) is a propylene-ethylene random copolymer.

Next, the method for controlling the index of the propylene-ethylene block copolymer (F) is described.

The method for controlling the weight ratio of component (F1) and component (F2) is first described. The weight

ratio of component (F1) and component (F2) is controlled by changing the production rate in the first polymerization step for producing component (F1) and the production rate in the second polymerization step for producing component (F2). For example, the amount of component (F1) can be increased and the amount of component (F2) can be reduced by reducing the production rate in the second polymerization step while maintaining the production rate in the first polymerization step, and this can be made by reducing the residence time in the second polymerization step or lowering the polymerization temperature in the second polymerization step. Alternatively, the control can be made by adding a polymerization inhibitor, such as ethanol or oxygen, or increasing the amount of the polymerization inhibitor added if it is originally added. The converse can be similarly made.

Generally, the weight ratio of component (F1) and component (F2) is defined by the production rate in the first polymerization step for producing component (F1) and the production rate in the second polymerization step for producing component (F2). Formulae are shown below.

$$\text{Weight of component (F1)} : \text{Weight of component (F2)} = W(F1) : W(F2)$$

$$W(F1) = \text{Production rate in the first polymerization step} \div (\text{Production rate in the first polymerization step} + \text{Production rate in the second polymerization step})$$

$$W(F2) = \text{Production rate in the second polymerization step} \div (\text{Production rate in the first polymerization step} + \text{Production rate in the second polymerization step})$$

$$W(F1) + W(F2) = 1$$

Wherein W(F1) and W(F2) are the respective weight ratios of component (F1) and component (F2) in the propylene-ethylene block copolymer (F).

In industrial production facilities, the production rate is generally determined from the heat balance or material balance in each polymerization vessel. When the component (F1) and the component (F2) have totally different crystalline properties, the production rate ratio of these components can be determined by separating and identifying the components using an analysis method, such as a TREF (temperature rising elution fractionation) method. The method for evaluating the crystalline property distribution of polypropylene by TREF measurement is well-known to those skilled in the art, and a detailed measurement method is shown in documents, such as G. Glokner, J. Appl. Polym. Sci: Appl. Poly. Symp.; 45, 1-24 (1990), L. Wild, Adv. Polym. Sci.; 98, 1-47 (1990), J. B. P. Soares, A. E. Hamielec, Polyer; 36, 8, 1639-1654 (1995).

Next, the method for controlling the ethylene content is described. The propylene-ethylene block copolymer (F) is a mixture of component (F1) comprising a propylene homopolymer or a propylene-ethylene random copolymer and component (F2) comprising a propylene-ethylene random copolymer, and therefore their respective ethylene contents satisfy the relationship of the following formula.

$$E(F) = E(F1) \times W(F1) + E(F2) \times W(F2)$$

Wherein E(F), E(F1), and E(F2) are the respective ethylene contents of propylene-ethylene block copolymer (F), component (F1) comprising a propylene homopolymer or a propylene-ethylene random copolymer, and component (F2) comprising a propylene-ethylene random copolymer, and W(F1) and W(F2) are as defined above.

The above formula shows the material balance in respect of the ethylene content.

Accordingly, when the weight ratio of component (F1) and component (F2) is determined, that is, W(F1) and W(F2) are determined, E(F) is automatically determined from E(F1) and E(F2). In other words, E(F) can be controlled by controlling three factors, i.e., the weight ratio of component (F1) and component (F2), E(F1), and E(F2). For example, for increasing E(F), E(F1) may be increased, or E(F2) may be increased. Further, taking into consideration the fact that E(F2) is higher than E(F1), it is easily understood that E(F) can be increased by reducing W(F1) and increasing W(F2). The controlling method in the opposite direction can be similarly conducted.

Only actually measured values of E(F) and E(F1) can be directly obtained, and E(F2) is calculated using these measured values. Therefore, for example, in the operation of increasing E(F), when an operation of increasing E(F2), i.e., an operation of increasing the amount of ethylene fed to the second polymerization step is selected as a method therefor, a measured value of E(F) can be directly obtained and that of E(F2) cannot be checked, but it is apparent that

E(F) is increased due to the increase of E(F2).

Finally, the method for controlling MFR (F) is described. In the present invention, MFR (F2) is defined by the following formula.

$$MFR\ (F2) = \exp\{(\log e\ [MFR\ (F)] - W(F1) \times \log e\ [MFR\ (F1)]) \div W(F2)\}$$

Wherein loge is a logarithm having e as a base, MFR (F), MFR (F1), and MFR (F2) are the respective MFRs of propylene-ethylene block copolymer (F), component (F1) comprising a propylene homopolymer or a propylene-ethylene random copolymer, and component (F2) comprising a propylene-ethylene random copolymer, and W(F1) and W(F2) are as defined above.

This formula is obtained by modifying the following empirical formula:

$$\log e\ [MFR\ (F)] = W(F1) \times \log e\ [MFR\ (F1)] + W(F2) \times \log e\ [MFR\ (F2)]$$

, which is generally called a logarithmic sum rule for viscosity, and is commonly used in the art.

The definition is made by the above formula, and thus the weight ratio of component (F1) and component (F2), MFR (F), MFR (F1), and MFR (F2) are not independent from each other. Therefore, MFR (F) can be controlled by controlling three factors, i.e., the weight ratio of component (F1) and component (F2), MFR (F1), and MFR (F2). For example, for increasing MFR (F), MFR (F1) may be increased, or MFR (F2) may be increased. Further, it is easily understood that, when MFR (F2) is lower than MFR (F1), MFR (F) can be increased by increasing W(F1) and reducing W(F2). The controlling method in the opposite direction can be similarly conducted.

Only actually measured values of MFR (F) and MFR (F1) can be directly obtained, and MFR (F2) is calculated using these measured values. Therefore, for example, in the operation of increasing MFR (F), when an operation of increasing MFR (F2), i.e., an operation of increasing the amount of hydrogen fed to the second polymerization step is selected as a method therefor, a measured value of MFR (F) can be directly obtained and that of MFR (F2) cannot be checked, but it is apparent that MFR (F) is increased due to the increase of MFR (F2).

The polymerization process for the propylene-ethylene block copolymer can be performed by a method in any of a batch-wise manner and a continuous manner. In the polymerization process, there can be employed a method in which polymerization is conducted in an inert hydrocarbon solvent, such as hexane or heptane, a method in which an inert solvent is substantially not used and propylene is used as a solvent, a method in which a liquid solvent is substantially not used and polymerization is conducted in a monomer in a gas state, or a combination of these methods. Further, in the first polymerization step and the second polymerization step, the same polymerization vessel or different polymerization vessels may be used.

(1) Measurement of an ethylene content of the copolymer

Using the propylene-ethylene block copolymer (F), an ethylene content of each copolymer was measured. Specifically, with respect to the component (F1) comprising a propylene homopolymer or a propylene-ethylene random copolymer obtained after completion of the first polymerization step and the propylene-ethylene block copolymer (F) obtained after the second polymerization step, an ethylene content of each component was determined by analyzing a $^{13}C$-NMR spectrum obtained by the measurement according to a complete proton decoupling method under the conditions shown below.

Type of apparatus: GSX-400, manufactured by JEOL LTD., or a similar apparatus (carbon nuclear resonance frequency: 100 MHz or more)
Solvent: o-Dichlorobenzene + Deuterated benzene (4:1 (volume ratio))
Concentration: 100 mg/mL
Temperature: 130°C
Pulse angle: 90°
Pulse interval: 15 seconds
Accumulation number: 5,000 or more

Assignment of the spectrum can be made with reference to, for example, Macromolecules 17, 1950 (1984). The assignment of a spectrum measured under the above-mentioned conditions are as shown in the table below. In the table, symbols $S\alpha\alpha$ and others are in accordance with the notation of Carman et. al. (Macromolecules 10, 536 (1977)), and P represents a methyl carbon, S represents a methylene carbon, and T represents a methine carbon.

[Table 1]

| Chemical shift (ppm) | Assignment |
|---|---|
| 45~48 | $S_{\alpha\alpha}$ |
| 37.8~37.9 | $S_{\alpha\gamma}$ |
| 37.4~37.5 | $S_{\alpha\delta}$ |
| 33.1 | $T_{\delta\delta}$ |
| 30.9 | $T_{\beta\delta}$ |
| 30.6 | $S_{\gamma\gamma}$ |
| 30.2 | $S_{\gamma\delta}$ |
| 29.8 | $S_{\delta\delta}$ |
| 28.7 | $T_{\beta\beta}$ |
| 27.4~27.6 | $S_{\beta\delta}$ |
| 24.4~24.7 | $S_{\beta\beta}$ |
| 19.1~22.0 | P |

When the propylene unit in the copolymer chain is indicated by "P" and the ethylene unit is indicated by "E", six types of triads, i.e., PPP, PPE, EPE, PEP, PEE, and EEE can be present in the chain. As described in, for example, Macromolecules 15, 1150 (1982), the concentrations of these triads and the spectrum peak intensities have the relationship of the following formulae (f-1) to (f-6).

$$[PPP] = k \times I(T\beta\beta) \qquad (f\text{-}1)$$

$$[PPE] = k \times I(T\beta\delta) \qquad (f\text{-}2)$$

$$[EPE] = k \times I(T\delta\delta) \qquad (f\text{-}3)$$

$$[PEP] = k \times I(S\beta\beta) \qquad (f\text{-}4)$$

$$[PEE] = k \times I(S\beta\delta) \qquad (f\text{-}5)$$

$$[EEE] = k \times \{I(S\delta\delta) / 2 + I(S\gamma\delta) / 4\} \qquad (f\text{-}6)$$

In the above formulae, square brackets [] indicate a fractional ratio of a triad, for example, [PPP] means a fractional ratio of the PPP triad to the all triads. Therefore, the following relationship is satisfied.

$$[PPP] + [PPE] + [EPE] + [PEP] + [PEE] + [EEE] = 1 \qquad (f\text{-}7)$$

Further, k represents a constant, and I represents a spectrum intensity, and, for example, I(Tββ) means an intensity of a peak appearing at 28.7 ppm assigned to Tββ. A fractional ratio of each triad is determined using the relationship of the formulae (1) to (7) above, and further an ethylene content is determined from the following formula (f-8).

$$\text{Ethylene content (mol\%)} = ([PEP] + [PEE] + [EEE]) \times 100 \qquad (f\text{-}8)$$

Using the following formula (f-9), the ethylene content in terms of mol% is converted to an ethylene content in terms of % by weight.

$$\text{Ethylene content (\% by weight)} = (28 \times X/100) / \{28 \times X/100 + 42 \times (1 - X/100)\} \times 100 \qquad \text{(f-9)}$$

In the above formula, X represents an ethylene content in terms of mol%.

[Other components of seal layer (I)]

In the above-mentioned basic embodiment and in the first through sixth embodiments, the resin composition (XX) constituting a seal layer (I) (resin compositions (XX1) to (XX6)) may contain, for example, the additive, an additional additive other than the above-mentioned additives, a filler, and the other resin component as long as the effects of the present invention are not sacrificed. The total amount of the additive, an additional additive other than the above-mentioned additives, a filler, the other resin component and the like is preferably 50% by weight or less, based on the weight of the resin composition. With respect to the additional additive, for example, the above-mentioned additional additive can be used.

When the resin composition (XX) comprises the polypropylene resin (A), the resin composition (XX) preferably has the above-mentioned properties of polypropylene resin (A).

With respect to the method for producing resin composition (XX), the resin composition (XX) can be produced by, for example, a method in which a polypropylene resin (A) (in the basic embodiment and the first and second embodiments), a polypropylene resin (A) and an ethylene-α-olefin random copolymer (C) (in the third embodiment), a polypropylene resin (A) and a thermoplastic elastomer (D) (in the fourth embodiment), a polypropylene resin (A) and a thermoplastic resin (E) (in the fifth embodiment), or a propylene-ethylene block copolymer (F) (in the sixth embodiment), with the additive, an additional additive other than the above-mentioned additives, a filler, the other resin component and the like are melt-kneaded; a method in which, in the third through fifth embodiments, the polypropylene resin (A), with the additive, an additional additive other than the above-mentioned additives, a filler, the other resin component and the like are melt-kneaded, and the ethylene-α-olefin random copolymer (C), the thermoplastic elastomer (D), or the thermoplastic resin (E) is dry-blended with the resultant kneaded mixture; or a method in which the polypropylene resin (A) is added to the ethylene-α-olefin random copolymer (C), the thermoplastic elastomer (D), or the thermoplastic resin (E), and dry-blended with a master batch having the additive, an additional additive other than the above-mentioned additives, a filler, the other resin composition and the like dispersed in a carrier resin at a high concentration.

<Basic embodiment of layer (II)>

A layer (II) included in the decorative film of the third and fourth aspects of the present invention comprises a resin composition (YY) comprising a polypropylene resin (B). The layer (II) can be the above-mentioned base layer. By forming the layer (II) in the decorative firm, it is easy to suppress the occurrence of poor appearance due to a problem such that the film is broken or uncontrollably moved during the three-dimensional decorative thermoforming. Thus, the decorative film need not contain a thermosetting resin layer having excellent thermoformability for improving the thermoformability.

<<Polypropylene resin (B)>>

Next, the polypropylene resin (B) constituting the layer (II) is described. It is preferred that the polypropylene resin (B) is a resin which is more unlikely to melt or relax than the above-mentioned polypropylene resin (A).

1. Melt flow rate (MFR (B)): (b1)

It is preferred that the polypropylene resin (B) has a melt flow rate (at 230°C under a load of 2.16 kg) (MFR (B)) which is lower than MFR (A) of polypropylene resin (A). That is, it is preferred that the relationship of the following formula (b-1) is satisfied.

$$\text{MFR (B)} < \text{MFR (A)} \qquad \text{Formula (b-1)}$$

The MFR ratio of polypropylene resin (B) and polypropylene resin (A), i.e., MFR (B)/MFR (A) is preferably less than 1 (that is, MFR (B) < MFR (A)), preferably 0.8 or less, more preferably 0.7 or less, further preferably 0.5 or less, especially preferably 0.25 or less. When MFR (B)/MFR (A) is in the above-mentioned range, excellent thermoformability can be achieved. The lower limit of MFR (B)/MFR (A) is not limited, but is preferably 0.01 or more.
With respect to MFR (B), there is no particular limitation as long as MFR (B) is in the above-mentioned range, but MFR (B) is preferably 0.1 g/10 minutes or more, more preferably 0.2 g/10 minutes or more. When MFR (B) is in the above-mentioned range, the decorative film exhibits excellent ductility and malleability during the thermoforming. Further, MFR (B) is preferably 20 g/10 minutes or less, more preferably 15 g/10 minutes or less.

2. Melting peak temperature (Tm (B)): (b2)

With respect to the melting peak temperature Tm (B) of polypropylene resin (B), as measured by DSC, there is no particular limitation, but Tm (B) is preferably 150°C or higher, more preferably 155°C or higher. When Tm (B) is in the above-mentioned range, excellent heat resistance, scratch resistance, and solvent resistance can be achieved.
Further, the melting peak temperature (Tm (B)) of polypropylene resin (B) is preferably higher than the melting peak temperature (Tm (A)) of polypropylene resin (A), and preferably satisfies the relationship of the following formula (b-2).

$$\text{Tm (B)} > \text{Tm (A)} \qquad \text{Formula (b-2)}$$

When Tm (B) is in the above-mentioned range, excellent thermoformability can be achieved.

3. Crystallization temperature (Tc (B)): (b3)

It is preferred that the polypropylene resin (B) has a crystallization temperature (Tc (B)), as measured by DSC, which is higher than the crystallization temperature (Tc (A)) of polypropylene resin (A), and it is preferred that the relationship of the following formula (b-3) is satisfied.

$$\text{Tc (B)} > \text{Tc (A)} \qquad \text{Formula (b-3)}$$

When Tc (B) is in the above-mentioned range, excellent thermoformability can be achieved.
Tc (B) is not particularly limited as long as Tc (B) is in the above-mentioned range, but Tc (B) is preferably 95°C or higher, more preferably 100°C or higher.

4. Composition of the resin

The polypropylene resin (B) can be selected from, for example, a metallocene catalyst propylene polymer and a Ziegler-Natta catalyst propylene polymer. Preferred is a Ziegler-Natta catalyst propylene polymer.
The polypropylene resin (B) in the present invention can be selected from various types of propylene polymers, such as a propylene homopolymer (homopolypropylene), a propylene-$\alpha$-olefin copolymer (random polypropylene), and a propylene-$\alpha$-olefin block copolymer (block polypropylene), and combinations thereof. It is preferred that the propylene polymer contains polymerization units derived from a propylene monomer in an amount of 50 mol% or more.
In the present invention, a preferred combination with the seal layer (I) is as follows.
In the first embodiment, the layer (II) preferably satisfies the above-mentioned requirements (b1) and (b2), in the second embodiment, the layer (II) preferably satisfies the above-mentioned requirements (b1) and (b3), and, in the third through sixth embodiments, the layer (II) preferably satisfies the above-mentioned requirement (b1).

[Other components of layer (II)]

The resin composition (YY) constituting the layer (II) may contain, in addition to the polypropylene resin (B), for example, the additive, an additional additive other than the above-mentioned additives, a filler, a colorant, and the other resin component. That is, the resin composition (YY) may be a resin composition (polypropylene resin composition) comprising a propylene polymer (polypropylene resin (B)) and, for example, the additive, an additional additive other than the above-mentioned additives, a filler, a colorant, and the other resin component. The total amount of the additive, an additional additive other than the above-mentioned additives, a filler, a colorant, the other resin component and the

like is preferably 50% by weight or less, based on the weight of the polypropylene resin composition. With respect to the additional additive, the additional additives mentioned above as examples in the first and second aspects can be used.

The resin composition (YY) can be produced by, for example, a method in which a propylene polymer, the additive, an additional additive other than the above-mentioned additives, a filler, the other resin component and the like are melt-kneaded, a method in which a propylene polymer, the additive, an additional additive other than the above-mentioned additives, a filler and the like are melt-kneaded and the other resin component is dry-blended with the resultant kneaded mixture, or a method in which a propylene polymer is added to the other resin component, and dry-blended with a master batch having the additive, an additional additive other than the above-mentioned additives, a filler and the like dispersed in a carrier resin at a high concentration.

When the resin composition (YY) comprises the polypropylene resin (B), the resin composition (YY) preferably has the above-mentioned properties of the polypropylene resin (B).

For imparting design properties, the decorative film can be colored, and various colorants, such as an inorganic pigment, an organic pigment, and a dye, can be used in coloring. Further, a lustering material, such as an aluminum flake, a titanium oxide flake, or (synthetic) mica, can be used.

When the decorative molded article of the present invention is formed in the form of a colored molded article, there is only a need to use a colorant in the decorative film, and therefore the use of an expensive colorant can be suppressed, as compared to that in the case of coloring the whole of the resin molded article. Further, a change of the physical properties caused due to the incorporation of a colorant can be suppressed.

<Decorative film according to the third and fourth aspects of the present invention>

The decorative film of the third and fourth aspects of the present invention comprises a seal layer (I) containing a polypropylene resin (A) and a layer (II) containing a polypropylene resin (B). The decorative film can have various constructions as well as the construction comprising the seal layer (I) and the layer (II). Specifically, the decorative film may be a two-layer film comprising the seal layer (I) and the layer (II), or a three or more multilayer film comprising the seal layer (I), the layer (II), and another layer or the other layers. The seal layer (I) is stuck along a resin molded article (substrate). The decorative film may have the surface, for example, grained, embossed, printed, sandblasted, or scratched.

The multilayer film can comprise, in addition to the seal layer (I) and the layer (II), for example, a surface layer, a surface decorative layer (III), a printed layer, a light shielding layer, a colored layer, a base layer, a barrier layer, or a tie layer which can be formed between these layers. The layer (II) containing the polypropylene resin (B) may be any of the layers constituting the multilayer film, except the seal layer.

In the multilayer film, the layer(s) other than the seal layer (I) and the layer (II) is or are preferably a layer comprising a thermoplastic resin, more preferably a layer comprising a polypropylene resin. With respect to the layer(s) other than the seal layer (I) and the layer (II), as long as the layer(s) can be distinguished from the seal layer (I) and the layer (II), the MFR (at 230°C under a load of 2.16 kg) of the polypropylene resin constituting the layer(s) is not particularly limited. It is preferred that each layer is a layer containing no thermosetting resin. By using the thermoplastic resin, the recycling properties are improved, and, by using the polypropylene resin, it is possible to prevent the layer construction from being complicated, so that the recycling properties are further improved.

When the decorative film is a two-layer film, the seal layer (I) constitutes the stuck surface to a resin molded article, and the layer (II) constitutes the surface layer on the side opposite to the stuck surface to the resin molded article. In this case, it is preferred that the layer (II) contains the nucleating agent and/or weathering agent.

Figs. 1(a) to 1(c) are schematic explanatory views of the cross-section of embodiments of the decorative film. In Figs. 1(a) to 1(c), for an easy understanding, an explanation is made on a seal layer (I) 3 and a layer (II) 2, the arrangement of which is specified, but these examples should not be construed as limiting the layer construction of the decorative film. In the present specification, in the drawings, reference numeral 1 denotes a decorative film, reference numeral 2 denotes a layer (II), reference numeral 3 denotes a seal layer (I), and reference numeral 4 denotes a surface decorative layer (III). Fig. 1(a) shows an example in which a decorative film 1 comprises a two-layer film, and a layer (II) 2 is stacked on a seal layer (I) 3. A decorative film 1 of Fig. 1(b) comprises a seal layer (I) 3, a layer (II) 2, and a surface layer, and the layer (II) 2 and the surface layer are stacked in this order on the seal layer (I) 3. A decorative film 1 of Fig. 1(c) comprises a seal layer (I) 3, a layer (II) 2, and a surface decorative layer (III) 4, and the layer (II) 2 and the surface decorative layer (III) 4 are stacked in this order on the seal layer (I) 3.

Figs. 8(a) to 8(c) are schematic explanatory views of the cross-section of embodiments of a decorative molded article 6 having a decorative film 1 stuck to a resin molded article 5. In Figs. 8(a) to 8(c), for an easy understanding, an explanation is made on a seal layer (I) and a layer (II), the arrangement of which is specified, but these examples should not be construed as limiting the layer construction of the decorative film 1. Fig. 8(a) shows an example in which a decorative film 1 comprises a two-layer film, and a seal layer (I) 3 is stuck to a resin molded article 5, and a layer (II) 2 is stacked on the seal layer (I) 3. A decorative film 1 of Fig. 8(b) comprises a seal layer (I) 3, a layer (II) 2, and a surface

layer, and the seal layer (I) 3 is stuck to the surface of a resin molded article 5, and the layer (II) 2 and the surface layer are stacked in this order on the seal layer (I) 3. A decorative film 1 of Fig. 8(c) comprises a seal layer (I) 3, a layer (II) 2, and a surface decorative layer (III) 4, and the seal layer (I) 3 is stuck to the surface of a resin molded article 5, and the layer (II) 2 and the surface decorative layer (III) 4 are stacked in this order on the seal layer (I) 3.

As another preferred mode of the decorative film, there can be mentioned a multilayer film which comprises a surface decorative layer (III) comprising a surface decorative layer resin on the outermost surface that is on the side opposite to the stuck surface side to a resin molded article.

The surface decorative layer resin is preferably a thermoplastic resin, more preferably a polypropylene resin (H). Further, the surface decorative layer (III) preferably contains the nucleating agent and/or weathering agent.

The polypropylene resin (H) in the present invention preferably has a melt flow rate (at 230°C under a load of 2.16 kg) (MFR (H)) which satisfies the relationship: MFR (H) > MFR (B). When the melt flow rate is in the above-mentioned range, more excellent surface gloss and texture can be exhibited.

The polypropylene resin (H) in the present invention can be selected from various types of propylene polymers, such as a propylene homopolymer (homopolypropylene), a propylene-$\alpha$-olefin copolymer (random polypropylene), and a propylene-$\alpha$-olefin block copolymer (block polypropylene), and combinations thereof. It is preferred that the propylene polymer contains polymerization units derived from a propylene monomer in an amount of 50 mol% or more. It is preferred that the propylene polymer does not contain polymerization units derived from a polar group-containing monomer. The polypropylene resin (H) is preferably homopolypropylene from the viewpoint of, for example, oil resistance, solvent resistance, and scratch resistance. Further, from the viewpoint of the gloss and transparency (color development), a propylene-$\alpha$-olefin copolymer is preferred. In the present invention, the polypropylene resin (H) constituting the surface decorative layer (III) and the polypropylene resin (A) constituting the seal layer (I) may be the same or different.

The polypropylene resin (H) may contain, for example, the additive, an additional additive other than the above-mentioned additives, a filler, a colorant, and the other resin component. That is, the polypropylene resin (H) may be a resin composition (polypropylene resin composition) comprising a propylene polymer and, for example, the additive, an additional additive other than the above-mentioned additives, a filler, a colorant, and the other resin component. The total amount of the additive, an additional additive other than the above-mentioned additives, a filler, a colorant, the other resin component and the like is preferably 50% by weight or less, based on the weight of the polypropylene resin composition.

With respect to the additional additive, the additional additives mentioned above as examples in the first and second aspects can be used.

The polypropylene resin composition can be produced by, for example, a method in which a propylene polymer, the additive, an additional additive other than the above-mentioned additives, a filler, a colorant, the other resin component and the like are melt-kneaded, a method in which a propylene polymer, the additive, an additional additive other than the above-mentioned additives, a filler, a colorant and the like are melt-kneaded and the other resin component is dry-blended with the resultant kneaded mixture, or a method in which a propylene polymer is added to the other resin component, and dry-blended with a master batch having the additive, an additional additive other than the above-mentioned additives, a filler, a colorant and the like dispersed in a carrier resin at a high concentration.

When the polypropylene resin (H) constituting the surface decorative layer (III) is a polypropylene resin composition, the polypropylene resin composition may be the same as or different from the polypropylene resin composition comprising polypropylene resin (A) constituting seal layer (I).

{{Fifth and sixth aspects of the present invention}}

The decorative film according to the fifth and sixth aspects of the present invention is a decorative film comprising a layer containing at least one additive selected from a nucleating agent, a hindered amine light stabilizer, and an ultraviolet light absorber, wherein the decorative film comprises a seal layer (I) containing a polypropylene resin (A) and a layer (II) containing a resin composition (B') comprising a polypropylene resin (B), wherein the polypropylene resin (A) satisfies the following requirement (a'1), and the resin composition (B') satisfies the following requirements (b'1) and (b'2), preferably the following requirements (b'1') and (b'2'), more preferably the following requirements (b'1") and (b'2"):

(a'1) having a melt flow rate (at 230°C under a load of 2.16 kg) (MFR (A)) of more than 2.0 g/10 minutes,
(b'1) having a melt flow rate (at 230°C under a load of 2.16 kg) (MFR (B')) of 40 g/10 minutes or less,
(b'2) having a strain hardening index $\lambda$ of 1.1 or more,
(b'1') having a melt flow rate (at 230°C under a load of 2.16 kg) (MFR (B')) of 20 g/10 minutes or less,
(b'2') having a strain hardening index $\lambda$ of 1.8 or more,
(b'1") having a melt flow rate (at 230°C under a load of 2.16 kg) (MFR (B')) of 12 g/10 minutes or less,
(b'2") having a strain hardening index $\lambda$ of 2.3 or more.

The decorative film according to the fifth and sixth aspects of the present invention is advantageous in that, by using the layer (II) containing the resin composition (B') comprising polypropylene resin (B) having a specific melt flow rate (MFR) and a specific strain hardening index, the decorative film, without comprising a thermosetting resin layer, exhibits excellent thermoformability in the three-dimensional decorative thermoforming, making it possible to obtain a decorative molded article having excellent product appearance.

Further, the decorative film comprises the seal layer (sticking layer) (I) which contains at least one additive selected from a nucleating agent, a hindered amine light stabilizer, and an ultraviolet light absorber, and which contains a polypropylene resin having a specific melt flow rate (MFR). Therefore, the decorative film can be stuck to a resin molded article (substrate) in a reduced heating time, and thus the decorative forming is completed before the added additive volatilizes, so that a reduction of the gloss and/or weathering resistance can be suppressed, making it possible to obtain a decorative molded article having high gloss.

The decorative film can be stuck to a substrate having polarity depending on the construction of the seal layer (I), and a decorative molded article produced from the decorative film and a substrate made of a polar resin material has especially excellent water resistance and chemical resistance.

By the method for producing a decorative molded article according to the fifth and sixth aspects of the present invention, there can be obtained an excellent decorative molded article which has no hole or wrinkle in the surface thereof and is free of air contained between the decorative film and the resin molded article, and which has suppressed a reduction of the gloss and/or weathering resistance. Further, in the obtained decorative molded article, the materials constituting the decorative film are the polypropylene resin (A) and the polypropylene resin (B), and the decorative molded article contains no thermosetting resin layer or need not contain a thermosetting resin layer, and therefore has so excellent recycling properties that a lowering of the appearance and performance due to recycling is small.

<Basic embodiment of layer (II)>

In the basic embodiment in the fifth and sixth aspects of the present invention, a layer (II) included in the decorative film contains a resin composition (B') comprising a polypropylene resin (B), wherein the resin composition (B') has a specific melt flow rate (MFR (B')) which satisfies the below-mentioned requirement (b'1) and a strain hardening index in an elongational viscosity measurement, which satisfies the below-mentioned requirement (b'2).

By forming the layer (II), it is possible to suppress the occurrence of poor appearance due to a problem such that the film is broken or uncontrollably moved during the (three-dimensional decorative) thermoforming. Thus, the decorative film has improved thermoformability, and hence need not contain a thermosetting resin layer having excellent thermoformability, and can be improved in the recycling properties.

Further, by improving the formability of the resin composition (B') comprising polypropylene resin (B), a film having such an extremely simple construction that the layer (II) and the seal layer (I) are stacked on one another can be used as a decorative film, and such a construction makes it possible to produce a decorative film by (co-)extrusion.

[Resin composition (B') comprising polypropylene resin (B)]

The decorative film comprises the layer (II) containing the resin composition (B') comprising polypropylene resin (B). The layer (II) can comprise only the polypropylene resin (B), can comprise a plurality of polypropylene resins including the polypropylene resin (B), or can comprise a resin blend of the polypropylene resin (B) and the other polypropylene resin.

The resin composition (B') satisfies both the below-mentioned requirements (b'1) and (b'2), and, when the resin composition (B') comprises only the polypropylene resin (B), the polypropylene resin (B) satisfies the requirements (b'1) and (b'2). When the resin composition (B') comprises a blend of the polypropylene resin (B) and the other polypropylene resin, it is preferred that the resin composition (B') and the polypropylene resin (B) satisfy the requirements (b'1) and (b'2). With respect to the blend of the polypropylene resin (B) and the other polypropylene resin, there is no particular limitation, and the blend may be any of a blend in the form of pellets and/or a powder, a melt blend, and a solution blend, or may be a combination thereof.

In the present invention, when the resin composition (B') containing the polypropylene resin (B) has too low a viscosity, satisfactory forming stability cannot be obtained, and therefore resin composition (B') needs to have a predetermined viscosity. In the present invention, as an index for the viscosity, a melt flow rate (MFR) (at 230°C under a load of 2.16 kg) is specified.

In the present specification, the MFR (at 230°C under a load of 2.16 kg) of resin composition (B') comprising polypropylene resin (B) is taken as MFR (B'). MFR (B') preferably satisfies the following requirement (b'1), preferably satisfies the requirement (b'1'), more preferably satisfies the requirement (b'1"). When MFR (B') of resin composition (B') is the below-mentioned value or less, a decorative molded article having excellent appearance can be obtained.

(b'1) Having MFR (B') of 40 g/10 minutes or less.
(b'1') Having MFR (B') of 20 g/10 minutes or less.
(b'1") Having MFR (B') of 12 g/10 minutes or less.

The lower limit of MFR (B') of resin composition (B') is not particularly limited, but is preferably 0.1 g/10 minutes or more, more preferably 0.3 g/10 minutes or more. When MFR (B') is the above-mentioned value or more, the formability of the decorative film being produced is improved, making it possible to prevent the surface of the film from having poor appearance called sharkskin or rough interface.

In the present specification, an MFR of each of the polypropylene resin and resin composition was measured under conditions at 230°C under a load of 2.16 kg in accordance with ISO 1133:1997 Conditions M. The unit is g/10 minutes.

The strain hardening index λ of resin composition (B') comprising polypropylene resin (B) preferably satisfies the following requirement (b'2), preferably satisfies the requirement (b'2'), more preferably satisfies the requirement (b'2"). When the strain hardening index of resin composition (B') is in the below-mentioned range, excellent formability can be achieved in the decorative thermoforming, and a decorative molded article having excellent appearance can be obtained.

(b'2) Having a strain hardening index λ of 1.1 or more.
(b'2') Having a strain hardening index λ of 1.8 or more.
(b'2") Having a strain hardening index λ of 2.3 or more.

The upper limit of the strain hardening index of resin composition (B') is not particularly limited, but is preferably 50 or less, more preferably 20 or less. When the strain hardening index is in the above-mentioned range, a decorative film having excellent appearance can be obtained.

The strain hardening index of resin composition (B') is determined based on the measurement of strain hardening property in an elongational viscosity measurement. The strain hardening index λ can be determined by the method described above in connection with the resin composition (X) in the first and second aspects of the present invention.

General crystalline polypropylene is a linear polymer, and generally has no strain hardening property. In contrast, the polypropylene resin (B) used in the present invention is preferably a polypropylene resin (B-L) having a long-chain branched structure as mentioned in the first and second aspects of the present invention, and, by virtue of such a resin, the resin composition (B') comprising polypropylene resin (B) can exhibit more excellent strain hardening property.

In the decorative film of the fifth and sixth aspects, when the polypropylene resin (B) contains a gel, the film appearance becomes poor, and therefore a resin composition (B') containing no gel is preferably used. Especially, preferred is the above-mentioned polypropylene resin (B-L) having a long-chain branched structure, which has a gel in a reduced amount, and which is produced by a method other than a crosslinking method, and more preferred is a polypropylene resin (B-L) produced using a method in which a macromonomer having an end unsaturated bond is produced using a metallocene catalyst having a specific structure, and copolymerized with propylene to form a long-chain branched structure.

Particularly, the polypropylene resin (B-L) preferably has a branching index g', as described above, at an absolute molecular weight Mabs of 1,000,000, of 0.3 to less than 1.0, more preferably 0.55 to 0.98, further preferably 0.75 to 0.96, most preferably 0.78 to 0.95.

In the present invention, the expression "a gel in a reduced amount" indicates that the branching index g' of the polypropylene resin at an absolute molecular weight Mabs of 1,000,000 is in the above-mentioned range. When the branching index g' is in the above range, a highly crosslinked component is not formed, and no gel or a very slight amount of a gel is generated, and therefore, especially when the layer (II) comprising the polypropylene resin (B-L) having a long-chain branched structure constitutes the surface of a product, the product does not become poor in the appearance.

As described above in connection with the first and second aspects of the present invention, a short-chain branched structure and a long-chain branched structure can be distinguished from each other by $^{13}C$-NMR.

The polypropylene resin (B-L) having a long-chain branched structure may be contained in the resin composition (B') comprising polypropylene resin (B) in an amount sufficient to impart a strain hardening property. The polypropylene resin (B-L) having a long-chain branched structure is preferably contained in an amount of 1 to 100% by weight, more preferably 5% by weight or more, based on the weight of the resin composition (B') (100% by weight).

The polypropylene resin (B-L) having a long-chain branched structure in the fifth and sixth aspects can be selected from various types of propylene polymers, such as a propylene homopolymer (homopolypropylene), a propylene-α-olefin copolymer (random polypropylene), and a propylene block copolymer (block polypropylene), and combinations thereof. It is preferred that the polypropylene resin contains polymerization units derived from a propylene monomer in an amount of 50 mol% or more.

The polypropylene resin (B) in the fifth and sixth aspects of the present invention is preferably highly crystalline from the viewpoint of heat resistance, scratch resistance, and solvent resistance. The polypropylene resin (B) preferably has a melting point (DSC melting peak temperature) of 130°C or higher, more preferably 140°C or higher, further preferably 140 to 170°C, still further preferably 145 to 170°C, especially preferably 150 to 168°C. The polypropylene resin (B) is preferably a propylene homopolymer or propylene-α-olefin copolymer having such a melting point. When containing a component having a high melting point and being poorly crystalline, the scratch resistance and solvent resistance is lowered, and therefore it is preferred that the polypropylene resin (B) does not contain an ethylene-α-olefin copolymer having an ethylene content of 50 to 70% by weight.

Further, it is preferred that the melting peak temperature (Tm (B')) of polypropylene resin (B), as measured by DSC, is higher than the melting peak temperature (Tm (A)) of polypropylene resin (A), as measured by DSC. That is, it is preferred that the following requirement (b3) is satisfied:
(b'3) that Tm (B') and Tm (A) satisfy the relationship of the following formula (b'-3):

$$\text{Tm (B')} > \text{Tm (A)} \qquad \text{Formula (b'-3).}$$

When Tm (B') is in the above-mentioned range, excellent thermoformability can be achieved.

The resin composition (B') comprising polypropylene resin (B) may contain, for example, the additive, an additional additive other than the above-mentioned additives, a filler, a colorant, and the other resin component. The total amount of the additive, an additional additive other than the above-mentioned additives, a filler, a colorant, the other resin component and the like is preferably 50% by weight or less, based on the weight of the resin composition (B') comprising polypropylene resin (B) including these components.

When the decorative molded article of the present invention is formed in the form of a colored molded article, there is only a need to use a colorant in the decorative film, and therefore the use of an expensive colorant can be suppressed, as compared to that in the case of coloring the whole of the resin molded article. Further, a change of the physical properties caused due to the incorporation of a colorant can be suppressed. Various colorants, such as an inorganic pigment, an organic pigment, and a dye, can be used in coloring. Further, a lustering material, such as an aluminum flake, a titanium oxide flake, or (synthetic) mica, can be used.

With respect to the additional additive, the additional additives mentioned above as examples in the first and second aspects can be used.

The resin composition (B') comprising polypropylene resin (B) can be produced by, for example, a method in which a polypropylene resin, the additive, an additional additive other than the above-mentioned additives, a filler, a colorant, the other resin component and the like are melt-kneaded, a method in which a polypropylene resin, the additive, an additional additive other than the above-mentioned additives, a filler, a colorant and the like are melt-kneaded and the other resin component is dry-blended with the resultant kneaded mixture, or a method in which a polypropylene resin is added to the other resin component, and dry-blended with a master batch having the additive, an additional additive other than the above-mentioned additives, a filler, a colorant and the like dispersed in a carrier resin at a high concentration.

<Basic embodiment of seal layer (I)>

[1. Seal layer (I) containing polypropylene resin (A)]

The decorative film of the fifth and sixth aspects of the present invention comprises a seal layer (I) containing a polypropylene resin (A) which satisfies the following requirement (a'1):
(a'1) having a melt flow rate (at 230°C under a load of 2.16 kg) (MFR (A)) of more than 2.0 g/10 minutes.

By virtue of having the seal layer (I) containing the polypropylene resin (A) on the stuck surface to a resin molded article (substrate), a satisfactory adhesive strength is exhibited even when the heating time for the film during the three-dimensional decorative thermoforming is reduced, and therefore the forming is completed before the nucleating agent and/or weathering agent volatilizes, making it possible to suppress a reduction of the surface gloss and/or weathering resistance.

The polypropylene resin (A) preferably has a melt flow rate (at 230°C under a load of 2.16 kg) (MFR (A)) of more than 2.0 g/10 minutes, more preferably 3.0 g/10 minutes or more, especially preferably 4.0 g/10 minutes or more. When MFR (A) is in the above-mentioned range, relaxation of the polypropylene resin (A) satisfactorily proceeds during the three-dimensional decorative thermoforming, so that a satisfactory adhesive strength can be exhibited. The upper limit of MFR (A) is not limited, but is preferably 100 g/10 minutes or less. When MFR (A) is in the above-mentioned range, the adhesive strength does not become poor due to a lowering of the physical properties.

The MFR of polypropylene resin (A), the resin composition comprising the same and the like was measured

under conditions at 230°C under a load of 2.16 kg in accordance with ISO 1133:1997 Conditions M. The unit is g/10 minutes.

The polypropylene resin (A) can be selected from various types of propylene polymers, such as a propylene homopolymer (homopolypropylene), a propylene-α-olefin copolymer (random polypropylene), and a propylene block copolymer (block polypropylene), and combinations thereof. It is preferred that the polypropylene resin (A) contains polymerization units derived from a propylene monomer in an amount of 50 mol% or more. It is preferred that the polypropylene resin (A) does not contain polymerization units derived from a polar group-containing monomer.

The polypropylene resin (A) preferably has a melting point (DSC melting peak temperature) of 100 to 170°C, more preferably 115 to 165°C.

The polypropylene resin (A) is preferably a propylene-α-olefin copolymer from the viewpoint of the sealing property, and the propylene-α-olefin copolymer is generally lowered in the crystallization temperature as the melting point is lowered, as compared to a propylene homopolymer, and therefore excellent adhesion can be exhibited even when the heating time in the three-dimensional decorative forming is reduced.

[2. Seal layer (I) containing polypropylene resin (A)]

In one mode of the decorative film of the fifth and sixth aspects of the present invention, it is preferred that the polypropylene resin (A) further satisfies the following requirements (a'2) to (a'4), in addition to the above-mentioned requirement (a'1), and the resin composition (B') comprising polypropylene resin (B) further satisfies the following requirement (b'3):

(a'2) being a metallocene catalyst propylene polymer,
(a'3) having a melting peak temperature (Tm (A)) of lower than 150°C,
(a'4) having a molecular weight distribution (Mw/Mn (A)) of 1.5 to 3.5, as determined by GPC measurement,
(b'3) that a Tm (B') and Tm (A) satisfy the relationship of the following formula (b'-3):

$$\mathrm{Tm\ (B') > Tm\ (A)} \qquad \text{Formula (b'-3).}$$

The requirement (a'1) is as described above in [1. Seal layer (I) containing polypropylene resin (A)]. The requirements (a'2) to (a'4) correspond to the requirements (a2) to (a4), respectively, in the first embodiment in the third and fourth aspects, and are as described in connection with them.

The melting peak temperature of resin composition (B') comprising polypropylene resin (B) (Tm (B')), as measured by DSC, is preferably higher than Tm (A), that is, it is preferred that the relationship: Tm (B') > Tm (A) (requirement (b'3)) is satisfied. When Tm (B') is in the above-mentioned range, excellent thermoformability can be achieved.

The resin composition (B') preferably has a melting point (Tm (B')) (melting peak temperature, as measured by DSC) of 140°C or higher, more preferably 145 to 170°C, further preferably 150 to 168°C. The polypropylene resin (B) is preferably a propylene homopolymer or a propylene-α-olefin copolymer having such a melting point. When containing a component having a high melting point and being poorly crystalline, the scratch resistance and solvent resistance is lowered, and therefore it is preferred that the resin composition (B') does not contain an ethylene-α-olefin copolymer having an ethylene content of 50 to 70% by weight.

[3. Seal layer (I) containing resin composition (XX'3) in which the weight ratio of polypropylene resin (A) and ethylene-α-olefin random copolymer (C) is 97:3 to 5:95]

In one mode of the decorative film of the fifth and sixth aspects of the present invention, it is preferred that the seal layer (I) contains a resin composition (XX'3) in which the weight ratio of the polypropylene resin (A) and an ethylene-α-olefin random copolymer (C) is 97:3 to 5:95, wherein the polypropylene resin (A) satisfies the following requirement (a'1), and the ethylene-α-olefin random copolymer (C) satisfies the following requirements (c'1) to (c'3):

(a'1) having a melt flow rate (at 230°C under a load of 2.16 kg) (MFR (A)) of more than 2.0 g/10 minutes,
(c'1) having an ethylene content [E (C)] of 65% by weight or more,
(c'2) having a density of 0.850 to 0.950 g/cm$^3$,
(c'3) having a melt flow rate (at 230°C under a load of 2.16 kg) (MFR (C)) of 0.1 to 100 g/10 minutes.

The requirement (a'1) is as described above in [1. Seal layer (I) containing polypropylene resin (A)]. The requirements for ethylene-α-olefin random copolymer (C) are as described above in <<Ethylene-α-olefin random copolymer (C)>> in the third embodiment in the third and fourth aspects. The requirements for resin composition (XX'3) correspond to the requirements for resin composition (XX3) in the third embodiment in the third and fourth aspects, and are as described in connection with them.

Melting peak temperature (Tm (A))

The polypropylene resin (A) preferably has a melting peak temperature (DSC melting peak temperature, which is frequently referred to as "melting point" in the present specification) (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak temperature is not limited, but is preferably 170°C or lower, and, when the melting peak temperature is in the above-mentioned range, a satisfactory adhesive strength can be exhibited.

The polypropylene resin (A) in the present mode can be a resin obtained by polymerization using, for example, a Ziegler catalyst or a metallocene catalyst. That is, the polypropylene resin (A) can be a Ziegler catalyst propylene polymer or a metallocene catalyst propylene polymer.

[4. Seal layer (I) containing resin composition (XX'4) in which the weight ratio of polypropylene resin (A) and thermoplastic elastomer (D) is 97:3 to 5:95]

In one mode of the decorative film of the fifth and sixth aspects of the present invention, it is preferred that the seal layer (I) contains a resin composition (XX'4) in which the weight ratio of the polypropylene resin (A) and a thermoplastic elastomer (D) is 97:3 to 5:95, wherein the polypropylene resin (A) satisfies the following requirement (a'1), and the thermoplastic elastomer (D) satisfies the following requirements (d'1) to (d'4):

(a'1) having a melt flow rate (at 230°C under a load of 2.16 kg) (MFR (A)) of more than 2.0 g/10 minutes,
(d'1) being a thermoplastic elastomer comprising at least one of propylene and butene as a main component,
(d'2) having a density of 0.850 to 0.950 g/cm$^3$,
(d'3) having a melt flow rate (at 230°C under a load of 2.16 kg) (MFR (D)) of 0.1 to 100 g/10 minutes,
(d'4) having a tensile modulus smaller than that of the polypropylene resin (A).

The requirement (a'1) is as described above in [1. Seal layer (I) containing polypropylene resin (A)]. The requirements for thermoplastic elastomer (D) are as described above in <<Thermoplastic elastomer (D)>> in the fourth embodiment in the third and fourth aspects. The requirements for resin composition (XX'4) correspond to the requirements for resin composition (XX4) in the fourth embodiment in the third and fourth aspects, and are as described in connection with them.

Melting peak temperature (Tm (A))

The polypropylene resin (A) preferably has a melting peak temperature (DSC melting peak temperature, which is frequently referred to as "melting point" in the present specification) (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak temperature is not limited, but is preferably 170°C or lower, and, when the melting peak temperature is in the above-mentioned range, a satisfactory adhesive strength can be exhibited.

The polypropylene resin (A) in the present mode can be a resin obtained by polymerization using, for example, a Ziegler catalyst or a metallocene catalyst. That is, the polypropylene resin (A) can be a Ziegler catalyst propylene polymer or a metallocene catalyst propylene polymer.

[5. Seal layer (I) containing resin composition (XX'5) in which the weight ratio of polypropylene resin (A) and thermoplastic resin (E) is 97:3 to 5:95]

In one mode of the decorative film of the fifth and sixth aspects of the present invention, it is preferred that the seal layer (I) contains a resin composition (XX'5) in which the weight ratio of the polypropylene resin (A) and a thermoplastic resin (E) is 97:3 to 5:95, wherein the polypropylene resin (A) satisfies the following requirement (a'1), the thermoplastic resin (E) satisfies the following requirement (e'1), and the resin composition (XX'5) satisfies the following requirement (xx'1):

(a'1) having a melt flow rate (at 230°C under a load of 2.16 kg) (MFR (A)) of more than 2.0 g/10 minutes,

(e'1) containing at least one of an alicyclic hydrocarbon group and an aromatic hydrocarbon group,
(xx'1) that an isothermal crystallization time (t(XX'5)) (second), as determined by a differential scanning calorimeter (DSC), satisfies the following formula (x'-1):

$$t(XX'5) \geq 1.5 \times t(A) \qquad \text{Formula (x'-1)}$$

wherein t(A) represents an isothermal crystallization time (second) of the polypropylene resin (A) measured at a temperature 10°C higher than the crystallization start temperature of the polypropylene resin (A), and t(XX'5) represents an isothermal crystallization time (second) of the resin composition (XX'5) measured at a temperature 10°C higher than the crystallization start temperature of the polypropylene resin (A).

The requirement (a'1) is as described above in [1. Seal layer (I) containing polypropylene resin (A)]. The requirement for thermoplastic resin (E) is as described above in <<Thermoplastic resin (E)>> in the fifth embodiment in the third and fourth aspects. The requirement for resin composition (XX'5) corresponds to the requirement for resin composition (XX5) in the fifth embodiment in the third and fourth aspects, and is as described in connection with it.

Melting peak temperature (Tm (A))

The polypropylene resin (A) preferably has a melting peak temperature (DSC melting peak temperature, which is frequently referred to as "melting point" in the present specification) (Tm (A)) of 110°C or higher, more preferably 115°C or higher, further preferably 120°C or higher. When Tm (A) is in the above-mentioned range, excellent formability can be achieved in the three-dimensional decorative thermoforming. The upper limit of the melting peak temperature is not limited, but is preferably 170°C or lower, and, when the melting peak temperature is in the above-mentioned range, a satisfactory adhesive strength can be exhibited.
The polypropylene resin (A) in the present mode can be a resin obtained by polymerization using, for example, a Ziegler catalyst or a metallocene catalyst. That is, the polypropylene resin (A) can be a Ziegler catalyst propylene polymer or a metallocene catalyst propylene polymer.

[6. Seal layer (I) comprising propylene-ethylene block copolymer (F)]

In one mode of the decorative film of the fifth and sixth aspects of the present invention, the seal layer (I) contains a propylene-ethylene block copolymer (F) as polypropylene resin (A), and it is preferred that the propylene-ethylene block copolymer (F) satisfies the following requirements (a'1), (f 1), and (f'2), and it is more preferred that the propylene-ethylene block copolymer (F) further satisfies the requirements (f'3), (f'4) and/or (f'5):

(a'1) having a melt flow rate (at 230°C under a load of 2.16 kg) (MFR (F)) of more than 2.0 g/10 minutes,
(f'1) containing 5 to 97% by weight of a component (F1) comprising a propylene homopolymer or a propylene-ethylene random copolymer, and 3 to 95% by weight of a component (F2) comprising a propylene-ethylene random copolymer which has an ethylene content larger than that of the component (F1),
(f'2) having a melting peak temperature (Tm (F)) of 110 to 170°C,
(f'3) that the ethylene content of the propylene-ethylene block copolymer (F) be 0.15 to 85% by weight,
(f'4) that the ethylene content of the component (F1) be in the range of from 0 to 6% by weight,
(f 5) that the ethylene content of the component (F2) be in the range of from 5 to 90% by weight.

The requirement (a'1) is as described above in [1. Seal layer (I) containing polypropylene resin (A)]. The requirements for propylene-ethylene block copolymer (F) are as described above in <<Propylene-ethylene block copolymer (F)>> in the sixth embodiment in the third and fourth aspects, except the requirement (a'1).
The polypropylene resin (A) in the first through sixth embodiments may contain, for example, the additive, an additional additive other than the above-mentioned additives, a filler, and the other resin component. That is, the polypropylene resin (A) may be a resin composition (polypropylene resin composition) comprising a polypropylene resin and, for example, the additive, an additional additive other than the above-mentioned additives, a filler, and the other resin component. The total amount of the additive, an additional additive other than the above-mentioned additives, a filler, the other resin component and the like is preferably 50% by weight or less, based on the weight of the polypropylene resin composition.
With respect to the additional additive, the filler, and the other resin component, the additional additives and the like mentioned above as examples in the first and second aspects can be used.

[7. Seal layer (I) containing polyolefin bonding resin (G)]

In one mode of the decorative film of the fifth and sixth aspects of the present invention, it is preferred that the seal layer (I) comprises a seal layer (I) containing a polyolefin bonding resin (G), wherein the polyolefin bonding resin (G) satisfies the following requirements (g'1) and (g'2):

(g'1) being a polyolefin resin having a polar functional group containing at least one heteroatom,
(g'2) having a melt flow rate (at 230°C under a load of 2.16 kg) (MFR (G)) of 100 g/10 minutes or less.

Melt flow rate (MFR (G)): (g'2)

The polyolefin bonding resin (G) in the present mode preferably has a melt flow rate (at 230°C under a load of 2.16 kg) (MFR (G)) of 100 g/10 minutes or less, preferably 50 g/10 minutes or less, more preferably 20 g/10 minutes or less. When MFR (G) of polyolefin bonding resin (G) is the above-mentioned value or less, the seal layer (I) containing the polyolefin bonding resin (G) can be stacked by an extrusion forming method on the layer (II) containing the resin composition (B') comprising polypropylene resin (B).
The lower limit of MFR (G) of polyolefin bonding resin (G) is not particularly limited, but is preferably 0.1 g/10 minutes or more, more preferably 0.3 g/10 minutes or more. When MFR (G) of polyolefin bonding resin (G) is the above-mentioned value or more, the co-extrusion forming of the resin composition (B') comprising polypropylene resin (B) and the polyolefin bonding resin (G) can be prevented from having a problem in that a rough interface is caused at the interface between the stacked layers, or the polyolefin bonding resin (G) is not stacked at the end of the film.

Polar functional group containing a heteroatom: (g'1)

The polyolefin bonding resin (G) in the present mode is a polyolefin resin having a polar functional group containing at least one heteroatom from the viewpoint of improving the adhesion to the layer (II) containing the resin composition (B') comprising polypropylene resin (B).
Examples of polar functional groups having at least one heteroatom include an epoxy group, a carbonyl group, an ester group, an ether group, a hydroxyl group, a carboxyl group or a metal salt thereof, an alkoxy group, an aryloxy group, an acyl group, an acyloxy group, an acid anhydride group, an amino group, an imide group, an amide group, a nitrile group, a thiol group, a sulfonic group, an isocyanate group, and a halogen group. Of these, more preferred is a polyolefin resin having at least one functional group selected from the group consisting of an epoxy group, a hydroxyl group, a carboxyl group, an acid anhydride group, an amino group, an imide group, an amide group, a nitrile group, a thiol group, an isocyanate group, and a halogen group.
Specific examples of such polyolefins having a polar functional group include acid-modified polypropylenes, such as maleic anhydride-modified polypropylene, maleic acid-modified polypropylene, and acrylic acid-modified polypropylene; ethylene or $\alpha$-olefinlvinyl monomer copolymers, such as an ethylene/vinyl chloride copolymer, an ethylene/vinylidene chloride copolymer, an ethylene/acrylonitrile copolymer, an ethylene/methacrylonitrile copolymer, an ethylene/vinyl acetate copolymer, an ethylene/acrylamide copolymer, an ethylene/methacrylamide copolymer, an ethylene/acrylic acid copolymer, an ethylene/methacrylic acid copolymer, an ethylene/maleic acid copolymer, an ethylene/methyl acrylate copolymer, an ethylene/ethyl acrylate copolymer, an ethylene/isopropyl acrylate copolymer, an ethylene/butyl acrylate copolymer, an ethylene/isobutyl acrylate copolymer, an ethylene/2-ethylhexyl acrylate copolymer, an ethylene/methyl methacrylate copolymer, an ethylene/ethyl methacrylate copolymer, an ethylene/isopropyl methacrylate copolymer, an ethylene/butyl methacrylate copolymer, an ethylene/isobutyl methacrylate copolymer, an ethylene/2-ethylhexyl methacrylate copolymer, an ethylene/maleic anhydride copolymer, an ethylene/ethyl acrylate/maleic anhydride copolymer, an ethylene/metal acrylate copolymer, an ethylene/metal methacrylate copolymer, an ethylene/vinyl acetate copolymer or a saponification product thereof, an ethylene/vinyl propionate copolymer, an ethylene/glycidyl methacrylate copolymer, an ethylene/ethyl acrylate/glycidyl methacrylate copolymer, and an ethylene/vinyl acetate/glycidyl methacrylate copolymer; and chlorinated polyolefins, such as chlorinated polypropylene and chlorinated polyethylene.
These resins may be used individually or in combination. Further, if necessary, for example, the other resin or rubber, a tackifier, the above-mentioned additive, an additional additive other than the above-mentioned additives, or a filler may be mixed into the resin.
Among the polyolefin resins having a polar functional group, from the viewpoint of the adhesion to the layer (II), as a commercially available product, for example, trade name "ADMER", manufactured by Mitsui Chemicals, Inc., trade name "MODIC", manufactured by Mitsubishi Chemical Corporation, or "Umex", manufactured by Sanyo Chemical Industries, Ltd., can be preferably used.
Examples of the above-mentioned other resins or rubbers include poly-$\alpha$-olefins, such as polypentene-1 and

polymethylpentene-1; ethylene or α-olefin/α-olefin copolymers, such as a propylene/butene-1 copolymer; ethylene or α-olefin/α-olefin/diene monomer copolymers, such as an ethylene/propylene/5-ethylidene-2-norbornene copolymer; polydiene copolymers, such as polybutadiene and polyisoprene; vinyl monomer/diene monomer random copolymers, such as a styrene/butadiene random copolymer and a styrene/isoprene random copolymer; vinyl monomer/diene monomer/vinyl monomer block copolymers, such as a styrene/butadiene/styrene block copolymer and a styrene/isoprene/styrene block copolymer; hydrogenated (vinyl monomer/diene monomer random copolymers), such as a hydrogenated (styrene/butadiene random copolymer) and a hydrogenated (styrene/isoprene random copolymer); hydrogenated (vinyl monomer/diene monomer/vinyl monomer block copolymers), such as a hydrogenated (styrene/butadiene/styrene block copolymer) and a hydrogenated (styrene/isoprene/styrene block copolymer); vinyl monomer/diene monomer/vinyl monomer graft copolymers, such as an acrylonitrile/butadiene/styrene graft copolymer and a methyl methacrylate/butadiene/styrene graft copolymer; vinyl polymers, such as polyvinyl chloride, polyvinylidene chloride, polyacrylonitrile, polyvinyl acetate, polyethyl acrylate, polybutyl acrylate, polymethyl methacrylate, and polystyrene; and vinyl copolymers, such as a vinyl chloride/acrylonitrile copolymer, a vinyl chloride/vinyl acetate copolymer, an acrylonitrile/styrene copolymer, and a methyl methacrylate/styrene copolymer.

Examples of the tackifiers include rosin resins (such as gum rosin, tall oil rosin, wood rosin, hydrogenated rosin, disproportionated rosin, polymerized rosin, maleic rosin, and rosin ester), a terpene phenolic resin, terpene resins (such as polymers of α-pinene, β-pinene, or limonene), an aromatic hydrocarbon-modified terpene resin, petroleum resins (such as aliphatic, alicyclic, or aromatic petroleum resins), a coumarone-indene resin, a styrene resin, phenolic resins (such as an alkylphenol, phenolxyleneformaldehyde, and a rosin-modified phenolic resin), and a xylene resin, and these can be used individually or in combination. Of these, from the viewpoint of the heat stability, preferred are a rosin resin, a terpene phenolic resin, a terpene resin, an aromatic hydrocarbon-modified terpene resin, a petroleum resin, and a hydrogenated petroleum resin, and, in view of being compatible with the polyolefin bonding resin (G) in the present invention to contribute to adhesion to a polar resin, especially preferred are a rosin resin and a terpene phenolic resin.

Examples of the additives other than the above-mentioned additives include the additional additives mentioned as examples in the first and second aspects, a phosphorus process stabilizer, a metallic soap, a stabilizer, such as an antacid adsorbent, a crosslinking agent, a chain transfer agent, a plasticizer, a filler, a reinforcement, a pigment, a dye, a flame retardant, and a fluorescent brightener, and such an additive may be added in such an amount that the effects of the present invention are not sacrificed.

The resin composition for the seal layer in the fifth and sixth aspects can be produced by, for example, a method in which the resin in the first through seventh embodiments, the additive, an additional additive other than the above-mentioned additives, a filler, the other resin component and the like are melt-kneaded, a method in which the resin in the first through seventh embodiments, the additive, an additional additive other than the above-mentioned additives, a filler and the like are melt-kneaded and the other resin component is dry-blended with the resultant kneaded mixture, or a method in which the resin in the first through seventh embodiments is added to the other resin component, and dry-blended with a master batch having the additive, an additional additive other than the above-mentioned additives, a filler and the like dispersed in a carrier resin at a high concentration.

<Decorative film according to the fifth and sixth aspects of the present invention>

The decorative film of the fifth and sixth aspects of the present invention comprises a layer (II) and a seal layer (I). Specifically, the decorative film may be a two-layer film comprising the layer (II) and the seal layer (I), or a three or more multilayer film comprising the layer (II), the seal layer (I), and another layer or the other layers. The decorative film of the fifth and sixth aspects can have various constructions as well as the construction comprising the layer (II) and the seal layer (I). The seal layer (I) is stuck along a resin molded article (substrate). The decorative film of the present invention may have the surface, for example, grained, embossed, printed, sandblasted, or scratched.

The multilayer film can comprise, in addition to the seal layer (I) and the layer (II), for example, a base layer, a surface layer, a surface decorative layer (III), a printed layer, a light shielding layer, a colored layer, a barrier layer, or a tie layer which can be formed between these layers. The layer (II) containing the resin composition (B') may be any of the layers constituting the multilayer film, except the seal layer.

When the decorative film is a two-layer film comprising the layer (II) and the seal layer (I), the layer (II) constitutes the surface layer on the side opposite to the stuck surface to a resin molded article, and the seal layer (I) constitutes the stuck surface to the resin molded article. In this case, it is preferred that the layer (II) contains the nucleating agent and/or weathering agent.

Even the multilayer film having a further complicated layer construction similarly comprises the layer (II) and the seal layer (I).

Further, in another preferred mode of the multilayer film having more than two layers and comprising the layer (II) and the seal layer (I), the layer(s) other than the layer (II) and the seal layer (I) is or are preferably a layer comprising a thermoplastic resin, more preferably a layer comprising a polypropylene resin. With respect to the layer(s) other than

the layer (II) and the seal layer (I), as long as the layer(s) can be distinguished from the layer (II) and the seal layer (I), the MFR (at 230°C under a load of 2.16 kg) of the polypropylene resin constituting the layer(s) is not particularly limited. It is preferred that each layer is a layer containing no thermosetting resin. By using the thermoplastic resin, the recycling properties are improved, and, by using the polypropylene resin, it is possible to prevent the layer construction from being complicated, so that the recycling properties are further improved.

Figs. 1(a) to 1(c) are schematic explanatory views of the cross-section of embodiments of the decorative film which comprises the layer (II) containing the resin composition (B') comprising polypropylene resin (B) and the seal layer (I), and Figs. 8(a) to 8(c) are schematic explanatory views of the cross-section of embodiments of the decorative film stuck to a resin molded article. The description of the drawings is as shown above in connection with the third and fourth aspects.

In a preferred mode of the multilayer film, the layer(s) other than the seal layer (I) and the layer (II) is or are preferably a layer comprising a thermoplastic resin, more preferably a layer comprising a polypropylene resin other than the polypropylene resin (B). It is preferred that each layer is a layer containing no thermosetting resin. By using the thermoplastic resin, the recycling properties are improved. Further, by using a polypropylene resin other than the polypropylene resin (B), it is possible to prevent the layer construction from being complicated, so that the recycling properties are further improved.

As another preferred mode of the decorative film, there can be mentioned a multilayer film comprising a surface decorative layer (III) comprising a surface decorative layer resin on the side opposite to the stuck surface side to the resin molded article, more preferably on the outermost surface on the side opposite to the stuck surface side to the resin molded article. The surface decorative layer resin is preferably a thermoplastic resin, more preferably a polypropylene resin (H') having an MFR (at 230°C under a load of 2.16 kg) of more than 2.0 g/10 minutes. In other words, by further forming the surface decorative layer (III) containing the polypropylene resin (H') as the surface layer of the decorative film, the gloss or grain transfer property can be improved without considerably reducing the thermoformability. Further, by using the polypropylene resin (H'), it is possible to prevent the layer construction from being complicated or prevent the recycling properties from lowering. In addition, by using the polypropylene resin (H') in the surface decorative layer (III) of the decorative film, excellent solvent resistance and others can be achieved. Further, by using the polypropylene resin (H') in the surface decorative layer, the decorative film is improved in the transfer property of the surface upon producing the decorative film and upon thermoforming, and the use of a patented roll in thermoforming can make the decorative film have high gloss. Further, when the surface decorative layer contains the nucleating agent in the present invention, higher surface gloss is exhibited.

The polypropylene resin (H') in the present mode can be selected from various types of propylene polymers, such as a propylene homopolymer (homopolypropylene), a propylene-$\alpha$-olefin copolymer (random polypropylene), and a propylene block copolymer (block polypropylene), and combinations thereof. It is preferred that the polypropylene resin (H') contains polymerization units derived from a propylene monomer in an amount of 50 mol% or more. It is preferred that the polypropylene resin (H') does not contain polymerization units derived from a polar group-containing monomer. The polypropylene resin (H') is preferably homopolypropylene from the viewpoint of, for example, the oil resistance, solvent resistance, and scratch resistance. Further, from the viewpoint of the gloss and transparency (color development), a propylene-$\alpha$-olefin copolymer is preferred. In the present mode, the polypropylene resin (H') constituting the surface decorative layer (III) and the polypropylene resin (A) constituting the seal layer (I) may be the same or different.

The polypropylene resin (H') in the present mode preferably has a strain hardening index of less than 1.1, more preferably 1.0 or less. When the strain hardening index of polypropylene resin (H') is less than 1.1, a decorative molded article having excellent appearance can be obtained. The strain hardening index of polypropylene resin (H') is determined by the above-described method.

The polypropylene resin (H') preferably has an MFR (H') (at 230°C under a load of 2.16 kg) of more than 2.0 g/10 minutes, more preferably 5.0 g/10 minutes or more, further preferably 9.0 g/10 minutes or more. When the MFR of polypropylene resin (H') is in the above-mentioned range, an effect can be obtained that, for example, the decorative film is readily improved in gloss, or the grain transfer property is readily improved, so that a decorative molded article having excellent appearance in respect of the required surface form of the molded article (such as gloss, non-gloss, or a grain) can be obtained.

The upper limit of the MFR of polypropylene resin (H') is not particularly limited, but is preferably 100 g/10 minutes or less, more preferably 50 g/10 minutes or less. When the MFR is in the above-mentioned range, excellent oil resistance, solvent resistance, scratch resistance, and the like can be exhibited.

The polypropylene resin (H') may contain, for example, the additive, an additional additive other than the above-mentioned additives, a filler, a colorant, and the other resin component. That is, the polypropylene resin may be a resin composition (polypropylene resin composition) comprising the polypropylene resin (H') and, for example, the additive, an additional additive other than the above-mentioned additives, a filler, a colorant, and the other resin component. The total amount of the additive, an additional additive other than the above-mentioned additives, a filler, a colorant, the other resin component and the like is preferably 50% by weight or less, based on the weight of the polypropylene resin

composition.

With respect to the additional additive, the filler, and the other resin component, the additional additives and the like mentioned above as examples in the first and second aspects can be used.

The resin composition containing the polypropylene resin (H') can be produced by, for example, a method in which the polypropylene resin (H'), the additive, an additional additive other than the above-mentioned additives, a filler, a colorant, the other resin component and the like are melt-kneaded, a method in which the polypropylene resin (H'), the additive, an additional additive other than the above-mentioned additives, a filler, a colorant and the like are melt-kneaded and the other resin component is dry-blended with the resultant kneaded mixture, or a method in which the polypropylene resin (H') is added to the other resin component, and dry-blended with a master batch having the additive, an additional additive other than the above-mentioned additives, a filler, a colorant and the like dispersed in a carrier resin at a high concentration.

When the surface decorative layer (III) comprises a polypropylene resin composition containing the polypropylene resin (H'), the polypropylene resin composition may be the same as or different from the polypropylene resin composition comprising polypropylene resin (A) constituting seal layer (I). When these polypropylene resin compositions are the same, an advantage can be obtained in that the seal layer (I) and the surface decorative layer (III) can be formed by a single extruder using, e.g., a feed block.

[Thickness of the decorative film]

The decorative film according to the first through sixth aspects of the present invention preferably has a thickness of about 20 μm or more, more preferably about 50 μm or more, further preferably about 80 μm or more. When the thickness of the decorative film is the above-mentioned value or more, an effect to impart the design properties is improved, and the stability during the forming is enhanced, making it possible to obtain a more excellent decorative molded article. On the other hand, the decorative film preferably has a thickness of about 2 mm or less, more preferably about 1.2 mm or less, further preferably about 0.8 mm or less. When the thickness of the decorative film is the above-mentioned value or less, the period of time required for heating in the thermoforming can be reduced, so that the productivity is improved, making easy triming of the unnecessary portions.

In the decorative film of the third through sixth aspects of the present invention, the proportion of the thickness of seal layer (I) in the thickness of the whole of the decorative film is preferably 1 to 70%, and the proportion of the thickness of layer (II) is preferably 30 to 99%. When the proportion of the thickness of seal layer (I) in the thickness of the whole of the decorative film is in the above-mentioned range, a satisfactory adhesive strength can be exhibited, and a flaw in the resin molded article (substrate) can be prevented from being seen through the surface, and the decorative forming can be completed before the nucleating agent and/or weathering agent volatilizes. Further, when the proportion of the thickness of layer (II) in the thickness of the whole of the decorative film is in the above-mentioned range, it is possible to prevent the decorative film from having unsatisfactory thermoformability.

Further, with respect to the multilayer film in which the surface decorative layer (III) containing the polypropylene resin (H) or (H') is formed on the outermost surface of the decorative film of the third through sixth aspects of the present invention, the proportion of the thickness of surface decorative layer (III) in the thickness of the whole of the decorative film is preferably 30% or less.

[Production of the decorative film]

The decorative film of the present invention can be produced by various known forming methods.

For example, in the case of a multilayer film, there can be mentioned a co-extrusion forming method (in which, for example, in the third and fourth aspects, the seal layer (I) comprising the resin composition (XX) and the layer (II) comprising the resin composition (YY) are subjected to co-extrusion forming, or the seal layer (I), the layer (II), and the other layer(s) are subjected to co-extrusion forming, or in which, in the fifth and sixth aspects, the seal layer (I) of a certain type and the layer (II) containing the resin composition (B') comprising polypropylene resin (B) are subjected to co-extrusion forming, or the seal layer (I), the layer (II), and the other layer(s) are subjected to co-extrusion forming), a thermolamination method in which onto one surface of a layer preliminarily prepared by extrusion forming is bonded another layer by applying heat and a pressure to them, a dry lamination method and a wet lamination method in which the layers are bonded through a bonding agent, and an extrusion lamination method and a sandwich lamination method in which a resin is melt-extruded onto one surface of a layer preliminarily prepared by extrusion forming. As an apparatus for forming the decorative film, a known (co-)extrusion T-die forming machine or a known lamination forming machine can be used. Of these, from the viewpoint of the productivity, (a)an (co-)extrusion T-die forming machine is preferably used.

As examples of a method for cooling the decorative film in a molten state extruded from a dice, there can be mentioned a method in which the decorative film in a molten state is contacted with one cooling roll through air discharged from an air-knife unit or an air chamber unit, and a method in which the decorative film is cooled by pressing it to a

plurality of cooling rolls.

When gloss is imparted to the decorative film of the present invention, a method is used in which the product design surface of the decorative film is subjected to planishing by surface transfer of a cooling patented roll.

Further, the decorative film of the present invention may have a grain form on the surface thereof. Such a decorative film can be produced by, for example, a method in which a resin in a molten state extruded from a dice is directly pressed using a roll having an uneven surface form and a smooth roll to transfer the surface of the uneven form, or a method in which a smooth film is pressed and brought into contact with a heated roll having an uneven surface form and a smooth (cooling) roll to transfer the surface of the uneven form. Examples of grain patterns include a satin-embossed pattern, an animal skin pattern, a hairline pattern, and a carbon pattern.

The decorative film of the present invention is formed, and then may be subjected to heat treatment. Examples of methods for heat treatment include a method in which the film is heated using a heated roll, a method in which the film is heated using a heating oven or a far infrared heater, and a method in which heated air is blown against the film.

[Decorative molded article]

As a resin molded article (object to be decorated) decorated in the present invention, there can be used various types of molded articles (hereinafter, frequently referred to as "substrate") comprising preferably a thermoplastic resin, more preferably a polyolefin resin, further preferably a polypropylene resin or a polypropylene resin composition. With respect to the molding method for the molded article, there is no particular limitation, and examples include injection molding, blow molding, press molding, and extrusion molding.

The polypropylene resin is nonpolar, and hence is a poor adhesive polymer, but the decorative film of the third and fourth aspects of the present invention comprises the seal layer (I) comprising the resin composition (XX) and the layer (II) comprising the resin composition (YY), and therefore an object to be decorated, which comprises a polypropylene resin, and the decorative film are stuck together to exhibit a very high adhesive strength, so that the decorative forming can be completed before the nucleating agent and/or weathering agent volatilizes. Further, the decorative film of the fifth and sixth aspects of the present invention comprises the seal layer (I) of a certain type and the layer (II) containing the resin composition (B') comprising polypropylene resin (B), and therefore an object to be decorated, which comprises a polypropylene resin, and the decorative film are stuck together to exhibit a very high adhesive strength, so that the decorative forming can be completed before the nucleating agent and/or weathering agent volatilizes.

With respect to the polypropylene resin and a base resin for the polypropylene resin composition used for the resin molded article as an object to be decorated, there can be selected various types of resins using a variety of known propylene monomers as a main raw material, such as a propylene homopolymer (homopolypropylene), a propylene-α-olefin copolymer, and a propylene block copolymer. The resin may contain, for example, a filler for imparting rigidity, such as talc, or an elastomer for imparting an impact resistance as long as the effects of the present invention are not sacrificed. Further, like the above-mentioned polypropylene resin composition which can constitute the decorative film, the resin may contain the above-mentioned additive, an additional additive other than the above-mentioned additives, and the other resin component.

As a molded article (object to be decorated) decorated in the fifth and sixth aspects of the present invention, various types of molded articles comprising a polar resin material can be also used, and, in this case, various types of molded articles comprising a polar resin material selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and a composite material thereof can be preferably used. Further, a reinforcing agent, such as an inorganic filler, or an additive, such as an antioxidant, an ultraviolet light absorber, an antistatic agent, a flame retardant, or a lubricant, may be added to the above-mentioned resin, and these additives may be used individually or in combination. With respect to the molding method, there is no particular limitation, and examples include injection molding, blow molding, press molding, and extrusion molding.

With respect to the above-mentioned polar resin material, the polypropylene resin which is nonpolar is a poor adhesive resin, and hence generally is not heat-bonded. In contrast, in the decorative film of the fifth and sixth aspects of the present invention, the seal layer (I) contains the polyolefin bonding resin (G), and therefore an object to be decorated and the decorative film can be heat-bonded to exhibit high adhesive strength. As preferred examples of polyolefin bonding resin (G), there can be mentioned modified polyolefin resins having grafted an α,β-unsaturated carboxylic acid.

A decorative molded article having the decorative film of the present invention stuck to a molded article formed in a three-dimensional shape is advantageous in that the amount of the VOC contained in a coating or a bonding agent can be markedly reduced, and therefore can be advantageously used in, for example, automobile members, household appliances, vehicles (e.g., for railroad), building materials, and articles for daily use.

[Production of a decorative molded article]

The method for producing a decorative molded article of the present invention comprises the steps of: providing the above-described decorative film; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the chamber box.

By the method for producing a decorative molded article of the present invention, there can be obtained an excellent decorative molded article which is free of air contained between the decorative film and the resin molded article and exhibits excellent reproducibility of a texture, such as a grain. In the decorative molded article obtained using the decorative film of the third through sixth aspects, the material constituting the decorative film is a polypropylene resin, and the decorative molded article contains no thermosetting resin layer or need not contain a thermosetting resin layer, and therefore has so excellent recycling properties that a lowering of the appearance and performance due to recycling is small.

Three-dimensional decorative thermoforming has basic steps such that a resin molded article and a decorative film are set in a chamber box capable of being evacuated, and the film is heat-softened in a state that the inside of the chamber box is evacuated, and the softened decorative film is pressed against the resin molded article, and the pressure in the chamber box is back to atmospheric pressure or a pressure is applied to the inside of the chamber box to stick the decorative film to the surface of the resin molded article, and thus sticking the film to the resin molded article is conducted under a reduced pressure. By virtue of such an operation, an excellent decorative molded article free of an air trap can be obtained. In the method of the present invention, any known techniques can be used as long as the apparatus and conditions employed are appropriate to the three-dimensional decorative thermoforming.

Specifically, the chamber box may be one which contains therein all of, for example, the resin molded article and the decorative film, the mechanism in which the resin molded article is pressed against the decorative film, and the apparatus for heating the decorative film, or one which is divided by the decorative film into a plurality of chamber boxes.

Further, the mechanism in which the resin molded article is pressed against the decorative film may be of a type which moves the resin molded article, a type which moves the decorative film, or a type which moves both of them.

More specifically, a typical example of the forming method is described below.

Hereinbelow, the method for sticking a decorative film to a resin molded article using a three-dimensional decorative thermoforming machine is illustratively described with reference to the drawings.

As shown in Fig. 2, the three-dimensional decorative thermoforming machine in the present embodiment has upper and lower chamber boxes 11 and 12, and thermoforming for a decorative film 1 is conducted in the two chamber boxes 11 and 12. A vacuum circuit (not shown) and an air circuit (not shown) are connected to each of the upper and lower chamber boxes 11 and 12.

A fixture 13 for fixing the decorative film 1 is provided between the upper and lower chamber boxes 11 and 12. A table 14 capable of moving upwardly and downwardly is installed into the lower chamber box 12, and a resin molded article (object to be decorated) 5 is set (through, e.g., a fixture or directly) on the table 14. A heater 15 is incorporated into the upper chamber box 11, and the decorative film 1 is heated by the heater 15. The resin molded article 5 can be a substrate comprising a propylene resin composition.

As such a three-dimensional decorative thermoforming machine, a commercially available forming machine (for example, NGF series, manufactured by Fu-se Vacuum Forming Ltd.) can be used.

As shown in Fig. 3, first, in the state that the upper and lower chamber boxes 11 and 12 are opened, the resin molded article 5 is placed on the table 14 in the lower chamber box 12, and the table 14 is moved downwardly to be in a state of being in a lower position. Subsequently, the decorative film 1 is set to the film fixing fixture 13 between the upper and lower chamber boxes 11 and 12 so that the stuck surface of the film faces the resin molded article 5.

As shown in Fig. 4, the upper chamber box 11 is lowered so that the upper and lower chamber boxes 11 and 12 are joined together and the inside of those boxes is in a closed state, and then the insides of the chamber boxes 11 and 12 are individually evacuated to be in a vacuum state, and the decorative film 1 is heated by means of the heater 15.

The decorative film 1 is heat-softened and then, as shown in Fig. 5, the table 14 in the lower chamber box 12 is moved upwardly while maintaining the insides of the upper and lower chamber boxes 11 and 12 in a vacuum state. The decorative film 1 is pressed against the resin molded article 5 to coat the resin molded article 5. Further, as shown in Fig. 6, the upper chamber box 11 is released to atmospheric pressure, or compressed air is fed from a compressed air tank to the upper chamber box 11, so that larger force causes the decorative film 1 to closely adhere to the resin molded article 5.

Subsequently, the insides of the upper and lower chamber boxes 1 1 and 12 are released to atmospheric pressure, and a decorative molded article 6 is removed from the lower chamber box 12. Finally, as shown in Fig. 7, the unnecessary edge of the decorative film 1 present around the decorative molded article 6 is trimmed.

[Forming conditions]

The insides of the chamber boxes 11 and 12 may be evacuated to such an extent that an air trap is not caused, and the pressure in the chamber boxes is preferably 10 kPa or less, more preferably 3 kPa or less, further preferably 1 kPa or less.

In the two upper and lower chamber boxes 11 and 12 divided by the decorative film 1, only the pressure in the chamber box on the side in which the resin molded article 5 and the decorative film 1 are stuck together needs to be in the above-mentioned range, and, by using different pressures in the upper and lower chamber boxes 11 and 12, it is possible to prevent the decorative film 1 from suffering a drawdown.

In this case, a film comprising a general polypropylene resin is lowered in the viscosity when being heated, and is likely to be deformed or broken due to a slight change of the pressure applied to the film.

The decorative film 1 of the third through sixth aspects of the present invention comprises the layer (II) containing specific polypropylene resin (B) or a resin composition (B') comprising a specific polypropylene resin (B), and therefore is advantageous not only in that the film is unlikely to suffer drawdown, but also in that the film has a resistance to deformation due to a change of the pressure applied to the film.

Heating of the decorative film 1 is controlled by the heater temperature (output) and heating time. The surface temperature of the film is measured by means of a thermometer, such as a radiation thermometer, and can be used as a yardstick of appropriate conditions.

In the present invention, for sticking the decorative film 1 to the resin molded article 5, it is necessary that the surface of the resin molded article 5 and the decorative film 1 be satisfactorily softened or melted.

For this reason, it is necessary that the heater temperature be higher than the melting temperatures of the resin constituting resin molded article 5 and the resin constituting decorative film 1. In the case of a polypropylene decorative film, the heater temperature is preferably 160°C or higher, more preferably 180°C or higher, most preferably 200°C or higher.

The higher the heater temperature, the shorter a period of time required for heating the film, but, when the temperature of the film on the heater side becomes too high before the inside of the decorative film 1 (or, when the heater is installed only on one side of the film, the surface of the film on the side opposite to the heater) has been satisfactorily heated, not only does the formability become poor, but also the resin suffers deterioration by heat, and therefore the heater temperature is preferably 500°C or lower, more preferably 450°C or lower, most preferably 400°C or lower.

An appropriate heating time varies depending on the heater temperature, but it is necessary that the decorative film be satisfactorily softened or melted. In the case of a polypropylene decorative film, it is preferred that at least the decorative film is heated until a phenomenon called spring back starts. In the basic embodiment, the first embodiment, and the second embodiment in the third and fourth aspects of the present invention and a mode in the fifth and sixth aspects of the present invention, it is preferred that the decorative film is heated until 2 seconds after spring back is completed, or heated for a period of time longer than that time.

Specifically, the polypropylene decorative film heated by the heater exhibits behavior such that the film in a solid state is heated and suffers thermal expansion, and once sags due to crystal melting and, after crystal melting proceeds throughout the film, the molecules in the film relax so that temporary spring back is observed, followed by gravity drawdown, but, after the spring back, the crystals in the decorative film are completely melted and the relaxation of the molecules is satisfactory, and therefore the decorative film exhibits excellent thermoformability and a satisfactory adhesive strength can be obtained.

Further, unexpectedly, the decorative film of the third through sixth aspects of the present invention can be strongly bonded to a substrate even by decorative thermoforming conducted before spring back is completed, and therefore the time for thermoforming can be reduced, and the forming can be completed before the nucleating agent and/or weathering agent contained in the decorative film volatilizes. Further, a remarkable effect to suppress grain debossing can be obtained.

On the other hand, when the heating time is too long, the film suffers gravity drawdown, or the film is deformed due to a difference in pressure between the upper and lower chamber boxes. Therefore, in the first and second aspects of the present invention, it is preferred that the heating time is less than 120 seconds after spring back is completed, and, in the third through sixth aspects of the present invention, it is preferred that the heating time is less than 30 seconds after spring back is completed.

In the case where a molded article having an uneven and complicated shape is decorated, or higher adhesive force is achieved, it is preferred that the decorative film is allowed to closely adhere to a substrate while feeding compressed air. When compressed air is introduced, the pressure in the upper chamber box is 150 kPa or more, preferably 200 kPa or more, more preferably 250 kPa or more. The upper limit of the pressure in the upper chamber box is not particularly limited, but too high a pressure could damage the apparatus, and therefore the pressure is 450 kPa or less, preferably 400 kPa or less.

In the present invention, with respect to the first through sixth aspects, part of or all of the requirements of one aspect can be applied to the other aspect, and a combination of part of or all of the requirements of one aspect and part of or all of those of another aspect can be applied to further another aspect. In such a case, the requirements of the original aspect can be appropriately changed according to the other aspect or the like to which the requirements are applied.

## Examples

Hereinbelow, the present invention will be described in more detail with reference to the following Examples, which should not be construed as limiting the scope of the present invention.

[Examples A and B]

1. Method for measuring physical properties

(i) Fogging test

With respect to a glass plate covering a sample bottle which had been subjected to the fogging test as shown below by the method in accordance with ISO 6452, a haze value was measured using a haze meter (Model NDH5000, manufactured by JEOL LTD.), and a change of the haze value after the fogging test was determined from the following formula.

Change of the haze value after the fogging test
= Haze value of the glass plate after the fogging test - Haze value of the glass plate before the fogging test

The haze value of the glass plate before subjected to the fogging test was 0.23.

<Fogging test>

1 g (±0.01 g) of an additive selected from a nucleating agent, a hindered amine light stabilizer, and an ultraviolet light absorber was placed in a sample bottle made of glass (inner diameter: 83 mm; height: 190 mm), and the sample bottle was covered with a glass plate (thickness: 3.0 mm) and heated at 150°C for one hour to cause clouding (fogging) on the glass plate. As a fogging tester, Windscreen Fogging Tester WF-2 (manufactured by Suga Test Instruments Co., Ltd.) was used. The sample bottle made of glass and the glass plate used were provided by Suga Test Instruments Co., Ltd.

(ii) Melt flow rate (MFR)

A melt flow rate was measured at 230°C under a load of 2.16 kg in accordance with ISO 1133:1997 Conditions M. The unit is g/10 minutes.

(iii) Strain hardening index $\lambda$

A strain hardening index $\lambda$ was determined by the above-mentioned method. With respect to $\eta^*$ (0.01) used as a shear viscosity value and $\eta e$ (3.5) used as an elongational viscosity value in the above method, the measurement was conducted by the method described below. The specimens used in the measurement were flat sheets having respective thicknesses of 0.7 mm and 2 mm formed by pressing under conditions at a temperature of 180°C and a pressure of 10 MPa for one hour, and the specimen having a thickness of 0.7 mm was used in the elongational viscosity measurement, and the specimen having a thickness of 2 mm was used in the dynamic frequency sweep test.

(iii-1) Shear viscosity $\eta^*$ (0.01)

Using ARES, manufactured by Rheometric Scientific Inc., a dynamic frequency sweep test was conducted. A parallel disc having a diameter of 25 mm was used in measurement geometry. Using apparatus control software TA Orchestrator, the measurement was performed in a measurement mode of Dynamic Frequency Sweep Test. As a specimen, there was used a press molded article having a thickness of 2 mm which was prepared according to the

above-mentioned method. The measurement temperature was 180°C. The measurement was conducted at five points per one digit at equal intervals in the logarithmic scale in the range of from 0.01 to 100 rad/s, with regard to a circular frequency $\omega$.

As an index for indicating a viscosity of the specimen at a low shear rate, a complex viscosity $\eta^*$ (0.01) [unit: Pa•s] at $\omega$ = 0.01 rad/s is employed. A complex viscosity $\eta^*$ is calculated from a complex modulus G* [unit: Pa] and $\omega$ using $\eta^* = G^*/\omega$.

(iii-2) Elongational viscosity $\eta e$ (3.5)

The elongational viscosity measurement was conducted using Extensional Viscosity Fixture, manufactured by TA Instruments, as a measurement fixture for ARES, manufactured by Rheometric Scientific Inc. Using apparatus control software TA Orchestrator, the measurement was performed in a measurement mode of Extensional Viscosity Test. As a specimen, there was used a test specimen having a thickness of 0.7 mm which was formed according to the above-mentioned method. The test specimen had a width of 10 mm and a length of 18 mm. The strain rate was 1.0 $s^{-1}$, and the measurement temperature was 180°C. Other parameters for the measurement were set as shown below.

Sampling Mode: log
Points Per Zone: 200
Solid Density: 0.9
Melt Density: 0.8
Prestretch Rate: 0.05 $s^{-1}$
Relaxation after Prestretch: 30 sec

Data for a time of at least 3.7 seconds from the start of measurement under the above-shown conditions is employed. By using the software, time-dependent data of the elongational viscosity are obtained. In the obtained elongational viscosity curve, an elongational viscosity value at a time point of 3.5 sec (i.e., a strain of 3.5) was determined as $\eta e$ (3.5) [unit: Pa•s].

(iv) Measurement of a branching index g' at an absolute molecular weight Mabs of 1,000,000:

The measurement using GPC having a light scatterometer and a viscometer as detectors was conducted in accordance with the above-mentioned method, and a branching index g' was determined based on the above-mentioned analysis method.

(v) Detection of a long-chain branched structure using $^{13}$C-NMR:

The measurement using $^{13}$C-NMR was conducted in accordance with the above-mentioned method to check whether a long-chain branched structure was present or not.

2. Materials used

(1) Additive

(i) Nucleating agent

(A-1): Organometallic salt nucleating agent (change of the haze value after the fogging test = 12.9), trademark "ADK STAB NA-11", manufactured by ADEKA Corporation
(A-2): Organometallic salt nucleating agent (change of the haze value after the fogging test = 31.4), trademark "ADK STAB NA-21", manufactured by ADEKA Corporation
(A-3): Amide nucleating agent (change of the haze value after the fogging test = 13.1), trademark "IRGACLEAR XT 386", manufactured by BASF Japan Ltd.
(A-4): Amide nucleating agent (change of the haze value after the fogging test = 7.0), trademark "PC-1", manufactured by New Japan Chemical Co., Ltd.
(A-5): Sorbitol nucleating agent (change of the haze value after the fogging test = 49.6), trademark "Millad NX 8000J", manufactured by Milliken Japan Co. Ltd.
(A-6): Sorbitol nucleating agent (change of the haze value after the fogging test = 49.5), trademark "GEL ALL MD", manufactured by New Japan Chemical Co., Ltd.

(ii) Hindered amine light stabilizer and ultraviolet light absorber

(A'-1): Hindered amine light stabilizer (change of the haze value after the fogging test = 3.78; molecular weight = about 3,000), trade name "Chimassorb 944", manufactured by BASF SE
(A'-2): Hindered amine light stabilizer (change of the haze value after the fogging test = 5.13; molecular weight = about 791), trade name "LA-57", manufactured by ADEKA Corporation
(A'-3): Hindered amine light stabilizer (change of the haze value after the fogging test = 3.98; molecular weight = about 1,900), trade name "LA-68", manufactured by ADEKA Corporation
(A'-4): Hindered amine light stabilizer (change of the haze value after the fogging test = 49.59; molecular weight = 480), trade name "Tinuvin 770", manufactured by BASF SE (A'-5): Ultraviolet light absorber (change of the haze value after the fogging test = 22.12; molecular weight = 659), trademark "ADK STAB LA-31G", manufactured by ADEKA Corporation

(2) Polypropylene resin

The following polypropylene resins were used.

(B-1): Propylene homopolymer having no long-chain branching (MFR = 10 g/10 minutes; strain hardening index λ = 1.0); trade name "NOVATEC (registered trademark) FA3KM", manufactured by Japan Polypropylene Corporation; branching index g' = 1.0 at an absolute molecular weight Mabs of 1,000,000; The $^{13}$C-NMR measurement confirmed that the propylene homopolymer had no long-chain branched structure.

(B-1-1): Polypropylene resin composition (MFR = 10 g/10 minutes) having 0.2 part by weight of nucleating agent (A-1) blended with 100 parts by weight of polypropylene resin (B-1)
(B-1-2): Polypropylene resin composition (MFR = 10 g/10 minutes) having 0.2 part by weight of nucleating agent (A-2) blended with 100 parts by weight of polypropylene resin (B-1)
(B-1-3): Polypropylene resin composition (MFR = 10 g/10 minutes) having 0.2 part by weight of nucleating agent (A-3) blended with 100 parts by weight of polypropylene resin (B-1)
(B-1-4): Polypropylene resin composition (MFR = 10 g/10 minutes) having 0.2 part by weight of nucleating agent (A-4) blended with 100 parts by weight of polypropylene resin (B-1)
(B-1-5): Polypropylene resin composition (MFR = 10 g/10 minutes) having 0.2 part by weight of nucleating agent (A-5) blended with 100 parts by weight of polypropylene resin (B-1)
(B-1-6): Polypropylene resin composition (MFR = 10 g/10 minutes) having 0.2 part by weight of nucleating agent (A-6) blended with 100 parts by weight of polypropylene resin (B-1)
(B-1-7): Polypropylene resin composition (MFR = 10 g/10 minutes) having 0.2 part by weight of hindered amine light stabilizer (A'-1) blended with 100 parts by weight of polypropylene resin (B-1)

(B-2): Propylene homopolymer having long-chain branching, which is produced by a macromer copolymerization method; trade name "WAYMAX (registered trademark) MFX8", manufactured by Japan Polypropylene Corporation; MFR =1.0 g/10 minutes; strain hardening index λ = 9.7; branching index g' = 0.89 at an absolute molecular weight Mabs of 1,000,000; The $^{13}$C-NMR measurement confirmed that the propylene homopolymer had a long-chain branched structure.

(B-2-1) Polypropylene resin composition (MFR = 1.0 g/10 minutes) having 0.2 part by weight of nucleating agent (A-1) blended with 100 parts by weight of polypropylene resin (B-2)
(B-2-2) Polypropylene resin composition (MFR = 1.0 g/10 minutes) having 4% by weight of black pigment MB (EPP-K-120601, manufactured by Polycol Color Industries Co., Ltd.) blended with 96% by weight of polypropylene resin (B-2)
(B-2-3) Polypropylene resin composition (MFR = 1.0 g/10 minutes) having 0.2 part by weight of hindered amine light stabilizer (A'-1) blended with 100 parts by weight of polypropylene resin (B-2)

(B-3): Propylene homopolymer having no long-chain branching (MFR = 0.4 g/10 minutes; strain hardening index λ = 1.0); trade name "NOVATEC (registered trademark) EA9", manufactured by Japan Polypropylene Corporation; branching index g' = 1.0 at an absolute molecular weight Mabs of 1,000,000; The $^{13}$C-NMR measurement confirmed that the propylene homopolymer had no long-chain branched structure.

(B-3-1): Polypropylene resin composition (MFR = 0.4 g/10 minutes) having 0.2 part by weight of hindered amine light stabilizer (A'-1) blended with 100 parts by weight of polypropylene resin (B-3)
(B-3-2): Polypropylene resin composition (MFR = 0.4 g/10 minutes) having 0.2 part by weight of hindered amine light stabilizer (A'-2) blended with 100 parts by weight of polypropylene resin (B-3)
(B-3-3): Polypropylene resin composition (MFR = 0.4 g/10 minutes) having 0.2 part by weight of hindered amine light stabilizer (A'-3) blended with 100 parts by weight of polypropylene resin (B-3)
(B-3-4): Polypropylene resin composition (MFR = 0.4 g/10 minutes) having 0.2 part by weight of hindered amine light stabilizer (A'-4) blended with 100 parts by weight of polypropylene resin (B-3)
(B-3-5): Polypropylene resin composition (MFR = 0.4 g/10 minutes) having 0.1 part by weight of hindered amine light stabilizer (A'-1) and 0.2 part by weight of ultraviolet light absorber (A'-5) blended with 100 parts by weight of polypropylene resin (B-3)

(B-4): Propylene-$\alpha$-olefin copolymer having no long-chain branching (MFR = 7.0 g/10 minutes; strain hardening index $\lambda$ = 1.0); trade name "WINTEC (registered trademark) WFX4M", manufactured by Japan Polypropylene Corporation; branching index g' = 1.0 at an absolute molecular weight Mabs of 1,000,000; The $^{13}C$-NMR measurement confirmed that the propylene-$\alpha$-olefin copolymer had no long-chain branched structure.

(3) The other thermoplastic resin

The following thermoplastic resin was used.
(C-1): Maleic anhydride-modified polyolefin (MFR = 7.0 g/10 minutes), trade name "MODIC AP (registered trademark) F534A", manufactured by Mitsubishi Chemical Corporation

3. Production of a resin molded article (substrate)

Using propylene homopolymer (Z-1) (MFR = 40 g/10 minutes; Tm = 165°C; trade name "NOVATEC (registered trademark) MA04H", manufactured by Japan Polypropylene Corporation), an injection molded article was obtained by the method shown below.
Injection molding machine: "IS100GN", manufactured by Toshiba Machine Co., Ltd.; mold clamping pressure: 100 tons
Cylinder temperature: 200°C
Mold temperature: 40°C
Injection mold: Flat sheet having width × height × thickness = 120 mm × 120 mm × 3 mm
Conditioning: Maintained in a thermo-hygrostat at a temperature of 23°C and at a humidity of 50% RH for 5 days.

Example A1

• Production of a decorative film

There was used a two-type two-layer T-die having a lip opening of 0.8 mm and having a dice width of 400 mm, to which a surface layer extruder-1 having a bore diameter of 30 mm (diameter) and a base layer extruder-2 having a bore diameter of 40 mm (diameter) were connected. Polypropylene resin (B-1-1) was charged into the surface layer extruder-1, and polypropylene resin (B-2) was charged into the base layer extruder-2, and melt extrusion was conducted under conditions such that the resin temperature was 240°C, the extrusion rate of the surface layer extruder-1 was 4 kg/h, and the extrusion rate of the base layer extruder-2 was 12 kg/h. The melt-extruded film was cooled and set while pressing the film against a first roll rotating at 3 m/min at 30°C using an air-knife so that a surface layer was on the outer side, obtaining a two-layer unstretched film in which the surface layer having a thickness of 50 $\mu$m and a base layer having a thickness of 150 $\mu$m were stacked on one another.

• Three-dimensional decorative thermoforming

As a three-dimensional decorative thermoforming apparatus, "NGF-0406-SW", manufactured by Fu-se Vacuum Forming Ltd., was used. As shown in Figs. 2 to 7, a decorative film 1 was cut into a size of width: 250 mm × length: 350 mm so that the base layer faced the substrate and the longitudinal direction corresponded to the MD direction of the film, and set in a film fixing fixture 13 having an opening size of 210 mm 300 mm. A resin molded article (substrate) 5 was stuck through "NICETACK NW-K15", manufactured by Nichiban Co., Ltd., onto a sample holder having a height of 20 mm set on a table 14 positioned below the film fixing fixture 13. The film fixing fixture 13 and the table 14 were placed in chamber boxes 11 and 12, and the chamber boxes were closed so that the insides of chamber boxes 11 and 12 were in a closed state. The chamber boxes were divided by the decorative film 1 into upper and lower portions. The insides

of the upper and lower chamber boxes 11 and 12 were evacuated and, in a state such that the pressure was reduced from atmospheric pressure (101.3 kPa) to 1.0 kPa, a far infrared heater 15 installed onto the upper chamber box 11 was turned on at an output of 80% to heat the decorative film 1. During the heating, evacuation was continued, and the pressure was finally reduced to 0.1 kPa. After a spring back phenomenon such that the decorative film 1 was heated and temporarily sagged and then sprang back was completed, heating was further made for 30 seconds, and the table 14 placed in the lower chamber box 12 was moved upwards to press the resin molded article (substrate) 5 against the decorative film 1, and immediately compressed air was introduced so that the pressure in the upper chamber box 11 became 270 kPa to cause the resin molded article (substrate) 5 and the decorative film 1 to closely adhere to each other. Thus, a three-dimensional decorative thermoformed article 6 in which the decorative film 1 was stuck to the upper surface and side of the resin molded article (substrate) 5 was obtained.

• Evaluation of physical properties (Gloss)

With respect to each of a decorative film before subjected to decorative forming, and a decorative molded article having a decorative film stuck thereon after subjected to decorative forming, a gloss at an almost middle portion was measured at an incident angle of 60° using a GLOSS meter Gloss Meter VG2000, manufactured by Nippon Denshoku Industries Co., Ltd., and a change of the gloss between the films before and after subjected to decorative forming was determined. The method for measurement was in accordance with JIS-K7136-1981.

The results of the evaluation of physical properties of the obtained decorative molded article and others are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A2

The evaluation was performed in substantially the same manner as in Example A1 except that the polypropylene resin used in the surface layer in the production of the decorative film in Example A1 was changed to (B-1-2). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A3

The evaluation was performed in substantially the same manner as in Example A1 except that the polypropylene resin used in the surface layer in the production of the decorative film in Example A1 was changed to (B-1-3). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A4

The evaluation was performed in substantially the same manner as in Example A1 except that the polypropylene resin used in the surface layer in the production of the decorative film in Example A1 was changed to (B-1-4). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A5

The evaluation was performed in substantially the same manner as in Example A1 except that the polypropylene

resin used in the base layer in the production of the decorative film in Example A1 was changed to (B-3). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A6

The evaluation was performed in substantially the same manner as in Example A1 except that the polypropylene resin used in the base layer in the production of the decorative film in Example A1 was changed to (B-2-1). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A7

The evaluation was performed in substantially the same manner as in Example A1 except that the polypropylene resin used in the base layer in the production of the decorative film in Example A1 was changed to (B-2-2). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss. Further, the base layer was colored black, and therefore the decorative molded article had excellent appearance.

Example A8

In the production of a decorative film, there was used a three-type three-layer T-die having a lip opening of 0.8 mm and having a dice width of 400 mm, to which a surface layer extruder-1 having a bore diameter of 30 mm $\phi$, a base layer extruder-2 having a bore diameter of 40 mm $\phi$, and a seal layer extruder-3 having a bore diameter of 30 mm $\phi$ were connected. Polypropylene resin (B-1-1) was charged into the surface layer extruder-1, polypropylene resin (B-2) was charged into the base layer extruder-2, and polypropylene resin (B-4) was charged into the seal layer extruder-3, and melt extrusion was conducted under conditions such that the resin temperature was 240°C, the extrusion rate of the surface layer extruder-1 was 4 kg/h, the extrusion rate of the base layer extruder-2 was 8 kg/h, and the extrusion rate of the seal layer extruder-3 was 4 kg/h.

The melt-extruded film was cooled and set while pressing the film against a first roll rotating at 3 m/min at 30°C using an air-knife so that a seal layer was in contact with the roll, obtaining a three-layer unstretched film in which a surface layer having a thickness of 50 $\mu$m, a base layer having a thickness of 100 $\mu$m, and the seal layer having a thickness of 50 $\mu$m were stacked on one another. The evaluation was performed in substantially the same manner as in Example A1 except the above procedure. The results are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Example A9

The evaluation was performed in substantially the same manner as in Example A8 except that the polypropylene resin used in the seal layer in the production of the decorative film in Example A8 was changed to (C-1). The results of the evaluation are shown in Table 2.

The nucleating agent and resins used satisfy the requirements of the present invention, and therefore the nucleating agent did not volatilize from the decorative film during the decorative forming, and the texture of the surface of the decorative film was substantially maintained, and the obtained decorative molded article had excellent surface smoothness and excellent gloss.

Comparative Example A1

The evaluation was performed in substantially the same manner as in Example A1 except that the polypropylene resin used in the surface layer in the production of the decorative film in Example A1 was changed to (B-1). The results of the evaluation are shown in Table 2.

The decorative film does not contain a layer containing the nucleating agent which satisfies the requirement of the present invention, and therefore the obtained decorative molded article had poor surface smoothness and poor gloss.

Comparative Example A2

The evaluation was performed in substantially the same manner as in Example A1 except that the polypropylene resin used in the surface layer in the production of the decorative film in Example A1 was changed to (B-1-5). The results of the evaluation are shown in Table 2.

The nucleating agent used does not satisfy the requirement of the present invention, and the nucleating agent volatilized during the decorative forming, and therefore the obtained decorative molded article had poor surface smoothness and poor gloss.

Comparative Example A3

The evaluation was performed in substantially the same manner as in Example A1 except that the polypropylene resin used in the surface layer in the production of the decorative film in Example A1 was changed to (B-1-6). The results of the evaluation are shown in Table 2.

The nucleating agent used does not satisfy the requirement of the present invention, and the nucleating agent volatilized during the decorative forming, and therefore the obtained decorative molded article had poor surface smoothness and poor gloss.

[Table 2]

Table 2

| | | | Unit | Example A1 | Example A2 | Example A3 | Example A4 | Example A5 | Example A6 | Example A7 | Example A8 | Example A9 | Comparative Example A1 | Comparative Example A2 | Comparative Example A3 |
|---|---|---|---|---|---|---|---|---|---|---|---|---|---|---|---|
| Decorative film | Surface layer | Resin | | B-1-1 | B-1-2 | B-1-3 | B-1-4 | B-1-1 | B-1-1 | B-1-1 | B-1-1 | B-1-1 | B-1 | B-1-5 | B-1-6 |
| | | Thickness | μm | 50 | 50 | 50 | 50 | 50 | 50 | 50 | 50 | 50 | 50 | 50 | 50 |
| | Base layer | Resin B | | B-2 | B-2 | B-2 | B-2 | B-3 | B-2-1 | B-2-2 | B-2 | B-2 | B-2 | B-2 | B-2 |
| | | Thickness | μm | 150 | 150 | 150 | 150 | 150 | 150 | 150 | 100 | 100 | 150 | 150 | 150 |
| | Seal layer | Resin | | - | - | - | - | - | - | - | B-4 | C-1 | - | - | - |
| | | Thickness | μm | - | - | - | - | - | - | - | 50 | 50 | - | - | - |
| Decorative molded article | | Resin | | Z-1 | Z-1 | Z-1 | Z-1 | Z-1 | Z-1 | Z-1 | Z-1 | Z-1 | Z-1 | Z-1 | Z-1 |
| Evaluation | Surface smoothness (Surface gloss) | Gloss of decorative film before decorative forming | | 90 | 91 | 99 | 99 | 90 | 90 | 90 | 90 | 90 | 60 | 100 | 95 |
| | | Gloss after decorative forming | | 65 | 78 | 66 | 75 | 67 | 68 | 66 | 64 | 66 | 20 | 18 | 18 |
| | | ⊿Gloss | | 25 | 13 | 33 | 24 | 23 | 22 | 24 | 26 | 24 | 40 | 82 | 77 |

Example B1

• Production of a decorative film

There was used a two-type two-layer T-die having a lip opening of 0.8 mm and having a dice width of 400 mm, to which a base layer extruder-1 having a bore diameter of 40 mm (diameter) and a seal layer extruder-2 having a bore diameter of 30 mm (diameter) were connected. Polypropylene resin (B-3-1) was charged into the base layer extruder-1, and polypropylene resin (B-3) was charged into the seal layer extruder-2, and melt extrusion was conducted under conditions such that the resin temperature was 240°C, the extrusion rate of the base layer extruder-1 was 12 kg/h, and the extrusion rate of the seal layer extruder-2 was 4 kg/h. The melt-extruded film was cooled and set while pressing the film against a first roll rotating at 3 m/min at 30°C using an air-knife so that a seal layer was in contact with the roll, obtaining a two-layer unstretched film in which a base layer having a thickness of 150 $\mu$m and the seal layer having a thickness of 50 $\mu$m were stacked on one another.

• Three-dimensional decorative thermoforming

As a three-dimensional decorative thermoforming apparatus, "NGF-0406-SW", manufactured by Fu-se Vacuum Forming Ltd., was used. The above-obtained unstretched film was used as a decorative film, and, as shown in Figs. 2 to 7, a decorative film 1 was cut into a size of width: 250 mm $\times$ length: 350 mm so that the seal layer faced the substrate and the longitudinal direction corresponded to the MD direction of the film, and set in a film fixing fixture 13 having an opening size of 210 mm $\times$ 300 mm. A three-dimensional decorative thermoformed article 6 in which the decorative film 1 was stuck to the upper surface and side of a resin molded article (substrate) 5 was obtained in substantially the same manner as in Example A1 except the above procedure.

Example B2

A three-dimensional decorative thermoformed article was obtained in substantially the same manner as in Example B1 except that the polypropylene resin used in the base layer in the production of the decorative film in Example B1 was changed to polypropylene resin (B-3-2).

Example B3

A three-dimensional decorative thermoformed article was obtained in substantially the same manner as in Example B1 except that the polypropylene resin used in the base layer in the production of the decorative film in Example B1 was changed to polypropylene resin (B-3-3).

Example B4

A three-dimensional decorative thermoformed article was obtained in substantially the same manner as in Example B1 except that the polypropylene resin used in the base layer in the production of the decorative film in Example B1 was changed to polypropylene resin (B-3-5).

Example B5

A three-dimensional decorative thermoformed article was obtained in substantially the same manner as in Example B1 except that the polypropylene resin used in the base layer in the production of the decorative film in Example B1 was changed to polypropylene resin (B-2-3).

Example B6

In the production of a decorative film, there was used a three-type three-layer T-die having a lip opening of 0.8 mm and having a dice width of 400 mm, to which a surface layer extruder-3 having a bore diameter of 30 mm $\phi$, a base layer extruder-1 having a bore diameter of 40 mm $\phi$, and a seal layer extruder-2 having a bore diameter of 30 mm $\phi$ were connected. Polypropylene resin (B-1-7) was charged into the surface layer extruder-3, polypropylene resin (B-3-1) was charged into the base layer extruder-1, and polypropylene resin (B-3) was charged into the seal layer extruder-2, and melt extrusion was conducted under conditions such that the resin temperature was 240°C, the extrusion rate of the surface layer extruder-3 was 4 kg/h, the extrusion rate of the base layer extruder-1 was 8 kg/h, and the extrusion rate of the seal layer extruder-2 was 4 kg/h.

The melt-extruded film was cooled and set while pressing the film against a first roll rotating at 3 m/min at 30°C using an air-knife so that a seal layer was in contact with the roll, obtaining a three-layer unstretched film in which a surface layer having a thickness of 50 μm, a base layer having a thickness of 100 μm, and the seal layer having a thickness of 50 μm were stacked on one another.

A three-dimensional decorative thermoformed article was obtained in substantially the same manner as in Example B1 except that the unstretched film obtained in the above-mentioned production of the decorative film was used.

Example B7

A three-dimensional decorative thermoformed article was obtained in substantially the same manner as in Example B1 except that the polypropylene resin used in the seal layer in the production of the decorative film in Example B1 was changed to polypropylene resin (B-4).

Example B8

A three-dimensional decorative thermoformed article was obtained in substantially the same manner as in Example B1 except that the polypropylene resin used in the seal layer in the production of the decorative film in Example B1 was changed to maleic anhydride-modified polyolefin (C-1).

Comparative Example B1

A three-dimensional decorative thermoformed article was obtained in substantially the same manner as in Example B1 except that the polypropylene resin used in the base layer in the production of the decorative film in Example B1 was changed to polypropylene resin (B-3).

Comparative Example B2

A three-dimensional decorative thermoformed article was obtained in substantially the same manner as in Example B1 except that the polypropylene resin used in the base layer in the production of the decorative film in Example B1 was changed to polypropylene resin (B-3-4).

[Evaluation of weathering resistance]

With respect to each of the three-dimensional decorative thermoformed articles obtained in Examples B1 to B8 and Comparative Examples B1 and B2, the flat sheet sample obtained after the three-dimensional decorative thermoforming was maintained at 23°C at 50% RH for 48 hours, and then a test specimen having a length of 30 mm and a width of 70 mm was cut out from the resultant flat sheet, and, using Atlas weatherometer Ci65AW, manufactured by Toyo Seiki Seisaku-Sho, Ltd., the decorative film side of the decorative molded article was irradiated with a light of 504MJ xenon arc lamp under conditions such that the black panel temperature was 89°C, the humidity was 50%, and the irradiation illuminance was 100 W/$m^2$. With respect to the decorative film before subjected to three-dimensional decorative forming, irradiation with a light was conducted under the same conditions. The surface of the test specimen was observed by means of a microscope at a magnification of 20 times every 24 hours, and a period of time until a microcrack was caused in the surface was determined as a "weathering time". A lowering ratio of the weathering resistance was evaluated in accordance with the following criteria.

○: A lowering ratio of the weathering time of the flat sheet sample after subjected to three-dimensional decorative thermoforming to the weathering time of the decorative film before subjected to three-dimensional decorative forming is less than 20%.

×: A lowering ratio of the weathering time of the flat sheet sample after subjected to three-dimensional decorative thermoforming to the weathering time of the decorative film before subjected to three-dimensional decorative forming is 20% or more.

With respect to the decorative films in Examples B1 to B8 and Comparative Examples B1 and B2, the layer construction and the results of the evaluation of weathering resistance are shown in Table 3.

[Table 3]

Table 3

| | | | Unit | Example B1 | Example B2 | Example B3 | Example B4 | Example B5 | Example B6 | Example B7 | Example B8 | Comparative Example B1 | Comparative Example B2 |
|---|---|---|---|---|---|---|---|---|---|---|---|---|---|
| Decorative film | Surface layer | Resin | | - | - | - | - | - | B-1-7 | - | - | - | - |
| | | Thickness | μ m | - | - | - | - | - | 50 | - | - | - | - |
| | Base layer | Resin | | B-3-1 | B-3-2 | B-3-3 | B-3-5 | B-2-3 | B-3-1 | B-3-1 | B-3-1 | B-3 | B-3-4 |
| | | Thickness | μ m | 150 | 150 | 150 | 150 | 150 | 100 | 150 | 150 | 150 | 150 |
| | Seal layer | Resin | | B-3 | B-3 | B-3 | B-3 | B-3 | B-3 | B-4 | C-1 | B-3 | B-3 |
| | | Thickness | μ m | 50 | 50 | 50 | 50 | 50 | 50 | 50 | 50 | 50 | 50 |
| Decorative molded article | | Resin | | Z-1 | Z-1 | Z-1 | Z-1 | Z-1 | Z-1 | Z-1 | Z-1 | Z-1 | Z-1 |
| Evaluation | Weathering resistance | Weathering resistance of decorative film before decorative forming | Hour | 528 | 480 | 456 | 744 | 552 | 528 | 528 | 528 | 120 | 504 |
| | | Weathering resistance of decorative molded article after decorative forming | Hour | 504 | 456 | 408 | 696 | 528 | 504 | 504 | 504 | 120 | 360 |
| | | Weathering resistance reduction | % | 4.5 | 5.0 | 10.5 | 6.5 | 4.3 | 4.5 | 4.5 | 4.5 | 0.0 | 28.6 |
| | | Rating | | ○ | ○ | ○ | ○ | ○ | ○ | ○ | ○ | - | × |

In the decorative molded article obtained using each of the decorative films in Examples B1 to B8, with respect to the hindered amine light stabilizer and/or ultraviolet light absorber used, a change of the haze value is 40 or less, as measured by the method in accordance with JIS-K7136 with respect to the glass plate which has been subjected to the

fogging test conducted by the method in accordance with ISO 6452. Therefore, the hindered amine light stabilizer and/or ultraviolet light absorber did not volatilize from the decorative film during the decorative forming, and the obtained decorative molded article maintained the weathering resistance.

In contrast, with respect to the decorative film in Comparative Example B1, which does not contain a hindered amine light stabilizer and/or an ultraviolet light absorber in any of the layers, the decorative film and the decorative molded article had poor weathering resistance. With respect to the decorative film in Comparative Example B2 in which, with respect to the hindered amine light stabilizer used, a change of the haze value is more than 40, as measured by the method in accordance with JIS-K7136 with respect to the glass plate which has been subjected to the fogging test conducted by the method in accordance with ISO 6452, the hindered amine light stabilizer volatilized during the decorative forming, and the obtained decorative molded article had a weathering resistance markedly lowered.

[Example C]

1. Method for measuring physical properties

(i) Fogging test

A fogging test was conducted in the same manner as in Examples A and B.

(ii) Melt flow rate (MFR)

A melt flow rate was measured at 230°C under a load of 2.16 kg in accordance with ISO 1133:1997 Conditions M. The unit is g/10 minutes.

(iii) Melting peak temperature (Melting point)

Using a differential scanning calorimeter (DSC), the measurement was conducted by a method in which the temperature was increased to 200°C and maintained at that temperature for 10 minutes, and then the temperature was reduced to 40°C at a temperature reduction rate of 10°C/minute, and further the temperature was increased at a temperature elevation rate of 10°C/minute, and the temperature at an endothermic peak top in the measurement was determined as a melting peak temperature (melting point). The unit is °C.

(iv) Crystallization temperature

Using a differential scanning calorimeter (DSC), with respect to 5 mg of a specimen in a sheet form placed in an aluminum pan, the temperature was increased at a temperature elevation rate of 100°C/minute from 50°C to 200°C, and maintained at that temperature for 5 minutes, and then the temperature was reduced to 40°C at 10°C/minute to cause crystallization. The crystallization maximum peak temperature in this instance was determined as a crystallization temperature (Tc).

(v) GPC Measurement

The GPC measurement was conducted using the following apparatus under the following conditions to determine an Mw/Mn.

- Apparatus: GPC (ALC/GPC 150C), manufactured by Waters Corporation
- Detector: MIRAN 1A IR detector, manufactured by FOXBORO Company (measurement wavelength: 3.42 μm)
- Column: AD806M/S (three columns), manufactured by Showa Denko K. K.
- Solvent for mobile phase: Ortho-dichlorobenzene (ODCB)
- Measurement temperature: 140°C
- Flow rate: 1.0 ml/min
- Amount of the sample per injection: 0.2 ml
- Preparation of a sample: A 1 mg/mL solution was prepared using ODCB (containing BHT in an amount of 0.5 mg/mL), and a specimen was dissolved at 140°C over about one hour.

Conversion to a molecular weight from the retention volume obtained in the GPC measurement was made using a calibration curve preliminarily obtained from standard polystyrenes (PS). The standard polystyrenes used are of the following grades, all of which are manufactured by Tosoh Corporation.

F380, F288, F128, F80, F40, F20, F10, F4, F1, A5000, A2500, A1000
0.2 mL of a solution obtained by dissolving each sample in ODCB (containing BHT in an amount of 0.5 mg/mL) at 0.5 mg/mL was injected to prepare a calibration curve. As the calibration curve, a cubic expression obtained by approximation by a method of least squares was used.

In the viscosity formula $[\eta] = K \times M^{\alpha}$, which is used in the conversion to a molecular weight, the following values were used.

$$\text{PS: } K = 1.38 \times 10^{-4},\ \alpha = 0.7$$

$$\text{PP: } K = 1.03 \times 10^{-4},\ \alpha = 0.78$$

(vi) Density

A density of ethylene-$\alpha$-olefin random copolymer (C) and thermoplastic elastomer (D) was measured in accordance with a density-gradient tube method of JIS K7112 (1999).

(vii) Tensile modulus

A tensile modulus of thermoplastic elastomer (D) was measured using an ASTM-IV injected specimen at 23°C and at a pulling rate of 50 mm/min in accordance with ASTM D638.

(viii) Ethylene contents [E (C)] and [E (D)]

An ethylene content [E (C)] of ethylene-$\alpha$-olefin random copolymer (C) and an ethylene content [E (D)] of thermoplastic elastomer (D) were determined in accordance with the above-mentioned method from the integrated intensities obtained by the $^{13}$C-NMR measurement. The preparation of a sample and the conditions for measurement were as described below.

200 mg of ethylene-$\alpha$-olefin random copolymer (C) or thermoplastic elastomer (D) as a sample was placed in an NMR sample tube having an inner diameter of 10 mm$\phi$, together with 2.4 ml of o-dichlorobenzene/deuterated bromobenzene ($C_6D_5Br$) = 4/1 (volume ratio) and hexamethyldisiloxane as a chemical shift standard substance, and dissolved.

The $^{13}$C-NMR measurement was conducted using NMR apparatus Model AV400, manufactured by Bruker BioSpin, having 10 mm$\phi$ CryoProbe attached.

The $^{13}$C-NMR measurement was performed by a broadband decoupling method under conditions such that the sample temperature was 120°C, the pulse angle was 90°, the pulse interval was 20 seconds, and the accumulation number was 512.

(ix): Determination of ethylene contents of propylene-ethylene block copolymer (F), component (F1), and component (F2)

The respective ethylene contents of propylene-ethylene block copolymer (F), component (F1), and component (F2) were determined using the above-mentioned measurement method for ethylene content by $^{13}$C-NMR.

(x) Isothermal crystallization time

An isothermal crystallization time was measured by the above-mentioned method using a differential scanning calorimeter (DSC).

When measuring an isothermal crystallization time of polypropylene resin (A) and resin composition (XX5), polypropylene resin (A) and resin composition (XX5) were individually melt-kneaded using a twin-screw extruder to obtain pellets of polypropylene resin (A) and resin composition (XX5), and an isothermal crystallization time was measured using the pellets. As the twin-screw extruder, KZW-15, manufactured by Technovel Corporation, was used, and the number of revolutions of the screw was 400 RPM, and the kneading temperature was set in the order from the temperature under the hopper at 80°C, 120°C, and 200°C (the following portion to the dice outlet was at the same temperature).

2. Evaluation of physical properties of a decorative molded article

(1) Evaluation of thermoformability

The drawdown state of the decorative film during the three-dimensional decorative thermoforming, and the stuck state of the decorative film in the decorative molded article having the decorative film stuck to the substrate were visually observed, and evaluated in accordance with the following criteria.

○: The decorative film suffered no drawdown during the three-dimensional decorative thermoforming, and the substrate and the decorative film were contacted at a time with their entire contact surface, so that the decorative film was uniformly stuck to the substrate without causing contact unevenness.

Δ: The decorative film suffered slight drawdown during the three-dimensional decorative thermoforming, and thus the center of the substrate was first in contact with the decorative film, causing contact unevenness on the end of the upper surface of the substrate.

×: The decorative film suffered marked drawdown during the three-dimensional decorative thermoforming, causing contact unevenness on the entire surface of the substrate.

(2) Adhesive force between a resin molded article (substrate) and a decorative film

"Kraft paper adhesive tape No. 712N", manufactured by Nitoms, Inc., was cut into a size having a width of 75 mm and a length of 120 mm, and a resin molded article (substrate) was subjected to masking treatment by applying the cut tape to the resin molded article (substrate) in the range of 75 mm × 120 mm from the end portion thereof (the exposed portion of the substrate surface had a width of 45 mm and a length of 120 mm). The resultant resin molded article (substrate) was set in three-dimensional decorative thermoforming apparatus NGF-0406-SW so that the masking surface of the resin molded article (substrate) was in contact with a decorative film, performing three-dimensional decorative thermoforming.

The decorative film surface of the resultant decorative molded article was cut using a cutter to the surface of the substrate with a width of 10 mm in the direction perpendicular to the longitudinal direction of the adhesive tape, preparing a test specimen. In the obtained test specimen, the bonded surface of the substrate to the decorative film has a width of 10 mm a length of 45 mm. The test specimen was fitted to a tensile tester so that an angle between the substrate portion and the decorative film portion in the test specimen became 180°, and 180° peel strength measurement for the bonded surface was conducted at a pulling rate of 200 mm/min, and a maximum strength (N/10 mm) upon peeling or at breakage was measured 5 times, and an average of the measured strengths was determined as an adhesive force. The test was conducted at 23°C at 50% RH.

(3) Gloss

With respect to a decorative molded article having a decorative film stuck thereon, a gloss at an almost middle portion was measured at an incident angle of 60° using a GLOSS meter Gloss Meter VG2000, manufactured by Nippon Denshoku Industries Co., Ltd. The method for measurement was in accordance with JIS-Z-8741. A surface gloss of a decorative film before subjected to decorative forming was preliminarily measured by the same method, and a difference in the gloss between the films before and after subjected to decorative forming was determined, and a change of the surface gloss was evaluated.

(4) Evaluation of recycling properties

The obtained decorative molded article was ground, and a recycled molded article was produced from the ground material by injection molding in the same manner as in the production of a resin molded article (substrate), and the appearance of the recycled molded article was visually observed, and evaluated in accordance with the following criteria.

○: No insufficient dispersion is caused, for example, no fish eye is caused, and the appearance is excellent.

×: The appearance is such poor that a fish eye is caused in an injected specimen.

3. Preparation of a resin molded article (substrate)

(1) Polypropylene resin used in the resin molded article

The following polypropylene resin was used.

(Z-1): Propylene homopolymer (MFR = 40 g/10 minutes; Tm = 165°C), trade name "NOVATEC (registered trademark)

MA04H", manufactured by Japan Polypropylene Corporation

(2) Production of a resin molded article (substrate)

An injection molded article was obtained using propylene homopolymer (Z-1) in the same manner as in "3. Production of a resin molded article (substrate)" in "Examples A and B".

(Test Example 1)

[Materials used]

(1) Polypropylene resin

The following polypropylene resins were used.

(A-1): Propylene-α-olefin copolymer produced using a metallocene catalyst (MFR = 7.0 g/10 minutes; Tm = 125°C; Mw/Mn = 2.5), trade name "WINTEC (registered trademark) WFX4M", manufactured by Japan Polypropylene Corporation
(A-6): Propylene-α-olefin copolymer (MFR = 5.0 g/10 minutes; Tm = 127°C; Tc = 86°C; Mw/Mn = 4.0), trade name "NOVATEC (registered trademark) FX4G", manufactured by Japan Polypropylene Corporation
(B-1): Propylene homopolymer produced using a Ziegler-Natta catalyst (MFR = 2.4 g/10 minutes; Tm = 161°C; Tc = 112°C), trade name "NOVATEC (registered trademark) FY6", manufactured by Japan Polypropylene Corporation
(B-2): Propylene homopolymer produced using a Ziegler-Natta catalyst (MFR = 0.4 g/10 minutes; Tm = 161°C; Tc = 114°C; Mw/Mn = 4.9), trade name "NOVATEC (registered trademark) EA9", manufactured by Japan Polypropylene Corporation
(H-1): Propylene homopolymer (MFR = 10 g/10 minutes; Tm = 161°C; tensile modulus = 1,600 MPa), trade name "NOVATEC (registered trademark) FA3KM", manufactured by Japan Polypropylene Corporation

(H-1-1): Polypropylene resin composition (MFR = 10 g/10 minutes; Tm = 164°C) having 0.4 part by weight of a nucleating agent (trademark "Millad NX8000J", manufactured by Milliken Japan Co. Ltd.) blended with 100 parts by weight of polypropylene resin (A-1)
(H-1-3): Polypropylene resin composition (MFR = 10 g/10 minutes; Tm = 163°C) having 0.2 part by weight of a nucleating agent (trade name "ADK STAB NA-11", manufactured by ADEKA Corporation) blended with 100 parts by weight of polypropylene resin (A-1)
(H-1-4): Polypropylene resin composition (MFR = 10 g/10 minutes; Tm = 163°C) having 0.2 part by weight of a nucleating agent (trade name "ADK STAB NA-21", manufactured by ADEKA Corporation) blended with 100 parts by weight of polypropylene resin (A-1)
(H-1-5): Polypropylene resin composition (MFR = 10 g/10 minutes; Tm = 163°C) having 0.2 part by weight of a nucleating agent (trade name "IRGACLEAR XT 386", manufactured by BASF Japan Ltd.) blended with 100 parts by weight of polypropylene resin (A-1)

Example C1-3

• Production of a decorative film

There was used a three-type three-layer T-die having a lip opening of 0.8 mm and having a dice width of 400 mm, to which a seal layer extruder-1 having a bore diameter of 30 mm (diameter), an extruder-2 having a bore diameter of 40 mm (diameter), and a surface decorative layer extruder-3 having a bore diameter of 30 mm (diameter) were connected. Polypropylene resin (A-1) was charged into the seal layer extrudex-1, polypropylene resin (B-1) was charged into the extruder-2, and polypropylene resin (H-1-3) was charged into the surface decorative layer extruder-3, and melt extrusion was conducted under conditions such that the resin temperature was 240°C, the extrusion rate of the seal layer extruder-1 was 4 kg/h, the extrusion rate of the extruder-2 was 8 kg/h, and the extrusion rate of the surface decorative layer extruder-3 was 4 kg/h.
The melt-extruded film was cooled and set while permitting a seal layer (I) to be in contact with a cooling roll rotating at 3 m/min at 80°C to obtain a three-layer unstretched film in which a surface decorative layer (III) having a thickness of 50 μm, a layer (II) having a thickness of 100 μm, and the seal layer (I) having a thickness of 50 μm were stacked on one another.

• Three-dimensional decorative thermoforming

The above-obtained injection molded article comprising polypropylene resin (Z-1) was used as resin molded article (substrate) 5.

As a three-dimensional decorative thermoforming apparatus, "NGF-0406-SW", manufactured by Fu-se Vacuum Forming Ltd., was used. As shown in Figs. 2 to 7, a decorative film 1 was cut into a size of width: 250 mm length: 350 mm so that the seal layer (I) faced the substrate (resin molded article 5) and the longitudinal direction corresponded to the MD direction of the film, and set in a film fixing fixture 13 having an opening size of 210 mm 300 mm. The resin molded article 5 was stuck through "NICETACK NW-K15", manufactured by Nichiban Co., Ltd., onto a sample holder having a height of 20 mm set on a table 14 positioned below the fixture 13. The fixture 13 and the table 14 were placed in upper and lower chamber boxes 11 and 12, and the upper and lower chamber boxes 11 and 12 were closed so that the insides of the chamber boxes was in a closed state. The chamber boxes were divided by the decorative film 1 into upper and lower portions. The insides of the upper and lower chamber boxes 11 and 12 were evacuated and, in a state such that the pressure was reduced from atmospheric pressure (101.3 kPa) to 1.0 kPa, a far infrared heater 15 installed onto the upper chamber box 11 was turned on at an output of 80% to heat the decorative film 1. During the heating, evacuation was continued, and the pressure was finally reduced to 0.1 kPa. 5 Seconds after a spring back phenomenon such that the decorative film 1 was heated and temporarily sagged and then sprang back was completed, the table 14 placed in the lower chamber box 12 was moved upwards to press the resin molded article 5 against the decorative film 1, and immediately compressed air was introduced so that the pressure in the upper chamber box 11 became 270 kPa to cause the resin molded article 5 and the decorative film 1 to closely adhere to each other. Thus, a three-dimensional decorative thermoformed article (decorative molded article 6) in which the decorative film 1 was stuck to the upper surface and side of the resin molded article 5 was obtained. The results of the evaluation are shown in Table 4.

Example C1-4

The forming and evaluation were performed in substantially the same manner as in Example C1-3 except that polypropylene resin (H-1-3) for the surface decorative layer in the production of the decorative film in Example C1-3 was changed to polypropylene resin (H-1-4). The results of the evaluation are shown in Table 4.

Example C1-5

The forming and evaluation were performed in substantially the same manner as in Example C1-3 except that polypropylene resin (H-1-3) for the surface decorative layer in the production of the decorative film in Example C1-3 was changed to polypropylene resin (H-1-5). The results of the evaluation are shown in Table 4.

Example C1-6

The forming and evaluation were performed in substantially the same manner as in Example C1-3 except that polypropylene resin (B-1) for layer (II) was changed to polypropylene resin (B-2), and polypropylene resin (A-1) for the seal layer was changed to polypropylene resin (A-6), in the production of the decorative film in Example C1-3. The results of the evaluation are shown in Table 4.

Comparative Example C1-1

The forming and evaluation were performed in substantially the same manner as in Example C1-3 except that polypropylene resin (H-1-3) for the surface decorative layer in the production of the decorative film in Example C1-3 was changed to polypropylene resin (H-1). The results of the evaluation are shown in Table 4.

Comparative Example C1-4

The forming and evaluation were performed in substantially the same manner as in Example C1-3 except that polypropylene resin (H-1-3) for the surface decorative layer was changed to polypropylene resin (H-1-1), and polypropylene resin (A-1) for seal layer (I) was changed to polypropylene resin (B-2), in the production of the decorative film in Example C1-3, and that, in the three-dimensional decorative thermoforming, forming was performed 50 seconds after a spring back phenomenon was completed. The results of the evaluation are shown in Table 4.

[Table 4]

| | | | | Unit | Example C1-3 | Example C1-4 | Example C1-5 | Example C1-6 | Comparative Example C1-1 | Comparative Example C1-4 |
|---|---|---|---|---|---|---|---|---|---|---|
| Decorative film | Surface decorative layer (III) | | Type | | H-1-3 | H-1-4 | H-1-5 | H-1-3 | H-1 | H-1-1 |
| | | | MFR | g/10 min. | 10 | 10 | 10 | 10 | 10 | 10 |
| | Layer (II) | Resin (B) | Type | | B-1 | B-1 | B-1 | B-2 | B-1 | B-1 |
| | | | MFR | g/10 min. | 2.4 | 2.4 | 2.4 | 0.4 | 2.4 | 2.4 |
| | | | Tm | °C | 161 | 161 | 161 | 161 | 161 | 161 |
| | Seal layer (I) | Resin (A) | Type | | A-1 | A-1 | A-1 | A-6 | A-1 | B-2 |
| | | | MFR | g/10 min. | 7.0 | 7.0 | 7.0 | 5.0 | 7.0 | 0.4 |
| | | | Tm | °C | 125 | 125 | 125 | 127 | 125 | 161 |
| | | | Mw/Mn | | 2.5 | 2.5 | 2.5 | 4.0 | 2.5 | 4.9 |
| | MFR(B)/MFR(A) | | | | 0.34 | 0.34 | 0.34 | 0.08 | 0.34 | 6.00 |
| Substrate | | Type | | | Z-1 | Z-1 | Z-1 | Z-1 | Z-1 | Z-1 |
| Heating time after spring back | | | | Sec. | 5 | 5 | 5 | 5 | 5 | 50 |
| Thermoformability | | | | | ○ | ○ | ○ | ○ | ○ | △ |
| Adhesive force | | | | N/10mm | 21 | 19 | 20 | 23 | 20 | 46 |
| Surface gloss | Gloss of decorative film before decorative forming | | | | 90 | 91 | 96 | 91 | 55 | 100 |
| | Gloss of decorative film after decorative forming | | | | 67 | 80 | 71 | 68 | 20 | 15 |
| | ⊿Gloss | | | | 23 | 11 | 25 | 23 | 35 | 85 |
| Appearance of recycled molded article | | | | | ○ | ○ | ○ | ○ | ○ | ○ |

With respect to the decorative molded article obtained using each of the decorative films in Examples C1-3 to -6, a nucleating agent is contained in any one of the layers of the decorative film, and the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A). Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C1-1, which does not contain a nucleating agent in any of the layers, the decorative film had a low surface gloss, and, after the decorative forming, the surface of the film became further foggy, and a lowering of the surface gloss was marked. In Comparative Example C1-4 in which MFR (A) is 0.5 g/10 minutes or less and MFR (B) is larger than MFR (A), forming was performed 50 seconds after a spring back phenomenon was completed so that the heating time in the three-dimensional decorative forming was extended, and therefore adhesion was exhibited, but the nucleating agent added to surface decorative layer (III) volatilized, and, after the decorative forming, the surface of the film became foggy, and a lowering of the surface gloss was marked.

(Test Example 2)

[Materials used]

Polypropylene resin

The following polypropylene resin was used, in addition to the polypropylene resins used in (Test Example 1).
(B-1-3): Polypropylene resin composition (MFR = 2.4 g/10 minutes; Tm = 161°C; Tc = 120°C) having 0.2 part by weight of a nucleating agent (trade name "ADK STAB NA-11", manufactured by ADEKA Corporation) blended with 100 parts by weight of polypropylene resin (B-1)

Example C2-3

The forming and evaluation were performed in substantially the same manner as in Example C1-3 except that polypropylene resin (A-1) for seal layer (I) in the production of the decorative film in Example C1-3 was changed to polypropylene resin (A-6), and that, in the three-dimensional decorative thermoforming, forming was performed 10 seconds after a spring back phenomenon was completed. The results of the evaluation are shown in Table 5.

Example C2-4

The forming and evaluation were performed in substantially the same manner as in Example C2-3 except that polypropylene resin (H-1-3) for the surface decorative layer in the production of the decorative film in Example C2-3 was changed to polypropylene resin (H-1-4). The results of the evaluation are shown in Table 5.

Example C2-5

The forming and evaluation were performed in substantially the same manner as in Example C2-3 except that polypropylene resin (H-1-3) for the surface decorative layer in the production of the decorative film in Example C2-3 was changed to polypropylene resin (H-1-5). The results of the evaluation are shown in Table 5.

Example C2-7

There was used a two-type two-layer T-die having a lip opening of 0.8 mm and having a dice width of 400 mm, to which a seal layer extruder-1 having a bore diameter of 30 mm (diameter) and an extruder-2 having a bore diameter of 40 mm (diameter) were connected. Polypropylene resin (A-6) was charged into the seal layer extruder-1, and polypropylene resin (B-1-3) was charged into the extruder-2, and melt extrusion was conducted under conditions such that the resin temperature was 240°C, the extrusion rate of the seal layer extruder-1 was 4 kg/h, and the extrusion rate of the extruder-2 was 12 kg/h.

The melt-extruded film was cooled and set while permitting a seal layer (I) to be in contact with a cooling roll rotating at 3 m/min at 80°C to obtain a two-layer unstretched film in which the seal layer (I) having a thickness of 50 μm and a layer (II) having a thickness of 150 μm were stacked on one another.

Using the unstretched film obtained in the above-mentioned production of decorative film, three-dimensional decorative thermoforming was conducted in the same manner as in Example C2-3, and evaluation was performed. The results of the evaluation are shown in Table 5.

Comparative Example C2-1

The forming and evaluation were performed in substantially the same manner as in Example C2-3 except that polypropylene resin (H-1-3) for the surface decorative layer in the production of the decorative film in Example C2-3 was changed to polypropylene resin (H-1). The results of the evaluation are shown in Table 5.

[Table 5]

| | | | | Unit | Example C2-3 | Example C2-4 | Example C2-5 | Example C2-7 | Comparative Example C2-1 |
|---|---|---|---|---|---|---|---|---|---|
| Decorative film | Surface decorative layer (III) | | Type | | H-1-3 | H-1-4 | H-1-5 | - | H-1 |
| | | | MFR | g/10 min. | 10 | 10 | 10 | - | 10 |
| | Layer (II) | Resin (B) | Type | | B-1 | B-1 | B-1 | B-1-3 | B-1 |
| | | | MFR | g/10 min. | 2.4 | 2.4 | 2.4 | 2.4 | 2.4 |
| | | | Tc | °C | 112 | 112 | 112 | 120 | 112 |
| | Seal layer (I) | Resin (A) | Type | | A-6 | A-6 | A-6 | A-6 | A-6 |
| | | | MFR | g/10 min. | 5.0 | 5.0 | 5.0 | 5.0 | 5.0 |
| | | | Tc | °C | 86 | 86 | 86 | 86 | 86 |
| | | | Mw/Mn | | 4.0 | 4.0 | 4.0 | 4.0 | 4.0 |
| | MFR(B)/MFR(A) | | | | 0.48 | 0.48 | 0.48 | 0.48 | 0.48 |
| Substrate | | Type | | | Z-1 | Z-1 | Z-1 | Z-1 | Z-1 |
| Heating time after spring back | | | | Sec. | 10 | 10 | 10 | 10 | 10 |
| Thermoformability | | | | | ○ | ○ | ○ | ○ | ○ |
| Adhesive force | | | | N/10mm | 25 | 26 | 24 | 24 | 23 |
| Surface gloss | Gloss of decorative film before decorative forming | | | | 90 | 92 | 96 | 89 | 55 |
| | Gloss of decorative film after decorative forming | | | | 66 | 79 | 70 | 66 | 19 |
| | ⊿Gloss | | | | 24 | 13 | 26 | 23 | 36 |
| Appearance of recycled molded article | | | | | ○ | ○ | ○ | ○ | ○ |

With respect to the decorative molded article obtained using each of the decorative films in Examples C2-3 to -5 and -7, a nucleating agent is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further the crystallization temperature (Tc (A)) of the polypropylene resin in seal layer (I) is lower than 100°C, and the crystallization temperature (Tc (B)) of the polypropylene resin in layer (II) is higher than Tc (A). Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C2-1, which does not contain a nucleating agent in any of the layers, the decorative film had a low surface gloss, and, after the decorative forming, the surface of the film became further foggy, and a lowering of the surface gloss was marked.

(Test Example 3)

[Materials used]

The following resin was used, in addition to the resins used in (Test Example 1).
(A-5): Propylene-α-olefin copolymer produced using a Ziegler-Natta catalyst (MFR = 7.0 g/10 minutes; Tm = 146°C; Tc = 115°C; Mw/Mn = 4.0; tensile modulus = 1,200 MPa; crystallization start temperature = 111°C; isothermal crystallization time (t) = 263 seconds (measured at 121°C)), trade name "NOVATEC (registered trademark) FW3GT", manufactured by Japan Polypropylene Corporation

Ethylene-α-olefin random copolymer

The following ethylene-α-olefin random copolymer was used. (C-1): Ethylene-butene random copolymer (MFR = 6.8 g/10 minutes; Tm = 66°C; density = 0.885 g/cm$^3$; ethylene content = 84% by weight); trade name "TAFMER A4085S", manufactured by Mitsui Chemicals, Inc.

Example C3-3

The forming and evaluation were performed in substantially the same manner as in Example C1-3 except that polypropylene resin (A-1) for seal layer (I) in the production of the decorative film in Example C1-3 was changed to a mixture of polypropylene resin (A-5) and ethylene-α-olefin random copolymer (C-1) which were blended in a weight ratio of 85:15, and that, in the three-dimensional decorative thermoforming, forming was performed immediately after a spring back phenomenon was completed (that is, the heating time after the spring back was 0 second). The results of the evaluation are shown in Table 6.

Example C3-4

The forming and evaluation were performed in substantially the same manner as in Example C3-3 except that polypropylene resin (H-1-3) for the surface decorative layer in the production of the decorative film in Example C3-3 was changed to polypropylene resin - (H-1-4). The results of the evaluation are shown in Table 6.

Example C3-5

The forming and evaluation were performed in substantially the same manner as in Example C3-3 except that polypropylene resin (H-1-3) for the surface decorative layer in the production of the decorative film in Example C3-3 was changed to polypropylene resin (H-1-5). The results of the evaluation are shown in Table 6.

Comparative Example C3-1

The forming and evaluation were performed in substantially the same manner as in Example C3-3 except that polypropylene resin (H-1-3) for the surface decorative layer in the production of the decorative film in Example C3-3 was changed to polypropylene resin (H-1). The results of the evaluation are shown in Table 6.

[Table 6]

| | | | | Unit | Example C3-3 | Example C3-4 | Example C3-5 | Comparative Example C3-1 |
|---|---|---|---|---|---|---|---|---|
| Decorative film | Surface decorative layer (III) | | Type | | H-1-3 | H-1-4 | H-1-5 | H-1 |
| | | | MFR | g/10 min. | 10 | 10 | 10 | 10 |
| | Layer (II) | Resin (B) | Type | | B-1 | B-1 | B-1 | B-1 |
| | | | MFR | g/10 min. | 2.4 | 2.4 | 2.4 | 2.4 |
| | Seal layer (I) | Polypropylene resin (A) | Type | | A-5 | A-5 | A-5 | A-5 |
| | | | MFR | g/10 min. | 7.0 | 7.0 | 7.0 | 7.0 |
| | | | Amount | wt% | 85 | 85 | 85 | 85 |
| | | Ethylene-α-olefin random copolymer (C) | Type | | C-1 | C-1 | C-1 | C-1 |
| | | | MFR | g/10 min. | 6.8 | 6.8 | 6.8 | 6.8 |
| | | | Amount | wt% | 15 | 15 | 15 | 15 |
| | MFR(B)/MFR(A) | | | | 0.34 | 0.34 | 0.34 | 0.34 |
| Substrate | Type | | | | Z-1 | Z-1 | Z-1 | Z-1 |
| Heating time after spring back | | | | Sec. | 0 | 0 | 0 | 0 |
| Thermoformability | | | | | O | O | O | O |
| Adhesive force | | | | N/10mm | 36 | 34 | 33 | 34 |
| Surface gloss | Gloss of decorative film before decorative forming | | | | 89 | 90 | 97 | 54 |
| | Gloss of decorative film after decorative forming | | | | 66 | 78 | 68 | 19 |
| | ⊿Gloss | | | | 23 | 12 | 29 | 35 |
| Appearance of recycled molded article | | | | | O | O | O | O |

With respect to the decorative molded article obtained using each of the decorative films in Examples C3-3 to -5, a nucleating agent is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further seal layer (I) comprises resin composition (XX3) in which the weight ratio of polypropylene resin (A) and ethylene-α-olefin random copolymer (C) is 97:3 to 5:95, and ethylene-α-olefin random copolymer (C) has (c1) an ethylene content [E (C)] of 65% by weight or more, (c2) a density of 0.850 to 0.950 g/cm$^3$, and (c3) a melt flow rate (MFR (C)) of 0.1 to 100 g/10 minutes. Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C3-1, which does not contain a nucleating agent in any of the layers, the decorative film had a low surface gloss, and, after the decorative forming, the surface of the film became further foggy, and a lowering of the surface gloss was marked.

(Test Example 4)

[Materials used]

Polypropylene resin

The polypropylene resins used in (Test Example 1) and (Test Example 3) were used.

Thermoplastic elastomer (D)

The following thermoplastic elastomer was used.
(D-I): Propylene-butene random copolymer comprising propylene as a main component (MFR = 7.0 g/10 minutes; Tm = 75°C; density = 0.885 g/cm$^3$; tensile modulus = 290 MPa; propylene content = 69% by weight; butene content = 31% by weight; ethylene content [E] = 0% by weight), trade name "TAFMER XM7070", manufactured by Mitsui Chemicals, Inc.

Example C4-3

The forming and evaluation were performed in substantially the same manner as in Example C1-3 except that polypropylene resin (A-1) for seal layer (I) in the production of the decorative film in Example C1-3 was changed to a mixture of polypropylene resin (A-5) and thermoplastic elastomer (D-I) which were blended in a weight ratio of 85:15. The results of the evaluation are shown in Table 7.

Example C4-4

The forming and evaluation were performed in substantially the same manner as in Example C4-3 except that polypropylene resin (H-1-3) for the surface decorative layer in the production of the decorative film in Example C4-3 was changed to polypropylene resin (H-1-4). The results of the evaluation are shown in Table 7.

Example C4-5

The forming and evaluation were performed in substantially the same manner as in Example C4-3 except that polypropylene resin (H-1-3) for the surface decorative layer in the production of the decorative film in Example C4-3 was changed to polypropylene resin (H-1-5). The results of the evaluation are shown in Table 7.

Comparative Example C4-1

The forming and evaluation were performed in substantially the same manner as in Example C4-3 except that polypropylene resin (H-1-3) for the surface decorative layer in the production of the decorative film in Example C4-3 was changed to polypropylene resin (H-1). The results of the evaluation are shown in Table 7.

[Table 7]

| | | | | Unit | Example C4-3 | Example C4-4 | Example C4-5 | Comparative Example C4-1 |
|---|---|---|---|---|---|---|---|---|
| Decorative film | Surface decorative layer (III) | | Type | | H-1-3 | H-1-4 | H-1-5 | H-1 |
| | | | MFR | g/10 min. | 10 | 10 | 10 | 10 |
| | Layer (II) | Resin (B) | Type | | B-1 | B-1 | B-1 | B-1 |
| | | | MFR | g/10 min. | 2.4 | 2.4 | 2.4 | 2.4 |
| | Seal layer (I) | Polypropylene resin (A) | Type | | A-5 | A-5 | A-5 | A-5 |
| | | | MFR | g/10 min. | 7.0 | 7.0 | 7.0 | 7.0 |
| | | | Amount | wt% | 85 | 85 | 85 | 85 |
| | | Thermoplastic elastomer (D) | Type | | D-1 | D-1 | D-1 | D-1 |
| | | | MFR | g/10 min. | 7.0 | 7.0 | 7.0 | 7.0 |
| | | | Amount | wt% | 15 | 15 | 15 | 15 |
| | MFR(B)/MFR(A) | | | | 0.34 | 0.34 | 0.34 | 0.34 |
| Substrate | | Type | | | Z-1 | Z-1 | Z-1 | Z-1 |
| Heating time after spring back | | | | Sec. | 5 | 5 | 5 | 5 |
| Thermoformability | | | | | ○ | ○ | ○ | ○ |
| Adhesive force | | | | N/10mm | 32 | 34 | 32 | 35 |
| Surface gloss | Gloss of decorative film before decorative forming | | | | 89 | 91 | 97 | 54 |
| | Gloss of decorative film after decorative forming | | | | 68 | 77 | 67 | 19 |
| | ⊿Gloss | | | | 21 | 14 | 30 | 35 |
| Appearance of recycled molded article | | | | | ○ | ○ | ○ | ○ |

With respect to the decorative molded article obtained using each of the decorative films in Examples C4-3 to -5, a nucleating agent is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further seal layer (I) comprises resin composition (XX4) in which the weight ratio of polypropylene resin (A) and thermoplastic elastomer (D) is 97:3 to 5:95, and thermoplastic elastomer (D) is (d1) a thermoplastic elastomer comprising at least one of propylene and butene as a main component, and has (d2) a density of 0.850 to 0.950 g/cm$^3$, (d3) a melt flow rate (MFR (D)) of 0.1 to 100 g/10 minutes, and (d4) a tensile modulus which is smaller than that of the polypropylene resin (A). Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C4-1, which does not contain a nucleating agent in any of the layers, the decorative film had a low surface gloss, and, after the decorative forming, the surface of the film became further foggy, and a lowering of the surface gloss was marked.

(Test Example 5)

[Materials used]

Polypropylene resin

As a polypropylene resin for seal layer (I), the following polypropylene resin was used.
(A-5): Propylene-α-olefin copolymer (MFR = 7.0 g/10 minutes; Tm = 146°C; crystallization start temperature = 111°C; isothermal crystallization time (t) = 263 seconds (measured at 121°C)), trade name "NOVATEC (registered trademark) FW3GT", manufactured by Japan Polypropylene Corporation

With respect to layer (II) and surface decorative layer (III), the polypropylene resins used in (Test Example 1) were used.

Thermoplastic resin (E)

The following thermoplastic resin was used.
(E-l): Hydrogenated styrene elastomer (HSBR): trade name "DYNARON 1320P", manufactured by JSR Corporation

Example C5-3

The forming and evaluation were performed in substantially the same manner as in Example C1-3 except that polypropylene resin (A-1) for seal layer (I) in the production of the decorative film in Example C1-3 was changed to a mixture of polypropylene resin (A-5) and thermoplastic resin (E-1) which were blended in a weight ratio of 50:50, and that, in the three-dimensional decorative thermoforming, forming was performed immediately after a spring back phenomenon was completed (that is, the heating time after the spring back was 0 second). The results of the evaluation are shown in Table 8.

Example C5-4

The forming and evaluation were performed in substantially the same manner as in Example C5-3 except that polypropylene resin (H-1-3) for the surface decorative layer in the production of the decorative film in Example C5-3 was changed to polypropylene resin (H-1-4). The results of the evaluation are shown in Table 8.

Example C5-5

The forming and evaluation were performed in substantially the same manner as in Example C5-3 except that polypropylene resin (H-1-3) for the surface decorative layer in the production of the decorative film in Example C5-3 was changed to polypropylene resin (H-1-5). The results of the evaluation are shown in Table 8.

Comparative Example C5-1

The forming and evaluation were performed in substantially the same manner as in Example C5-3 except that polypropylene resin (H-1-3) for the surface decorative layer in the production of the decorative film in Example C5-3 was changed to polypropylene resin (H-1). The results of the evaluation are shown in Table 8.

[Table 8]

| | | | | Unit | Example C5-3 | Example C5-4 | Example C5-5 | Comparative Example C5-1 |
|---|---|---|---|---|---|---|---|---|
| Decorative film | Surface decorative layer (III) | | Type | | H-1-3 | H-1-4 | H-1-5 | H-1 |
| | | | MFR | g/10 min. | 10 | 10 | 10 | 10 |
| | Layer (II) | Resin (B) | Type | | B-1 | B-1 | B-1 | B-1 |
| | | | MFR | g/10 min. | 2.4 | 2.4 | 2.4 | 2.4 |
| | Seal layer (I) | Polypropylene resin (A) | Type | | A-5 | A-5 | A-5 | A-5 |
| | | | MFR | g/10 min. | 7.0 | 7.0 | 7.0 | 7.0 |
| | | | Isothermal crystallization time t(A) | Sec. | 263 | 263 | 263 | 263 |
| | | | Amount | wt% | 50 | 50 | 50 | 50 |
| | | Thermoplastic resin (E) | Type | | E-1 | E-1 | E-1 | E-1 |
| | | | Amount | wt% | 50 | 50 | 50 | 50 |
| | | Resin composition (XX5) | Isothermal crystallization time t(XX5) | Sec. | 2590 | 2590 | 2590 | 2590 |
| | | t(XX5)/t(A) | | | 9.8 | 9.8 | 9.8 | 9.8 |
| | MFR(B)/MFR(A) | | | | 0.34 | 0.34 | 0.34 | 0.34 |
| Substrate | | Type | | | Z-1 | Z-1 | Z-1 | Z-1 |
| Heating time after spring back | | | | Sec. | 0 | 0 | 0 | 0 |
| Thermoformability | | | | | ○ | ○ | ○ | ○ |
| Adhesive force | | | | N/10mm | 38 | 37 | 38 | 36 |
| Surface gloss | Gloss of decorative film before decorative forming | | | | 89 | 92 | 97 | 54 |
| | Gloss of decorative film after decorative forming | | | | 69 | 78 | 68 | 20 |
| | ⊿Gloss | | | | 20 | 14 | 29 | 34 |
| Appearance of recycled molded article | | | | | ○ | ○ | ○ | ○ |

With respect to the decorative molded article obtained using each of the decorative films in Examples C5-3 to -5, a nucleating agent is contained in any one of the layers of the decorative film; the melt flow rate (MFR (A)) of polypropylene resin (A) in seal layer (1) is more than 0.5 g/10 minutes, and the melt flow rate (MFR (B)) of polypropylene resin (B) in layer (II) is smaller than MFR (A); and further seal layer (I) comprises resin composition (XX5) in which the weight ratio of polypropylene resin (A) and thermoplastic resin (E) is 97:3 to 5:95, and thermoplastic resin (E) contains (e1) at least one of an alicyclic hydrocarbon group and an aromatic hydrocarbon group, and (xx1) the isothermal crystallization time (t(XX5)) (second) of resin composition (XX5) is 1.5 times or more as long as the isothermal crystallization time (t(A)) (second) of polypropylene resin (A). Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C5-1, which does not contain a nucleating agent in any of the layers, the decorative film had a low surface gloss, and, after the decorative forming, the surface of the film became further foggy, and a lowering of the surface gloss was marked.

(Test Example 6)

[Materials used]

The following polypropylene resin was used, in addition to the polypropylene resins used in (Test Example 1).

Production of propylene-ethylene block copolymer (F)

As propylene-ethylene block copolymer (F) for seal layer (I) in the decorative film, propylene-ethylene block copolymer (F-1) obtained in the following Production Example was used. The conditions for polymerization and the results of the polymerization are shown in Table 9-1, and the results of the polymer analysis are shown in Table 9-2.

[Production Example F-1: Production of propylene-ethylene block copolymer (F-1)]

Analysis of the composition of a catalyst

Ti Content: A sample was accurately weighed and hydrolyzed, and a Ti content of the sample was measured using colorimetry. With respect to the sample obtained after the preliminary polymerization, a Ti content was calculated using a weight obtained by subtracting the weight of the preliminary polymerization polymer from that of the sample.

Silicon compound content: A sample was accurately weighed and decomposed using methanol. A silicon

compound concentration in the resultant methanol solution was determined by comparing with the standard sample using gas chromatography. From the silicon compound concentration in the methanol and the weight of the sample, a content of the silicon compound in the sample was calculated. With respect to the sample obtained after the preliminary polymerization, a silicon compound content was calculated using a weight obtained by subtracting the weight of the preliminary polymerization polymer from that of the sample.

Preparation of a preliminary polymerization catalyst

(1) Preparation of a solid catalyst

An autoclave having a capacity of 10 L and having a stirrer was satisfactorily purged with nitrogen, and 2 L of purified toluene was introduced into the autoclave. 200 g of magnesium diethoxide [$Mg(OEt)_2$] was charged into the autoclave at room temperature, and 1 L of titanium tetrachloride ($TiCl_4$) was slowly added. The temperature was increased to 90°C, and 50 ml of di-n-butyl phthalate was introduced into the autoclave. Then, the temperature was increased to 110°C and a reaction was conducted for 3 hours. The resultant reaction product was satisfactorily washed with purified toluene. Then, purified toluene was introduced so that the amount of the whole of the resultant mixture became 2 L. 1 L of $TiCl_4$ was added at room temperature to the mixture, and the temperature was increased to 110°C and a reaction was conducted for 2 hours. The resultant reaction product was satisfactorily washed with purified toluene. Then, purified toluene was introduced so that the amount of the whole of the resultant mixture became 2 L. 1 L of $TiCl_4$ was added at room temperature to the mixture, and the temperature was increased to 110°C and a reaction was conducted for 2 hours. The resultant reaction product was satisfactorily washed with purified toluene. Further, using purified n-heptane, toluene was replaced by n-heptane to obtain a slurry of a solid component. A part of the obtained slurry was sampled and dried. From an analysis made on the resultant slurry, it was found that the solid component had a Ti content of 2.7% by weight.

Subsequently, an autoclave having a capacity of 20 L and having a stirrer was satisfactorily purged with nitrogen, and 100 g of the above-obtained slurry of the solid component, in terms of the solid component, was introduced into the autoclave. Purified n-heptane was introduced so that the solid component concentration became 25 g/L. 50 ml of silicon tetrachloride ($SiCl_4$) was added and a reaction was conducted at 90°C for one hour. The resultant reaction product was satisfactorily washed with purified n-heptane.

Then, purified n-heptane was introduced so that the level of the resultant mixture became 4 L. 30 ml of dimethyldivinylsilane, 30 ml of diisopropyldimethoxysilane [$i\text{-}Pr_2Si(OMe)_2$], and 80 g of an n-heptane diluted solution of triethyl aluminum ($Et_3Al$), in terms of $Et_3Al$, were added to the mixture, and a reaction was conducted at 40°C for 2 hours. The resultant reaction product was satisfactorily washed with purified n-heptane to obtain a solid catalyst. A part of the obtained slurry of the solid catalyst was sampled and dried, and analyzed. The solid catalyst contained Ti in an amount of 1.2% by weight and $i\text{-}Pr_2Si(OMe)_2$ in an amount of 8.9% by weight.

(2) Preliminary polymerization

Using the above-obtained solid catalyst, preliminary polymerization was conducted in accordance with the procedure described below. Purified n-heptane was introduced into the above-mentioned slurry so that the solid catalyst concentration of the resultant slurry became 20 g/L. The slurry was cooled to 10°C, and then 10 g of an n-heptane diluted solution of $Et_3Al$, in terms of $Et_3Al$, was added to the slurry, and 280 g of propylene was fed over 4 hours. After completion of the feeding of propylene, a reaction was further conducted for 30 minutes. Then, the vapor phase portion was satisfactorily purged with nitrogen, and the resultant reaction product was satisfactorily washed with purified n-heptane. The obtained slurry was withdrawn from the autoclave, and subjected to vacuum drying to obtain a preliminary polymerization catalyst. The preliminary polymerization catalyst contained 2.5 g of polypropylene per 1 g of the solid catalyst. From an analysis made on the catalyst, it was found that a portion of the preliminary polymerization catalyst except the polypropylene contained Ti in an amount of 1.0% by weight and $i\text{-}Pr_2Si(OMe)_2$ in an amount of 8.3% by weight.

Using the obtained preliminary polymerization catalyst, production of propylene-ethylene block copolymer (F) was conducted in accordance with the procedure described below.

(3) Production of propylene-ethylene block copolymer (F)

Using a two-vessel continuous polymerization apparatus having two fluidized-bed polymerization vessels each having an internal volume of 2 $m^3$, which are connected in series, production of propylene-ethylene block copolymer (F) was conducted. The conditions for the production of propylene-ethylene block copolymer (F-1) are as shown in 6A-1 of Table 9-1. With respect to the propylene, ethylene, hydrogen, and nitrogen to be used, those which had been purified using a general purification catalyst were used. The production rate of component (F1) in a first polymerization vessel

and the production rate of component (F2) in a second polymerization vessel were determined from a value of the temperature of cooling water in the heat exchanger used for controlling the temperature of the polymerization vessel.

First polymerization step: Production of component (F1) comprising a propylene homopolymer

Homopolymerization of propylene was conducted using a first polymerization vessel. The polymerization temperature was 65°C, the total pressure was 3.0 MPaG (gauge pressure, this applies to the followings), and the powder hold amount was 40 kg. Propylene, hydrogen, and nitrogen were continuously fed to the polymerization vessel so that the propylene concentration and the hydrogen concentration became 70.83 mol% and 0.92 mol%, respectively. $Et_3Al$ as a cocatalyst was continuously fed at a rate of 5.0 g/hour. The above-obtained preliminary polymerization catalyst was continuously fed to the polymerization vessel so that the production rate of component (F1) in the first polymerization vessel became 20.0 kg/hour. The produced component (F1) was continuously withdrawn so that the powder hold amount remained constant at 40 kg. Component (F1) withdrawn from the first polymerization vessel was continuously fed to a second polymerization vessel, and production of component (F2) comprising a propylene-ethylene random copolymer was subsequently conducted.

Second polymerization step: Production of propylene-ethylene random copolymer component (F2)

Random copolymerization of propylene and ethylene was conducted using a second polymerization vessel. The polymerization temperature was 65°C, the total pressure was 2.0 MPaG, and the powder hold amount was 40 kg. Propylene, ethylene, hydrogen, and nitrogen were continuously fed to the polymerization vessel so that the propylene concentration, the ethylene concentration, and the hydrogen concentration became 54.29 mol%, 17.14 mol%, and 0.41 mol%, respectively. Ethanol which is a polymerization inhibitor was continuously fed so that the production rate of propylene-ethylene random copolymer component (F2) in the second polymerization vessel became 6.7 kg/h. The thus produced propylene-ethylene block copolymer (F) was continuously withdrawn so that the powder hold amount remained constant at 40 kg. Propylene-ethylene block copolymer (F) withdrawn from the second polymerization vessel was further transferred to a dryer and satisfactorily dried.

A part of the produced propylene-ethylene block copolymer (F) was analyzed. As a result, it was found that MFR (F) was 7.0 g/10 min and ethylene content E(F) was 9.5% by weight. From the production rate in the first polymerization step and the production rate in the second polymerization step, weight ratio W(F1) of component (F1) and weight ratio W(F2) of component (F2) were determined, and, as a result, weight ratio W(F1) and weight ratio W(F2) were 0.75 and 0.25, respectively.

From the obtained W(F1), W(F2), and E(F), ethylene content E(F2) of propylene-ethylene random copolymer component (F2) was calculated.

In the calculation, the following formula was used.

$$E(F2) = \{E(F) - E(F1) \times W(F1)\} \div W(F2)$$

Wherein component (F1) is a propylene homopolymer and hence E(F1) is 0% by weight. The above formula is obtained with respect to E(F2) by reforming the formula shown above for E(F).

Ethylene content E(F2) was 38.0% by weight.

[Table 9-1]

| Production Example | | | 6A-1 |
|---|---|---|---|
| First polymerization step | Propylene concentration | mol% | 70.83 |
| | Ethylene concentration | mol% | 0 |
| | Hydrogen concentration | mol% | 0.92 |
| Second polymerization step | Propylene concentration | mol% | 54.29 |
| | Ethylene concentration | mol% | 17.14 |
| | Hydrogen concentration | mol% | 0.41 |
| Polymerization results | First polymerization step | kg/hr | 20.0 |
| | Second polymerization step | kg/hr | 6.7 |
| | Total production rate | kg/hr | 26.7 |

The results of the polymer analysis of the above-mentioned propylene-ethylene block copolymer (F-1) are shown in Table 9-2.

[Table 9-2]

| Production Example | | | 6A-1 |
|---|---|---|---|
| Propylene-ethylene block copolymer (F) | MFR(F) | g/10 min. | 7.0 |
| | Tm(F) | °C | 161.0 |
| | E(F) | wt% | 9.5 |
| Component (F1) | W(F1) | wt% | 75 |
| | E(F1) | wt% | 0.0 |
| Component (F2) | W(F2) | wt% | 25 |
| | E(F2) | wt% | 38.0 |

Pelletizing of propylene-ethylene block copolymer (F)

0.05 Part by weight of tetrakis[methylene-3-(3',5'-di-t-butyl-4-hydroxyphenyl) propionate]methane, 0.10 part by weight of tris(2,4-di-t-butylphenyl) phosphite, and 0.05 part by weight of calcium stearate were uniformly mixed using a tumbler into 100 parts by weight of each propylene-ethylene block copolymer (F) obtained in Production Example F-1, and the resultant mixture was melt-kneaded at 230°C by means of a twin-screw extruder having a diameter of 35 mm to obtain pellets of propylene-ethylene block copolymer F-1.

Example C6-3

The forming and evaluation were performed in substantially the same manner as in Example C1-3 except that polypropylene resin (A-1) for seal layer (I) in the production of the decorative film in Example C1-3 was changed to propylene-ethylene block copolymer (F-1), and that, in the three-dimensional decorative thermoforming, forming was performed immediately after a spring back phenomenon was completed (that is, the heating time after the spring back was 0 second). The results of the evaluation are shown in Table 10.

Example C6-4

The forming and evaluation were performed in substantially the same manner as in Example C6-3 except that polypropylene resin (H-1-3) for the surface decorative layer in the production of the decorative film in Example C6-3 was changed to polypropylene resin (H-1-4). The results of the evaluation are shown in Table 10.

Example C6-5

The forming and evaluation were performed in substantially the same manner as in Example C6-3 except that polypropylene resin (H-1-3) for the surface decorative layer in the production of the decorative film in Example C6-3 was changed to polypropylene resin (H-1-5). The results of the evaluation are shown in Table 10.

Comparative Example C6-1

The forming and evaluation were performed in substantially the same manner as in Example C6-3 except that polypropylene resin (H-1-3) for the surface decorative layer in the production of the decorative film in Example C6-3 was changed to polypropylene resin (H-1). The results of the evaluation are shown in Table 10.

[Table 10]

| | | | | Unit | Example C6-3 | Example C6-4 | Example C6-5 | Comparative Example C6-1 |
|---|---|---|---|---|---|---|---|---|
| Decorative film | Surface decorative layer (III) | | Type | | H-1-3 | H-1-4 | H-1-5 | H-1 |
| | | | MFR | g/10 min. | 10 | 10 | 10 | 10 |
| | Layer (II) | Resin (B) | Type | | B-1 | B-1 | B-1 | B-1 |
| | | | MFR | g/10 min. | 2.4 | 2.4 | 2.4 | 2.4 |
| | Seal layer (I) | Propylene-ethylene block copolymer (F) | Type | | F-1 | F-1 | F-1 | F-1 |
| | | | MFR | g/10 min. | 7.0 | 7.0 | 7.0 | 7.0 |
| | MFR(B)/MFR(A) | | | | 0.34 | 0.34 | 0.34 | 0.34 |
| Substrate | | Type | | | Z-1 | Z-1 | Z-1 | Z-1 |
| Heating time after spring back | | | | Sec. | 0 | 0 | 0 | 0 |
| Thermoformability | | | | | ○ | ○ | ○ | ○ |
| Adhesive force | | | | N/10mm | 29 | 28 | 29 | 26 |
| Surface gloss | Gloss of decorative film before decorative forming | | | | 90 | 89 | 93 | 54 |
| | Gloss of decorative film after decorative forming | | | | 69 | 81 | 70 | 20 |
| | ⊿Gloss | | | | 21 | 8 | 23 | 34 |
| Appearance of recycled molded article | | | | | ○ | ○ | ○ | ○ |

With respect to the decorative molded article obtained using each of the decorative films in Examples C6-3 to -5, a nucleating agent is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further polypropylene resin (A) is propylene-ethylene block copolymer (F), and copolymer (F) has (f1) a melting peak temperature (Tm (F)) of 110 to 170°C, and contains (f2) 5 to 97% by weight of component (F1) comprising a propylene homopolymer or a propylene-ethylene random copolymer, and 3 to 95% by weight of component (F2) comprising a propylene-ethylene random copolymer which has an ethylene content larger than that of component (F1). Therefore, the decorative film had no contact unevenness and exhibited excellent thermoformability, and had excellent surface gloss and adhesive force. The decorative thermo forming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example C6-1, which does not contain a nucleating agent in any of the layers, the decorative film had a low surface gloss, and, after the decorative forming, the surface of the film became further foggy, and a lowering of the surface gloss was marked.

[Example D]

1. Method for measuring physical properties

The physical properties were evaluated in the same manner as in Example C.

2. Evaluation of physical properties of a decorative molded article

The evaluation was conducted in the same manner as in Example C for the items: (1) Evaluation of thermoformability, (2) Adhesive force between a resin molded article (substrate) and a decorative film, and (4) Evaluation of recycling properties.

(3) Weathering resistance

The flat sheet sample obtained after the three-dimensional decorative thermoforming was maintained at 23°C at 50% RH for 48 hours, and then a test specimen having a length of 30 mm and a width of 70 mm was cut out from the resultant flat sheet, and, using Atlas weatherometer Ci65AW, manufactured by Toyo Seiki Seisaku-Sho, Ltd., the decorative film side of the decorative molded article was irradiated with a light of 504MJ xenon arc lamp under conditions such that the black panel temperature was 89°C, the humidity was 50%, and the irradiation illuminance was 100 $W/m^2$. The irradiation time is as shown below.

Irradiation time (1): in the case where the decorative film contains only a hindered amine light stabilizer: 400 hr
Irradiation time (2): in the case where the decorative film contains only an ultraviolet light absorber: 200 hr
Irradiation time (3): in the case where the decorative film contains both a hindered amine light stabilizer and an ultraviolet light absorber: 600 hr

After the irradiation, the surface of the test specimen was observed by means of a microscope at a magnification of 20 times and evaluated. The criteria for the evaluation are as follows.

○: No change is observed in the irradiated surface, or a slight stain is observed.
×: A microcrack is found in the irradiated surface.

3. Production of a resin molded article (substrate)

An injection molded article was obtained using propylene homopolymer (Z-1) in the same manner as in "3. Production of a resin molded article (substrate)" in "Examples A and B".

(Test Example 1)

[Materials used]

(1) Polypropylene resin

The following polypropylene resins were used.

(A-1): Propylene-α-olefin copolymer produced using a metallocene catalyst (MFR = 7.0 g/10 minutes; Tm = 125°C; Mw/Mn = 2.5), trade name "WINTEC (registered trademark) WFX4M", manufactured by Japan Polypropylene Corporation
(B-1): Propylene homopolymer produced using a Ziegler-Natta catalyst (MFR = 0.4 g/10 minutes; Tm = 161°C; Tc = 114°C; Mw/Mn = 4.9), trade name "NOVATEC (registered trademark) EA9", manufactured by Japan Polypropylene Corporation (B-1-1): Polypropylene resin composition (MFR = 0.4 g/10 minutes; Tm = 161°C; Tc = 114°C) having 0.2 part by weight of a hindered amine light stabilizer (trademark "Tinuvin 770", manufactured by BASF SE) blended with 100 parts by weight of polypropylene resin (B-1)

(B-1-2): Polypropylene resin composition (MFR = 0.4 g/10 minutes; Tm = 161°C; Tc = 114°C) having 0.2 part by weight of a hindered amine light stabilizer (trademark "Chimassorb 944", manufactured by BASF SE) blended with 100 parts by weight of polypropylene resin (B-1)
(B-1-3): Polypropylene resin composition (MFR = 0.4 g/10 minutes; Tm = 161°C; Tc = 114°C) having 0.2 part by weight of a hindered amine light stabilizer (trademark "LA57", manufactured by ADEKA Corporation) blended with 100 parts by weight of polypropylene resin (B-1)
(B-1-5): Polypropylene resin composition (MFR = 0.4 g/10 minutes; Tm = 161°C; Tc = 114°C) having 0.2 part by weight of an ultraviolet light absorber (trademark "ADK STAB 1413", manufactured by ADEKA Corporation) blended with 100 parts by weight of polypropylene resin (B-1)

Example D1-2

• Production of a decorative film

There was used a two-type two-layer T-die having a lip opening of 0.8 mm and having a dice width of 400 mm, to which a seal layer (I) extruder-1 having a bore diameter of 30 mm (diameter) and a layer (II) extruder-2 having a bore diameter of 40 mm (diameter) were connected. Polypropylene resin (A-1) was charged into the seal layer (I) extruder-1, and polypropylene resin (B-1-2) was charged into the layer (II) extruder-2, and melt extrusion was conducted under conditions such that the resin temperature was 240°C, the extrusion rate of the seal layer (I) extruder-1 was 4 kg/h, and the extrusion rate of the layer (II) extruder-2 was 12 kg/h.

The melt-extruded film was cooled and set while permitting a seal layer (I) to be in contact with a cooling roll rotating at 3 m/min at 80°C to obtain a two-layer unstretched film in which the seal layer (I) having a thickness of 50 $\mu$m and a layer (II) having a thickness of 150 $\mu$m were stacked on one another.

• Three-dimensional decorative thermoforming

A three-dimensional decorative thermoformed article (decorative molded article 6) in which a decorative film 1 was stuck to the upper surface and side of a resin molded article 5 was obtained in substantially the same manner as in the three-dimensional decorative thermoforming in Example C1-3 except that the above-obtained unstretched film was used. The results of the evaluation are shown in Table 11. The evaluation of weathering resistance was performed under conditions of irradiation time (1).

Example D1-3

The forming and evaluation were performed in substantially the same manner as in Example D1-2 except that polypropylene resin (B-1-2) for layer (II) in the production of the decorative film in Example D1-2 was changed to polypropylene resin (B-1-3). The results of the evaluation are shown in Table 11.

Comparative Example D1-1

The forming and evaluation were performed in substantially the same manner as in Example D1-2 except that polypropylene resin (B-1-2) for layer (II) in the production of the decorative film in Example D1-2 was changed to polypropylene resin (B-1). The results of the evaluation are shown in Table 11.

Comparative Example D1-4

The forming and evaluation were performed in substantially the same manner as in Example D1-2 except that polypropylene resin (B-1-2) for layer (II) was changed to polypropylene resin (B-1-1), and polypropylene resin (A-1) for seal layer (I) was changed to polypropylene resin (B-1), in the production of the decorative film in Example D1-2, and that, in the three-dimensional decorative thermoforming, forming was performed 40 seconds after a spring back phenomenon was completed. The results of the evaluation are shown in Table 11.

Comparative Example D1-5

The forming and evaluation were performed in substantially the same manner as in Example D1-2 except that polypropylene resin (B-1-2) for layer (II) was changed to polypropylene resin (B-1-5), and polypropylene resin (A-1) for seal layer (I) was changed to polypropylene resin (B-1), in the production of the decorative film in Example D1-2, that, in the three-dimensional decorative thermoforming, forming was performed 40 seconds after a spring back phenomenon was completed, and that the evaluation of weathering resistance was performed under conditions of irradiation time (2). The results of the evaluation are shown in Table 11.

[Table 11]

| | | | | Unit | Example D1-2 | Example D1-3 | Comparative Example D1-1 | Comparative Example D1-4 | Comparative Example D1-5 |
|---|---|---|---|---|---|---|---|---|---|
| Decorative film | Layer (II) | Resin (B) | Type | | B-1-2 | B-1-3 | B-1 | B-1-1 | B-1-5 |
| | | | MFR | g/10 min. | 0.4 | 0.4 | 0.4 | 0.4 | 0.4 |
| | | | Tm | °C | 161 | 161 | 161 | 161 | 161 |
| | Seal layer (I) | Resin (A) | Type | | A-1 | A-1 | A-1 | B-1 | B-1 |
| | | | MFR | g/10 min. | 7.0 | 7.0 | 7.0 | 0.4 | 0.4 |
| | | | Tm | °C | 125 | 125 | 125 | 161 | 161 |
| | | | Mw/Mn | | 2.5 | 2.5 | 2.5 | 4.9 | 4.9 |
| | MFR(B)/MFR(A) | | | | 0.06 | 0.06 | 0.06 | 1.00 | 1.00 |
| Substrate | | Type | | | Z-1 | Z-1 | Z-1 | Z-1 | Z-1 |
| Heating time after spring back | | | | Sec. | 5 | 5 | 5 | 40 | 40 |
| Thermoformability | | | | | ○ | ○ | ○ | △ | △ |
| Adhesive force | | | | N/10mm | 20 | 22 | 19 | 34 | 35 |
| Weathering resistance | | | | | ○ | ○ | × | × | × |
| Appearance of recycled molded article | | | | | ○ | ○ | ○ | ○ | ○ |

With respect to the decorative molded article obtained using each of the decorative films in Examples D1-2 and -3, a hindered amine light stabilizer and/or an ultraviolet light absorber is contained in any one of the layers of the decorative film, and the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A). Therefore, the decorative film had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D1-1, which does not contain a hindered amine light stabilizer and/or an ultraviolet light absorber in any of the layers, the decorative film had poor weathering resistance. In Comparative Example D1-4 in which MFR (A) is 0.5 g/10 minutes or less, and a hindered amine light stabilizer is incorporated into layer (II), forming was performed 40 seconds after a spring back phenomenon was completed so that the heating time in the three-dimensional decorative forming was extended, and therefore adhesion was exhibited, but the added hindered amine light stabilizer volatilized, so that the weathering resistance was poor as compared to that in Example D1-2. In Comparative Example D1-5 in which MFR (A) is 0.5 g/10 minutes or less, and an ultraviolet light absorber is incorporated into layer (II), the heating time in the three-dimensional decorative forming was extended, and therefore adhesion was exhibited, but the added ultraviolet light absorber volatilized, so that the weathering resistance was poor.

(Test Example 2)

[Materials used]

The following polypropylene resins were used, in addition to the polypropylene resins used in (Test Example 1).

(A-6): Propylene-α-olefin copolymer (MFR = 5.0 g/10 minutes; Tm = 127°C; Tc = 86°C; Mw/Mn = 4.0), trade name "NOVATEC (registered trademark) FX4G", manufactured by Japan Polypropylene Corporation

(B-2): Propylene homopolymer produced using a Ziegler-Natta catalyst (MFR = 2.4 g/10 minutes; Tm = 161°C; Tc = 112°C), trade name "NOVATEC (registered trademark) FY6", manufactured by Japan Polypropylene Corporation

(B-1-7): Polypropylene resin composition (MFR = 0.4 g/10 minutes; Tm = 161°C; Tc = 114°C) having 0.2 part by weight of an ultraviolet light absorber (trademark "LA-31G", manufactured by ADEKA Corporation) blended with 100 parts by weight of polypropylene resin (B-1)

(B-1-8): Polypropylene resin composition (MFR = 0.4 g/10 minutes; Tm = 161°C; Tc = 114°C) having 0.2 part by weight of a hindered amine light stabilizer (trademark "Chimassorb 944", manufactured by BASF SE) and 0.2 part by weight of an ultraviolet light absorber (trademark "LA-31G", manufactured by ADEKA Corporation) blended with 100 parts by weight of polypropylene resin (B-1)

(B-2-2): Polypropylene resin composition (MFR = 2.4 g/10 minutes; Tm = 161°C; Tc = 112°C) having 0.2 part by weight of a hindered amine light stabilizer (trademark "Chimassorb 944", manufactured by BASF SE) blended with 100 parts by weight of polypropylene resin (B-2)

(H-1): Propylene homopolymer (MFR = 10 g/10 minutes; Tm = 161°C; Tc = 112°C; tensile modulus = 1,600 MPa), trade name "NOVATEC (registered trademark) FA3KM", manufactured by Japan Polypropylene Corporation

(H-1-2): Polypropylene resin composition (MFR = 10 g/10 minutes; Tm = 161°C) having 0.2 part by weight of a

hindered amine light stabilizer (trademark "Chimassorb 944", manufactured by BASF SE) blended with 100 parts by weight of polypropylene resin (A-1)

Example D2-2

The forming and evaluation were performed in substantially the same manner as in Example D1-2 except that polypropylene resin (A-1) for seal layer (I) in the production of the decorative film in Example D1-2 was changed to polypropylene resin (A-6), and that, in the three-dimensional decorative thermoforming, forming was performed 10 seconds after a spring back phenomenon was completed. The results of the evaluation are shown in Table 12.

Example D2-3

The forming and evaluation were performed in substantially the same manner as in Example D2-2 except that polypropylene resin (B-1-2) for layer (II) in the production of the decorative film in Example D2-2 was changed to polypropylene resin (B-1-3). The results of the evaluation are shown in Table 12.

Example D2-5

The forming and evaluation were performed in substantially the same manner as in Example D2-2 except that polypropylene resin (B-1-2) for layer (II) in the production of the decorative film in Example D2-2 was changed to polypropylene resin (B-1-7), and that the evaluation of weathering resistance was performed under conditions of irradiation time (2). The results of the evaluation are shown in Table 12.

Example D2-6

The forming and evaluation were performed in substantially the same manner as in Example D2-2 except that polypropylene resin (B-1-2) for layer (II) in the production of the decorative film in Example D2-2 was changed to polypropylene resin (B-2-2). The results of the evaluation are shown in Table 12.

Example D2-8

• Production of a decorative film

There was used a three-type three-layer T-die having a lip opening of 0.8 mm and having a dice width of 400 mm, to which a seal layer (I) extruder-1 having a bore diameter of 30 mm (diameter), a layer (II) extruder-2 having a bore diameter of 40 mm (diameter), and a surface decorative layer (III) extruder-3 having a bore diameter of 30 mm (diameter) were connected. Polypropylene resin (A-6) was charged into the seal layer (I) extruder-1, polypropylene resin (B-1-2) was charged into the layer (II) extruder-2, and polypropylene resin (H-1-2) was charged into the surface decorative layer (III) extruder-3, and melt extrusion was conducted under conditions such that the resin temperature was 240°C, the extrusion rate of the extruder-1 was 4 kg/h, the extrusion rate of the extruder-2 was 8 kg/h, and the extrusion rate of the extruder-3 was 4 kg/h.

The melt-extruded film was cooled and set while permitting a seal layer (I) to be in contact with a cooling roll rotating at 3 m/min at 80°C to obtain a three-layer unstretched film in which a surface decorative layer (III) having a thickness of 50 $\mu$m, a layer (II) having a thickness of 100 $\mu$m, and the seal layer (I) having a thickness of 50 $\mu$m were stacked on one another.

Using the unstretched film obtained in the above-mentioned production of decorative film, three-dimensional decorative thermoforming was conducted in the same manner as in Example D2-2, and evaluation was performed. The results of the evaluation are shown in Table 12.

Example D2-9

The forming and evaluation were performed in substantially the same manner as in Example D2-2 except that polypropylene resin (B-1-2) for layer (II) in the production of the decorative film in Example D2-2 was changed to polypropylene resin (B-1-8), and that the evaluation of weathering resistance was performed under conditions of irradiation time (3). The results of the evaluation are shown in Table 12.

Comparative Example D2-1

The forming and evaluation were performed in substantially the same manner as in Example D2-2 except that polypropylene resin (B-1-2) for layer (II) in the production of the decorative film in Example D2-2 was changed to polypropylene resin (B-1). The results of the evaluation are shown in Table 12.

Comparative Example D2-4

The forming and evaluation were performed in substantially the same manner as in Example D2-2 except that polypropylene resin (B-1-2) for layer (II) was changed to polypropylene resin (B-1-1), and polypropylene resin (A-6) for seal layer (I) was changed to polypropylene resin (B-1), in the production of the decorative film in Example D2-2, and that, in the three-dimensional decorative thermoforming, forming was performed 40 seconds after a spring back phenomenon was completed. The results of the evaluation are shown in Table 12.

Comparative Example D2-5

The forming and evaluation were performed in substantially the same manner as in Example D2-2 except that polypropylene resin (B-1-2) for layer (II) was changed to polypropylene resin (B-1-5), and polypropylene resin (A-6) for seal layer (I) was changed to polypropylene resin (B-1), in the production of the decorative film in Example D2-2, that, in the three-dimensional decorative thermoforming, forming was performed 40 seconds after a spring back phenomenon was completed, and that the evaluation of weathering resistance was performed under conditions of irradiation time (2). The results of the evaluation are shown in Table 12.

[Table 12]

Table 12

| | | | Unit | Example D2-2 | Example D2-3 | Example D2-5 | Example D2-6 | Example D2-8 | Example D2-9 | Comparative Example D2-1 | Comparative Example D2-4 | Comparative Example D2-5 |
|---|---|---|---|---|---|---|---|---|---|---|---|---|
| Decorative film | Surface decorative layer (III) | Type | | - | - | - | - | H-1-2 | - | - | - | - |
| | | MFR | g/10 min. | - | - | - | - | 10 | - | - | - | - |
| | Layer (II) Resin (B) | Type | | B-1-2 | B-1-3 | B-1-7 | B-2-2 | B-1-2 | B-1-8 | B-1 | B-1-1 | B-1-5 |
| | | MFR | g/10 min. | 0.4 | 0.4 | 0.4 | 2.4 | 0.4 | 0.4 | 0.4 | 0.4 | 0.4 |
| | | Tc | °C | 114 | 114 | 114 | 112 | 114 | 114 | 114 | 114 | 114 |
| | Seal layer (I) Resin (A) | Type | | A-6 | A-6 | A-6 | A-6 | A-6 | A-6 | A-6 | B-1 | B-1 |
| | | MFR | g/10 min. | 5.0 | 5.0 | 5.0 | 5.0 | 5.0 | 5.0 | 5.0 | 0.4 | 0.4 |
| | | Tc | °C | 86 | 86 | 86 | 86 | 86 | 86 | 86 | 114 | 114 |
| | | Mw/Mn | | 4.0 | 4.0 | 4.0 | 4.0 | 4.0 | 4.0 | 4.0 | 4.9 | 4.9 |
| | MFR(B)/MFR(A) | | | 0.08 | 0.08 | 0.08 | 0.48 | 0.08 | 0.08 | 0.08 | 1.00 | 1.00 |
| Substrate | | Type | | Z-1 | Z-1 | Z-1 | Z-1 | Z-1 | Z-1 | Z-1 | Z-1 | Z-1 |
| Heating time after spring back | | | Sec. | 10 | 10 | 10 | 10 | 10 | 10 | 10 | 40 | 40 |
| Thermoformability | | | | ○ | ○ | ○ | ○ | ○ | ○ | ○ | △ | △ |
| Adhesive force | | | N/10mm | 22 | 24 | 25 | 22 | 22 | 20 | 22 | 34 | 35 |
| Weathering resistance | | | | ○ | ○ | ○ | ○ | ○ | ○ | × | × | × |
| Appearance of recycled molded article | | | | ○ | ○ | ○ | ○ | ○ | ○ | ○ | ○ | ○ |

With respect to the decorative molded article obtained using each of the decorative films in Examples D2-2, -3, -5, -6, -8, and -9, a hindered amine light stabilizer and/or an ultraviolet light absorber is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further the crystallization temperature (Tc (A)) of the polypropylene resin in seal layer (I) is lower than 100°C, and the crystallization temperature (Tc (B)) of the polypropylene resin in layer (II) is higher than Tc (A). Therefore, the decorative film

had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D2-1, which does not contain a hindered amine light stabilizer and/or an ultraviolet light absorber in any of the layers, the decorative film had poor weathering resistance. In Comparative Example D2-4 in which MFR (A) is 0.5 g/10 minutes or less, and a hindered amine light stabilizer is incorporated into layer (II), forming was performed 40 seconds after a spring back phenomenon was completed so that the heating time in the three-dimensional decorative forming was extended, and therefore adhesion was exhibited, but the added hindered amine light stabilizer volatilized, so that the weathering resistance was poor as compared to that in Example D2-2. In Comparative Example D2-5 in which MFR (A) is 0.5 g/10 minutes or less, and an ultraviolet light absorber is incorporated into layer (II), the heating time in the three-dimensional decorative forming was extended, and therefore adhesion was exhibited, but the added ultraviolet light absorber volatilized, so that the weathering resistance was poor as compared to that in Example D2-5.

(Test Example 3)

[Materials used]

The following resin was used, in addition to the resins used in (Test Example 1).
(A-5): Propylene-α-olefin copolymer produced using a Ziegler-Natta catalyst (MFR = 7.0 g/10 minutes; Tm = 146°C; Tc = 115°C; Mw/Mn = 4.0; tensile modulus = 1,200 MPa), trade name "NOVATEC (registered trademark) FW3GT", manufactured by Japan Polypropylene Corporation

Ethylene-α-olefin random copolymer

The following ethylene-α-olefin random copolymer was used.
(C-1): Ethylene-butene random copolymer (MFR = 6.8 g/10 minutes; Tm = 66°C; density = 0.885 g/$cm^3$; ethylene content = 84% by weight), trade name "TAFMER A4085S", manufactured by Mitsui Chemicals, Inc.

Example D3-2

The forming and evaluation were performed in substantially the same manner as in Example D1-2 except that polypropylene resin (A-1) for seal layer (I) in the production of the decorative film in Example D1-2 was changed to a mixture of polypropylene resin (A-5) and ethylene-α-olefin random copolymer (C-1) which were blended in a weight ratio of 85:15, and that, in the three-dimensional decorative thermoforming, forming was performed immediately after a spring back phenomenon was completed (that is, the heating time after the spring back was 0 second). The results of the evaluation are shown in Table 13.

Example D3-3

The forming and evaluation were performed in substantially the same manner as in Example D3-2 except that polypropylene resin (B-1-2) for layer (II) in the production of the decorative film in Example D3-2 was changed to polypropylene resin (B-1-3). The results of the evaluation are shown in Table 13.

Comparative Example D3-1

The forming and evaluation were performed in substantially the same manner as in Example D3-2 except that polypropylene resin (B-1-2) for layer (II) in the production of the decorative film in Example D3-2 was changed to polypropylene resin (B-1). The results of the evaluation are shown in Table 13.

Comparative Example D3-4

The forming and evaluation were performed in substantially the same manner as in Example D3-2 except that polypropylene resin (B-1-2) for layer (II) was changed to polypropylene resin (B-1-1), and the resin for seal layer (I) was changed to only polypropylene resin (B-1), in the production of the decorative film in Example D3-2, and that, in the three-dimensional decorative thermoforming, forming was performed 40 seconds after a spring back phenomenon was completed. The results of the evaluation are shown in Table 13.

Comparative Example D3-5

The forming and evaluation were performed in substantially the same manner as in Example D3-2 except that polypropylene resin (B-1-2) for layer (II) was changed to polypropylene resin (B-1-5), and the resin for seal layer (I) was changed to only polypropylene resin (B-1), in the production of the decorative film in Example D3-2, that, in the three-dimensional decorative thermoforming, forming was performed 40 seconds after a spring back phenomenon was completed, and that the evaluation of weathering resistance was performed under conditions of irradiation time (2). The results of the evaluation are shown in Table 13.

[Table 13]

| | | | | Unit | Example D3-2 | Example D3-3 | Comparative Example D3-1 | Comparative Example D3-4 | Comparative Example D3-5 |
|---|---|---|---|---|---|---|---|---|---|
| Decorative film | Layer (II) | Resin (B) | Type | | B-1-2 | B-1-3 | B-1 | B-1-1 | B-1-5 |
| | | | MFR | g/10 min. | 0.4 | 0.4 | 0.4 | 0.4 | 0.4 |
| | Seal layer (I) | Polypropylene resin (A) | Type | | A-5 | A-5 | A-5 | B-1 | B-1 |
| | | | MFR | g/10 min. | 7.0 | 7.0 | 7.0 | 0.4 | 0.4 |
| | | | Amount | wt% | 85 | 85 | 85 | 100 | 100 |
| | | Ethylene-α-olefin random copolymer (C) | Type | | C-1 | C-1 | C-1 | - | - |
| | | | MFR | g/10 min. | 6.8 | 6.8 | 6.8 | - | - |
| | | | Amount | wt% | 15 | 15 | 15 | 0 | 0 |
| | MFR(B)/MFR(A) | | | | 0.06 | 0.06 | 0.06 | 1.00 | 1.00 |
| Substrate | | Type | | | Z-1 | Z-1 | Z-1 | Z-1 | Z-1 |
| Heating time after spring back | | | | Sec. | 0 | 0 | 0 | 40 | 40 |
| Thermoformability | | | | | ○ | ○ | ○ | △ | △ |
| Adhesive force | | | | N/10mm | 33 | 35 | 32 | 34 | 35 |
| Weathering resistance | | | | | ○ | ○ | × | × | × |
| Appearance of recycled molded article | | | | | ○ | ○ | ○ | ○ | ○ |

With respect to the decorative molded article obtained using each of the decorative films in Examples D3-2 and -3, a hindered amine light stabilizer and/or an ultraviolet light absorber is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further seal layer (I) comprises resin composition (XX3) in which the weight ratio of polypropylene resin (A) and ethylene-$\alpha$-olefin random copolymer (C) is 97:3 to 5:95, and ethylene-$\alpha$-olefin random copolymer (C) has (c1) an ethylene content [E (C)] of 65% by weight or more, (c2) a density of 0.850 to 0.950 g/cm3, and (c3) a melt flow rate (MFR (C)) of 0.1 to 100 g/10 minutes. Therefore, the decorative film had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D3-1, which does not contain a hindered amine light stabilizer and/or an ultraviolet light absorber in any of the layers, the decorative film had poor weathering resistance. In Comparative Example D3-4 in which MFR (A) is 0.5 g/10 minutes or less, and a hindered amine light stabilizer is incorporated into layer (II), forming was performed 40 seconds after a spring back phenomenon was completed so that the heating time in the three-dimensional decorative forming was extended, and therefore adhesion was exhibited, but the added hindered amine light stabilizer volatilized, so that the weathering resistance was poor as compared to that in Example D3-2. In Comparative Example D3-5 in which MFR (A) is 0.5 g/10 minutes or less, and an ultraviolet light absorber is incorporated into layer (II), the heating time in the three-dimensional decorative forming was extended, and therefore adhesion was exhibited, but the added ultraviolet light absorber volatilized, so that the weathering resistance was poor.

(Test Example 4)

[Materials used]

Polypropylene resin

The polypropylene resins used in (Test Example 1) and (Test Example 3) were used.

Thermoplastic elastomer (D)

The following thermoplastic elastomer was used.
(D-1): Propylene-butene random copolymer comprising propylene as a main component (MFR = 7.0 g/10 minutes; Tm = 75°C; density = 0.885 g/cm$^3$; tensile modulus = 290 MPa; propylene content = 69% by weight; butene content = 31% by weight; ethylene content [E] = 0% by weight), trade name "TAFMER XM7070", manufactured by Mitsui Chemicals, Inc.

Example D4-2

The forming and evaluation were performed in substantially the same manner as in Example D1-2 except that polypropylene resin (A-1) for seal layer (I) in the production of the decorative film in Example D1-2 was changed to a mixture of polypropylene resin (A-5) and thermoplastic elastomer (D-1) which were blended in a weight ratio of 85:15. The results of the evaluation are shown in Table 14.

Example D4-3

The forming and evaluation were performed in substantially the same manner as in Example D4-2 except that polypropylene resin (B-1-2) for layer (II) in the production of the decorative film in Example D4-2 was changed to polypropylene resin (B-1-3). The results of the evaluation are shown in Table 14.

Comparative Example D4-1

The forming and evaluation were performed in substantially the same manner as in Example D4-2 except that polypropylene resin (B-1-2) for layer (II) in the production of the decorative film in Example D4-2 was changed to polypropylene resin (B-1). The results of the evaluation are shown in Table 14.

Comparative Example D4-4

The forming and evaluation were performed in substantially the same manner as in Example D4-2 except that polypropylene resin (B-1-2) for layer (II) was changed to polypropylene resin (B-1-1), and the resin for seal layer (I) was changed to only polypropylene resin (B-1), in the production of the decorative film in Example D4-2, and that, in the three-dimensional decorative thermoforming, forming was performed 40 seconds after a spring back phenomenon was completed. The results of the evaluation are shown in Table 14.

Comparative Example D4-5

The forming and evaluation were performed in substantially the same manner as in Example D4-2 except that polypropylene resin (B-1-2) for layer (II) was changed to polypropylene resin (B-1-5), and the resin for seal layer (I) was changed to only polypropylene resin (B-1), in the production of the decorative film in Example D4-2, that, in the three-dimensional decorative thermoforming, forming was performed 40 seconds after a spring back phenomenon was completed, and that the evaluation of weathering resistance was performed under conditions of irradiation time (2). The results of the evaluation are shown in Table 14.

[Table 14]

| | | | | Unit | Example D4-2 | Example D4-3 | Comparative Example D4-1 | Comparative Example D4-4 | Comparative Example D4-5 |
|---|---|---|---|---|---|---|---|---|---|
| Decorative film | Layer (II) | Resin (B) | Type | | B-1-2 | B-1-3 | B-1 | B-1-1 | B-1-5 |
| | | | MFR | g/10 min. | 0.4 | 0.4 | 0.4 | 0.4 | 0.4 |
| | Seal layer (I) | Polypropylene resin (A) | Type | | A-5 | A-5 | A-5 | B-1 | B-1 |
| | | | MFR | g/10 min. | 7.0 | 7.0 | 7.0 | 0.4 | 0.4 |
| | | | Amount | wt% | 85 | 85 | 85 | 100 | 100 |
| | | Thermoplastic elastomer (D) | Type | | D-1 | D-1 | D-1 | - | - |
| | | | MFR | g/10 min. | 7.0 | 7.0 | 7.0 | - | - |
| | | | Amount | wt% | 15 | 15 | 15 | 0 | 0 |
| | MFR(B)/MFR(A) | | | | 0.06 | 0.06 | 0.06 | 1.00 | 1.00 |
| Substrate | | Type | | | Z-1 | Z-1 | Z-1 | Z-1 | Z-1 |
| Heating time after spring back | | | | Sec. | 5 | 5 | 5 | 40 | 40 |
| Thermoformability | | | | | ○ | ○ | ○ | △ | △ |
| Adhesive force | | | | N/10mm | 32 | 33 | 33 | 34 | 35 |
| Weathering resistance | | | | | ○ | ○ | × | × | × |
| Appearance of recycled molded article | | | | | ○ | ○ | ○ | ○ | ○ |

With respect to the decorative molded article obtained using each of the decorative films in Examples D4-2 and -3, a hindered amine light stabilizer and/or an ultraviolet light absorber is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further seal layer (I) comprises resin composition (XX4) in which the weight ratio of polypropylene resin (A) and thermoplastic elastomer (D) is 97:3 to 5:95, and thermoplastic elastomer (D) is (d1) a thermoplastic elastomer comprising at least one of propylene and butene as a main component, and has (d2) a density of 0.850 to 0.950 g/cm$^3$, (d3) a melt flow rate (MFR (D)) of 0.1 to 100 g/10 minutes, and (d4) a tensile modulus which is smaller than that of polypropylene resin (A). Therefore, the decorative film had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D4-1, which does not contain a hindered amine light stabilizer and/or an ultraviolet light absorber in any of the layers, the decorative film had poor weathering resistance. In Comparative Example D4-4 in which MFR (A) is 0.5 g/10 minutes or less, and a hindered amine light stabilizer is incorporated into layer (II), forming was performed 40 seconds after a spring back phenomenon was completed so that the heating time in the three-dimensional decorative forming was extended, and therefore adhesion was exhibited, but the added hindered amine light stabilizer volatilized, so that the weathering resistance was poor as compared to that in Example D4-2. In Comparative Example D4-5 in which MFR (A) is 0.5 g/10 minutes or less, and an ultraviolet light absorber is incorporated into layer (II), the heating time in the three-dimensional decorative forming was extended, and therefore adhesion was exhibited, but the added ultraviolet light absorber volatilized, so that the weathering resistance was poor.

(Test Example 5)

[Materials used]

Polypropylene resin

As a polypropylene resin for seal layer (I), the following polypropylene resin was used.
(A-5): Propylene-α-olefin copolymer (MFR = 7.0 g/10 minutes; Tm = 146°C; crystallization start temperature = 111°C; isothermal crystallization time (t) = 263 seconds (measured at 121°C)), trade name "NOVATEC (registered trademark) FW3GT", manufactured by Japan Polypropylene Corporation

With respect to layer (II) and surface decorative layer (III), the polypropylene resins used in (Test Example 1) were used.

Thermoplastic resin (E)

The following thermoplastic resin was used.
(E-1): Hydrogenated styrene elastomer (HSBR): trade name "DYNARON 1320P", manufactured by JSR Corporation

Example D5-2

The forming and evaluation were performed in substantially the same manner as in Example D1-2 except that polypropylene resin (A-1) for seal layer (I) in the production of the decorative film in Example D1-2 was changed to a mixture of polypropylene resin (A-5) and thermoplastic resin (E-1) which were blended in a weight ratio of 50:50, and that, in the three-dimensional decorative thermoforming, forming was performed immediately after a spring back phenomenon was completed (that is, the heating time after the spring back was 0 second). The results of the evaluation are shown in Table 15.

Example D5-3

The forming and evaluation were performed in substantially the same manner as in Example D5-2 except that polypropylene resin (B-1-2) for layer (II) in the production of the decorative film in Example D5-2 was changed to polypropylene resin (B-1-3). The results of the evaluation are shown in Table 15.

Comparative Example D5-1

The forming and evaluation were performed in substantially the same manner as in Example D5-2 except that polypropylene resin (B-1-2) for layer (II) in the production of the decorative film in Example D5-2 was changed to polypropylene resin (B-1). The results of the evaluation are shown in Table 15.

[Table 15]

| | | | | Unit | Example D5-2 | Example D5-3 | Comparative Example D5-1 |
|---|---|---|---|---|---|---|---|
| Decorative film | Layer (II) | Resin (B) | Type | | B-1-2 | B-1-3 | B-1 |
| | | | MFR | g/10 min. | 0.4 | 0.4 | 0.4 |
| | Seal layer (I) | Polypropylene resin (A) | Type | | A-5 | A-5 | A-5 |
| | | | MFR | g/10 min. | 7.0 | 7.0 | 7.0 |
| | | | Isothermal crystallization time t(A) | Sec. | 263 | 263 | 263 |
| | | | Amount | wt% | 50 | 50 | 85 |
| | | Thermoplastic resin (E) | Type | | E-1 | E-1 | E-1 |
| | | | Amount | wt% | 50 | 50 | 15 |
| | | Resin composition (XX5) | Isothermal crystallization time t(XX5) | Sec. | 2590 | 2590 | 2590 |
| | | t(XX5)/t(A) | | | 9.8 | 9.8 | 9.8 |
| | MFR(B)/MFR(A) | | | | 0.06 | 0.06 | 0.06 |
| Substrate | Type | | | | Z-1 | Z-1 | Z-1 |
| Heating time after spring back | | | | Sec. | 0 | 0 | 0 |
| Thermoformability | | | | | ○ | ○ | ○ |
| Adhesive force | | | | N/10mm | 40 | 37 | 36 |
| Weathering resistance | | | | | ○ | ○ | × |
| Appearance of recycled molded article | | | | | ○ | ○ | ○ |

With respect to the decorative molded article obtained using each of the decorative films in Examples D5-2 and -3, a hindered amine light stabilizer and/or an ultraviolet light absorber is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further seal layer (I) comprises resin composition (XX5) in which the weight ratio of polypropylene resin (A) and thermoplastic resin (E) is 97:3 to 5:95, and thermoplastic resin (E) contains (e1) at least one of an alicyclic hydrocarbon group and an aromatic hydrocarbon group, and (xx1) the isothermal crystallization time (t(XX5)) (second) of resin composition (XX5) is 1.5 times or more as long as the isothermal crystallization time (t(A)) (second) of polypropylene resin (A). Therefore, the decorative film had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D5-1, which does not contain a hindered amine light stabilizer and/or an ultraviolet light absorber in any of the layers, the decorative film had poor weathering resistance.

(Test Example 6)

[Materials used]

The resins used in (Test Example 1), and the propylene-ethylene block copolymer used in (Test Example 6) in Example C were used.

Example D6-2

The forming and evaluation were performed in substantially the same manner as in Example D1-2 except that polypropylene resin (A-1) for seal layer (I) in the production of the decorative film in Example D1-2 was changed to propylene-ethylene block copolymer (F-1), and that, in the three-dimensional decorative thermoforming, forming was performed immediately after a spring back phenomenon was completed (that is, the heating time after the spring back was 0 second). The results of the evaluation are shown in Table 16.

Example D6-3

The forming and evaluation were performed in substantially the same manner as in Example D6-2 except that polypropylene resin (B-1-2) for layer (II) in the production of the decorative film in Example D6-2 was changed to polypropylene resin (B-1-3). The results of the evaluation are shown in Table 16.

Comparative Example D6-1

The forming and evaluation were performed in substantially the same manner as in Example D6-2 except that polypropylene resin (B-1-2) for layer (II) in the production of the decorative film in Example D6-2 was changed to polypropylene resin (B-1). The results of the evaluation are shown in Table 16.

Comparative Example D6-4

The forming and evaluation were performed in substantially the same manner as in Example D6-2 except that polypropylene resin (B-1-2) for layer (II) was changed to polypropylene resin (B-1-1), and propylene-ethylene block copolymer (F-1) for seal layer (I) was changed to polypropylene resin (B-1), in the production of the decorative film in Example D6-2, and that, in the three-dimensional decorative thermoforming, forming was performed 40 seconds after a spring back phenomenon was completed. The results of the evaluation are shown in Table 16.

Comparative Example D6-5

The forming and evaluation were performed in substantially the same manner as in Example D6-2 except that polypropylene resin (B-1-2) for layer (II) was changed to polypropylene resin (B-1-5), and propylene-ethylene block copolymer (F-1) for seal layer (I) was changed to polypropylene resin (B-1), in the production of the decorative film in Example D6-2, that, in the three-dimensional decorative thermoforming, forming was performed 40 seconds after a spring back phenomenon was completed, and that the evaluation of weathering resistance was performed under conditions of irradiation time (2). The results of the evaluation are shown in Table 16.

[Table 16]

| | | | | Unit | Example D6-2 | Example D6-3 | Comparative Example D6-1 | Comparative Example D6-4 | Comparative Example D6-5 |
|---|---|---|---|---|---|---|---|---|---|
| Decorative film | Layer (II) | Resin (B) | Type | | B-1-2 | B-1-3 | B-1 | B-1-1 | B-1-5 |
| | | | MFR | g/10 min. | 0.4 | 0.4 | 0.4 | 0.4 | 0.4 |
| | Seal layer (I) | Propylene-ethylene block copolymer (F) | Type | | F-1 | F-1 | F-1 | B-1 | B-1 |
| | | | MFR | g/10 min. | 7.0 | 7.0 | 7.0 | 0.4 | 0.4 |
| | MFR(B)/MFR(A) | | | | 0.06 | 0.06 | 0.06 | 1.00 | 1.00 |
| Substrate | | Type | | | Z-1 | Z-1 | Z-1 | Z-1 | Z-1 |
| Heating time after spring back | | | | Sec. | 0 | 0 | 0 | 40 | 40 |
| Thermoformability | | | | | ○ | ○ | ○ | △ | △ |
| Adhesive force | | | | N/10mm | 27 | 25 | 25 | 34 | 35 |
| Weathering resistance | | | | | ○ | ○ | × | × | × |
| Appearance of recycled molded article | | | | | ○ | ○ | ○ | ○ | ○ |

With respect to the decorative molded article obtained using each of the decorative films in Examples D6-2 and -3, a hindered amine light stabilizer and/or an ultraviolet light absorber is contained in any one of the layers of the decorative film; the melt flow rate (MFR (A)) of polypropylene resin (A) in seal layer (I) is more than 0.5 g/10 minutes, and the melt flow rate (MFR (B)) of polypropylene resin (B) in layer (II) is smaller than MFR (A); and further polypropylene resin (A) is propylene-ethylene block copolymer (F), and copolymer (F) has (f1) a melting peak temperature (Tm (F)) of 110 to 170°C, and contains (f2) 5 to 97% by weight of component (F1) comprising a propylene homopolymer or a propylene-ethylene random copolymer, and 3 to 95% by weight of component (F2) comprising a propylene-ethylene random copolymer which has an ethylene content larger than that of component (F1). Therefore, the decorative film had no contact unevenness and exhibited excellent thermoformability, and had excellent adhesive force. The decorative thermoforming was conducted for a short time, and hence it was possible to suppress volatilization of the hindered amine light stabilizer and/or ultraviolet light absorber, and the decorative film had excellent weathering resistance even after the thermoforming. Further, the obtained molded article had excellent recycling properties.

In contrast, with respect to the decorative film in Comparative Example D6-1, which does not contain a hindered amine light stabilizer and/or an ultraviolet light absorber in any of the layers, the decorative film had poor weathering resistance. In Comparative Example D6-4 in which MFR (A) is 0.5 g/10 minutes or less, and a hindered amine light stabilizer is incorporated into layer (II), forming was performed 40 seconds after a spring back phenomenon was completed

so that the heating time in the three-dimensional decorative forming was extended, and therefore adhesion was exhibited, but the added hindered amine light stabilizer volatilized, so that the weathering resistance was poor as compared to that in Example D6-2. In Comparative Example D6-5 in which MFR (A) is 0.5 g/10 minutes or less, and an ultraviolet light absorber is incorporated into layer (II), the heating time in the three-dimensional decorative forming was extended, and therefore adhesion was exhibited, but the added ultraviolet light absorber volatilized, so that the weathering resistance was poor.

[Example E]

1. Method for measuring physical properties

The measurement was conducted in the same manner as in Examples A and B for the items: (i) Fogging test, (ii) Melt flow rate (MFR), (iii) Strain hardening index λ, (iii-1) Shear viscosity η* (0.01), (iii-2) Elongational viscosity ηe (3.5), (iv) Branching index g' at an absolute molecular weight Mabs of 1,000,000, and (v) Detection of a long-chain branched structure using $^{13}$C-NMR.

Further, the measurement was conducted in the same manner as in Example C for the items: (iii) Melting peak temperature (Melting point), (v) GPC measurement, (vi) Density, (vii) Tensile modulus, (viii) Ethylene content [E (C)], (ix): Determination of ethylene contents of propylene-ethylene block copolymer (F), component (F1), and component (F2), and (x) Isothermal crystallization time.

2. Evaluation of physical properties of a decorative molded article

The evaluation was conducted in the same manner as in Example C for the items: (2) Adhesive force between a resin molded article (substrate) and a decorative film, (3) Gloss, and (4) Evaluation of recycling properties.

(1) Evaluation of thermoformability

The drawdown state of the decorative film during the three-dimensional decorative thermoforming, and the stuck state of the decorative film in the decorative molded article having the decorative film stuck to the substrate were visually observed, and evaluated in accordance with the following criteria.

○: The decorative film suffered no drawdown during the three-dimensional decorative thermoforming, and the substrate and the decorative film were contacted at a time with their entire contact surface, so that the decorative film was uniformly stuck to the substrate without causing contact unevenness.

×: The decorative film suffered marked drawdown during the three-dimensional decorative thermoforming, causing contact unevenness on the entire surface of the substrate.

3. Production of a resin molded article (substrate)

An injection molded article was obtained using propylene homopolymer (Z-1) in the same manner as in "3. Production of a resin molded article (substrate)" in "Examples A and B".

(Test Example 1)

[1: Decorative film comprising seal layer (I) comprising polypropylene resin (A) having MFR (A) of more than 2.0 g/10 minutes]

1-1. Materials used

Polypropylene resin

The following polypropylene resins were used.

(A-1): Propylene homopolymer having no long-chain branching (MFR = 10 g/10 minutes; Tm = 161°C; strain hardening index λ = 1.0; tensile modulus = 1,600 MPa); trade name "NOVATEC (registered trademark) FA3KM", manufactured by Japan Polypropylene Corporation; branching index g' = 1.0 at an absolute molecular weight Mabs of 1,000,000; The $^{13}$C-NMR measurement confirmed that the propylene homopolymer had no long-chain branched structure.

(A-1-1): Polypropylene resin composition (MFR = 10 g/10 minutes; Tm = 164°C) having 0.4 part by weight of a nucleating agent (trademark "Millad NX8000J", manufactured by Milliken Japan Co. Ltd.) blended with 100 parts by weight of polypropylene resin (A-1)
(A-1-3): Polypropylene resin composition (MFR = 10 g/10 minutes; Tm = 163°C) having 0.2 part by weight of a nucleating agent (trade name "ADK STAB NA-11", manufactured by ADEKA Corporation) blended with 100 parts by weight of polypropylene resin (A-1)
(A-1-4): Polypropylene resin composition (MFR = 10 g/10 minutes; Tm = 163°C) having 0.2 part by weight of a nucleating agent (trade name "ADK STAB NA-21", manufactured by ADEKA Corporation) blended with 100 parts by weight of polypropylene resin (A-1)
(A-1-5): Polypropylene resin composition (MFR = 10 g/10 minutes; Tm = 163°C) having 0.2 part by weight of a nucleating agent (trade name "IRGACLEAR XT 386", manufactured by BASF Japan Ltd.) blended with 100 parts by weight of polypropylene resin (A-1)

(B-1): Propylene homopolymer having long-chain branching, which is produced by a macromer copolymerization method; trade name "WAYMAX (registered trademark) MFX8", manufactured by Japan Polypropylene Corporation; MFR = 1.0 g/10 minutes; strain hardening index $\lambda$ = 9.7; Tm = 154°C; branching index g'= 0.89 at an absolute molecular weight Mabs of 1,000,000; The $^{13}C$-NMR measurement confirmed that the propylene homopolymer had a long-chain branched structure.
(B-2): Propylene homopolymer having long-chain branching, which is produced by a macromer copolymerization method; trade name "WAYMAX (registered trademark) MFX3", manufactured by Japan Polypropylene Corporation; MFR = 8.8 g/10 minutes; strain hardening index $\lambda$ = 7.8; Tm = 154°C; branching index g' = 0.85 at an absolute molecular weight Mabs of 1,000,000; The $^{13}C$-NMR measurement confirmed that the propylene homopolymer had a long-chain branched structure.
(B-1-3): Polypropylene resin composition (MFR = 1.0 g/10 minutes; Tm = 156°C) having 0.2 part by weight of a nucleating agent (trade name "ADK STAB NA-11", manufactured by ADEKA Corporation) blended with 100 parts by weight of polypropylene resin (B-1)

Example E1-3

• Production of a decorative film

There was used a three-type three-layer T-die having a lip opening of 0.8 mm and having a dice width of 400 mm, to which a seal layer extruder-1 having a bore diameter of 30 mm (diameter), an extruder-2 having a bore diameter of 40 mm (diameter), and a surface decorative layer extruder-3 having a bore diameter of 30 mm (diameter) were connected. Polypropylene resin (A-1) was charged into the seal layer extruder-1, polypropylene resin (B-1) was charged into the extruder-2, and polypropylene resin (A-1-3) was charged into the surface decorative layer extruder-3, and melt extrusion was conducted under conditions such that the resin temperature was 240°C, the extrusion rate of the seal layer extruder-1 was 4 kg/h, the extrusion rate of the extruder-2 was 8 kg/h, and the extrusion rate of the surface decorative layer extruder-3 was 4 kg/h.
The melt-extruded film was cooled and set while permitting a seal layer (I) to be in contact with a cooling roll rotating at 3 m/min at 80°C to obtain a three-layer unstretched film in which a surface decorative layer (III) having a thickness of 50 $\mu$m, a layer (II) having a thickness of 100 $\mu$m, and the seal layer (I) having a thickness of 50 $\mu$m were stacked on one another.

• Three-dimensional decorative thermoforming

The forming and evaluation were performed in substantially the same manner as in Example C1-3 except that the above-obtained unstretched film was used, and that forming was performed 10 seconds after a spring back phenomenon was completed. The results of the evaluation are shown in Table 17.

Example E1-4

The forming and evaluation were performed in substantially the same manner as in Example E1-3 except that polypropylene resin (A-1-3) for the surface decorative layer in the production of the decorative film in Example E1-3 was changed to polypropylene resin (A-1-4). The results of the evaluation are shown in Table 17.

Example E1-5

The forming and evaluation were performed in substantially the same manner as in Example E1-3 except that polypropylene resin (A-1-3) for the surface decorative layer in the production of the decorative film in Example E1-3 was changed to polypropylene resin (A-1-5). The results of the evaluation are shown in Table 17.

Example E1-6

The forming and evaluation were performed in substantially the same manner as in Example E1-3 except that polypropylene resin (B-1) for layer (II) in the production of the decorative film in Example E1-3 was changed to a mixture of polypropylene resin (B-1) and polypropylene resin (A-1) which were blended in a weight ratio of 70:30. The results of the evaluation are shown in Table 17.

Example E1-7

The forming and evaluation were performed in substantially the same manner as in Example E1-3 except that polypropylene resin (B-1) for layer (II) in the production of the decorative film in Example E1-3 was changed to a mixture of polypropylene resin (B-1) and polypropylene resin (A-1) which were blended in a weight ratio of 10:90. The results of the evaluation are shown in Table 17.

Example E1-8

The forming and evaluation were performed in substantially the same manner as in Example E1-3 except that polypropylene resin (B-1) for layer (II) in the production of the decorative film in Example E1-3 was changed to polypropylene resin (B-2). The results of the evaluation are shown in Table 17.

Example E1-9

The forming and evaluation were performed in substantially the same manner as in Example E1-3 except that polypropylene resin (B-1) for layer (II) in the production of the decorative film in Example E1-3 was changed to a mixture of polypropylene resin (B-2) and polypropylene resin (A-1) which were blended in a weight ratio of 70:30. The results of the evaluation are shown in Table 17.

Example E1-10

The forming and evaluation were performed in substantially the same manner as in Example E1-3 except that polypropylene resin (B-1) for layer (II) in the production of the decorative film in Example E1-3 was changed to a mixture of polypropylene resin (B-2) and polypropylene resin (A-1) which were blended in a weight ratio of 10:90. The results of the evaluation are shown in Table 17.

Example E1-13

There was used a two-type two-layer T-die having a lip opening of 0.8 mm and having a dice width of 400 mm, to which a seal layer extruder-1 having a bore diameter of 30 mm (diameter) and an extruder-2 having a bore diameter of 40 mm (diameter) were connected. Polypropylene resin (A-1) was charged into the seal layer extruder-1, and polypropylene resin (B-1-3) was charged into the extruder-2, and melt extrusion was conducted under conditions such that the resin temperature was 240°C, the extrusion rate of the seal layer extruder-1 was 4 kg/h, and the extrusion rate of the extruder-2 was 12 kg/h.
The melt-extruded film was cooled and set while permitting a seal layer (I) to be in contact with a cooling roll rotating at 3 m/min at 80°C to obtain a two-layer unstretched film in which the seal layer (I) having a thickness of 50 μm and a layer (II) having a thickness of 150 μm were stacked on one another.
Using the unstretched film obtained in the above-mentioned production of decorative film, three-dimensional decorative thermoforming was conducted in the same manner as in Example E1-3, and evaluation was performed. The results of the evaluation are shown in Table 17.

Comparative Example E1-1

The forming and evaluation were performed in substantially the same manner as in Example E1-3 except that

polypropylene resin (A-1-3) for the surface decorative layer in the production of the decorative film in Example E1-3 was changed to polypropylene resin (A-1). The results of the evaluation are shown in Table 17.

Comparative Example E1-3

The forming and evaluation were performed in substantially the same manner as in Example E1-3 except that polypropylene resin (A-1-3) for the surface decorative layer was changed to polypropylene resin (A-1-1), and polypropylene resin (A-1) for seal layer (I) was changed to polypropylene resin (B-1), in the production of the decorative film in Example E1-3, and that, in the three-dimensional decorative thermoforming, forming was performed 50 seconds after a spring back phenomenon was completed. The results of the evaluation are shown in Table 17.

[Table 17]

Table 17

| | | | | Unit | Example E1-3 | Example E1-4 | Example E1-5 | Example E1-6 | Example E1-7 | Example E1-8 | Example E1-9 | Example E1-10 | Example E1-13 | Comparative Example E1-1 | Comparative Example E1-3 |
|---|---|---|---|---|---|---|---|---|---|---|---|---|---|---|---|
| Decorative film | Surface decorative layer (III) | | Type | | A-1-3 | A-1-4 | A-1-5 | A-1-3 | A-1-3 | A-1-3 | A-1-3 | A-1-3 | - | A-1 | A-1-1 |
| | | | MFR | g/10 min. | 10 | 10 | 10 | 10 | 10 | 10 | 10 | 10 | - | 10 | 10 |
| | | | λ | | 1.0 | 1.0 | 1.0 | 1.0 | 1.0 | 1.0 | 1.0 | 1.0 | - | 1.0 | 1.0 |
| | Layer (II) | Long-chain branched PP | Type | | B-1 | B-1 | B-1 | B-1 | B-1 | B-2 | B-2 | B-2 | B-1-3 | B-1 | B-1 |
| | | | MFR | g/10 min. | 1.0 | 1.0 | 1.0 | 1.0 | 1.0 | 8.8 | 8.8 | 8.8 | 1.0 | 1.0 | 1.0 |
| | | | Ratio | | 100 | 100 | 100 | 70 | 10 | 100 | 70 | 10 | 100 | 100 | 100 |
| | | Other PP | Type | | - | - | - | A-1 | A-1 | - | A-1 | A-1 | - | - | - |
| | | | MFR | g/10 min. | - | - | - | 10 | 10 | - | 10 | 10 | - | - | - |
| | | | Ratio | | - | - | - | 30 | 90 | - | 30 | 90 | - | - | - |
| | | Whole of composition | MFR | | 1.0 | 1.0 | 1.0 | 2.3 | 9.3 | 8.8 | 8.9 | 10 | 1.0 | 1.0 | 1.0 |
| | | | λ | | 9.7 | 9.7 | 9.7 | 6.6 | 2.2 | 7.8 | 4.8 | 1.5 | 9.7 | 9.7 | 9.7 |
| | Seal layer (I) | Type | | | A-1 | A-1 | A-1 | A-1 | A-1 | A-1 | A-1 | A-1 | A-1 | A-1 | B-1 |
| | | MFR | | g/10 min. | 10 | 10 | 10 | 10 | 10 | 10 | 10 | 10 | 10 | 10 | 1.0 |
| | | Melting point | | °C | 161 | 161 | 161 | 161 | 161 | 161 | 161 | 161 | 161 | 161 | 154 |
| Substrate | | Type | | | Z-1 | Z-1 | Z-1 | Z-1 | Z-1 | Z-1 | Z-1 | Z-1 | Z-1 | Z-1 | Z-1 |
| Heating time after spring back | | | | Sec. | 10 | 10 | 10 | 10 | 10 | 10 | 10 | 10 | 10 | 10 | 50 |
| Thermoformability | | | | | O | O | O | O | O | O | O | O | O | O | O |
| Adhesive force | | | | N/10mm | 18 | 20 | 20 | 19 | 16 | 18 | 19 | 17 | 17 | 21 | 50 |
| Surface gloss | Gloss of decorative film before decorative forming | | | | 90 | 90 | 97 | 91 | 88 | 90 | 89 | 91 | 88 | 55 | 100 |
| | Gloss after decorative forming | | | | 66 | 80 | 68 | 68 | 64 | 65 | 67 | 70 | 65 | 20 | 17 |
| | ⊿Gloss | | | | 24 | 10 | 29 | 23 | 24 | 25 | 22 | 21 | 23 | 35 | 83 |
| Appearance of recycled molded article | | | | | O | O | O | O | O | O | O | O | O | O | O |

With respect to the decorative molded article obtained using each of the decorative films in Examples E1-3 to -10 and -13, a nucleating agent is contained in any one of the layers of the decorative film; polypropylene resin (A) in seal layer (I) has (a'1) a melt flow rate (MFR (A)) of more than 2.0 g/10 minutes; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent surface gloss and adhesive force. The decorative thermoforming was conducted

for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E1-1, which does not contain a nucleating agent in any of the layers, the decorative film had a low surface gloss, and, after the decorative forming, the surface of the film became further foggy, and a lowering of the surface gloss was marked. With respect to the decorative film in Comparative Example E1-3 in which the MFR of the polypropylene resin used in seal layer (I) is 2.0 g/10 minutes or less, forming was performed 50 seconds after a spring back phenomenon was completed so that the heating time in the three-dimensional decorative forming was extended, and therefore excellent adhesion was exhibited, but the nucleating agent added to surface decorative layer (III) volatilized, causing a marked lowering of the surface gloss.

(Test Example 2)

[2: Decorative film comprising seal layer (I) comprising polypropylene resin (A) which satisfies the requirements (a'2) to (a'4)]

2-1. Materials used

Polypropylene resin

The following polypropylene resin was used, in addition to the polypropylene resins shown in "1-1. Materials used" above.

(A-4): Propylene-α-olefin copolymer produced using a metallocene catalyst (MFR = 7.0 g/10 minutes; Tm = 125°C; Mw/Mn = 2.5), trade name "WINTEC (registered trademark) WFX4M", manufactured by Japan Polypropylene Corporation

Example E2-3

The forming and evaluation were performed in substantially the same manner as in Example E1-3 except that polypropylene resin (A-1) for seal layer (I) in the production of the decorative film in Example E1-3 was changed to polypropylene resin (A-4), and that, in the three-dimensional decorative thermoforming, forming was performed 5 seconds after a spring back phenomenon was completed. The results of the evaluation are shown in Table 18.

Example E2-4

The forming and evaluation were performed in substantially the same manner as in Example E2-3 except that polypropylene resin (A-1-3) for the surface decorative layer in the production of the decorative film in Example E2-3 was changed to polypropylene resin (A-1-4). The results of the evaluation are shown in Table 18.

Example E2-5

The forming and evaluation were performed in substantially the same manner as in Example E2-3 except that polypropylene resin (A-1-3) for the surface decorative layer in the production of the decorative film in Example E2-3 was changed to polypropylene resin (A-1-5). The results of the evaluation are shown in Table 18.

Comparative Example E2-1

The forming and evaluation were performed in substantially the same manner as in Example E2-3 except that polypropylene resin (A-1-3) for the surface decorative layer in the production of the decorative film in Example E2-3 was changed to polypropylene resin (A-1). The results of the evaluation are shown in Table 18.

[Table 18]

| | | | | Unit | Example E2-3 | Example E2-4 | Example E2-5 | Comparative Example E2-1 |
|---|---|---|---|---|---|---|---|---|
| Decorative film | Surface decorative layer (III) | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Type | | | A-4 | A-4 | A-4 | A-4 |
| | | MFR | | g/10 min. | 7.0 | 7.0 | 7.0 | 7.0 |
| | | Melting point | | °C | 125 | 125 | 125 | 125 |
| | | Mw/Mn | | | 2.5 | 2.5 | 2.5 | 2.5 |
| Substrate | | Type | | | Z-1 | Z-1 | Z-1 | Z-1 |
| Heating time after spring back | | | | Sec. | 5 | 5 | 5 | 5 |
| Thermoformability | | | | | ○ | ○ | ○ | ○ |
| Adhesive force | | | | N/10mm | 19 | 19 | 20 | 21 |
| Surface gloss | Gloss of decorative film before decorative forming | | | | 91 | 90 | 96 | 54 |
| | Gloss after decorative forming | | | | 67 | 81 | 70 | 20 |
| | ⊿Gloss | | | | 24 | 9 | 26 | 34 |
| Appearance of recycled molded article | | | | | ○ | ○ | ○ | ○ |

With respect to the decorative molded article obtained using each of the decorative films in Examples E2-3 to -5, a nucleating agent is contained in any one of the layers of the decorative film; polypropylene resin (A) in seal layer (I) has (a'1) a melt flow rate (MFR (A)) of more than 2.0 g/10 minutes, and is (a'2) a metallocene catalyst propylene polymer, and has (a'3) a melting peak temperature (Tm (A)) of lower than 150°C and (a'4) an Mw/Mn (A) of 1.5 to 3.5; and resin composition (B') comprising polypropylene resin (B) in layer (II) has (b'1) a melt flow rate (MFR (B')) of 40 g/10 minutes or less, (b'2) a strain hardening index of 1.1 or more, and (b'3) a melting peak temperature (Tm (B')) which is higher than Tm (A). Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E2-1, which does not contain a nucleating agent in any of the layers, the decorative film had a low surface gloss, and, after the decorative forming, the surface of the film became further foggy, and a lowering of the surface gloss was marked.

(Test Example 3)

[3: Decorative film comprising seal layer (I) comprising polypropylene resin (A) and ethylene-$\alpha$-olefin random copolymer (C)]

3-1. Materials used

Polypropylene resin

The following polypropylene resin was used, in addition to the polypropylene resins shown in "1-1. Materials used" above.
(A-3): Propylene-$\alpha$-olefin random copolymer having no long-chain branching (MFR = 7.0 g/10 minutes; Tm = 146°C; Mw/Mn = 4.0; tensile modulus = 1,200 MPa), trade name "NOVATEC (registered trademark) FW3GT", manufactured by Japan Polypropylene Corporation.

Ethylene-$\alpha$-olefin random copolymer (C)

The following ethylene-$\alpha$-olefin random copolymer was used.
(C-1): Ethylene-butene random copolymer (MFR = 6.8 g/10 minutes; Tm = 66°C; density = 0.885 $g/cm^3$; ethylene content = 84% by weight), trade name "TAFMER A4085S", manufactured by Mitsui Chemicals, Inc.

Example E3-3

The forming and evaluation were performed in substantially the same manner as in Example E1-3 except that polypropylene resin (A-1) for seal layer (I) in the production of the decorative film in Example E1-3 was changed to a mixture of polypropylene resin (A-3) and ethylene-α-olefin random copolymer (C-1) which were blended in a weight ratio of 85:15, and that, in the three-dimensional decorative thermoforming, forming was performed immediately after a spring back phenomenon was completed (that is, the heating time after the spring back was 0 second). The results of the evaluation are shown in Table 19.

Example E3-4

The forming and evaluation were performed in substantially the same manner as in Example E3-3 except that polypropylene resin (A-1-3) for the surface decorative layer in the production of the decorative film in Example E3-3 was changed to polypropylene resin (A-1-4). The results of the evaluation are shown in Table 19.

Example E3-5

The forming and evaluation were performed in substantially the same manner as in Example E3-3 except that polypropylene resin (A-1-3) for the surface decorative layer in the production of the decorative film in Example E3-3 was changed to polypropylene resin (A-1-5). The results of the evaluation are shown in Table 19.

Comparative Example E3-1

The forming and evaluation were performed in substantially the same manner as in Example E3-3 except that polypropylene resin (A-1-3) for the surface decorative layer in the production of the decorative film in Example E3-3 was changed to polypropylene resin (A-1). The results of the evaluation are shown in Table 19.

[Table 19]

| | | | | Unit | Example E3-3 | Example E3-4 | Example E3-5 | Comparative Example E3-1 |
|---|---|---|---|---|---|---|---|---|
| Decorative film | Surface decorative layer (III) | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Polypropylene resin (A) | Type | | A-3 | A-3 | A-3 | A-3 |
| | | | MFR | g/10 min. | 7.0 | 7.0 | 7.0 | 7.0 |
| | | | Amount | wt% | 85 | 85 | 85 | 85 |
| | | Ethylene-α-olefin random copolymer (C) | Type | | C-1 | C-1 | C-1 | C-1 |
| | | | MFR | g/10 min. | 6.8 | 6.8 | 6.8 | 6.8 |
| | | | Amount | wt% | 15 | 15 | 15 | 15 |
| Substrate | | Type | | | Z-1 | Z-1 | Z-1 | Z-1 |
| Heating time after spring back | | | | Sec. | 0 | 0 | 0 | 0 |
| Thermoformability | | | | | O | O | O | O |
| Adhesive force | | | | N/10mm | 36 | 33 | 33 | 20 |
| Surface gloss | Gloss of decorative film before decorative forming | | | | 89 | 89 | 99 | 54 |
| | Gloss after decorative forming | | | | 67 | 79 | 69 | 22 |
| | ⊿Gloss | | | | 22 | 10 | 30 | 32 |
| Appearance of recycled molded article | | | | | O | O | O | O |

With respect to the decorative molded article obtained using each of the decorative films in Examples E3-3 to -5, a nucleating agent is contained in any one of the layers of the decorative film; seal layer (I) comprises resin composition (XX'3) in which the weight ratio of polypropylene resin (A) and ethylene-α-olefin random copolymer (C) is 97:3 to 5:95, and polypropylene resin (A) has (a'1) a melt flow rate (MFR (A)) of more than 2.0 g/10 minutes, and ethylene-α-olefin random copolymer (C) has (c'1) an ethylene content [E (C)] of 65% by weight or more, (c'2) a density of 0.850 to 0.950 g/cm$^2$, and (c'3) a melt flow rate (MFR (C)) of 0.1 to 100 g/10 minutes; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and

had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E3-1, which does not contain a nucleating agent in any of the layers, the decorative film had a low surface gloss, and, after the decorative forming, the surface of the film became further foggy, and a lowering of the surface gloss was marked.

(Test Example 4)

[4: Decorative film comprising seal layer (I) comprising polypropylene resin (A) and thermoplastic elastomer (D)]

4-1. Materials used

Polypropylene resin

The polypropylene resins shown in "1-1. Materials used" and "3-1. Materials used" above were used.

Thermoplastic elastomer (D)

The following thermoplastic elastomer was used.
(D-1): Propylene-butene random copolymer comprising propylene as a main component (MFR = 7.0 g/10 minutes; Tm = 75°C; density = 0.885 g/cm$^3$; tensile modulus = 290 MPa; propylene content = 69% by weight; butene content = 31% by weight; ethylene content [E] = 0% by weight), trade name "TAFMER XM7070", manufactured by Mitsui Chemicals, Inc.

Example E4-3

The forming and evaluation were performed in substantially the same manner as in Example E1-3 except that polypropylene resin (A-1) for seal layer (I) in the production of the decorative film in Example E1-3 was changed to a mixture of polypropylene resin (A-3) and thermoplastic elastomer (D-1) which were blended in a weight ratio of 85:15, and that, in the three-dimensional decorative thermoforming, forming was performed 5 seconds after a spring back phenomenon was completed. The results of the evaluation are shown in Table 20.

Example E4-4

The forming and evaluation were performed in substantially the same manner as in Example E4-3 except that polypropylene resin (A-1-3) for the surface decorative layer in the production of the decorative film in Example E4-3 was changed to polypropylene resin (A-1-4). The results of the evaluation are shown in Table 20.

Example E4-5

The forming and evaluation were performed in substantially the same manner as in Example E4-3 except that polypropylene resin (A-1-3) for the surface decorative layer in the production of the decorative film in Example E4-3 was changed to polypropylene resin (A-1-5). The results of the evaluation are shown in Table 20.

Comparative Example E4-1

The forming and evaluation were performed in substantially the same manner as in Example E4-3 except that polypropylene resin (A-1-3) for the surface decorative layer in the production of the decorative film in Example E4-3 was changed to polypropylene resin (A-1). The results of the evaluation are shown in Table 20.

[Table 20]

| | | | | Unit | Example E4-3 | Example E4-4 | Example E4-5 | Comparative Example E4-1 |
|---|---|---|---|---|---|---|---|---|
| Decorative film | Surface decorative layer (III) | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Polypropylene resin (A) | Type | | A-3 | A-3 | A-3 | A-3 |
| | | | MFR | g/10 min. | 7.0 | 7.0 | 7.0 | 7.0 |
| | | | Amount | wt% | 85 | 85 | 85 | 85 |
| | | Thermoplastic elastomer (D) | Type | | D-1 | D-1 | D-1 | D-1 |
| | | | MFR | g/10 min. | 7.0 | 7.0 | 7.0 | 7.0 |
| | | | Amount | wt% | 15 | 15 | 15 | 15 |
| Substrate | | Type | | | Z-1 | Z-1 | Z-1 | Z-1 |
| Heating time after spring back | | | | Sec. | 5 | 5 | 5 | 5 |
| Thermoformability | | | | | ○ | ○ | ○ | ○ |
| Adhesive force | | | | N/10mm | 36 | 33 | 33 | 20 |
| Surface gloss | Gloss of decorative film before decorative forming | | | | 89 | 89 | 99 | 54 |
| | Gloss after decorative forming | | | | 67 | 79 | 69 | 22 |
| | ⊿Gloss | | | | 22 | 10 | 30 | 32 |
| Appearance of recycled molded article | | | | | ○ | ○ | ○ | ○ |

With respect to the decorative molded article obtained using each of the decorative films in Examples E4-3 to -5, a nucleating agent is contained in any one of the layers of the decorative film; seal layer (I) comprises resin composition (XX'4) in which the weight ratio of polypropylene resin (A) and thermoplastic elastomer (D) is 97:3 to 5:95, and polypropylene resin (A) has (a'1) a melt flow rate (MFR (A)) of more than 2.0 g/10 minutes, and thermoplastic elastomer (D) comprises (d'1) at least one of propylene and butene as a main component, and has (d'2) a density of 0.850 to 0.950 g/cm$^2$, (d'3) a melt flow rate (MFR (D)) of 0.1 to 100 g/10 minutes, and (d'4) a tensile modulus which is smaller than that of polypropylene resin (A); and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E4-1, which does not contain a nucleating agent in any of the layers, the decorative film had a low surface gloss, and, after the decorative forming, the surface of the film became further foggy, and a lowering of the surface gloss was marked.

(Test Example 5)

[5: Decorative film comprising seal layer (I) comprising polypropylene resin (A) and thermoplastic resin (E)]

5-1. Materials used

Polypropylene resin

As a polypropylene resin for seal layer (I), the following polypropylene resin was used.
(A-3): Propylene-$\alpha$-olefin copolymer (MFR = 7.0 g/10 minutes; Tm = 146°C; crystallization start temperature = 111 °C; isothermal crystallization time (t) = 263 seconds (measured at 121°C)), trade name "NOVATEC (registered trademark) FW3GT", manufactured by Japan Polypropylene Corporation

With respect to layer (II) and surface decorative layer (III), the polypropylene resins used in (Test Example 1) were used.

Thermoplastic resin (E)

The following thermoplastic resin was used.
(E-1): Hydrogenated styrene elastomer (HSBR): trade name "DYNARON 1320P", manufactured by JSR Corporation

Example E5-3

The forming and evaluation were performed in substantially the same manner as in Example E1-3 except that polypropylene resin (A-1) for seal layer (I) in the production of the decorative film in Example E1-3 was changed to a mixture of polypropylene resin (A-3) and thermoplastic resin (E-1) which were blended in a weight ratio of 50:50, and that, in the three-dimensional decorative thermoforming, forming was performed immediately after a spring back phenomenon was completed (that is, the heating time after the spring back was 0 second). The results of the evaluation are shown in Table 21.

Example E5-4

The forming and evaluation were performed in substantially the same manner as in Example E5-3 except that polypropylene resin (A-1-3) for the surface decorative layer in the production of the decorative film in Example E5-3 was changed to polypropylene resin (A-1-4). The results of the evaluation are shown in Table 21.

Example E5-5

The forming and evaluation were performed in substantially the same manner as in Example E5-3 except that polypropylene resin (A-1-3) for the surface decorative layer in the production of the decorative film in Example E5-3 was changed to polypropylene resin (A-1-5). The results of the evaluation are shown in Table 21.

Comparative Example E5-1

The forming and evaluation were performed in substantially the same manner as in Example E5-3 except that polypropylene resin (A-1-3) for the surface decorative layer in the production of the decorative film in Example E5-3 was changed to polypropylene resin (A-1). The results of the evaluation are shown in Table 21.

[Table 21]

| | | | | Unit | Example E5-3 | Example E5-4 | Example E5-5 | Comparative Example E5-1 |
|---|---|---|---|---|---|---|---|---|
| Decorative film | Surface decorative layer (III) | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Polypropylene resin (A) | Type | | A-3 | A-3 | A-3 | A-3 |
| | | | MFR | g/10 min. | 7.0 | 7.0 | 7.0 | 7.0 |
| | | | Amount | wt% | 50 | 50 | 50 | 50 |
| | | Thermoplastic resin (E) | Type | | E-1 | E-1 | E-1 | E-1 |
| | | | Amount | wt% | 50 | 50 | 50 | 50 |
| | | Resin composition (XX'5) | Isothermal crystallization time t(XX'5) | Sec. | 2590 | 2590 | 2590 | 2590 |
| | | | t(XX'5)/t(A) | | 9.8 | 9.8 | 9.8 | 9.8 |
| Substrate | | Type | | | Z-1 | Z-1 | Z-1 | Z-1 |
| Heating time after spring back | | | | Sec. | 0 | 0 | 0 | 0 |
| Thermoformability | | | | | ○ | ○ | ○ | ○ |
| Adhesive force | | | | N/10mm | 38 | 35 | 35 | 20 |
| Surface gloss | Gloss of decorative film before decorative forming | | | | 91 | 89 | 100 | 54 |
| | Gloss after decorative forming | | | | 69 | 81 | 71 | 22 |
| | ⊿Gloss | | | | 22 | 8 | 29 | 32 |
| Appearance of recycled molded article | | | | | ○ | ○ | ○ | ○ |

With respect to the decorative molded article obtained using each of the decorative films in Examples E5-3 to -5, a nucleating agent is contained in any one of the layers of the decorative film; seal layer (I) comprises resin composition (XX'5) in which the weight ratio of polypropylene resin (A) and thermoplastic resin (E) is 97:3 to 5:95, and polypropylene resin (A) has (a'1) a melt flow rate (MFR (A)) of more than 2.0 g/10 minutes, and thermoplastic resin (E) contains (e'1) at least one of an alicyclic hydrocarbon group and an aromatic hydrocarbon group; (xx'1) the isothermal crystallization time (t(XX'5)) (second) of resin composition (XX'5) is 1.5 times or more as long as the isothermal crystallization time (t(A)) (second) of polypropylene resin (A); and resin composition (B') comprising polypropylene resin (B) in layer (II) has (b'1) a melt flow rate (MFR (B')) of 40 g/10 minutes or less and (b'2) a strain hardening index of 1.1 or more. Therefore,

the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E5-1, which does not contain a nucleating agent in any of the layers, the decorative film had a low surface gloss, and, after the decorative forming, the surface of the film became further foggy, and a lowering of the surface gloss was marked.

(Test Example 6)

[6: Decorative film comprising seal layer (I) comprising propylene-ethylene block copolymer (F)]

6-1. Materials used

Polypropylene resin

The resins used in "1-1. Materials used" above, and the propylene-ethylene block copolymer used in (Test Example 6) in Example C were used.

Example E6-3

The forming and evaluation were performed in substantially the same manner as in Example E1-3 except that polypropylene resin (A-1) for seal layer (I) in the production of the decorative film in Example E1-3 was changed to propylene-ethylene block copolymer (F-1), and that, in the three-dimensional decorative thermoforming, forming was performed immediately after a spring back phenomenon was completed (that is, the heating time after the spring back was 0 second). The results of the evaluation are shown in Table 22.

Example E6-4

The forming and evaluation were performed in substantially the same manner as in Example E6-3 except that polypropylene resin (A-1-3) for the surface decorative layer in the production of the decorative film in Example E6-3 was changed to polypropylene resin (A-1-4). The results of the evaluation are shown in Table 22.

Example E6-5

The forming and evaluation were performed in substantially the same manner as in Example E6-3 except that polypropylene resin (A-1-3) for the surface decorative layer in the production of the decorative film in Example E6-3 was changed to polypropylene resin (A-1-5). The results of the evaluation are shown in Table 22.

Comparative Example E6-1

The forming and evaluation were performed in substantially the same manner as in Example E6-3 except that polypropylene resin (A-1-3) for the surface decorative layer in the production of the decorative film in Example E6-3 was changed to polypropylene resin (A-1). The results of the evaluation are shown in Table 22.

[Table 22]

| | | | | Unit | Example E6-3 | Example E6-4 | Example E6-5 | Comparative Example E6-1 |
|---|---|---|---|---|---|---|---|---|
| Decorative film | Surface decorative layer | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Propylene-ethylene block copolymer (F) | Type | | F-1 | F-1 | F-1 | F-1 |
| | | | MFR | g/10 min. | 7.0 | 7.0 | 7.0 | 7.0 |
| | | | Tm | °C | 161 | 161 | 161 | 161 |
| Substrate | | Type | | | Z-1 | Z-1 | Z-1 | Z-1 |
| Heating time after spring back | | | | Sec. | 0 | 0 | 0 | 0 |
| Thermoformability | | | | | ○ | ○ | ○ | ○ |
| Adhesive force | | | | N/10mm | 26 | 29 | 28 | 28 |
| Surface gloss | Gloss of decorative film before decorative forming | | | | 90 | 89 | 94 | 56 |
| | Gloss after decorative forming | | | | 69 | 82 | 71 | 21 |
| | ⊿Gloss | | | | 21 | 7 | 23 | 35 |
| Appearance of recycled molded article | | | | | ○ | ○ | ○ | ○ |

With respect to the decorative molded article obtained using each of the decorative films in Examples E6-3 to -5, a nucleating agent is contained in any one of the layers of the decorative film; polypropylene resin (A) is propylene-ethylene block copolymer (F), and propylene-ethylene block copolymer (F) has (a'1) a melt flow rate (MFR (A)) of more than 2.0 g/10 minutes, and contains (f'1) 5 to 97% by weight of component (F1) comprising a propylene homopolymer or a propylene-ethylene random copolymer, and 3 to 95% by weight of component (F2) comprising a propylene-ethylene random copolymer which has an ethylene content larger than that of component (F1), and has (f'2) a melting peak temperature (Tm (F)) of 110 to 170°C; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent surface gloss and adhesive force. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E6-1, which does not contain a nucleating agent in any of the layers, the decorative film had a low surface gloss, and, after the decorative forming, the surface of the film became further foggy, and a lowering of the surface gloss was marked.

(Test Example 7)

[7: Decorative film comprising seal layer (I) comprising olefin bonding resin (G)]

7-1. Materials used

The following resin was used, in addition to the polypropylene resins shown in "1-1. Materials used" above.

Polyolefin bonding resin (G)

(G-1): Maleic anhydride-modified polyolefin (MFR = 7.0 g/10 minutes), trade name "MODIC AP (registered trademark) F534A", manufactured by Mitsubishi Chemical Corporation

7-2. Preparation of a resin molded article (substrate)

(1) Polar resin used in a resin molded article (substrate)

The following polar resin was used.
(Z-4): PMMA (polymethyl methacrylate) resin, "ACRYPET MD", manufactured by Mitsubishi Rayon Co., Ltd.

(2) Production of a resin molded article (substrate)

Polar resin (Z-4) was dried using a box oven at 80°C for 2 hours. The dried resin was subjected to injection molding by the method shown below to obtain an injection molded article.

(i) Molding conditions for PMMA resin:

Injection molding machine: "IS100GN", manufactured by Toshiba Machine Co., Ltd.; mold clamping pressure: 100 tons
Cylinder temperature: 230°C
Mold temperature: 40°C
Injection mold: Flat sheet having width × height × thickness = 120 mm × 120 mm × 3 mm
Conditioning: Maintained in a thermo-hygrostat at a temperature of 23°C and at a humidity of 50% RH for 5 days.

Example E7-3

• Production of a decorative film

There was used a three-type three-layer T-die having a lip opening of 0.8 mm and having a dice width of 400 mm, to which a seal layer extruder-1 having a bore diameter of 30 mm (diameter), an extruder-2 having a bore diameter of 40 mm (diameter), and a surface decorative layer extruder-3 having a bore diameter of 30 mm (diameter) were connected. Polyolefin bonding resin (G-1) was charged into the seal layer extruder-1, polypropylene resin (B-1) was charged into the extruder-2, and polypropylene resin (A-1-3) was charged into the surface decorative layer extruder-3, and melt extrusion was conducted under conditions such that the resin temperature was 240°C, the extrusion rate of the seal layer extruder-1 was 8 kg/h, the extrusion rate of the extruder-2 was 8 kg/h, and the extrusion rate of the surface decorative layer extruder-3 was 4 kg/h.

The melt-extruded film was cooled and set while permitting a seal layer (I) to be in contact with a cooling roll rotating at 3 m/min at 80°C to obtain a three-layer unstretched film in which a surface decorative layer (III) having a thickness of 50 μm, a layer (II) having a thickness of 100 μm, and the seal layer (I) having a thickness of 100 μm were stacked on one another.

• Three-dimensional decorative thermoforming

The forming and evaluation were performed in substantially the same manner as in Example E1-3 except that, in the three-dimensional decorative thermoforming in Example E1-3, the above-obtained unstretched film was used, and the substrate was changed to an injection molded article comprising PMMA resin (Z-4), and that decorative forming was performed immediately after a spring back phenomenon was completed (that is, the heating time after the spring back was 0 second). The results of the evaluation are shown in Table 23.

Example E7-4

The forming and evaluation were performed in substantially the same manner as in Example E7-3 except that polypropylene resin (A-1-3) for the surface decorative layer in the production of the decorative film in Example E7-3 was changed to polypropylene resin (A-1-4). The results of the evaluation are shown in Table 23.

Example E7-5

The forming and evaluation were performed in substantially the same manner as in Example E7-3 except that polypropylene resin (A-1-3) for the surface decorative layer in the production of the decorative film in Example E7-3 was changed to polypropylene resin (A-1-5). The results of the evaluation are shown in Table 23.

Comparative Example E7-1

The forming and evaluation were performed in substantially the same manner as in Example E7-3 except that polypropylene resin (A-1-3) for the surface decorative layer in the production of the decorative film in Example E7-3 was changed to polypropylene resin (A-1). The results of the evaluation are shown in Table 23.

[Table 23]

| | | | | Unit | Example E7-3 | Example E7-4 | Example E7-5 | Comparative Example E7-1 |
|---|---|---|---|---|---|---|---|---|
| Decorative film | Surface decorative layer | | Type | | A-1-3 | A-1-4 | A-1-5 | A-1 |
| | | | MFR | g/10 min. | 10 | 10 | 10 | 10 |
| | | | λ | | 1.0 | 1.0 | 1.0 | 1.0 |
| | Layer (II) | Long-chain branched PP | Type | | B-1 | B-1 | B-1 | B-1 |
| | | | MFR | g/10 min. | 1.0 | 1.0 | 1.0 | 1.0 |
| | | | Ratio | | 100 | 100 | 100 | 100 |
| | | Whole of composition | MFR | | 1.0 | 1.0 | 1.0 | 1.0 |
| | | | λ | | 9.7 | 9.7 | 9.7 | 9.7 |
| | Seal layer (I) | Polyolefin bonding resin (G) | Type | | G-1 | G-1 | G-1 | G-1 |
| | | | MFR | g/10 min. | 7.0 | 7.0 | 7.0 | 7.0 |
| Substrate | | Type | | | Z-4 | Z-4 | Z-4 | Z-4 |
| Heating time after spring back | | | | Sec. | 0 | 0 | 0 | 0 |
| Thermoformability | | | | | O | O | O | O |
| Adhesive force | | | | N/10mm | 22 | 22 | 23 | 21 |
| Surface gloss | Gloss of decorative film before decorative forming | | | | 91 | 89 | 94 | 54 |
| | Gloss after decorative forming | | | | 68 | 81 | 70 | 21 |
| | ⊿Gloss | | | | 23 | 8 | 24 | 33 |
| Appearance of recycled molded article | | | | | O | O | O | O |

With respect to the decorative molded article obtained using each of the decorative films in Examples E7-3 to -5, a nucleating agent is contained in any one of the layers of the decorative film; polyolefin bonding resin (G) in seal layer (I) is (g' 1) a polyolefin resin having a polar functional group containing at least one heteroatom, and has (g'2) a melt flow rate (MFR (G)) of 100 g/10 minutes or less; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent surface gloss and excellent adhesive force to the resin molded article comprising a polar resin. The decorative thermoforming was conducted for a short time, and hence it was possible to suppress volatilization of the nucleating agent, and the decorative film maintained high surface gloss even after the thermoforming. Further, the obtained molded article had excellent recycling properties.

In contrast, with respect to the decorative film in Comparative Example E7-1, which does not contain a nucleating agent in any of the layers, the decorative film had a low surface gloss, and, after the decorative forming, the surface of the film became further foggy, and a lowering of the surface gloss was marked.

[Example F]

1. Method for measuring physical properties

The measurement was conducted in the same manner as in Examples A and B for the items: (i) Fogging test, (ii) Melt flow rate (MFR), (iii) Strain hardening index λ, (iii-1) Shear viscosity η* (0.01), (iii-2) Elongational viscosity ηe (3.5), (iv) Branching index g' at an absolute molecular weight Mabs of 1,000,000, and (v) Detection of a long-chain branched structure using $^{13}C$-NMR.

Further, the measurement was conducted in the same manner as in Example C for the items: (iii) Melting peak temperature (Melting point), (v) GPC measurement, (vi) Density, (vii) Tensile modulus, (viii) Ethylene content [E (C)], (ix): Determination of ethylene contents of propylene-ethylene block copolymer (F), component (F1), and component (F2), and (x) Isothermal crystallization time.

2. Evaluation of physical properties of a decorative molded article

The evaluation was conducted in the same manner as in Example E for the item: (1) Evaluation of thermoformability. Further, the evaluation was conducted in the same manner as in Example D for the items: (2) Adhesive force between a resin molded article (substrate) and a decorative film, (3) Weathering resistance, and (4) Evaluation of recycling properties.

3. Production of a resin molded article (substrate)

An injection molded article was obtained using propylene homopolymer (Z-1) in the same manner as in "3. Production of a resin molded article (substrate)" in "Examples A and B".

(Test Example 1)

[1: Decorative film comprising seal layer (I) comprising polypropylene resin (A) having MFR (A) of more than 2.0 g/10 minutes]

1-1. Materials used

Polypropylene resin

The following polypropylene resins were used.

(A-1): Propylene homopolymer having no long-chain branching (MFR = 10 g/10 minutes; Tm = 161°C; strain hardening index $\lambda$ = 1.0; tensile modulus = 1,600 MPa); trade name "NOVATEC (registered trademark) FA3KM", manufactured by Japan Polypropylene Corporation; branching index g' = 1.0 at an absolute molecular weight Mabs of 1,000,000; The $^{13}$C-NMR measurement confirmed that the propylene homopolymer had no long-chain branched structure.
(A-1-2): Polypropylene resin composition (MFR = 10 g/10 minutes; Tm = 161°C) having 0.2 part by weight of a hindered amine light stabilizer (trademark "Chimassorb 944", manufactured by BASF SE) blended with 100 parts by weight of polypropylene resin (A-1)
(B-1): Propylene homopolymer having long-chain branching, which is produced by a macromer copolymerization method; trade name "WAYMAX (registered trademark) MFX8", manufactured by Japan Polypropylene Corporation; MFR = 1.0 g/10 minutes; Mw/Mn = 5.3; strain hardening index $\lambda$ = 9.7; Tm = 154°C; branching index g' = 0.89 at an absolute molecular weight Mabs of 1,000,000; The $^{13}$C-NMR measurement confirmed that the propylene homopolymer had a long-chain branched structure.
(B-2): Propylene homopolymer having long-chain branching, which is produced by a macromer copolymerization method; trade name "WAYMAX (registered trademark) MFX3", manufactured by Japan Polypropylene Corporation; MFR = 8.8 g/10 minutes; strain hardening index $\lambda$ = 7.8; Tm = 154°C; branching index g' = 0.85 at an absolute molecular weight Mabs of 1,000,000; The $^{13}$C-NMR measurement confirmed that the propylene homopolymer had a long-chain branched structure.

(B-1-1): Polypropylene resin composition (MFR = 1.0 g/10 minutes; Tm = 154°C) having 0.2 part by weight of a hindered amine light stabilizer (trademark "Tinuvin 770", manufactured by BASF SE) blended with 100 parts by weight of polypropylene resin (B-1)
(B-1-2): Polypropylene resin composition (MFR = 1.0 g/10 minutes; Tm = 154°C) having 0.2 part by weight of a hindered amine light stabilizer (trademark "Chimassorb 944", manufactured by BASF SE) blended with 100 parts by weight of polypropylene resin (B-1)
(B-1-3): Polypropylene resin composition (MFR = 1.0 g/10 minutes; Tm = 154°C) having 0.2 part by weight of a hindered amine light stabilizer (trademark "LA57", manufactured by ADEKA Corporation) blended with 100 parts by weight of polypropylene resin (B-1)
(B-1-5): Polypropylene resin composition (MFR = 1.0 g/10 minutes; Tm = 154°C) having 0.2 part by weight of an ultraviolet light absorber (trademark "ADK STAB 1413", manufactured by ADEKA Corporation) blended with 100 parts by weight of polypropylene resin (B-1)
(B-1-7): Polypropylene resin composition (MFR = 1.0 g/10 minutes; Tm = 154°C) having 0.2 part by weight of an ultraviolet light absorber (trademark "LA-31G", manufactured by ADEKA Corporation) blended with 100 parts by weight of polypropylene resin (B-1)
(B-1-8): Polypropylene resin composition (MFR = 1.0 g/10 minutes; Tm = 154°C) having 0.2 part by weight of a hindered amine light stabilizer (trademark "Chimassorb 944", manufactured by BASF SE) and 0.2 part by weight of an ultraviolet light absorber (trademark "LA-31G", manufactured by ADEKA Corporation) blended with 100 parts by weight of polypropylene resin (B-1)
(B-2-2): Polypropylene resin composition (MFR = 8.8 g/10 minutes; Tm = 154°C) having 0.2 part by weight of a hindered amine light stabilizer (trademark "Chimassorb 944", manufactured by BASF SE) blended with 100 parts by weight of polypropylene resin (B-2)

Example F1-2

• Production of a decorative film

There was used a two-type two-layer T-die having a lip opening of 0.8 mm and having a dice width of 400 mm, to which a seal layer extruder-1 having a bore diameter of 30 mm (diameter) and an extruder-2 having a bore diameter of 40 mm (diameter) were connected. Polypropylene resin (A-1) was charged into the seal layer extruder-1, and polypropylene resin (B-1-2) was charged into the extruder-2, and melt extrusion was conducted under conditions such that the resin temperature was 240°C, the extrusion rate of the seal layer extruder-1 was 4 kg/h, and the extrusion rate of the extruder-2 was 12 kg/h.

The melt-extruded film was cooled and set while permitting a seal layer (I) to be in contact with a cooling roll rotating at 3 m/min at 80°C to obtain a two-layer unstretched film in which the seal layer (I) having a thickness of 50 $\mu$m and a layer (II) having a thickness of 150 $\mu$m were stacked on one another.

• Three-dimensional decorative thermoforming

The forming and evaluation were performed in substantially the same manner as in Example C1-3 except that the above-obtained unstretched film was used, and that forming was performed 10 seconds after a spring back phenomenon was completed. The results of the evaluation are shown in Table 24. The evaluation of weathering resistance was performed under conditions of irradiation time (1).

Example F1-3

The forming and evaluation were performed in substantially the same manner as in Example F1-2 except that polypropylene resin (B-1-2) for layer (II) in the production of the decorative film in Example F1-2 was changed to polypropylene resin (B-1-3). The results of the evaluation are shown in Table 24.

Example F1-5

The forming and evaluation were performed in substantially the same manner as in Example F1-2 except that polypropylene resin (B-1-2) for layer (II) in the production of the decorative film in Example F1-2 was changed to polypropylene resin (B-1-7), and that the evaluation of weathering resistance was performed under conditions of irradiation time (2). The results of the evaluation are shown in Table 24.

Example F1-6

The forming and evaluation were performed in substantially the same manner as in Example F1-2 except that polypropylene resin (B-1-2) for layer (II) in the production of the decorative film in Example F1-2 was changed to a mixture of polypropylene resin (B-1-2) and polypropylene resin (A-1-2) which were blended in a weight ratio of 70:30. The results of the evaluation are shown in Table 24.

Example F1-7

The forming and evaluation were performed in substantially the same manner as in Example F1-2 except that polypropylene resin (B-1-2) for layer (II) in the production of the decorative film in Example F1-2 was changed to a mixture of polypropylene resin (B-1-2) and polypropylene resin (A-1-2) which were blended in a weight ratio of 10:90. The results of the evaluation are shown in Table 24.

Example F1-8

The forming and evaluation were performed in substantially the same manner as in Example F1-2 except that polypropylene resin (B-1-2) for layer (II) in the production of the decorative film in Example F1-2 was changed to polypropylene resin (B-2-2). The results of the evaluation are shown in Table 24.

Example F1-9

The forming and evaluation were performed in substantially the same manner as in Example F1-2 except that polypropylene resin (B-1-2) for layer (II) in the production of the decorative film in Example F1-2 was changed to a

mixture of polypropylene resin (B-2-2) and polypropylene resin (A-1-2) which were blended in a weight ratio of 70:30. The results of the evaluation are shown in Table 24.

Example F1-10

The forming and evaluation were performed in substantially the same manner as in Example F1-2 except that polypropylene resin (B-1-2) for layer (II) in the production of the decorative film in Example F1-2 was changed to a mixture of polypropylene resin (B-2-2) and polypropylene resin (A-1-2) which were blended in a weight ratio of 10:90. The results of the evaluation are shown in Table 24.

Example F1-13

• Production of a decorative film

There was used a three-type three-layer T-die having a lip opening of 0.8 mm and having a dice width of 400 mm, to which a seal layer extruder-1 having a bore diameter of 30 mm (diameter), an extruder-2 having a bore diameter of 40 mm (diameter), and a surface decorative layer extruder-3 having a bore diameter of 30 mm (diameter) were connected. Polypropylene resin (A-1) was charged into the seal layer extruder-1, polypropylene resin (B-1-2) was charged into the extruder-2, and polypropylene resin (A-1-2) was charged into the surface decorative layer extruder-3, and melt extrusion was conducted under conditions such that the resin temperature was 240°C, the extrusion rate of the seal layer extruder-1 was 4 kg/h, the extrusion rate of the extruder-2 was 8 kg/h, and the extrusion rate of the surface decorative layer extruder-3 was 4 kg/h.

The melt-extruded film was cooled and set while permitting a seal layer (I) to be in contact with a cooling roll rotating at 3 m/min at 80°C to obtain a three-layer unstretched film in which a surface decorative layer (III) having a thickness of 50 $\mu$m, a layer (II) having a thickness of 100 $\mu$m, and the seal layer (I) having a thickness of 50 $\mu$m were stacked on one another.

Using the unstretched film obtained in the above-mentioned production of decorative film, three-dimensional decorative thermoforming was conducted in the same manner as in Example F1-2, and evaluation was performed. The results of the evaluation are shown in Table 24.

Example F1-14

The forming and evaluation were performed in substantially the same manner as in Example F1-2 except that polypropylene resin (B-1-2) for layer (II) in the production of the decorative film in Example F1-2 was changed to polypropylene resin (B-1-8), and that the evaluation of weathering resistance was performed under conditions of irradiation time (3). The results of the evaluation are shown in Table 24.

Comparative Example F1-1

The forming and evaluation were performed in substantially the same manner as in Example F1-2 except that polypropylene resin (B-1-2) for layer (II) in the production of the decorative film in Example F1-2 was changed to polypropylene resin (B-1). The results of the evaluation are shown in Table 24.

Comparative Example F1-4

The forming and evaluation were performed in substantially the same manner as in Example F1-2 except that polypropylene resin (B-1-2) for layer (II) was changed to polypropylene resin (B-1-1), and polypropylene resin (A-1) for seal layer (I) was changed to polypropylene resin (B-1), in the production of the decorative film in Example F1-2, and that, in the three-dimensional decorative thermoforming, forming was performed 40 seconds after a spring back phenomenon was completed. The results of the evaluation are shown in Table 24.

Comparative Example F1-5

The forming and evaluation were performed in substantially the same manner as in Example F1-2 except that polypropylene resin (B-1-2) for layer (II) was changed to polypropylene resin (B-1-5), and polypropylene resin (A-1) for seal layer (I) was changed to polypropylene resin (B-1), in the production of the decorative film in Example F1-2, that, in the three-dimensional decorative thermoforming, forming was performed 40 seconds after a spring back phenomenon was completed, and that the evaluation of weathering resistance was performed under conditions of irradiation time (2).

The results of the evaluation are shown in Table 24.

[Table 24]

| | | | | Unit | Example F1-2 | Example F1-3 | Example F1-5 | Example F1-6 | Example F1-7 | Example F1-8 | Example F1-9 | Example F1-10 | Example F1-13 | Example F1-14 | Comparative Example F1-1 | Comparative Example F1-4 | Comparative Example F1-5 |
|---|---|---|---|---|---|---|---|---|---|---|---|---|---|---|---|---|---|
| Decorative film | Surface decorative layer (III) | | Type | | - | - | - | - | - | - | - | - | A-1-2 | - | - | - | - |
| | | | MFR | g/10 min. | - | - | - | - | - | - | - | - | 10 | - | - | - | - |
| | | | λ | | - | - | - | - | - | - | - | - | 1.0 | - | - | - | - |
| | Layer (II) | Long-chain branched PP | Type | | B-1-2 | B-1-3 | B-1-7 | B-1-2 | B-1-2 | B-2-2 | B-2-2 | B-2-2 | B-1-2 | B-1-8 | B-1 | B-1-1 | B-1-5 |
| | | | MFR | g/10 min. | 1.0 | 1.0 | 1.0 | 1.0 | 1.0 | 8.8 | 8.8 | 8.8 | 1.0 | 1.0 | 1.0 | 1.0 | 1.0 |
| | | | Ratio | | 100 | 100 | 100 | 70 | 10 | 100 | 70 | 10 | 100 | 100 | 100 | 100 | 100 |
| | | Other PP | Type | | - | - | - | A-1-2 | A-1-2 | - | A-1-2 | A-1-2 | - | - | - | - | - |
| | | | MFR | g/10 min. | - | - | - | 10 | 10 | - | 10 | 10 | - | - | - | - | - |
| | | | Ratio | | - | - | - | 30 | 90 | - | 30 | 90 | - | - | - | - | - |
| | | Whole of composition | MFR | | 1.0 | 1.0 | 1.0 | 2.3 | 9.3 | 8.8 | 8.9 | 9.9 | 1.0 | 1.0 | 1.0 | 1.0 | 1.0 |
| | | | λ | | 9.7 | 9.7 | 9.7 | 6.6 | 2.2 | 7.8 | 4.8 | 1.5 | 9.7 | 9.7 | 9.7 | 9.7 | 9.7 |
| | Seal layer (I) | | Type | | A-1 | A-1 | A-1 | A-1 | A-1 | A-1 | A-1 | A-1 | A-1 | A-1 | A-1 | B-1 | B-1 |
| | | | MFR | g/10 min. | 10 | 10 | 10 | 10 | 10 | 10 | 10 | 10 | 10 | 10 | 10 | 1.0 | 1.0 |
| | | | Melting point | °C | 161 | 161 | 161 | 161 | 161 | 161 | 161 | 161 | 161 | 161 | 161 | 154 | 154 |
| Substrate | | | Type | | Z-1 | Z-1 | Z-1 | Z-1 | Z-1 | Z-1 | Z-1 | Z-1 | Z-1 | Z-1 | Z-1 | Z-1 | Z-1 |
| Heating time after spring back | | | | Sec. | 10 | 10 | 10 | 10 | 10 | 10 | 10 | 10 | 10 | 10 | 10 | 40 | 40 |
| Thermoformability | | | | | ○ | ○ | ○ | ○ | ○ | ○ | ○ | ○ | ○ | ○ | ○ | ○ | ○ |
| Adhesive force | | | | N/10mm | 18 | 19 | 19 | 19 | 17 | 18 | 19 | 18 | 19 | 19 | 21 | 35 | 35 |
| Weathering resistance | | | | | ○ | ○ | ○ | ○ | ○ | ○ | ○ | ○ | ○ | ○ | × | × | × |
| Appearance of recycled molded article | | | | | ○ | ○ | ○ | ○ | ○ | ○ | ○ | ○ | ○ | ○ | ○ | ○ | ○ |

With respect to the decorative molded article obtained using each of the decorative films in Examples F1-2, -3, -5 to -10, -13, and -14, a hindered amine light stabilizer and/or an ultraviolet light absorber is contained in any one of

the layers of the decorative film; polypropylene resin (A) in seal layer (I) has (a'1) a melt flow rate (MFR (A)) of more than 2.0 g/10 minutes; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F1-1, which does not contain a hindered amine light stabilizer and/or an ultraviolet light absorber in any of the layers, the decorative film had poor weathering resistance. With respect to the decorative film in Comparative Example F1-4 in which the MFR of the polypropylene resin used in seal layer (I) is 2.0 g/10 minutes or less, forming was performed 40 seconds after a spring back phenomenon was completed so that the heating time in the three-dimensional decorative forming was extended, and therefore adhesion was exhibited, but the added hindered amine light stabilizer volatilized, so that the weathering resistance was poor as compared to that in Example F1-2. In Comparative Example 1-5 in which MFR (A) of the polypropylene resin used in seal layer (I) is 2.0 g/10 minutes or less, and an ultraviolet light absorber is incorporated into layer (II), and forming was performed 40 seconds after a spring back phenomenon was completed, the heating time in the three-dimensional decorative forming was extended, and therefore adhesion was exhibited, but the added ultraviolet light absorber volatilized, so that the weathering resistance was poor as compared to that in Example F1-5.

(Test Example 2)

[2: Decorative film comprising seal layer (I) comprising polypropylene resin (A) which satisfies the requirements (a'2) to (a'4)]

2-1. Materials used

Polypropylene resin

The following polypropylene resin was used, in addition to the polypropylene resins shown in "1-1. Materials used" above.

(A-4): Propylene-$\alpha$-olefin copolymer produced using a metallocene catalyst (MFR = 7.0 g/10 minutes; Tm = 125°C; Mw/Mn = 2.5), trade name "WINTEC (registered trademark) WFX4M", manufactured by Japan Polypropylene Corporation

Example F2-2

The forming and evaluation were performed in substantially the same manner as in Example F1-2 except that polypropylene resin (A-1) for seal layer (I) in the production of the decorative film in Example F1-2 was changed to polypropylene resin (A-4), and that, in the three-dimensional decorative thermoforming, forming was performed 5 seconds after a spring back phenomenon was completed. The results of the evaluation are shown in Table 25.

Example F2-3

The forming and evaluation were performed in substantially the same manner as in Example F2-2 except that polypropylene resin (B-1-2) for layer (II) in the production of the decorative film in Example F2-2 was changed to polypropylene resin (B-1-3). The results of the evaluation are shown in Table 25.

Comparative Example F2-1

The forming and evaluation were performed in substantially the same manner as in Example F2-2 except that polypropylene resin (B-1-2) for layer (II) in the production of the decorative film in Example F2-2 was changed to polypropylene resin (B-1). The results of the evaluation are shown in Table 25.

[Table 25]

| | | | | Unit | Example F2-2 | Example F2-3 | Comparative Example F2-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Type | | | A-4 | A-4 | A-4 |
| | | MFR | | g/10 min. | 7.0 | 7.0 | 7.0 |
| | | Melting point | | °C | 125 | 125 | 125 |
| | | Mw/Mn | | | 2.5 | 2.5 | 2.5 |
| Substrate | | Type | | | Z-1 | Z-1 | Z-1 |
| Heating time after spring back | | | | Sec. | 5 | 5 | 5 |
| Thermoformability | | | | | ○ | ○ | ○ |
| Adhesive force | | | | N/10mm | 19 | 19 | 20 |
| Weathering resistance | | | | | ○ | ○ | × |
| Appearance of recycled molded article | | | | | ○ | ○ | ○ |

With respect to the decorative molded article obtained using each of the decorative films in Examples F2-2 and -3, a hindered amine light stabilizer and/or an ultraviolet light absorber is contained in any one of the layers of the decorative film; polypropylene resin (A) in seal layer (I) has (a'1) a melt flow rate (MFR (A)) of more than 2.0 g/10 minutes, and is (a'2) a metallocene catalyst propylene polymer, and has (a'3) a melting peak temperature (Tm (A)) of lower than 150°C and (a'4) an Mw/Mn (A) of 1.5 to 3.5; and resin composition (B') comprising polypropylene resin (B) in layer (II) has (b'1) a melt flow rate (MFR (B')) of 40 g/10 minutes or less, (b'2) a strain hardening index of 1.1 or more, and (b'3) a melting peak temperature (Tm (B')) which is higher than Tm (A). Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F2-1, which does not contain a hindered amine light stabilizer and/or an ultraviolet light absorber in any of the layers, the decorative film had poor weathering resistance.

(Test Example 3)

[3: Decorative film comprising seal layer (I) comprising polypropylene resin (A) and ethylene-α-olefin random copolymer (C)]

3-1. Materials used

Polypropylene resin

The following polypropylene resin was used, in addition to the polypropylene resins shown in "1-1. Materials used" above.
(A-3): Propylene-α-olefin random copolymer having no long-chain branching (MFR = 7.0 g/10 minutes; Tm = 146°C; Mw/Mn = 4.0; tensile modulus = 1,200 MPa), trade name "NOVATEC (registered trademark) FW3GT", manufactured by Japan Polypropylene Corporation.

Ethylene-α-olefin random copolymer (C)

The following ethylene-α-olefin random copolymer was used.
(C-1): Ethylene-butene random copolymer (MFR = 6.8 g/10 minutes; Tm = 66°C; density = 0.885 g/$cm^3$; ethylene content = 84% by weight), trade name "TAFMER A4085S", manufactured by Mitsui Chemicals, Inc.

Example F3-2

The forming and evaluation were performed in substantially the same manner as in Example F1-2 except that polypropylene resin (A-1) for seal layer (I) in the production of the decorative film in Example F1-2 was changed to a mixture of polypropylene resin (A-3) and ethylene-$\alpha$-olefin random copolymer (C-1) which were blended in a weight ratio of 85:15, and that, in the three-dimensional decorative thermoforming, forming was performed immediately after a spring back phenomenon was completed (that is, the heating time after the spring back was 0 second). The results of the evaluation are shown in Table 26.

Example F3-3

The forming and evaluation were performed in substantially the same manner as in Example F3-2 except that polypropylene resin (B-1-2) for layer (II) in the production of the decorative film in Example F3-2 was changed to polypropylene resin
(B-1-3). The results of the evaluation are shown in Table 26.

Comparative Example F3-1

The forming and evaluation were performed in substantially the same manner as in Example F3-2 except that polypropylene resin (B-1-2) for layer (II) in the production of the decorative film in Example F3-2 was changed to polypropylene resin (B-1). The results of the evaluation are shown in Table 26.

[Table 26]

| | | | | Unit | Example F3-2 | Example F3-3 | Comparative Example F3-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Polypropylene resin (A) | Type | | A-3 | A-3 | A-3 |
| | | | MFR | g/10 min. | 7.0 | 7.0 | 7.0 |
| | | | Amount | wt% | 85 | 85 | 85 |
| | | Ethylene-α-olefin random copolymer (C) | Type | | C-1 | C-1 | C-1 |
| | | | MFR | g/10 min. | 6.8 | 6.8 | 6.8 |
| | | | Amount | wt% | 15 | 15 | 15 |
| Substrate | | Type | | | Z-1 | Z-1 | Z-1 |
| Heating time after spring back | | | | Sec. | 0 | 0 | 0 |
| Thermoformability | | | | | ○ | ○ | ○ |
| Adhesive force | | | | N/10mm | 33 | 36 | 33 |
| Weathering resistance | | | | | ○ | ○ | × |
| Appearance of recycled molded article | | | | | ○ | ○ | ○ |

With respect to the decorative molded article obtained using each of the decorative films in Examples F3-2 and -3, a hindered amine light stabilizer and/or an ultraviolet light absorber is contained in any one of the layers of the decorative film; seal layer (I) comprises resin composition (XX'3) in which the weight ratio of polypropylene resin (A) and ethylene-$\alpha$-olefin random copolymer (C) is 97:3 to 5:95, and polypropylene resin (A) has (a'1) a melt flow rate (MFR (A)) of more than 2.0 g/10 minutes, and ethylene-$\alpha$-olefin random copolymer (C) has (c'1) an ethylene content [E (C)] of 65% by weight or more, (c'2) a density of 0.850 to 0.950 g/cm$^2$, and (c'3) a melt flow rate (MFR (C)) of 0.1 to 100 g/10 minutes; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F3-1, which does not contain a hindered amine light stabilizer and/or an ultraviolet light absorber in any of the layers, the decorative film had poor weathering resistance.

(Test Example 4)

[4: Decorative film comprising seal layer (I) comprising polypropylene resin (A) and thermoplastic elastomer (D)]

4-1. Materials used

Polypropylene resin

The polypropylene resins shown in "1-1. Materials used" and "3-1. Materials used" above were used.

Thermoplastic elastomer (D)

The following thermoplastic elastomer was used.
(D-1): Propylene-butene random copolymer comprising propylene as a main component (MFR = 7.0 g/10 minutes; Tm = 75°C; density = 0.885 g/$cm^3$; tensile modulus = 290 MPa; propylene content = 69% by weight; butene content = 31% by weight; ethylene content [E] = 0% by weight), trade name "TAFMER XM7070", manufactured by Mitsui Chemicals, Inc.

Example F4-2

The forming and evaluation were performed in substantially the same manner as in Example F1-2 except that polypropylene resin (A-1) for seal layer (I) in the production of the decorative film in Example F1-2 was changed to a mixture of polypropylene resin (A-3) and thermoplastic elastomer (D-1) which were blended in a weight ratio of 85:15, and that, in the three-dimensional decorative thermoforming, forming was performed 5 seconds after a spring back phenomenon was completed. The results of the evaluation are shown in Table 27.

Example F4-3

The forming and evaluation were performed in substantially the same manner as in Example F4-2 except that polypropylene resin (B-1-2) for layer (II) in the production of the decorative film in Example F4-2 was changed to polypropylene resin (B-1-3). The results of the evaluation are shown in Table 27.

Comparative Example F4-1

The forming and evaluation were performed in substantially the same manner as in Example F4-2 except that polypropylene resin (B-1-2) for layer (II) in the production of the decorative film in Example F4-2 was changed to polypropylene resin (B-1). The results of the evaluation are shown in Table 27.

[Table 27]

| | | | | Unit | Example F4-2 | Example F4-3 | Comparative Example F4-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Polypropylene resin (A) | Type | | A-3 | A-3 | A-3 |
| | | | MFR | g/10 min. | 7.0 | 7.0 | 7.0 |
| | | | Amount | wt% | 85 | 85 | 85 |
| | | Thermoplastic elastomer (D) | Type | | D-1 | D-1 | D-1 |
| | | | MFR | g/10 min. | 7.0 | 7.0 | 7.0 |
| | | | Amount | wt% | 15 | 15 | 15 |
| Substrate | | Type | | | Z-1 | Z-1 | Z-1 |
| Heating time after spring back | | | | Sec. | 5 | 5 | 5 |
| Thermoformability | | | | | ○ | ○ | ○ |
| Adhesive force | | | | N/10mm | 33 | 35 | 33 |
| Weathering resistance | | | | | ○ | ○ | × |
| Appearance of recycled molded article | | | | | ○ | ○ | ○ |

With respect to the decorative molded article obtained using each of the decorative films in Examples F4-2 and -3, a hindered amine light stabilizer and/or an ultraviolet light absorber is contained in any one of the layers of the decorative film; seal layer (I) comprises resin composition (XX'4) in which the weight ratio of polypropylene resin (A) and thermoplastic elastomer (D) is 97:3 to 5:95, and polypropylene resin (A) has (a'1) a melt flow rate (MFR (A)) of more than 2.0 g/10 minutes, and thermoplastic elastomer (D) comprises (d'1) at least one of propylene and butene as a main component, and has (d'2) a density of 0.850 to 0.950 g/cm$^2$, (d'3) a melt flow rate (MFR (D)) of 0.1 to 100 g/10 minutes, and (d'4) a tensile modulus which is smaller than that of polypropylene resin (A); and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F4-1, which does not contain a hindered amine light stabilizer and/or an ultraviolet light absorber in any of the layers, the decorative film had poor weathering resistance.

(Test Example 5)

[5: Decorative film comprising seal layer (I) comprising polypropylene resin (A) and thermoplastic resin (E)]

5-1. Materials used

Polypropylene resin

As a polypropylene resin for seal layer (I), the following polypropylene resin was used.
(A-3): Propylene-$\alpha$-olefin copolymer (MFR = 7.0 g/10 minutes; Tm = 146°C; crystallization start temperature = 111°C; isothermal crystallization time (t) = 263 seconds (measured at 121°C)), trade name "NOVATEC (registered trademark) FW3GT", manufactured by Japan Polypropylene Corporation

With respect to layer (II), the polypropylene resin shown in "1-1. Materials used" above was used.

Thermoplastic resin (E)

The following thermoplastic resin was used.
(E-1): Hydrogenated styrene elastomer (HSBR): trade name "DYNARON 1320P", manufactured by JSR Corporation

Example F5-2

The forming and evaluation were performed in substantially the same manner as in Example F1-2 except that polypropylene resin (A-1) for seal layer (I) in the production of the decorative film in Example F1-2 was changed to a mixture of polypropylene resin (A-3) and thermoplastic resin (E-1) which were blended in a weight ratio of 50:50, and that, in the three-dimensional decorative thermoforming, forming was performed immediately after a spring back phenomenon was completed (that is, the heating time after the spring back was 0 second). The results of the evaluation are shown in Table 28.

Example F5-3

The forming and evaluation were performed in substantially the same manner as in Example F5-2 except that polypropylene resin (B-1-2) for layer (II) in the production of the decorative film in Example F5-2 was changed to polypropylene resin (B-1-3). The results of the evaluation are shown in Table 28.

Comparative Example F5-1

The forming and evaluation were performed in substantially the same manner as in Example F5-2 except that polypropylene resin (B-1-2) for layer (II) in the production of the decorative film in Example F5-2 was changed to polypropylene resin (B-1). The results of the evaluation are shown in Table 28.

[Table 28]

| | | | | Unit | Example F5-2 | Example F5-3 | Comparative Example F5-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Polypropylene resin (A) | Type | | A-3 | A-3 | A-3 |
| | | | MFR | g/10 min. | 7.0 | 7.0 | 7.0 |
| | | | Amount | wt% | 50 | 50 | 50 |
| | | Thermoplastic resin (E) | Type | | E-1 | E-1 | E-1 |
| | | | Amount | wt% | 50 | 50 | 50 |
| | | Resin composition (XX'5) | Isothermal crystallization time t(XX'5) | Sec. | 2590 | 2590 | 2590 |
| | | | t(XX'5)/t(A) | | 9.8 | 9.8 | 9.8 |
| Substrate | | Type | | | Z-1 | Z-1 | Z-1 |
| Heating time after spring back | | | | Sec. | 0 | 0 | 0 |
| Thermoformability | | | | | ○ | ○ | ○ |
| Adhesive force | | | | N/10mm | 37 | 38 | 33 |
| Weathering resistance | | | | | ○ | ○ | × |
| Appearance of recycled molded article | | | | | ○ | ○ | ○ |

With respect to the decorative molded article obtained using each of the decorative films in Examples F5-2 and -3, a hindered amine light stabilizer and/or an ultraviolet light absorber is contained in any one of the layers of the decorative film; seal layer (I) comprises resin composition (XX'5) in which the weight ratio of polypropylene resin (A) and thermoplastic resin (E) is 97:3 to 5:95, and polypropylene resin (A) has (a'1) a melt flow rate (MFR (A)) of more than 2.0 g/10 minutes, and thermoplastic resin (E) contains (e'1) at least one of an alicyclic hydrocarbon group and an aromatic hydrocarbon group; (xx'1) the isothermal crystallization time (t(XX'5)) (second) of resin composition (XX'5) is 1.5 times or more as long as the isothermal crystallization time (t(A)) (second) of polypropylene resin (A); and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F5-1, which does not contain a hindered amine light stabilizer and/or an ultraviolet light absorber in any of the layers, the decorative film had poor weathering resistance.

(Test Example 6)

[6: Decorative film comprising seal layer (I) comprising propylene-ethylene block copolymer (F)]

6-1. Materials used

Polypropylene resin

The resins used in "1-1. Materials used" above, and the propylene-ethylene block copolymer used in (Test Example 6) in Example C were used.

Example F6-2

The forming and evaluation were performed in substantially the same manner as in Example F1-2 except that polypropylene resin (A-1) for seal layer (I) in the production of the decorative film in Example F1-2 was changed to propylene-ethylene block copolymer (F-1), and that, in the three-dimensional decorative thermoforming, forming was performed immediately after a spring back phenomenon was completed (that is, the heating time after the spring back was 0 second). The results of the evaluation are shown in Table 29.

Example F6-3

The forming and evaluation were performed in substantially the same manner as in Example F6-2 except that polypropylene resin (B-1-2) for layer (II) in the production of the decorative film in Example F6-2 was changed to polypropylene resin (B-1-3). The results of the evaluation are shown in Table 29.

Comparative Example F6-1

The forming and evaluation were performed in substantially the same manner as in Example F6-2 except that polypropylene resin (B-1-2) for layer (II) in the production of the decorative film in Example F6-2 was changed to polypropylene resin (B-1). The results of the evaluation are shown in Table 29.

[Table 29]

| | | | | Unit | Example F6-2 | Example F6-3 | Comparative Example F6-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Propylene-ethylene block copolymer (F) | Type | | F-1 | F-1 | F-1 |
| | | | MFR | g/10 min. | 7.0 | 7.0 | 7.0 |
| | | | Melting point | °C | 161 | 161 | 161 |
| Substrate | | Type | | | Z-1 | Z-1 | Z-1 |
| Heating time after spring back | | | | Sec. | 0 | 0 | 0 |
| Thermoformability | | | | | ○ | ○ | ○ |
| Adhesive force | | | | N/10mm | 26 | 26 | 25 |
| Weathering resistance | | | | | ○ | ○ | × |
| Appearance of recycled molded article | | | | | ○ | ○ | ○ |

With respect to the decorative molded article obtained using each of the decorative films in Examples F6-2 and -3, a hindered amine light stabilizer and/or an ultraviolet light absorber is contained in any one of the layers of the decorative film; polypropylene resin (A) is propylene-ethylene block copolymer (F), and propylene-ethylene block copolymer (F) has (a'1) a melt flow rate (MFR (A)) of more than 2.0 g/10 minutes, and contains (f 1) 5 to 97% by weight of component (F1) comprising a propylene homopolymer or a propylene-ethylene random copolymer, and 3 to 95% by weight of component (F2) comprising a propylene-ethylene random copolymer which has an ethylene content larger than that of component (F1), and has (f'2) a melting peak temperature (Tm (F)) of 110 to 170°C; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F6-1, which does not contain a hindered amine light stabilizer and/or an ultraviolet light absorber in any of the layers, the decorative film had poor weathering resistance.

(Test Example 7)

[7: Decorative film comprising seal layer (I) comprising olefin bonding resin (G)]

7-1. Materials used

The following resin was used, in addition to the polypropylene resins shown in "1-1. Materials used" above.

Polyolefin bonding resin (G)

(G-1): Maleic anhydride-modified polyolefin (MFR = 7.0 g/10 minutes), trade name "MODIC AP (registered trademark) F534A", manufactured by Mitsubishi Chemical Corporation

7-2. Preparation of a resin molded article (substrate)

An injection molded article was obtained using PMMA (polymethyl methacrylate) resin (Z-4) in the same manner as in (Test Example 7) in Example E.

Example F7-2

• Production of a decorative film

There was used a two-type two-layer T-die having a lip opening of 0.8 mm and having a dice width of 400 mm, to which a seal layer extruder-1 having a bore diameter of 30 mm (diameter) and an extruder-2 having a bore diameter of 40 mm (diameter) were connected. Polyolefin bonding resin (G-1) was charged into the seal layer extruder-1, and polypropylene resin (B-1-2) was charged into the extruder-2, and melt extrusion was conducted under conditions such that the resin temperature was 240°C, the extrusion rate of the seal layer extruder-1 was 8 kg/h, and the extrusion rate of the extruder-2 was 8 kg/h.

The melt-extruded film was cooled and set while permitting a seal layer (I) to be in contact with a cooling roll rotating at 3 m/min at 80°C to obtain a two-layer unstretched film in which a layer (II) having a thickness of 100 μm and the seal layer (I) having a thickness of 100 μm were stacked on one another.

• Three-dimensional decorative thermoforming

The forming and evaluation were performed in substantially the same manner as in Example F1-2 except that, in the three-dimensional decorative thermoforming in Example F1-2, the above-obtained unstretched film was used, that the substrate was changed to an injection molded article comprising PMMA resin (Z-4), and that decorative forming was performed immediately after a spring back phenomenon was completed (that is, the heating time after the spring back was 0 second). The results of the evaluation are shown in Table 30.

Example F7-3

The forming and evaluation were performed in substantially the same manner as in Example F7-2 except that polypropylene resin (B-1-2) for layer (II) in the production of the decorative film in Example F7-2 was changed to polypropylene resin (B-1-3). The results of the evaluation are shown in Table 30.

Comparative Example F7-1

The forming and evaluation were performed in substantially the same manner as in Example F7-2 except that polypropylene resin (B-1-2) for layer (II) in the production of the decorative film in Example F7-2 was changed to polypropylene resin (B-1). The results of the evaluation are shown in Table 30.

[Table 30]

| | | | | Unit | Example F7-2 | Example F7-3 | Comparative Example F7-1 |
|---|---|---|---|---|---|---|---|
| Decorative film | Layer (II) | Long-chain branched PP | Type | | B-1-2 | B-1-3 | B-1 |
| | | | MFR | g/10 min. | 1.0 | 1.0 | 1.0 |
| | | | Ratio | | 100 | 100 | 100 |
| | | Whole of composition | MFR | | 1.0 | 1.0 | 1.0 |
| | | | λ | | 9.7 | 9.7 | 9.7 |
| | Seal layer (I) | Polyolefin bonding resin | | | G-1 | G-1 | G-1 |
| Substrate | | Type | | | Z-4 | Z-4 | Z-4 |
| Heating time after spring back | | | | Sec. | 0 | 0 | 0 |
| Thermoformability | | | | | ○ | ○ | ○ |
| Adhesive force | | | | N/10mm | 22 | 22 | 20 |
| Weathering resistance | | | | | ○ | ○ | × |
| Appearance of recycled molded article | | | | | ○ | ○ | ○ |

With respect to the decorative molded article obtained using each of the decorative films in Examples F7-2 and -3, a hindered amine light stabilizer and/or an ultraviolet light absorber is contained in any one of the layers of the decorative film; polyolefin bonding resin (G) in seal layer (I) is (g'1) a polyolefin resin having a polar functional group containing at least one heteroatom, and has (g'2) a melt flow rate (MFR (G)) of 100 g/10 minutes or less; and resin composition (B') comprising polypropylene resin (B) in layer (II) has (b'1) a melt flow rate (MFR (B')) of 40 g/10 minutes or less and (b'2) a strain hardening index of 1.1 or more. Therefore, the decorative film had no contact unevenness and exhibited excellent thermoformability, and had excellent adhesion to the resin molded article comprising a polar resin. The decorative thermoforming was conducted for a short time, and hence it was possible to suppress volatilization of the hindered amine light stabilizer and/or ultraviolet light absorber, and the decorative film maintained high weathering resistance even after the thermoforming. Further, the obtained molded article had excellent recycling properties.

In contrast, with respect to the decorative film in Comparative Example F7-1, which does not contain a hindered amine light stabilizer and/or an ultraviolet light absorber in any of the layers, the decorative film had poor weathering resistance.

INDUSTRIAL APPLICABILITY

The decorative film of the present invention and the method for producing a decorative molded article using the same can be used in a three-dimensional decorative molded article and production thereof.

REFERENCE SIGNS LIST

1: Decorative film
2: Base layer (II) or layer (II)
3: Seal layer (I)
4: Surface decorative layer (III)
5: Resin molded article (object to be decorated, substrate)
6: Decorative molded article
11: Upper chamber box
12: Lower chamber box
13: Fixture

14: Table
15: Heater

## Claims

1. A decorative film to be stuck onto a resin molded article having a three-dimensional shape by thermoforming, the decorative film comprising a layer containing at least one additive selected from a nucleating agent, a hindered amine light stabilizer, and an ultraviolet light absorber, wherein the additive satisfies the following requirement:

   requirement that: a change of the haze value be 40 or less, as measured by the method in accordance with JIS-K7136 with respect to a glass plate which has been subjected to the fogging test as shown below by the method in accordance with ISO 6452,
   <fogging test> in which 1 g (±0.01 g) of the additive is placed in a sample bottle made of glass, and the sample bottle is covered with a glass plate and heated at 150°C for one hour to cause clouding (fogging) on the glass plate.

2. The decorative film according to claim 1, which comprises a seal layer (I) containing a polypropylene resin (A) and a layer (II) containing a polypropylene resin (B), wherein the polypropylene resin (A) satisfies the following requirement (a1), and the polypropylene resin (B) satisfies the following requirement (b1):

   (a1) having a melt flow rate (at 230°C under a load of 2.16 kg) (MFR (A)) of more than 0.5 g/10 minutes,
   (b1) that a melt flow rate (at 230°C under a load of 2.16 kg) (MFR (B)) and the MFR (A) satisfy the relationship of the formula (b-1):

$$\text{MFR (B)} < \text{MFR (A)} \qquad \text{Formula (b-1).}$$

3. The decorative film according to claim 1, which comprises a seal layer (I) containing a polypropylene resin (A) and a layer (II) containing a resin composition (B') comprising a polypropylene resin (B),
   wherein the polypropylene resin (A) satisfies the following requirement (a'1), and the resin composition (B') satisfies the following requirements (b'1) and (b'2), preferably the following requirements (b'1') and (b'2'), more preferably the following requirements (b'1") and (b'2"):

   (a'1) having a melt flow rate (at 230°C under a load of 2.16 kg) (MFR (A)) of more than 2.0 g/10 minutes,
   (b'1) having a melt flow rate (at 230°C under a load of 2.16 kg) (MFR (B')) of 40 g/10 minutes or less,
   (b'2) having a strain hardening index λ of 1.1 or more,
   (b'1') having a melt flow rate (at 230°C under a load of 2.16 kg) (MFR (B')) of 20 g/10 minutes or less,
   (b'2') having a strain hardening index λ of 1.8 or more,
   (b'1") having a melt flow rate (at 230°C under a load of 2.16 kg) (MFR (B')) of 12 g/10 minutes or less,
   (b'2") having a strain hardening index λ of 2.3 or more.

4. The decorative film according to claim 1, which comprises a seal layer (I) containing a polyolefin bonding resin (G) and a layer (II) containing a resin composition (B') comprising a polypropylene resin (B),
   wherein the polyolefin bonding resin (G) satisfies the following requirements (g'1) and (g'2), and the resin composition (B') satisfies the following requirements (b'1) and (b'2), preferably the following requirements (b'1') and (b'2'), more preferably the following requirements (b'1") and (b'2"):

   (g'1) being a polyolefin resin having a polar functional group containing at least one heteroatom,
   (g'2) having a melt flow rate (at 230°C under a load of 2.16 kg) (MFR (G)) of 100 g/10 minutes or less,
   (b'1) having a melt flow rate (at 230°C under a load of 2.16 kg) (MFR (B')) of 40 g/10 minutes or less,
   (b'2) having a strain hardening index λ of 1.1 or more,
   (b'1') having a melt flow rate (at 230°C under a load of 2.16 kg) (MFR (B')) of 20 g/10 minutes or less,
   (b'2') having a strain hardening index λ of 1.8 or more,
   (b'1") having a melt flow rate (at 230°C under a load of 2.16 kg) (MFR (B')) of 12 g/10 minutes or less,
   (b'2") having a strain hardening index λ of 2.3 or more.

5. The decorative film according to any one of claims 1 to 4, wherein the layer containing the additive comprises a

polyolefin resin composition, preferably a polypropylene resin composition.

6. The decorative film according to any one of claims 1 to 5, wherein the additive is a nucleating agent, wherein the nucleating agent is an organometallic compound, preferably a compound represented by the following general formula (1):

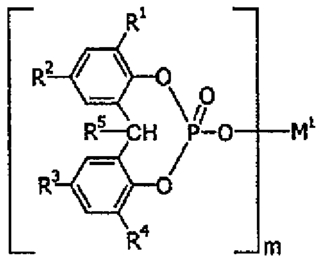 (1)

wherein each of $R^1$ to $R^4$ independently represents a hydrogen atom or an alkyl group having 1 to 9 carbon atoms and optionally having a branch, $R^5$ represents a hydrogen atom or a methyl group, m represents 1 or 2, and, when m is 1, $M^1$ represents a hydrogen atom or an alkali metal atom, and, when m is 2, $M^1$ represents an element of the Group 2, Al(OH), or Zn.

7. The decorative film according to any one of claims 1 to 5, wherein the additive is a nucleating agent, wherein the nucleating agent is an amide compound.

8. The decorative film according to any one of claims 1 to 5, wherein the additive is a hindered amine light stabilizer and/or an ultraviolet light absorber, wherein the additive has a molecular weight of 490 g/mol or more.

9. The decorative film according to any one of claims 3 to 8, wherein the polypropylene resin (B) is a polypropylene resin (B-L) having a long-chain branched structure.

10. The decorative film according to claim 9, wherein the polypropylene resin (B-L) is a polypropylene resin which has a gel in a reduced amount, and which is produced by a method other than a crosslinking method.

11. The decorative film according to any one of claims 1 to 10, which is a multilayer film, wherein the outermost surface layer on the side opposite to the stuck surface to the resin molded article with respect to the decorative film contains the additive.

12. The decorative film according to any one of claims 2 to 11, which has a surface decorative layer (III) comprising a surface decorative layer resin containing the additive on the side opposite to the stuck surface side to the resin molded article with respect to the layer (II) .

13. The decorative film according to claim 12, wherein the surface decorative layer (III) comprises a polypropylene resin (H) which satisfies the following requirement (h1):
(h1) that a melt flow rate (at 230°C under a load of 2.16 kg) (MFR (H)) and the MFR (B) satisfy the relationship of the formula (h-1):

$$\mathrm{MFR\ (H)} > \mathrm{MFR\ (B)} \qquad \text{Formula (h-1).}$$

14. The decorative film according to claim 12, wherein the surface decorative layer resin comprises a polypropylene resin (H), wherein the polypropylene resin (H) has a strain hardening index $\lambda$ of less than 1.1.

15. A method for producing a decorative molded article, the method comprising the steps of: providing the decorative film according to any one of claims 1 to 14; providing a resin molded article; setting the resin molded article and the decorative film in a chamber box capable of being evacuated; evacuating the inside of the chamber box; heat-softening the decorative film; pressing the decorative film against the resin molded article; and increasing the evacuated pressure of the inside of the chamber box to atmospheric pressure or applying a pressure to the inside of the

chamber box.

**16.** The method for producing a decorative molded article according to claim 15, wherein the resin molded article comprises a polypropylene resin composition.

**17.** The method for producing a decorative molded article according to claim 15, wherein the decorative film is the decorative film according to any one of claims 4 to 14, and wherein the resin molded article comprises a polar resin material comprising at least one member selected from a polyester resin, a polyamide resin, a polyimide resin, a polystyrene resin, an acrylic resin, a polyvinyl alcohol resin, a polycarbonate resin, an ABS resin, an urethane resin, a melamine resin, a polyphenylene ether resin, and a composite material thereof.

**18.** A polypropylene resin composition for a decorative film to be stuck onto a resin molded article having a three-dimensional shape by thermoforming, the polypropylene resin composition containing, relative to 100 parts by weight of a polypropylene resin, 0.001 to 1.00 part by weight of at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452,
<fogging test> in which 1 g ($\pm$0.01 g) of the additive is placed in a sample bottle made of glass, and the sample bottle is covered with a glass plate and heated at 150°C for one hour to cause clouding (fogging) on the glass plate.

**19.** Use of a polypropylene resin composition in a decorative film to be stuck onto a resin molded article having a three-dimensional shape by thermoforming, the polypropylene resin composition containing, relative to 100 parts by weight of a polypropylene resin, 0.001 to 1.00 part by weight of at least one additive selected from a nucleating agent, a hindered amine light stabilizer, and an ultraviolet light absorber, wherein the additive satisfies the following requirement:

requirement that: a change of the haze value be 40 or less, as measured by the method in accordance with JIS-K7136 with respect to a glass plate which has been subjected to the fogging test as shown below by the method in accordance with ISO 6452,
<fogging test> in which 1 g ($\pm$0.01 g) of the additive is placed in a sample bottle made of glass, and the sample bottle is covered with a glass plate and heated at 150°C for one hour to cause clouding (fogging) on the glass plate.

**20.** A decorative molded article having stuck thereon the decorative film according to any one of claims 1 to 14.

Fig. 1

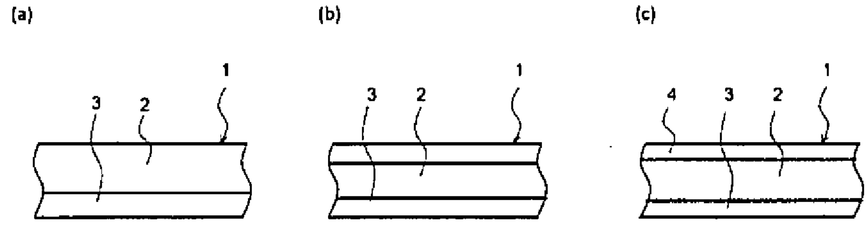


Fig. 2

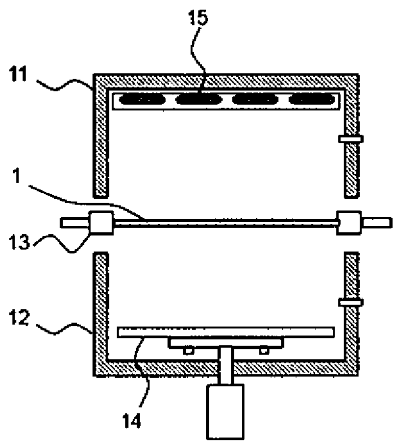


Fig. 3

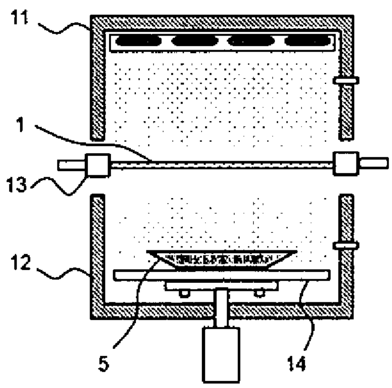

Fig. 4

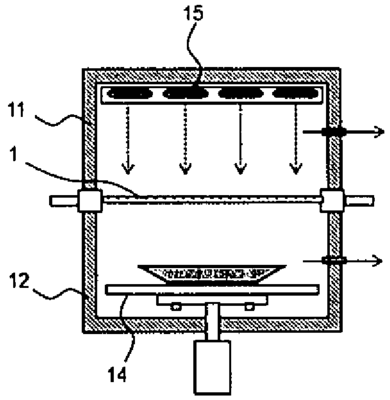


Fig. 5

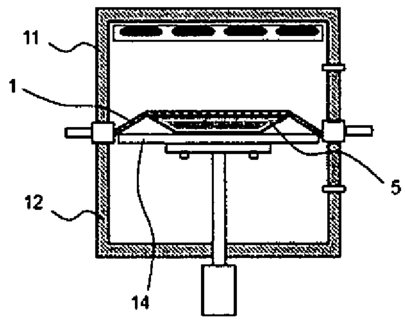


Fig. 6

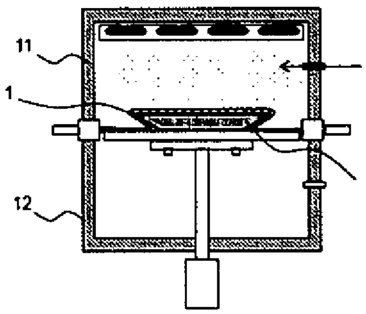

Fig. 7

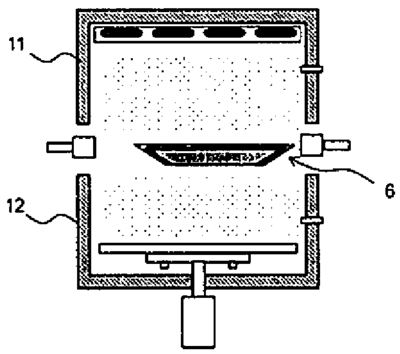


Fig. 8

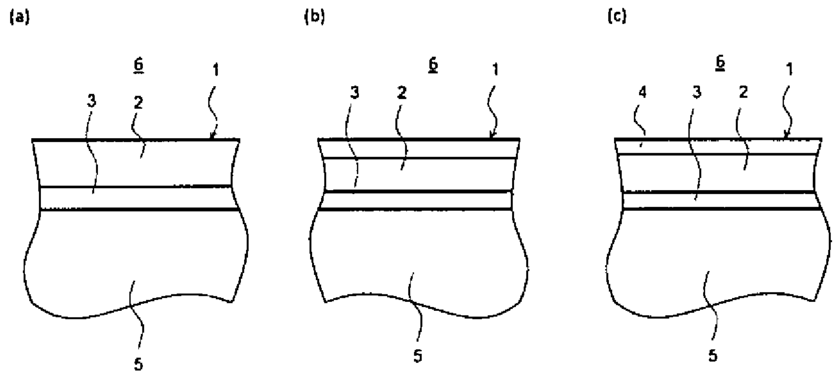

## INTERNATIONAL SEARCH REPORT

International application No.
PCT/JP2018/042734

A. CLASSIFICATION OF SUBJECT MATTER
Int.Cl. B29C51/12(2006.01)i, B32B27/00(2006.01)i, B32B27/18(2006.01)i, B32B27/32(2006.01)i
According to International Patent Classification (IPC) or to both national classification and IPC

B. FIELDS SEARCHED
Minimum documentation searched (classification system followed by classification symbols)
Int.Cl. B29C51/00-51/46, B32B1/00-43/00, C08J5/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2017/126663 A1 (IDEMITSU UNITECH CO., LTD.) 27 July 2017, claims, paragraphs [0013]-[0060], [0111]-[0113] (Family: none) | 1, 5-6, 8, 11, 15-19, 18-20<br>2-4, 7, 9-10, 12-14, 17 |
| X<br>A | JP 2017-66373 A (DIAPLUS FILM INC.) 06 April 2017, claims, paragraphs [0032]-[0041] (Family: none) | 1, 5, 8, 11, 18-20<br>2-4, 6-7, 9-10, 12-17 |
| X<br>A | JP 2013-14027 A (3M INNOVATIVE PROPERTIES CO.) 24 January 2013, claims, paragraph [0025] & US 2014/0162032 A1, claims, paragraph [0029] & WO 2013/003428 A2 | 1, 8, 11, 15-16<br>2-7, 9-10 12-14, 17-20 |
| A | JP 2008-62524 A (TOKUYAMA CORPORATION) 21 March 2008, entire text (Family: none) | 1-20 |
| A | JP 2001-150533 A (JAPAN POLYCHEM CORPORATION) 05 June 2001, entire text (Family: none) | 1-20 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 January 2019 (22.01.2019) | 05 February 2019 (05.02.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002067137 A
- JP 2013014027 A
- JP 2014124940 A
- JP 2017222516 A
- JP 2017247629 A
- JP 2017249129 A
- JP 2018019640 A
- JP 2018021093 A
- JP 2018033633 A
- JP SHO62121704 B
- JP 2001524565 A
- JP 2001525460 A
- JP HEI10338717 B
- JP 2002523575 A
- JP 2009057542 A
- JP 5027353 B
- JP 2015040213 A
- JP 2007254671 A
- JP 2010105197 A


### Non-patent literature cited in the description


- Koubunshi Kagaku no Kiso (Basics of Polymer Chemistry). Tokyo Kagaku Dojin, 1978
- Kouza, Reoroji (Lecture: Rheology). Koubunshi Kankoukai, 1992, 221-222
- Developments in Polymer Characterization-4. Applied Science Publishers, 1983
- *Polymer,* 2004, vol. 45, 6495-6505
- *Macromolecules,* 2000, vol. 33, 2424-2436
- *Macromolecules,* 2000, vol. 33, 6945-6952
- *Macromol. Chem. Phys.,* 2003, vol. 204, 1738
- *Macromolecules,* 2002, vol. 35 (10), 3839-3842
- *Macromolecules,* 1977, vol. 10 (4
- *Macromolecules,* 2003, vol. 36 (11
- *Analytical Chemistry,* 2004, vol. 76 (19
- *Macromolecules,* 2001, vol. 34, 4757-4767
- *Macromolecules,* 1992, vol. 25 (1
- **G. GLOKNER.** *J. Appl. Polym. Sci: Appl. Poly. Symp.,* 1990, vol. 45, 1-24
- **L. WILD.** *Adv. Polym. Sci.,* 1990, vol. 98, 1-47
- **J. B. P. SOARES ; A. E. HAMIELEC.** *Polyer,* 1995, vol. 36 (8), 1639-1654
- *Macromolecules,* 1984, vol. 17, 1950
- **CARMAN.** *Macromolecules,* 1977, vol. 10, 536
- *Macromolecules,* 1982, vol. 15, 1150